# EUROPEAN PATENT APPLICATION

(11) **EP 3 825 830 A1**
(43) Date of publication of application: **26.05.2021**
(21) Application number: 20199219.5
(22) Date of filing: 26.08.2016
(51) Int. Cl.: G06F 3/0482, G06F 3/0484, G06F 3/0488

(54) **USER INTERFACES FOR NAVIGATING AND PLAYING CHANNEL-BASED CONTENT**

(30) Priority: 30.09.2015 US 201562234912 P; 11.08.2016 US 201615235000
(62) Divisional of application: 16766716.1
(71) Applicant: Apple Inc., Cupertino CA 95014 (US)
(72) Inventor: ROBBIN, Jeffrey, L, Los Altos, CA 94024 (US); WOOD, Policarpo, Cupertino, CA 95014 (US); PARK, Dennis S., Cupertino, CA 95014 (US); Ponson, Florian Miles, Cupertino, CA 95014 (US); Keighran, Benjamin W, Menlo Park, CA 94025 (US); Bachman, William M, Cupertino, CA 95014 (US); Folse, Jennifer L.C., Cupertino, CA 95014 (US); Lochhead, Jonathan, Cupertino, CA 95014 (US); Howard, Joe, San Jose, CA 95124 (US); McGlinn, Joshua, Mooresville, NC 28117 (US); Chen, Elbert D, Cupertino, CA 95014 (US)
(74) Representative: Barton, Russell Glen

(57) **Abstract**

In some embodiments, an electronic device displays representations of groups of channels along a first axis in a user interface, and displays representations of channels associated with a selected group of channels along the first axis in response to receiving selection of the group. In some embodiments, an electronic device displays a user interface for viewing subscribed and unsubscribed channels, and for subscribing to unsubscribed channels. In some embodiments, an electronic device displays a navigation bar for navigating between live content, watchlist content, on-demand content, channels, and search content. In some embodiments, an electronic device displays an array-based content guide.

## Description

### Related Application Data

This application claims benefit of U.S. Provisional Patent Application No. 62/234,912, filed September 30, 2015, and U.S. Patent Application No. 15/235,000, filed August 11, 2016, the entire disclosures of which are incorporated herein by reference for all purposes.

### Field of the Disclosure

This relates generally to electronic devices that allow for navigating and playing content, including channel-based content, and user interactions with such devices.

### Background of the Disclosure

User interaction with electronic devices has increased significantly in recent years. These devices can be devices such as computers, tablet computers, televisions, multimedia devices, mobile devices, and the like.

In some circumstances, such a device has access to content (e.g., music, movies, etc.), including channel-based content, and user interaction with such a device entails navigation and playing of the content. Enhancing these interactions improves the user's experience with the device and decreases user interaction time, which is particularly important where input devices are battery-operated.

### Summary of the Disclosure

The embodiments described in this disclosure are directed to one or more electronic devices that allow users to navigate and play content items, including channel-based content items, available on the electronic devices, and one or more operations related to the above that the electronic devices optionally perform. The full descriptions of the embodiments are provided in the Drawings and the Detailed Description, and it is understood that the Summary provided above does not limit the scope of the disclosure in any way.

### Brief Description of the Drawings

For a better understanding of the various described embodiments, reference should be made to the Detailed Description below, in conjunction with the following drawings in which like reference numerals refer to corresponding parts throughout the figures.
Fig. 1A is a block diagram illustrating a multifunction device with a touch-sensitive display in accordance with some embodiments of the disclosure.
Fig. 1B is a block diagram illustrating exemplary components for event handling in accordance with some embodiments of the disclosure.
Fig. 2 illustrates a multifunction device having a touch screen in accordance with some embodiments of the disclosure.
Fig. 3 is a block diagram of an exemplary multifunction device with a display and a touch-sensitive surface in accordance with some embodiments of the disclosure.
Fig. 4 illustrates an exemplary user interface for a multifunction device with a touch-sensitive surface that is separate from the display in accordance with some embodiments of the disclosure.
Figs. 5A-5B illustrate block diagrams of exemplary architectures for devices according to some embodiments of the disclosure.
Figs. 6A-6S illustrate exemplary ways in which electronic devices allow users to navigate channels available on the electronic devices in accordance with some embodiments of the disclosure.
Figs. 7A-7M are flow diagrams illustrating a method of navigating channels available on an electronic device in accordance with some embodiments of the disclosure.
Figs. 8A-8L illustrate exemplary ways in which electronic devices allow users to view and manage subscribed and unsubscribed channels available on the electronic devices in accordance with some embodiments of the disclosure.
Figs. 9A-9G are flow diagrams illustrating a method of viewing and managing subscribed and unsubscribed channels available on an electronic device in accordance with some embodiments of the disclosure.
Figs. 10A-10X illustrate exemplary ways in which electronic devices allow users to navigate content items available on the electronic devices in accordance with some embodiments of the disclosure.
Figs. 11A-11K are flow diagrams illustrating a method of navigating content items available on an electronic device in accordance with some embodiments of the disclosure.
Figs. 12A-12FF illustrate exemplary ways in which electronic devices allow users to view, navigate and play current and future content from channels available on the electronic devices in accordance with some embodiments of the disclosure.
Figs. 13A-13L are flow diagrams illustrating a method 1300 of viewing, navigating and playing current and future content from channels available on an electronic device in accordance with some embodiments of the disclosure.
Figs. 14-17 are functional block diagrams of electronic devices in accordance with some embodiments of the disclosure.

### Detailed Description

In the following description of embodiments, reference is made to the accompanying drawings which form a part hereof, and in which it is shown by way of illustration specific embodiments that are optionally practiced. It is to be understood that other embodiments are optionally used and structural changes are optionally made without departing from the scope of the disclosed embodiments.

### EXEMPLARY DEVICES

Embodiments of electronic devices, user interfaces for such devices, and associated processes for using such devices are described. In some embodiments, the device is a portable communications device, such as a mobile telephone, that also contains other functions, such as PDA and/or music player functions. Exemplary embodiments of portable multifunction devices include, without limitation, the iPhone®, iPod Touch®, and iPad® devices from Apple Inc. of Cupertino, California. Other portable electronic devices, such as laptops or tablet computers with touch-sensitive surfaces (e.g., touch screen displays and/or touch pads), are, optionally, used. It should also be understood that, in some embodiments, the device is not a portable communications device, but is a desktop computer or a television with a touch-sensitive surface (e.g., a touch screen display and/or a touch pad). In some embodiments, the device does not have a touch screen display and/or a touch pad, but rather is capable of outputting display information (such as the user interfaces of the disclosure) for display on a separate display device, and capable of receiving input information from a separate input device having one or more input mechanisms (such as one or more buttons, a touch screen display and/or a touch pad). In some embodiments, the device has a display, but is capable of receiving input information from a separate input device having one or more input mechanisms (such as one or more buttons, a touch screen display and/or a touch pad).

In the discussion that follows, an electronic device that includes a display and a touch-sensitive surface is described. It should be understood, however, that the electronic device optionally includes one or more other physical user-interface devices, such as a physical keyboard, a mouse and/or a joystick. Further, as described above, it should be understood that the described electronic device, display and touch-sensitive surface are optionally distributed amongst two or more devices. Therefore, as used in this disclosure, information displayed on the electronic device or by the electronic device is optionally used to describe information outputted by the electronic device for display on a separate display device (touch-sensitive or not). Similarly, as used in this disclosure, input received on the electronic device (e.g., touch input received on a touch-sensitive surface of the electronic device) is optionally used to describe input received on a separate input device, from which the electronic device receives input information.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, a television channel browsing application, and/or a digital video player application.

The various applications that are executed on the device optionally use at least one common physical user-interface device, such as the touch-sensitive surface. One or more functions of the touch-sensitive surface as well as corresponding information displayed on the device are, optionally, adjusted and/or varied from one application to the next and/or within a respective application. In this way, a common physical architecture (such as the touch-sensitive surface) of the device optionally supports the variety of applications with user interfaces that are intuitive and transparent to the user.

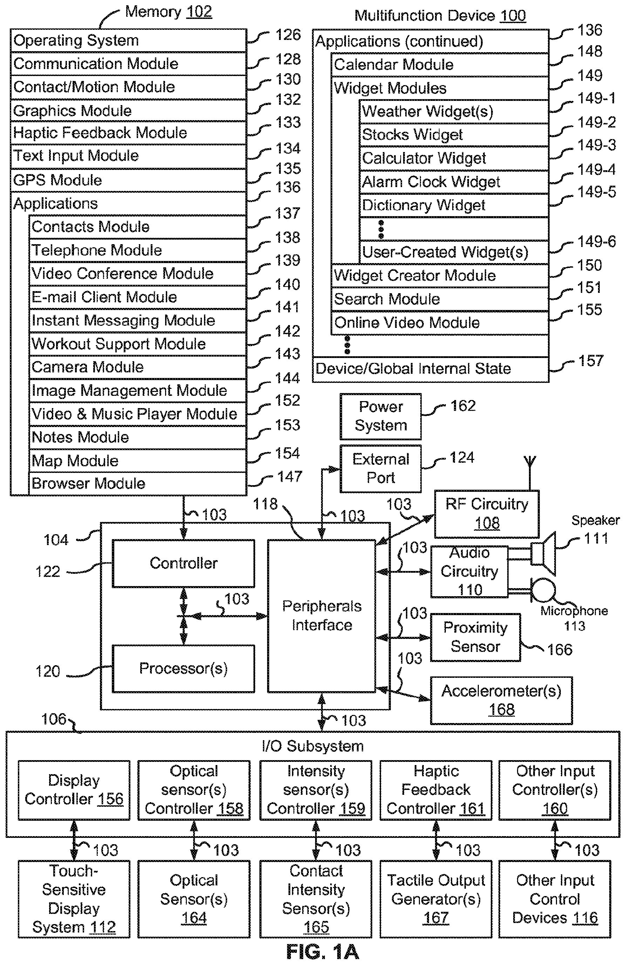

Attention is now directed toward embodiments of portable or non-portable devices with touch-sensitive displays, though the devices need not include touch-sensitive displays or displays in general, as described above. Fig. 1A is a block diagram illustrating portable or non-portable multifunction device 100 with touch-sensitive displays 112 in accordance with some embodiments. Touch-sensitive display 112 is sometimes called a "touch screen" for convenience, and is sometimes known as or called a touch-sensitive display system. Device 100 includes memory 102 (which optionally includes one or more computer readable storage mediums), memory controller 122, one or more processing units (CPU's) 120, peripherals interface 118, RF circuitry 108, audio circuitry 110, speaker 111, microphone 113, input/output (I/O) subsystem 106, other input or control devices 116, and external port 124. Device 100 optionally includes one or more optical sensors 164. Device 100 optionally includes one or more intensity sensors 165 for detecting intensity of contacts on device 100 (e.g., a touch-sensitive surface such as touch-sensitive display system 112 of device 100). Device 100 optionally includes one or more tactile output generators 167 for generating tactile outputs on device 100 (e.g., generating tactile outputs on a touch-sensitive surface such as touch-sensitive display system 112 of device 100 or touchpad 355 of device 300). These components optionally communicate over one or more communication buses or signal lines 103.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure and the estimated force or pressure is used to determine whether an intensity threshold has been exceeded (e.g., the intensity threshold is a pressure threshold measured in units of pressure).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that device 100 is only one example of a portable or non-portable multifunction device, and that device 100 optionally has more or fewer components than shown, optionally combines two or more components, or optionally has a different configuration or arrangement of the components. The various components shown in Fig. 1A are implemented in hardware, software, or a combination of both hardware and software, including one or more signal processing and/or application specific integrated circuits. Further, the various components shown in Fig. 1A are optionally implemented across two or more devices; for example, a display and audio circuitry on a display device, a touch-sensitive surface on an input device, and remaining components on device 100. In such an embodiment, device 100 optionally communicates with the display device and/or the input device to facilitate operation of the system, as described in the disclosure, and the various components described herein that relate to display and/or input remain in device 100, or are optionally included in the display and/or input device, as appropriate.

Memory 102 optionally includes high-speed random access memory and optionally also includes non-volatile memory, such as one or more magnetic disk storage devices, flash memory devices, or other non-volatile solid-state memory devices. Access to memory 102 by other components of device 100, such as CPU 120 and the peripherals interface 118, is, optionally, controlled by memory controller 122.

Peripherals interface 118 can be used to couple input and output peripherals of the device to CPU 120 and memory 102. The one or more processors 120 run or execute various software programs and/or sets of instructions stored in memory 102 to perform various functions for device 100 and to process data.

In some embodiments, peripherals interface 118, CPU 120, and memory controller 122 are, optionally, implemented on a single chip, such as chip 104. In some other embodiments, they are, optionally, implemented on separate chips.

RF (radio frequency) circuitry 108 receives and sends RF signals, also called electromagnetic signals. RF circuitry 108 converts electrical signals to/from electromagnetic signals and communicates with communications networks and other communications devices via the electromagnetic signals. RF circuitry 108 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 108 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The wireless communication optionally uses any of a plurality of communications standards, protocols and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Wireless Fidelity (Wi-Fi) (e.g., IEEE 802.11a, IEEE 802.11b, IEEE 802.11g and/or IEEE 802.11n), voice over Internet Protocol (VoIP), Wi-MAX, a protocol for e-mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

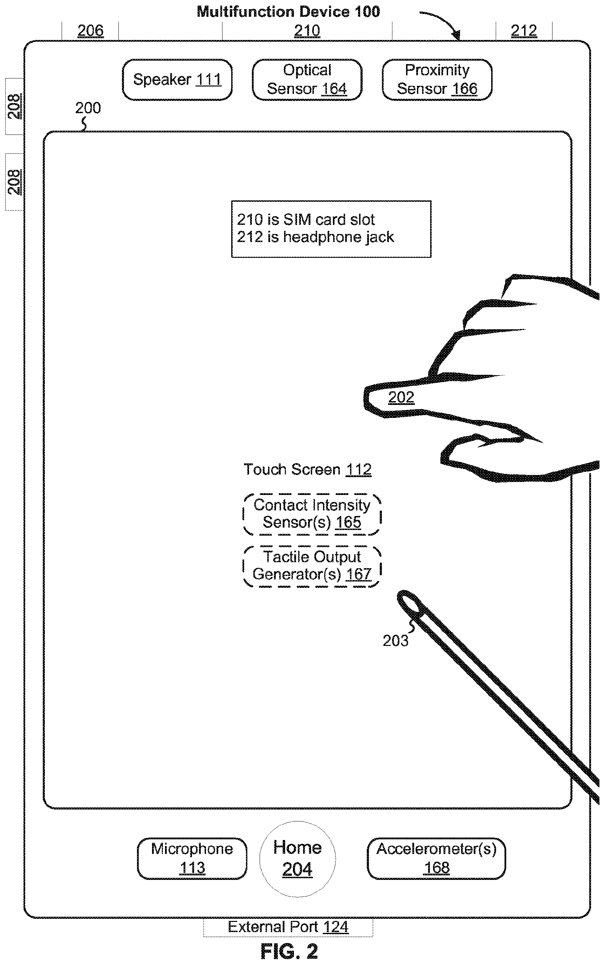

Audio circuitry 110, speaker 111, and microphone 113 provide an audio interface between a user and device 100. Audio circuitry 110 receives audio data from peripherals interface 118, converts the audio data to an electrical signal, and transmits the electrical signal to speaker 111. Speaker 111 converts the electrical signal to human-audible sound waves. Audio circuitry 110 also receives electrical signals converted by microphone 113 from sound waves. Audio circuitry 110 converts the electrical signal to audio data and transmits the audio data to peripherals interface 118 for processing. Audio data is, optionally, retrieved from and/or transmitted to memory 102 and/or RF circuitry 108 by peripherals interface 118. In some embodiments, audio circuitry 110 also includes a headset jack (e.g., 212, Fig. 2). The headset jack provides an interface between audio circuitry 110 and removable audio input/output peripherals, such as output-only headphones or a headset with both output (e.g., a headphone for one or both ears) and input (e.g., a microphone).

I/O subsystem 106 couples input/output peripherals on device 100, such as touch screen 112 and other input control devices 116, to peripherals interface 118. I/O subsystem 106 optionally includes display controller 156, optical sensor controller 158, intensity sensor controller 159, haptic feedback controller 161 and one or more input controllers 160 for other input or control devices. The one or more input controllers 160 receive/send electrical signals from/to other input or control devices 116. The other input control devices 116 optionally include physical buttons (e.g., push buttons, rocker buttons, etc.), dials, slider switches, joysticks, click wheels, and so forth. In some alternate embodiments, input controller(s) 160 are, optionally, coupled to any (or none) of the following: a keyboard, infrared port, USB port, and a pointer device such as a mouse. The one or more buttons (e.g., 208, Fig. 2) optionally include an up/down button for volume control of speaker 111 and/or microphone 113. The one or more buttons optionally include a push button (e.g., 206, Fig. 2).

Touch-sensitive display 112 provides an input interface and an output interface between the device and a user. As described above, the touch-sensitive operation and the display operation of touch-sensitive display 112 are optionally separated from each other, such that a display device is used for display purposes and a touch-sensitive surface (whether display or not) is used for input detection purposes, and the described components and functions are modified accordingly. However, for simplicity, the following description is provided with reference to a touch-sensitive display. Display controller 156 receives and/or sends electrical signals from/to touch screen 112. Touch screen 112 displays visual output to the user. The visual output optionally includes graphics, text, icons, video, and any combination thereof (collectively termed "graphics"). In some embodiments, some or all of the visual output corresponds to user-interface objects.

Touch screen 112 has a touch-sensitive surface, sensor or set of sensors that accepts input from the user based on haptic and/or tactile contact. Touch screen 112 and display controller 156 (along with any associated modules and/or sets of instructions in memory 102) detect contact (and any movement or breaking of the contact) on touch screen 112 and converts the detected contact into interaction with user-interface objects (e.g., one or more soft keys, icons, web pages or images) that are displayed on touch screen 112. In an exemplary embodiment, a point of contact between touch screen 112 and the user corresponds to a finger of the user.

Touch screen 112 optionally uses LCD (liquid crystal display) technology, LPD (light emitting polymer display) technology, or LED (light emitting diode) technology, although other display technologies are used in other embodiments. Touch screen 112 and display controller 156 optionally detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 112. In an exemplary embodiment, projected mutual capacitance sensing technology is used, such as that found in the iPhone®, iPod Touch®, and iPad® from Apple Inc. of Cupertino, California.

Touch screen 112 optionally has a video resolution in excess of 100 dpi. In some embodiments, the touch screen has a video resolution of approximately 160 dpi. The user optionally makes contact with touch screen 112 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 100 optionally includes a touchpad (not shown) for activating or deactivating particular functions. In some embodiments, the touchpad is a touch-sensitive area of the device that, unlike the touch screen, does not display visual output. The touchpad is, optionally, a touch-sensitive surface that is separate from touch screen 112 or an extension of the touch-sensitive surface formed by the touch screen.

Device 100 also includes power system 162 for powering the various components. Power system 162 optionally includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable or non-portable devices.

Device 100 optionally also includes one or more optical sensors 164. Fig. 1A shows an optical sensor coupled to optical sensor controller 158 in I/O subsystem 106. Optical sensor 164 optionally includes charge-coupled device (CCD) or complementary metal-oxide semiconductor (CMOS) phototransistors. Optical sensor 164 receives light from the environment, projected through one or more lens, and converts the light to data representing an image. In conjunction with imaging module 143 (also called a camera module), optical sensor 164 optionally captures still images or video. In some embodiments, an optical sensor is located on the back of device 100, opposite touch screen display 112 on the front of the device, so that the touch screen display is enabled for use as a viewfinder for still and/or video image acquisition. In some embodiments, another optical sensor is located on the front of the device so that the user's image is, optionally, obtained for videoconferencing while the user views the other video conference participants on the touch screen display.

Device 100 optionally also includes one or more contact intensity sensors 165. Fig. 1A shows a contact intensity sensor coupled to intensity sensor controller 159 in I/O subsystem 106. Contact intensity sensor 165 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor 165 receives contact intensity information (e.g., pressure information or a proxy for pressure information) from the environment. In some embodiments, at least one contact intensity sensor is collocated with, or proximate to, a touch-sensitive surface (e.g., touch-sensitive display system 112). In some embodiments, at least one contact intensity sensor is located on the back of device 100, opposite touch screen display 112 which is located on the front of device 100.

Device 100 optionally also includes one or more proximity sensors 166. Fig. 1A shows proximity sensor 166 coupled to peripherals interface 118. Alternately, proximity sensor 166 is coupled to input controller 160 in I/O subsystem 106. In some embodiments, the proximity sensor turns off and disables touch screen 112 when the multifunction device is placed near the user's ear (e.g., when the user is making a phone call).

Device 100 optionally also includes one or more tactile output generators 167. Fig. 1A shows a tactile output generator coupled to haptic feedback controller 161 in I/O subsystem 106. Tactile output generator 167 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor 165 receives tactile feedback generation instructions from haptic feedback module 133 and generates tactile outputs on device 100 that are capable of being sensed by a user of device 100. In some embodiments, at least one tactile output generator is collocated with, or proximate to, a touch-sensitive surface (e.g., touch-sensitive display system 112) and, optionally, generates a tactile output by moving the touch-sensitive surface vertically (e.g., in/out of a surface of device 100) or laterally (e.g., back and forth in the same plane as a surface of device 100). In some embodiments, at least one tactile output generator sensor is located on the back of device 100, opposite touch screen display 112 which is located on the front of device 100.

Device 100 optionally also includes one or more accelerometers 168. Fig. 1A shows accelerometer 168 coupled to peripherals interface 118. Alternately, accelerometer 168 is, optionally, coupled to an input controller 160 in I/O subsystem 106. In some embodiments, information is displayed on the touch screen display in a portrait view or a landscape view based on an analysis of data received from the one or more accelerometers. Device 100 optionally includes, in addition to accelerometer(s) 168, a magnetometer (not shown) and a GPS (or GLONASS or other global navigation system) receiver (not shown) for obtaining information concerning the location and orientation (e.g., portrait or landscape) of device 100.

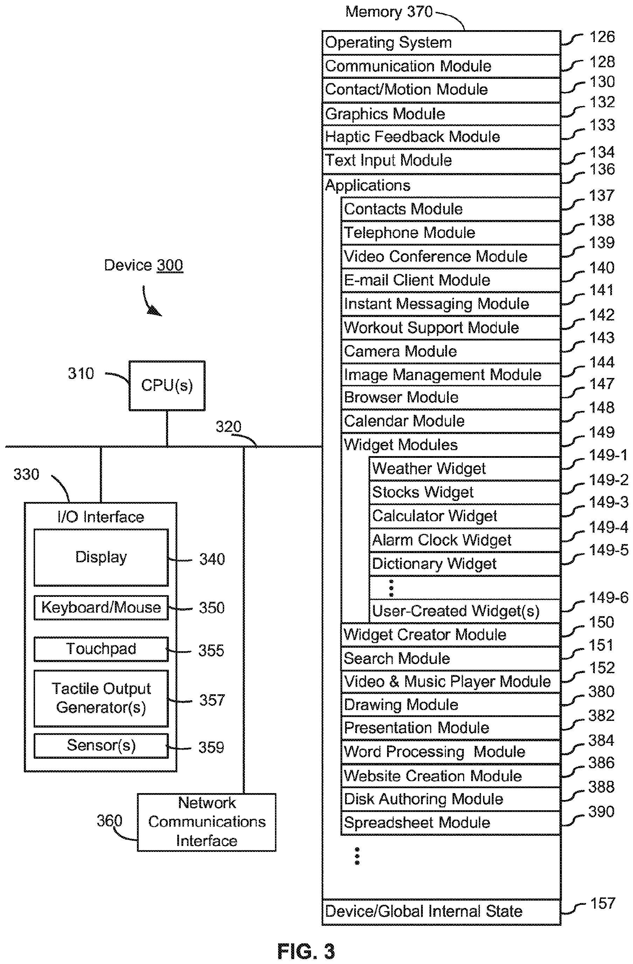

In some embodiments, the software components stored in memory 102 include operating system 126, communication module (or set of instructions) 128, contact/motion module (or set of instructions) 130, graphics module (or set of instructions) 132, text input module (or set of instructions) 134, Global Positioning System (GPS) module (or set of instructions) 135, and applications (or sets of instructions) 136. Furthermore, in some embodiments memory 102 stores device/global internal state 157, as shown in Figs. 1A and 3. Device/global internal state 157 includes one or more of: active application state, indicating which applications, if any, are currently active; display state, indicating what applications, views or other information occupy various regions of touch screen display 112; sensor state, including information obtained from the device's various sensors and input control devices 116; and location information concerning the device's location and/or attitude.

Operating system 126 (e.g., Darwin, RTXC, LINUX, UNIX, OS X, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 128 facilitates communication with other devices over one or more external ports 124 and also includes various software components for handling data received by RF circuitry 108 and/or external port 124. External port 124 (e.g., Universal Serial Bus (USB), FIREWIRE, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with the 30-pin connector used on iPod (trademark of Apple Inc.) devices.

Contact/motion module 130 optionally detects contact with touch screen 112 (in conjunction with display controller 156) and other touch-sensitive devices (e.g., a touchpad or physical click wheel). Contact/motion module 130 includes various software components for performing various operations related to detection of contact, such as determining if contact has occurred (e.g., detecting a finger-down event), determining an intensity of the contact (e.g., the force or pressure of the contact or a substitute for the force or pressure of the contact) determining if there is movement of the contact and tracking the movement across the touch-sensitive surface (e.g., detecting one or more finger-dragging events), and determining if the contact has ceased (e.g., detecting a finger-up event or a break in contact). Contact/motion module 130 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch"/multiple finger contacts). In some embodiments, contact/motion module 130 and display controller 156 detect contact on a touchpad.

In some embodiments, contact/motion module 130 uses a set of one or more intensity thresholds to determine whether an operation has been performed by a user (e.g., to determine whether a user has "clicked" on an icon). In some embodiments at least a subset of the intensity thresholds are determined in accordance with software parameters (e.g., the intensity thresholds are not determined by the activation thresholds of particular physical actuators and can be adjusted without changing the physical hardware of device 100). For example, a mouse "click" threshold of a trackpad or touch screen display can be set to any of a large range of predefined thresholds values without changing the trackpad or touch screen display hardware. Additionally, in some implementations a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 130 optionally detects a gesture input by a user. Different gestures on the touch-sensitive surface have different contact patterns and intensities. Thus, a gesture is, optionally, detected by detecting a particular contact pattern. For example, detecting a finger tap gesture includes detecting a finger-down event followed by detecting a finger-up (lift off) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (lift off) event.

Graphics module 132 includes various known software components for rendering and displaying graphics on touch screen 112 or other display, including components for changing the visual impact (e.g., brightness, transparency, saturation, contrast or other visual property) of graphics that are displayed. As used herein, the term "graphics" includes any object that can be displayed to a user, including without limitation text, web pages, icons (such as user-interface objects including soft keys), digital images, videos, animations and the like.

In some embodiments, graphics module 132 stores data representing graphics to be used. Each graphic is, optionally, assigned a corresponding code. Graphics module 132 receives, from applications etc., one or more codes specifying graphics to be displayed along with, if necessary, coordinate data and other graphic property data, and then generates screen image data to output to display controller 156.

Haptic feedback module 133 includes various software components for generating instructions used by tactile output generator(s) 167 to produce tactile outputs at one or more locations on device 100 in response to user interactions with device 100.

Text input module 134, which is, optionally, a component of graphics module 132, provides soft keyboards for entering text in various applications (e.g., contacts 137, e-mail 140, IM 141, browser 147, and any other application that needs text input).

GPS module 135 determines the location of the device and provides this information for use in various applications (e.g., to telephone 138 for use in location-based dialing, to camera 143 as picture/video metadata, and to applications that provide location-based services such as weather widgets, local yellow page widgets, and map/navigation widgets).

Applications 136 optionally include the following modules (or sets of instructions), or a subset or superset thereof:
- contacts module 137 (sometimes called an address book or contact list);
- telephone module 138;
- video conferencing module 139;
- e-mail client module 140;
- instant messaging (IM) module 141;
- workout support module 142;
- camera module 143 for still and/or video images;
- image management module 144;
- browser module 147;
- calendar module 148;
- widget modules 149, which optionally include one or more of: weather widget 149-1, stocks widget 149-2, calculator widget 149-3, alarm clock widget 149-4, dictionary widget 149-5, and other widgets obtained by the user, as well as user-created widgets 149-6;
- widget creator module 150 for making user-created widgets 149-6;
- search module 151;
- video and music player module 152, which is, optionally, made up of a video player module and a music player module;
- notes module 153;
- map module 154;
- online video module 155.

Examples of other applications 136 that are, optionally, stored in memory 102 include other word processing applications, other image editing applications, drawing applications, presentation applications, JAVA-enabled applications, encryption, digital rights management, voice recognition, and voice replication.

In conjunction with touch screen 112, display controller 156, contact module 130, graphics module 132, and text input module 134, contacts module 137 are, optionally, used to manage an address book or contact list (e.g., stored in application internal state 192 of contacts module 137 in memory 102 or memory 370), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone 138, video conference 139, e-mail 140, or IM 141; and so forth.

In conjunction with RF circuitry 108, audio circuitry 110, speaker 111, microphone 113, touch screen 112, display controller 156, contact module 130, graphics module 132, and text input module 134, telephone module 138 are, optionally, used to enter a sequence of characters corresponding to a telephone number, access one or more telephone numbers in address book 137, modify a telephone number that has been entered, dial a respective telephone number, conduct a conversation and disconnect or hang up when the conversation is completed. As noted above, the wireless communication optionally uses any of a plurality of communications standards, protocols and technologies.

In conjunction with RF circuitry 108, audio circuitry 110, speaker 111, microphone 113, touch screen 112, display controller 156, optical sensor 164, optical sensor controller 158, contact module 130, graphics module 132, text input module 134, contact list 137, and telephone module 138, videoconferencing module 139 includes executable instructions to initiate, conduct, and terminate a video conference between a user and one or more other participants in accordance with user instructions.

In conjunction with RF circuitry 108, touch screen 112, display controller 156, contact module 130, graphics module 132, and text input module 134, e-mail client module 140 includes executable instructions to create, send, receive, and manage e-mail in response to user instructions. In conjunction with image management module 144, e-mail client module 140 makes it very easy to create and send e-mails with still or video images taken with camera module 143.

In conjunction with RF circuitry 108, touch screen 112, display controller 156, contact module 130, graphics module 132, and text input module 134, the instant messaging module 141 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages and to view received instant messages. In some embodiments, transmitted and/or received instant messages optionally include graphics, photos, audio files, video files and/or other attachments as are supported in a MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 108, touch screen 112, display controller 156, contact module 130, graphics module 132, text input module 134, GPS module 135, map module 154, and music player module 146, workout support module 142 includes executable instructions to create workouts (e.g., with time, distance, and/or calorie burning goals); communicate with workout sensors (sports devices); receive workout sensor data; calibrate sensors used to monitor a workout; select and play music for a workout; and display, store and transmit workout data.

In conjunction with touch screen 112, display controller 156, optical sensor(s) 164, optical sensor controller 158, contact module 130, graphics module 132, and image management module 144, camera module 143 includes executable instructions to capture still images or video (including a video stream) and store them into memory 102, modify characteristics of a still image or video, or delete a still image or video from memory 102.

In conjunction with touch screen 112, display controller 156, contact module 130, graphics module 132, text input module 134, and camera module 143, image management module 144 includes executable instructions to arrange, modify (e.g., edit), or otherwise manipulate, label, delete, present (e.g., in a digital slide show or album), and store still and/or video images.

In conjunction with RF circuitry 108, touch screen 112, display system controller 156, contact module 130, graphics module 132, and text input module 134, browser module 147 includes executable instructions to browse the Internet in accordance with user instructions, including searching, linking to, receiving, and displaying web pages or portions thereof, as well as attachments and other files linked to web pages.

In conjunction with RF circuitry 108, touch screen 112, display system controller 156, contact module 130, graphics module 132, text input module 134, e-mail client module 140, and browser module 147, calendar module 148 includes executable instructions to create, display, modify, and store calendars and data associated with calendars (e.g., calendar entries, to do lists, etc.) in accordance with user instructions.

In conjunction with RF circuitry 108, touch screen 112, display system controller 156, contact module 130, graphics module 132, text input module 134, and browser module 147, widget modules 149 are mini-applications that are, optionally, downloaded and used by a user (e.g., weather widget 149-1, stocks widget 149-2, calculator widget 149-3, alarm clock widget 149-4, and dictionary widget 149-5) or created by the user (e.g., user-created widget 149-6). In some embodiments, a widget includes an HTML (Hypertext Markup Language) file, a CSS (Cascading Style Sheets) file, and a JavaScript file. In some embodiments, a widget includes an XML (Extensible Markup Language) file and a JavaScript file (e.g., Yahoo! Widgets).

In conjunction with RF circuitry 108, touch screen 112, display system controller 156, contact module 130, graphics module 132, text input module 134, and browser module 147, the widget creator module 150 are, optionally, used by a user to create widgets (e.g., turning a user-specified portion of a web page into a widget).

In conjunction with touch screen 112, display system controller 156, contact module 130, graphics module 132, and text input module 134, search module 151 includes executable instructions to search for text, music, sound, image, video, and/or other files in memory 102 that match one or more search criteria (e.g., one or more user-specified search terms) in accordance with user instructions.

In conjunction with touch screen 112, display system controller 156, contact module 130, graphics module 132, audio circuitry 110, speaker 111, RF circuitry 108, and browser module 147, video and music player module 152 includes executable instructions that allow the user to download and play back recorded music and other sound files stored in one or more file formats, such as MP3 or AAC files, and executable instructions to display, present or otherwise play back videos (e.g., on touch screen 112 or on an external, connected display via external port 124). In some embodiments, device 100 optionally includes the functionality of an MP3 player, such as an iPod (trademark of Apple Inc.).

In conjunction with touch screen 112, display controller 156, contact module 130, graphics module 132, and text input module 134, notes module 153 includes executable instructions to create and manage notes, to do lists, and the like in accordance with user instructions.

In conjunction with RF circuitry 108, touch screen 112, display system controller 156, contact module 130, graphics module 132, text input module 134, GPS module 135, and browser module 147, map module 154 are, optionally, used to receive, display, modify, and store maps and data associated with maps (e.g., driving directions; data on stores and other points of interest at or near a particular location; and other location-based data) in accordance with user instructions.

In conjunction with touch screen 112, display system controller 156, contact module 130, graphics module 132, audio circuitry 110, speaker 111, RF circuitry 108, text input module 134, e-mail client module 140, and browser module 147, online video module 155 includes instructions that allow the user to access, browse, receive (e.g., by streaming and/or download), play back (e.g., on the touch screen or on an external, connected display via external port 124), send an e-mail with a link to a particular online video, and otherwise manage online videos in one or more file formats, such as H.264. In some embodiments, instant messaging module 141, rather than e-mail client module 140, is used to send a link to a particular online video.

Each of the above identified modules and applications correspond to a set of executable instructions for performing one or more functions described above and the methods described in this application (e.g., the computer-implemented methods and other information processing methods described herein). These modules (e.g., sets of instructions) need not be implemented as separate software programs, procedures or modules, and thus various subsets of these modules are, optionally, combined or otherwise re-arranged in various embodiments. In some embodiments, memory 102 optionally stores a subset of the modules and data structures identified above. Furthermore, memory 102 optionally stores additional modules and data structures not described above.

In some embodiments, device 100 is a device where operation of a predefined set of functions on the device is performed exclusively through a touch screen and/or a touchpad (whether included in device 100 or on a separate device, such as an input device). By using a touch screen and/or a touchpad as the primary input control device for operation of device 100, the number of physical input control devices (such as push buttons, dials, and the like) on device 100 is, optionally, reduced.

The predefined set of functions that are performed exclusively through a touch screen and/or a touchpad optionally include navigation between user interfaces. In some embodiments, the touchpad, when touched by the user, navigates device 100 to a main, home, or root menu from any user interface that is displayed on device 100. In some embodiments, a "menu button" is implemented using a touchpad. In some other embodiments, the menu button is a physical push button or other physical input control device instead of a touchpad.

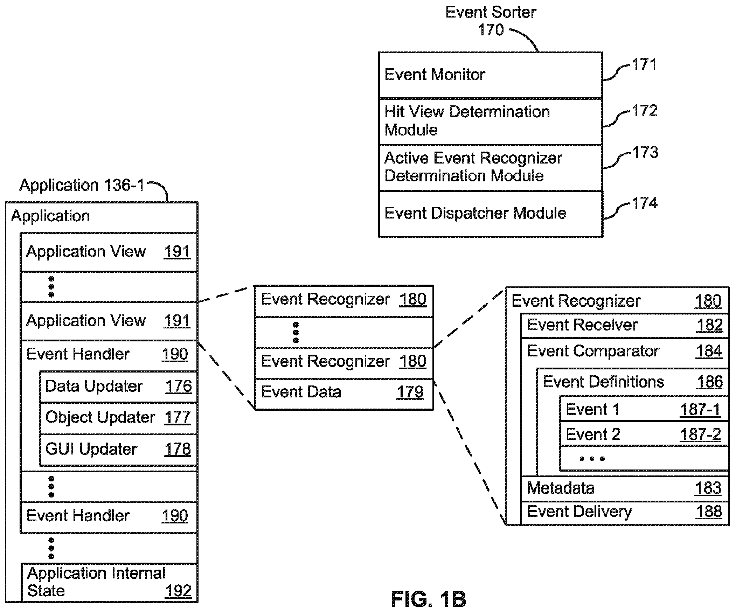

Fig. 1B is a block diagram illustrating exemplary components for event handling in accordance with some embodiments. In some embodiments, memory 102 (in Fig. 1A) or 370 (Fig. 3) includes event sorter 170 (e.g., in operating system 126) and a respective application 136-1 (e.g., any of the aforementioned applications 137-151, 155, 380-390).

Event sorter 170 receives event information and determines the application 136-1 and application view 191 of application 136-1 to which to deliver the event information. Event sorter 170 includes event monitor 171 and event dispatcher module 174. In some embodiments, application 136-1 includes application internal state 192, which indicates the current application view(s) displayed on touch-sensitive display 112 when the application is active or executing. In some embodiments, device/global internal state 157 is used by event sorter 170 to determine which application(s) is (are) currently active, and application internal state 192 is used by event sorter 170 to determine application views 191 to which to deliver event information.

In some embodiments, application internal state 192 includes additional information, such as one or more of: resume information to be used when application 136-1 resumes execution, user interface state information that indicates information being displayed or that is ready for display by application 136-1, a state queue for enabling the user to go back to a prior state or view of application 136-1, and a redo/undo queue of previous actions taken by the user.

Event monitor 171 receives event information from peripherals interface 118. Event information includes information about a sub-event (e.g., a user touch on touch-sensitive display 112, as part of a multi-touch gesture). Peripherals interface 118 transmits information it receives from I/O subsystem 106 or a sensor, such as proximity sensor 166, accelerometer(s) 168, and/or microphone 113 (through audio circuitry 110). Information that peripherals interface 118 receives from I/O subsystem 106 includes information from touch-sensitive display 112 or a touch-sensitive surface.

In some embodiments, event monitor 171 sends requests to the peripherals interface 118 at predetermined intervals. In response, peripherals interface 118 transmits event information. In other embodiments, peripheral interface 118 transmits event information only when there is a significant event (e.g., receiving an input above a predetermined noise threshold and/or for more than a predetermined duration).

In some embodiments, event sorter 170 also includes a hit view determination module 172 and/or an active event recognizer determination module 173.

Hit view determination module 172 provides software procedures for determining where a sub-event has taken place within one or more views, when touch-sensitive display 112 displays more than one view. Views are made up of controls and other elements that a user can see on the display.

Another aspect of the user interface associated with an application is a set of views, sometimes herein called application views or user interface windows, in which information is displayed and touch-based gestures occur. The application views (of a respective application) in which a touch is detected optionally correspond to programmatic levels within a programmatic or view hierarchy of the application. For example, the lowest level view in which a touch is detected is, optionally, called the hit view, and the set of events that are recognized as proper inputs are, optionally, determined based, at least in part, on the hit view of the initial touch that begins a touch-based gesture.

Hit view determination module 172 receives information related to sub-events of a touch-based gesture. When an application has multiple views organized in a hierarchy, hit view determination module 172 identifies a hit view as the lowest view in the hierarchy which should handle the sub-event. In most circumstances, the hit view is the lowest level view in which an initiating sub-event occurs (e.g., the first sub-event in the sequence of sub-events that form an event or potential event). Once the hit view is identified by the hit view determination module, the hit view typically receives all sub-events related to the same touch or input source for which it was identified as the hit view.

Active event recognizer determination module 173 determines which view or views within a view hierarchy should receive a particular sequence of sub-events. In some embodiments, active event recognizer determination module 173 determines that only the hit view should receive a particular sequence of sub-events. In other embodiments, active event recognizer determination module 173 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 174 dispatches the event information to an event recognizer (e.g., event recognizer 180). In embodiments including active event recognizer determination module 173, event dispatcher module 174 delivers the event information to an event recognizer determined by active event recognizer determination module 173. In some embodiments, event dispatcher module 174 stores in an event queue the event information, which is retrieved by a respective event receiver module 182.

In some embodiments, operating system 126 includes event sorter 170. Alternatively, application 136-1 includes event sorter 170. In yet other embodiments, event sorter 170 is a stand-alone module, or a part of another module stored in memory 102, such as contact/motion module 130.

In some embodiments, application 136-1 includes a plurality of event handlers 190 and one or more application views 191, each of which includes instructions for handling touch events that occur within a respective view of the application's user interface. Each application view 191 of the application 136-1 includes one or more event recognizers 180. Typically, a respective application view 191 includes a plurality of event recognizers 180. In other embodiments, one or more of event recognizers 180 are part of a separate module, such as a user interface kit (not shown) or a higher level object from which application 136-1 inherits methods and other properties. In some embodiments, a respective event handler 190 includes one or more of: data updater 176, object updater 177, GUI updater 178, and/or event data 179 received from event sorter 170. Event handler 190 optionally utilizes or calls data updater 176, object updater 177 or GUI updater 178 to update the application internal state 192. Alternatively, one or more of the application views 191 includes one or more respective event handlers 190. Also, in some embodiments, one or more of data updater 176, object updater 177, and GUI updater 178 are included in a respective application view 191.

A respective event recognizer 180 receives event information (e.g., event data 179) from event sorter 170, and identifies an event from the event information. Event recognizer 180 includes event receiver 182 and event comparator 184. In some embodiments, event recognizer 180 also includes at least a subset of: metadata 183, and event delivery instructions 188 (which optionally include sub-event delivery instructions).

Event receiver 182 receives event information from event sorter 170. The event information includes information about a sub-event, for example, a touch or a touch movement. Depending on the sub-event, the event information also includes additional information, such as location of the sub-event. When the sub-event concerns motion of a touch, the event information optionally also includes speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 184 compares the event information to predefined event or sub-event definitions and, based on the comparison, determines an event or sub-event, or determines or updates the state of an event or sub-event. In some embodiments, event comparator 184 includes event definitions 186. Event definitions 186 contain definitions of events (e.g., predefined sequences of sub-events), for example, event 1 (187-1), event 2 (187-2), and others. In some embodiments, sub-events in an event 187 include, for example, touch begin, touch end, touch movement, touch cancellation, and multiple touching. In one example, the definition for event 1 (187-1) is a double tap on a displayed object. The double tap, for example, comprises a first touch (touch begin) on the displayed object for a predetermined phase, a first lift-off (touch end) for a predetermined phase, a second touch (touch begin) on the displayed object for a predetermined phase, and a second lift-off (touch end) for a predetermined phase. In another example, the definition for event 2 (187-2) is a dragging on a displayed object. The dragging, for example, comprises a touch (or contact) on the displayed object for a predetermined phase, a movement of the touch across touch-sensitive display 112, and lift-off of the touch (touch end). In some embodiments, the event also includes information for one or more associated event handlers 190.

In some embodiments, event definition 187 includes a definition of an event for a respective user-interface object. In some embodiments, event comparator 184 performs a hit test to determine which user-interface object is associated with a sub-event. For example, in an application view in which three user-interface objects are displayed on touch-sensitive display 112, when a touch is detected on touch-sensitive display 112, event comparator 184 performs a hit test to determine which of the three user-interface objects is associated with the touch (sub-event). If each displayed object is associated with a respective event handler 190, the event comparator uses the result of the hit test to determine which event handler 190 should be activated. For example, event comparator 184 selects an event handler associated with the sub-event and the object triggering the hit test.

In some embodiments, the definition for a respective event 187 also includes delayed actions that delay delivery of the event information until after it has been determined whether the sequence of sub-events does or does not correspond to the event recognizer's event type.

When a respective event recognizer 180 determines that the series of sub-events do not match any of the events in event definitions 186, the respective event recognizer 180 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 180 includes metadata 183 with configurable properties, flags, and/or lists that indicate how the event delivery system should perform sub-event delivery to actively involved event recognizers. In some embodiments, metadata 183 includes configurable properties, flags, and/or lists that indicate how event recognizers interact, or are enabled to interact, with one another. In some embodiments, metadata 183 includes configurable properties, flags, and/or lists that indicate whether sub-events are delivered to varying levels in the view or programmatic hierarchy.

In some embodiments, a respective event recognizer 180 activates event handler 190 associated with an event when one or more particular sub-events of an event are recognized. In some embodiments, a respective event recognizer 180 delivers event information associated with the event to event handler 190. Activating an event handler 190 is distinct from sending (and deferred sending) sub-events to a respective hit view. In some embodiments, event recognizer 180 throws a flag associated with the recognized event, and event handler 190 associated with the flag catches the flag and performs a predefined process.

In some embodiments, event delivery instructions 188 include sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 176 creates and updates data used in application 136-1. For example, data updater 176 updates the telephone number used in contacts module 137, or stores a video file used in video player module 145. In some embodiments, object updater 177 creates and updates objects used in application 136-1. For example, object updater 176 creates a new user-interface object or updates the position of a user-interface object. GUI updater 178 updates the GUI. For example, GUI updater 178 prepares display information and sends it to graphics module 132 for display on a touch-sensitive display.

In some embodiments, event handler(s) 190 includes or has access to data updater 176, object updater 177, and GUI updater 178. In some embodiments, data updater 176, object updater 177, and GUI updater 178 are included in a single module of a respective application 136-1 or application view 191. In other embodiments, they are included in two or more software modules.

It shall be understood that the foregoing discussion regarding event handling of user touches on touch-sensitive displays and/or touchpads also applies to other forms of user inputs to operate multifunction devices 100 with input-devices, not all of which are initiated on touch screens. For example, mouse movement and mouse button presses, optionally coordinated with single or multiple keyboard presses or holds; contact movements such as taps, drags, scrolls, etc., on touch-pads; pen stylus inputs; movement of the device; oral instructions; detected eye movements; biometric inputs; and/or any combination thereof are optionally utilized as inputs corresponding to sub-events which define an event to be recognized.

Fig. 2 illustrates a portable or non-portable multifunction device 100 having a touch screen 112 in accordance with some embodiments. As stated above, multifunction device 100 is described as having the various illustrated structures (such as touch screen 112, speaker 111, accelerometer 168, microphone 113, etc.); however, it is understood that these structures optionally reside on separate devices. For example, display-related structures (e.g., display, speaker, etc.) and/or functions optionally reside on a separate display device, input-related structures (e.g., touch-sensitive surface, microphone, accelerometer, etc.) and/or functions optionally reside on a separate input device, and remaining structures and/or functions optionally reside on multifunction device 100.

The touch screen 112 optionally displays one or more graphics within user interface (UI) 200. In this embodiment, as well as others described below, a user is enabled to select one or more of the graphics by making a gesture on the graphics, for example, with one or more fingers 202 (not drawn to scale in the figure) or one or more styluses 203 (not drawn to scale in the figure). In some embodiments, selection of one or more graphics occurs when the user breaks contact with the one or more graphics. In some embodiments, the gesture optionally includes one or more taps, one or more swipes (from left to right, right to left, upward and/or downward) and/or a rolling of a finger (from right to left, left to right, upward and/or downward) that has made contact with device 100. In some implementations or circumstances, inadvertent contact with a graphic does not select the graphic. For example, a swipe gesture that sweeps over an application icon optionally does not select the corresponding application when the gesture corresponding to selection is a tap.

Device 100 optionally also includes one or more physical buttons, such as "home" or menu button 204. As previously described, menu button 204 is, optionally, used to navigate to any application 136 in a set of applications that are, optionally executed on device 100. Alternatively, in some embodiments, the menu button is implemented as a soft key in a GUI displayed on touch screen 112.

In one embodiment, device 100 includes touch screen 112, menu button 204, push button 206 for powering the device on/off and locking the device, volume adjustment button(s) 208, Subscriber Identity Module (SIM) card slot 210, head set jack 212, and docking/charging external port 124. Push button 206 is, optionally, used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, device 100 also accepts verbal input for activation or deactivation of some functions through microphone 113. Device 100 also, optionally, includes one or more contact intensity sensors 165 for detecting intensity of contacts on touch screen 112 and/or one or more tactile output generators 167 for generating tactile outputs for a user of device 100.

Fig. 3 is a block diagram of an exemplary multifunction device with a display and a touch-sensitive surface in accordance with some embodiments. Device 300 need not include the display and the touch-sensitive surface, as described above, but rather, in some embodiments, optionally communicates with the display and the touch-sensitive surface on other devices. Additionally, device 300 need not be portable. In some embodiments, device 300 is a laptop computer, a desktop computer, a tablet computer, a multimedia player device (such as a television or a set-top box), a navigation device, an educational device (such as a child's learning toy), a gaming system, or a control device (e.g., a home or industrial controller). Device 300 typically includes one or more processing units (CPU's) 310, one or more network or other communications interfaces 360, memory 370, and one or more communication buses 320 for interconnecting these components. Communication buses 320 optionally include circuitry (sometimes called a chipset) that interconnects and controls communications between system components. Device 300 includes input/output (I/O) interface 330 comprising display 340, which is typically a touch screen display. I/O interface 330 also optionally includes a keyboard and/or mouse (or other pointing device) 350 and touchpad 355, tactile output generator 357 for generating tactile outputs on device 300 (e.g., similar to tactile output generator(s) 167 described above with reference to Fig. 1A), sensors 359 (e.g., optical, acceleration, proximity, touch-sensitive, and/or contact intensity sensors similar to contact intensity sensor(s) 165 described above with reference to Fig. 1A). Memory 370 includes high-speed random access memory, such as DRAM, SRAM, DDR RAM or other random access solid state memory devices; and optionally includes non-volatile memory, such as one or more magnetic disk storage devices, optical disk storage devices, flash memory devices, or other non-volatile solid state storage devices. Memory 370 optionally includes one or more storage devices remotely located from CPU(s) 310. In some embodiments, memory 370 stores programs, modules, and data structures analogous to the programs, modules, and data structures stored in memory 102 of portable or non-portable multifunction device 100 (Fig. 1A), or a subset thereof. Furthermore, memory 370 optionally stores additional programs, modules, and data structures not present in memory 102 of portable or non-portable multifunction device 100. For example, memory 370 of device 300 optionally stores drawing module 380, presentation module 382, word processing module 384, website creation module 386, disk authoring module 388, and/or spreadsheet module 390, while memory 102 of portable or non-portable multifunction device 100 (Fig. 1A) optionally does not store these modules.

Each of the above identified elements in Fig. 3 are, optionally, stored in one or more of the previously mentioned memory devices. Each of the above identified modules corresponds to a set of instructions for performing a function described above. The above identified modules or programs (e.g., sets of instructions) need not be implemented as separate software programs, procedures or modules, and thus various subsets of these modules are, optionally, combined or otherwise re-arranged in various embodiments. In some embodiments, memory 370 optionally stores a subset of the modules and data structures identified above. Furthermore, memory 370 optionally stores additional modules and data structures not described above.

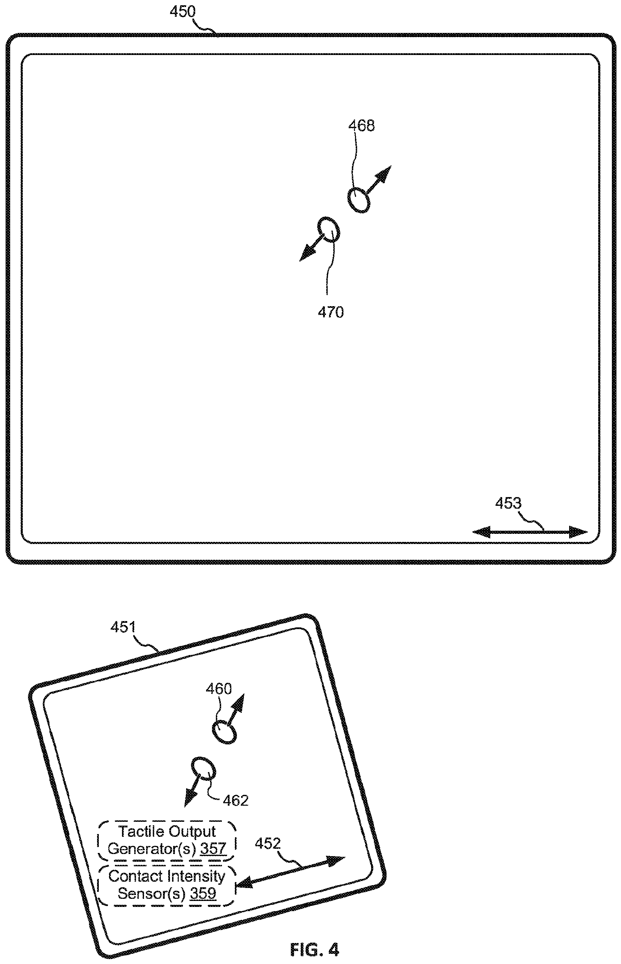

Fig. 4 illustrates an exemplary user interface on a device (e.g., device 300, Fig. 3) with a touch-sensitive surface 451 (e.g., a tablet or touchpad 355, Fig. 3) that is separate from the display 450 (e.g., touch screen display 112). Device 300 also, optionally, includes one or more contact intensity sensors (e.g., one or more of sensors 357) for detecting intensity of contacts on touch-sensitive surface 451 and/or one or more tactile output generators 359 for generating tactile outputs for a user of device 300.

Although some of the examples which follow will be given with reference to inputs on touch screen display 112 (where the touch sensitive surface and the display are combined), in some embodiments, the device detects inputs on a touch-sensitive surface that is separate from the display, as shown in Fig. 4. In some embodiments the touch sensitive surface (e.g., 451 in Fig. 4) has a primary axis (e.g., 452 in Fig. 4) that corresponds to a primary axis (e.g., 453 in Fig. 4) on the display (e.g., 450). In accordance with these embodiments, the device detects contacts (e.g., 460 and 462 in Fig. 4) with the touch-sensitive surface 451 at locations that correspond to respective locations on the display (e.g., in Fig. 4, 460 corresponds to 468 and 462 corresponds to 470). In this way, user inputs (e.g., contacts 460 and 462, and movements thereof) detected by the device on the touch-sensitive surface (e.g., 451 in Fig. 4) are used by the device to manipulate the user interface on the display (e.g., 450 in Fig. 4) of the multifunction device when the touch-sensitive surface is separate from the display. It should be understood that similar methods are, optionally, used for other user interfaces described herein.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

As used herein, the term "focus selector" refers to an input element that indicates a current part of a user interface with which a user is interacting. In some implementations that include a cursor or other location marker, the cursor acts as a "focus selector," so that when an input (e.g., a press input) is detected on a touch-sensitive surface (e.g., touchpad 355 in Fig. 3 or touch-sensitive surface 451 in Fig. 4) while the cursor is over a particular user interface element (e.g., a button, window, slider or other user interface element), the particular user interface element is adjusted in accordance with the detected input. In some implementations that include a touch-screen display (e.g., touch-sensitive display system 112 in Fig. 1A) that enables direct interaction with user interface elements on the touch-screen display, a detected contact on the touch-screen acts as a "focus selector," so that when an input (e.g., a press input by the contact) is detected on the touch-screen display at a location of a particular user interface element (e.g., a button, window, slider or other user interface element), the particular user interface element is adjusted in accordance with the detected input. In some implementations focus is moved from one region of a user interface to another region of the user interface without corresponding movement of a cursor or movement of a contact on a touch-screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch-screen display) that is controlled by the user so as to communicate the user's intended interaction with the user interface (e.g., by indicating, to the device, the element of the user interface with which the user is intending to interact). For example, the location of a focus selector (e.g., a cursor, a contact or a selection box) over a respective button while a press input is detected on the touch-sensitive surface (e.g., a touchpad or touch screen) will indicate that the user is intending to activate the respective button (as opposed to other user interface elements shown on a display of the device).

In some embodiments described herein, one or more operations are performed in response to detecting a gesture that includes a respective press input or in response to detecting the respective press input performed with a respective contact (or a plurality of contacts), where the respective press input is detected based at least in part on detecting an increase in intensity of the contact (or plurality of contacts) above a press-input intensity threshold. In some embodiments, the respective operation is performed in response to detecting the increase in intensity of the respective contact above the press-input intensity threshold (e.g., a "down stroke" of the respective press input). In some embodiments, the press input includes an increase in intensity of the respective contact above the press-input intensity threshold and a subsequent decrease in intensity of the contact below the press-input intensity threshold, and the respective operation is performed in response to detecting the subsequent decrease in intensity of the respective contact below the press-input threshold (e.g., an "up stroke" of the respective press input).

In some embodiments, the device employs intensity hysteresis to avoid accidental inputs sometimes termed "jitter," where the device defines or selects a hysteresis intensity threshold with a predefined relationship to the press-input intensity threshold (e.g., the hysteresis intensity threshold is X intensity units lower than the press-input intensity threshold or the hysteresis intensity threshold is 75%, 90% or some reasonable proportion of the press-input intensity threshold). Thus, in some embodiments, the press input includes an increase in intensity of the respective contact above the press-input intensity threshold and a subsequent decrease in intensity of the contact below the hysteresis intensity threshold that corresponds to the press-input intensity threshold, and the respective operation is performed in response to detecting the subsequent decrease in intensity of the respective contact below the hysteresis intensity threshold (e.g., an "up stroke" of the respective press input). Similarly, in some embodiments, the press input is detected only when the device detects an increase in intensity of the contact from an intensity at or below the hysteresis intensity threshold to an intensity at or above the press-input intensity threshold and, optionally, a subsequent decrease in intensity of the contact to an intensity at or below the hysteresis intensity, and the respective operation is performed in response to detecting the press input (e.g., the increase in intensity of the contact or the decrease in intensity of the contact, depending on the circumstances).

For ease of explanation, the description of operations performed in response to a press input associated with a press-input intensity threshold or in response to a gesture including the press input are, optionally, triggered in response to detecting either: an increase in intensity of a contact above the press-input intensity threshold, an increase in intensity of a contact from an intensity below the hysteresis intensity threshold to an intensity above the press-input intensity threshold, a decrease in intensity of the contact below the press-input intensity threshold, and/or a decrease in intensity of the contact below the hysteresis intensity threshold corresponding to the press-input intensity threshold. Additionally, in examples where an operation is described as being performed in response to detecting a decrease in intensity of a contact below the press-input intensity threshold, the operation is, optionally, performed in response to detecting a decrease in intensity of the contact below a hysteresis intensity threshold corresponding to, and lower than, the press-input intensity threshold.

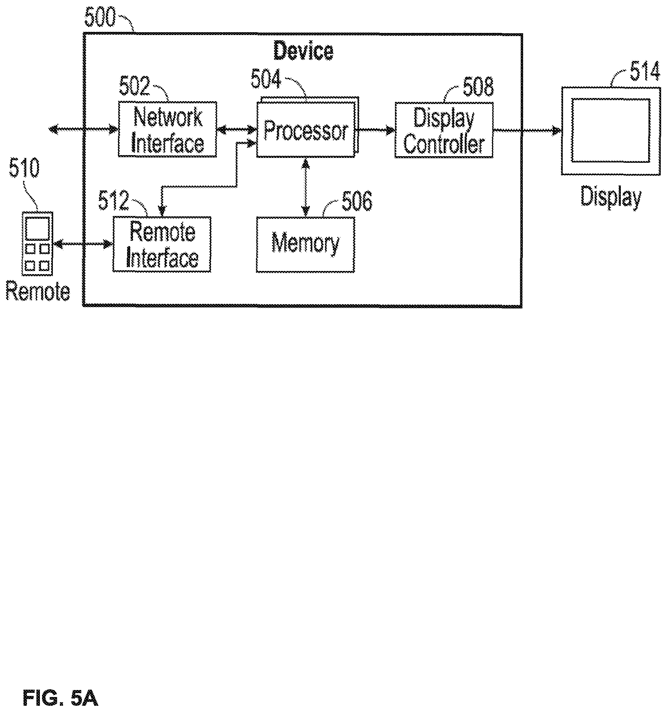

Fig. 5A illustrates a block diagram of an exemplary architecture for the device 500 according to some embodiments of the disclosure. In the embodiment of Fig. 5A, media content is optionally received by device 500 via network interface 502, which is optionally a wireless or wired connection. The one or more processors 504 optionally execute any number of programs stored in memory 506 or storage, which optionally includes instructions to perform one or more of the methods and/or processes described herein (e.g., methods 700, 900, 1100 and 1300).

In some embodiments, display controller 508 causes the various user interfaces of the disclosure to be displayed on display 514. Further, input to device 500 is optionally provided by remote 510 via remote interface 512, which is optionally a wireless or a wired connection. It is understood that the embodiment of Fig. 5A is not meant to limit the features of the device of the disclosure, and that other components to facilitate other features described in the disclosure are optionally included in the architecture of Fig. 5A as well. In some embodiments, device 500 optionally corresponds to one or more of multifunction device 100 in Figs. 1A and 2 and device 300 in Fig. 3; network interface 502 optionally corresponds to one or more of RF circuitry 108, external port 124, and peripherals interface 118 in Figs. 1A and 2, and network communications interface 360 in Fig. 3; processor 504 optionally corresponds to one or more of processor(s) 120 in Fig. 1A and CPU(s) 310 in Fig. 3; display controller 508 optionally corresponds to one or more of display controller 156 in Fig. 1A and I/O interface 330 in Fig. 3; memory 506 optionally corresponds to one or more of memory 102 in Fig. 1A and memory 370 in Fig. 3; remote interface 512 optionally corresponds to one or more of peripherals interface 118, and I/O subsystem 106 (and/or its components) in Fig. 1A, and I/O interface 330 in Fig. 3; remote 512 optionally corresponds to and or includes one or more of speaker 111, touch-sensitive display system 112, microphone 113, optical sensor(s) 164, contact intensity sensor(s) 165, tactile output generator(s) 167, other input control devices 116, accelerometer(s) 168, proximity sensor 166, and I/O subsystem 106 in Fig. 1A, and keyboard/mouse 350, touchpad 355, tactile output generator(s) 357, and contact intensity sensor(s) 359 in Fig. 3, and touch-sensitive surface 451 in Fig. 4; and, display 514 optionally corresponds to one or more of touch-sensitive display system 112 in Figs. 1A and 2, and display 340 in Fig. 3.

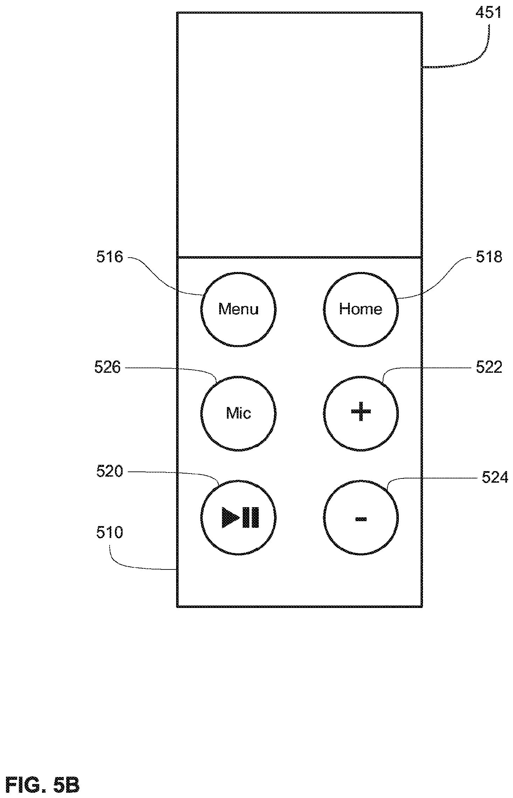

Fig. 5B illustrates an exemplary structure for remote 510 according to some embodiments of the disclosure. Remote 510 optionally includes touch-sensitive surface 451. In some embodiments, touch-sensitive surface 451 is edge-to-edge (e.g., it extends to the edges of remote 510, such that little or no surface of remote 510 exists between the touch-sensitive surface 451 and one or more edges of remote 510, as illustrated in Fig. 5B). Touch-sensitive surface 451 is optionally able to sense contacts as well as contact intensities (e.g., clicks of touch-sensitive surface 451), as previously described in this disclosure. Remote 510 also optionally includes buttons 516, 518, 520, 522, 524 and 526. Buttons 516, 518, 520, 522, 524 and 526 are optionally mechanical buttons or mechanical button alternatives that are able to sense contact with, or depression of, such buttons to initiate corresponding action(s) on, for example, device 500. In some embodiments, selection of "menu" button 516 by a user navigates device 500 backwards in a currently-executing application or currently-displayed user interface (e.g., back to a user interface that was displayed previous to the currently-displayed user interface), or navigates device 500 to a one-higher-level user interface than the currently-displayed user interface. In some embodiments, selection of "home" button 518 by a user navigates device 500 to a main, home, or root user interface from any user interface that is displayed on device 500 (e.g., to a home screen of device 500 that optionally includes one or more applications accessible on device 500). In some embodiments, selection of "play/pause" button 520 by a user toggles between playing and pausing a currently-playing content item on device 500 (e.g., if a content item is playing on device 500 when "play/pause" button 520 is selected, the content item is optionally paused, and if a content item is paused on device 500 when "play/pause" button 520 is selected, the content item is optionally played). In some embodiments, selection of "+" 522 or "-" 524 buttons by a user increases or decreases, respectively, the volume of audio reproduced by device 500 (e.g., the volume of a content item currently-playing on device 500). In some embodiments, selection of "mic" button 526 by a user allows the user to provide voice input, via a microphone in remote 510, to device 500. In addition or alternatively to the functionalities described above, touch-sensitive surface 451 and buttons 516, 518, 520, 522, 524 and 526 are optionally utilized in the manners provided in the descriptions of embodiments set forth below.

### USER INTERFACES AND ASSOCIATED PROCESSES

### Channel Bar

Users interact with electronic devices in many different manners, including interacting with content (e.g., music, movies, etc.) that may be available (e.g., stored or otherwise accessible) on the electronic devices. In some circumstances, the users desire to navigate channels on which the content is available. The embodiments described below provide ways in which electronic devices allow users to navigate channels on the electronic devices, thereby enhancing users' interactions with the electronic devices. Enhancing interactions with a device reduces the amount of time needed by a user to perform operations, and thus reduces the power usage of the device and increases battery life for battery-powered devices. It is understood that people use devices. When a person uses a device, that person is optionally referred to as a user of the device.

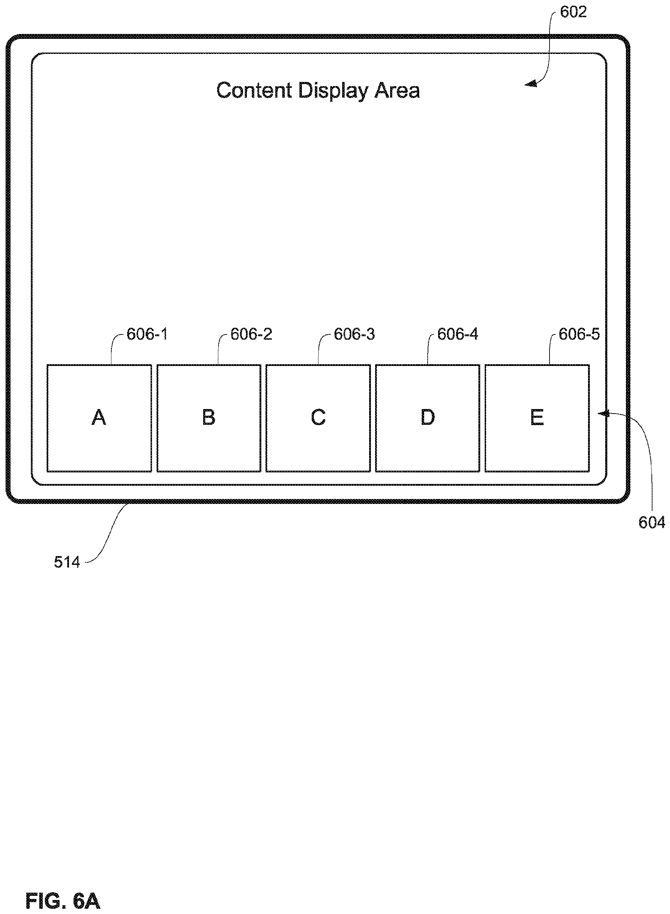

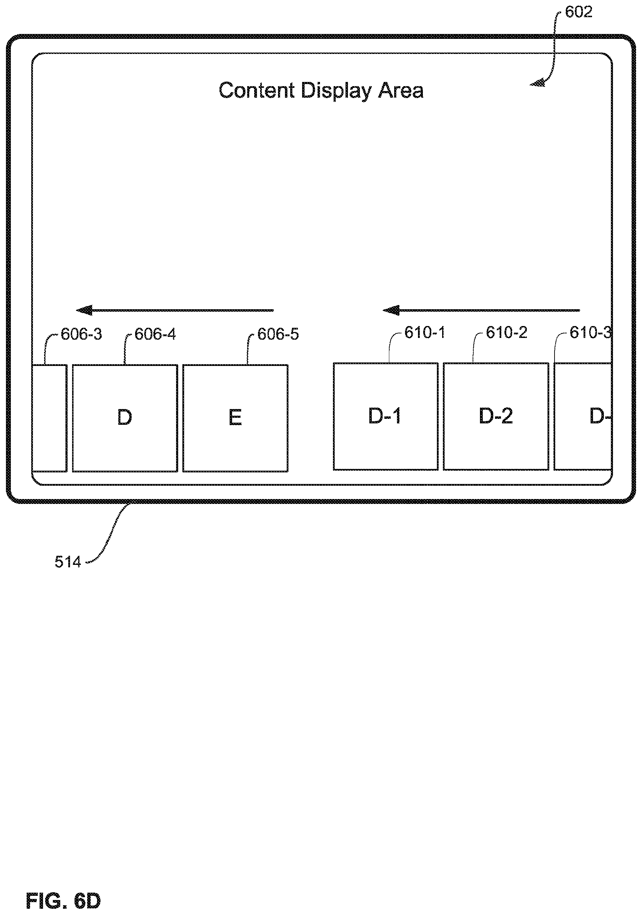

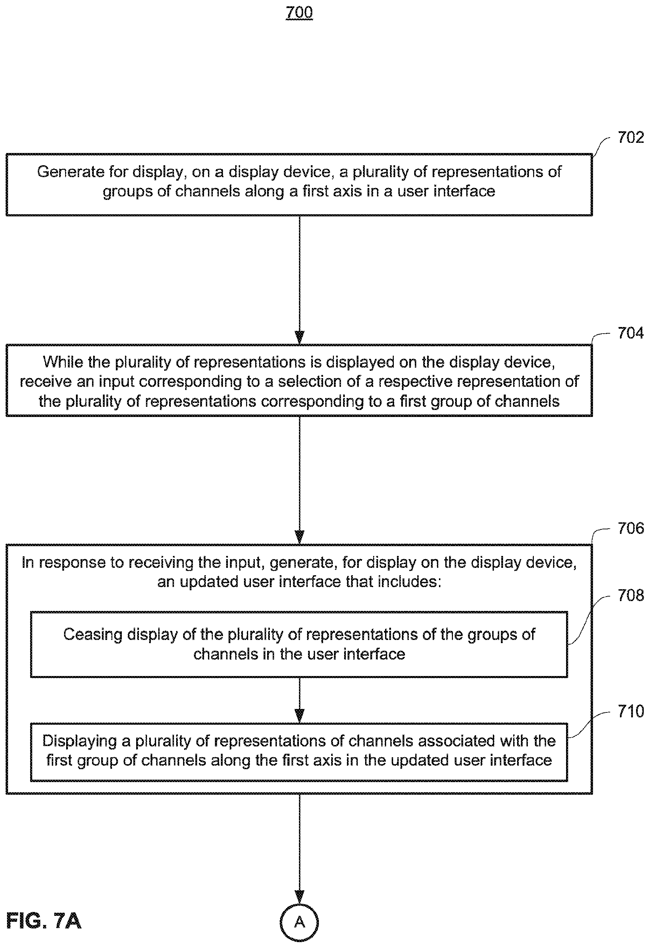

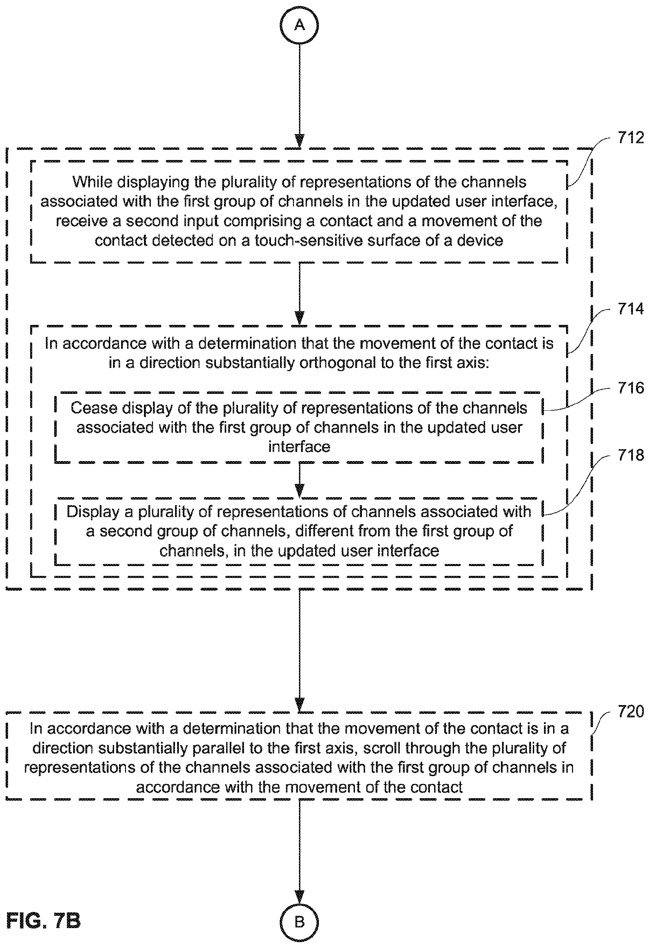

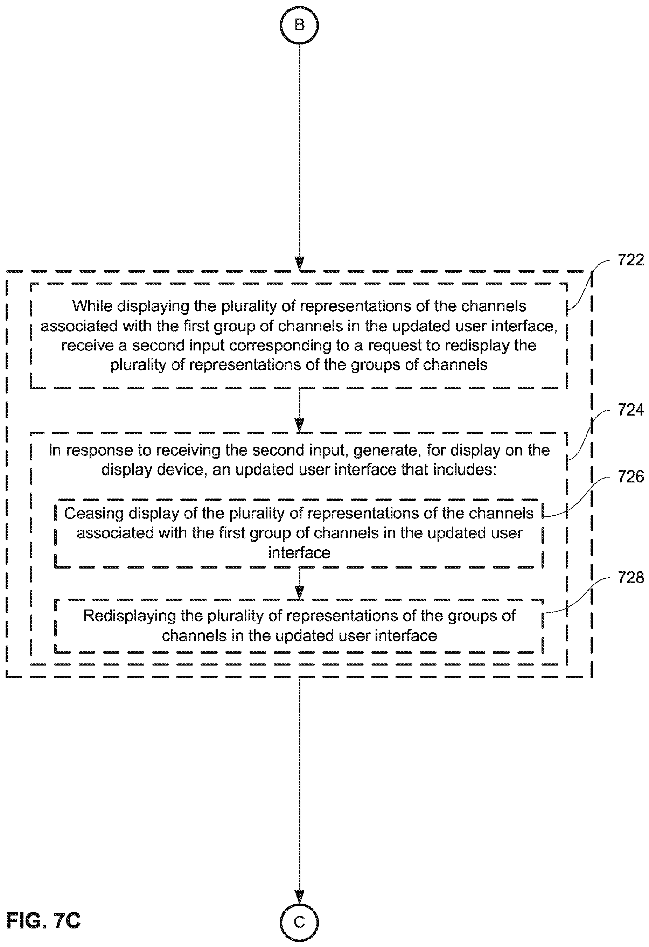

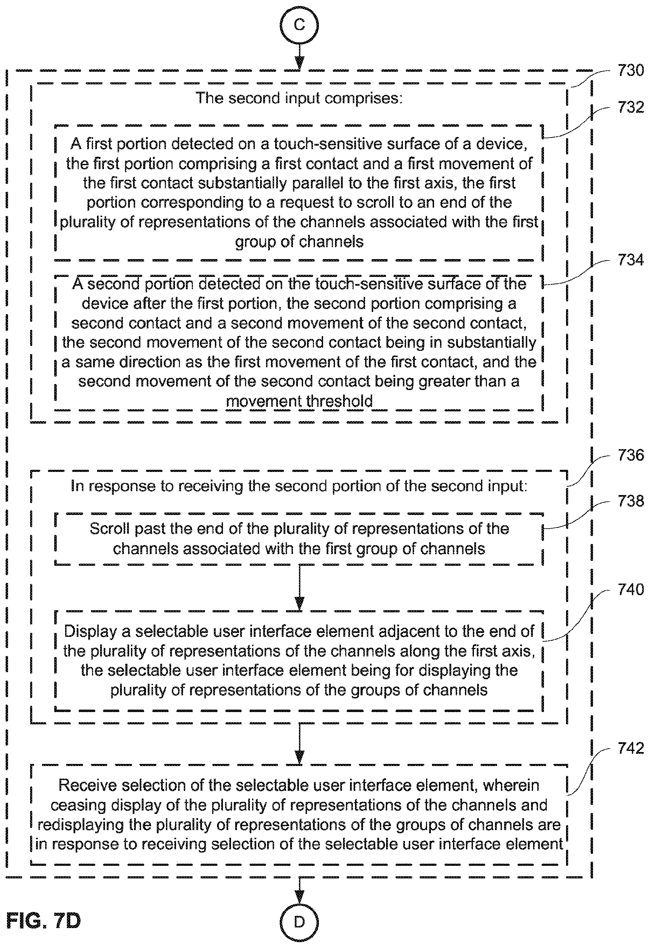

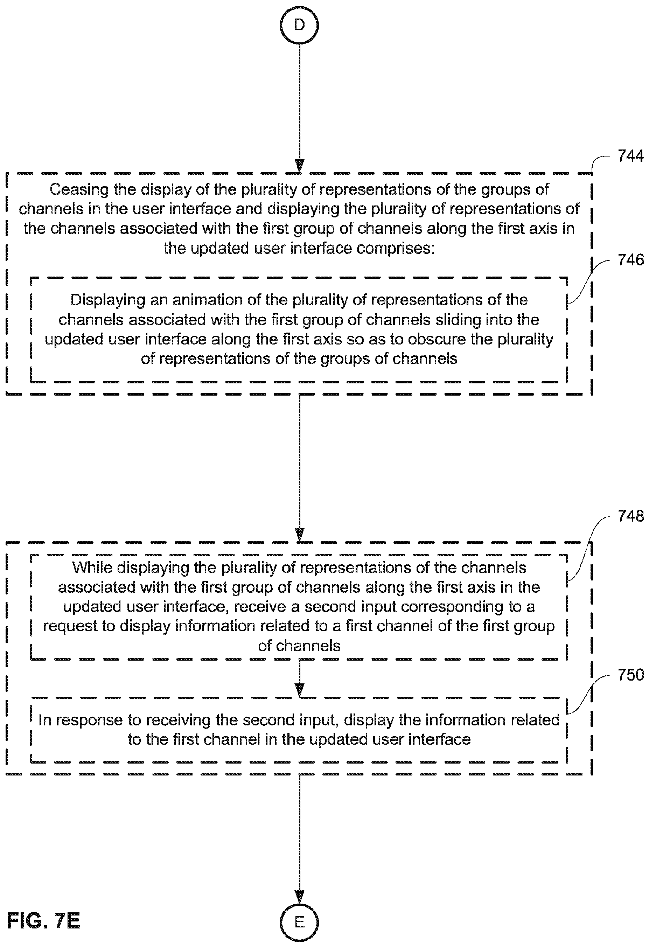

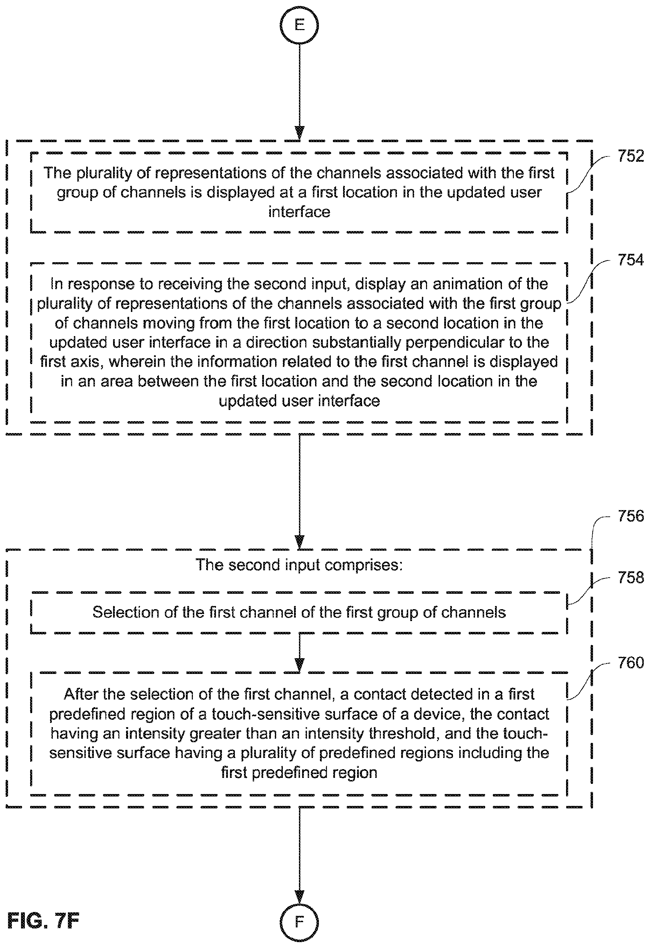

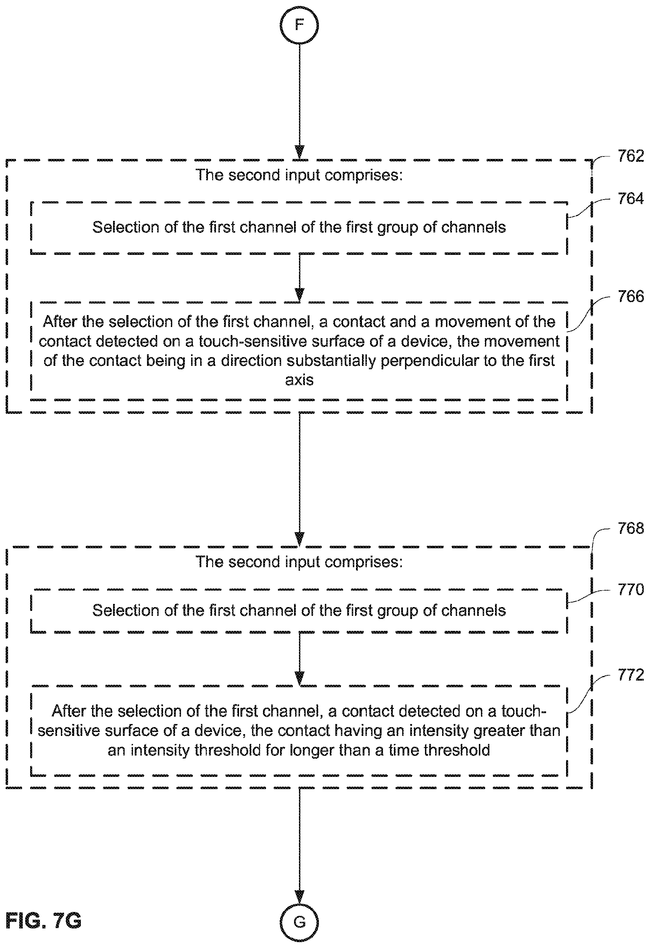

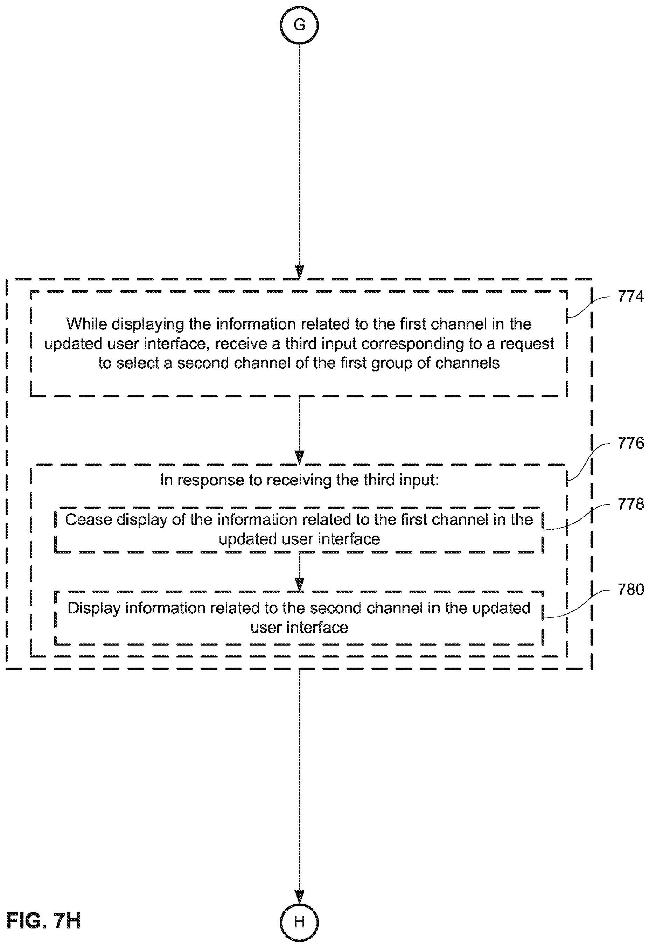

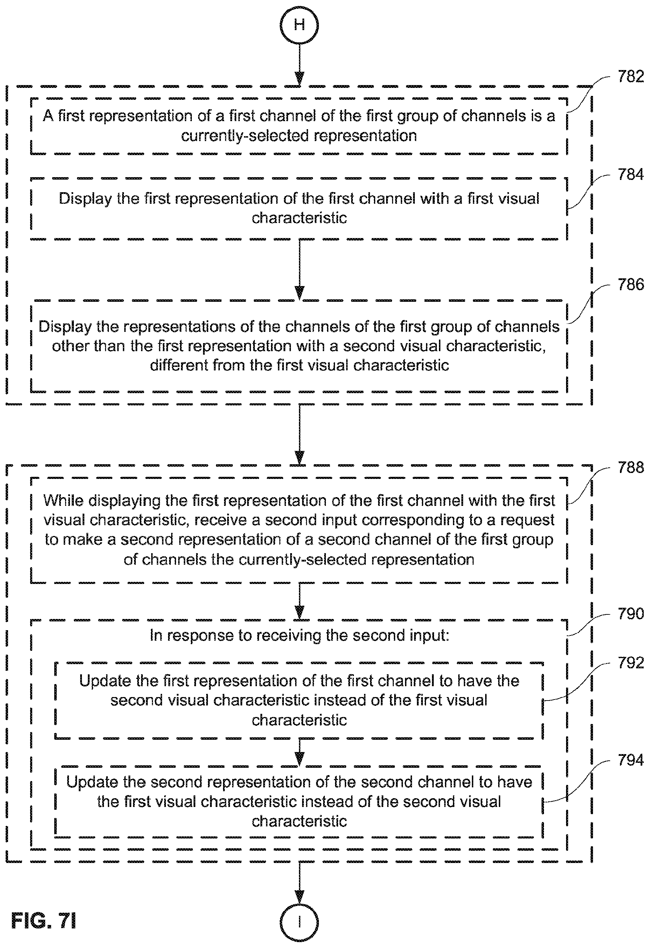

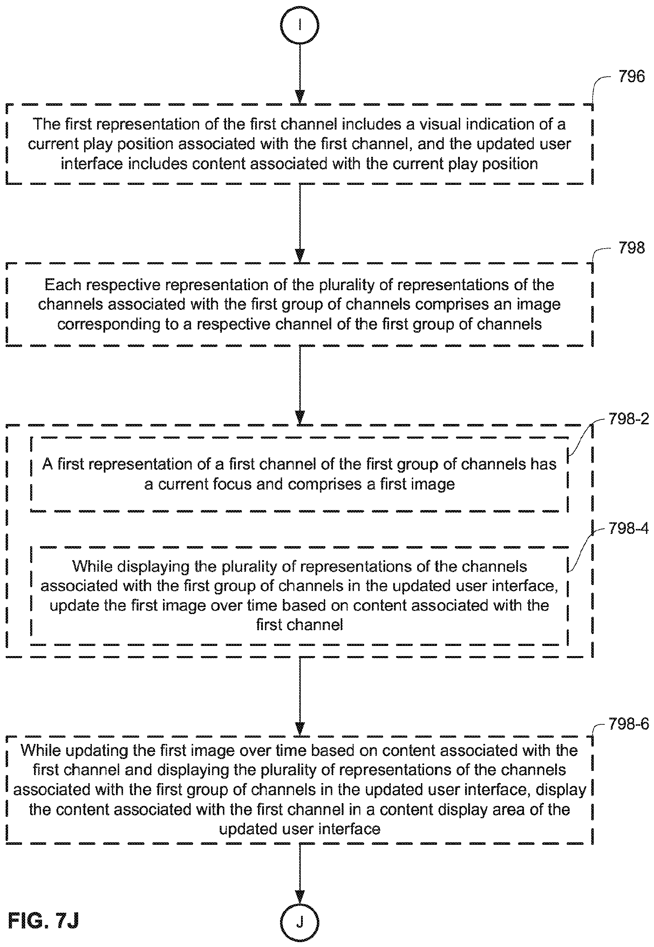

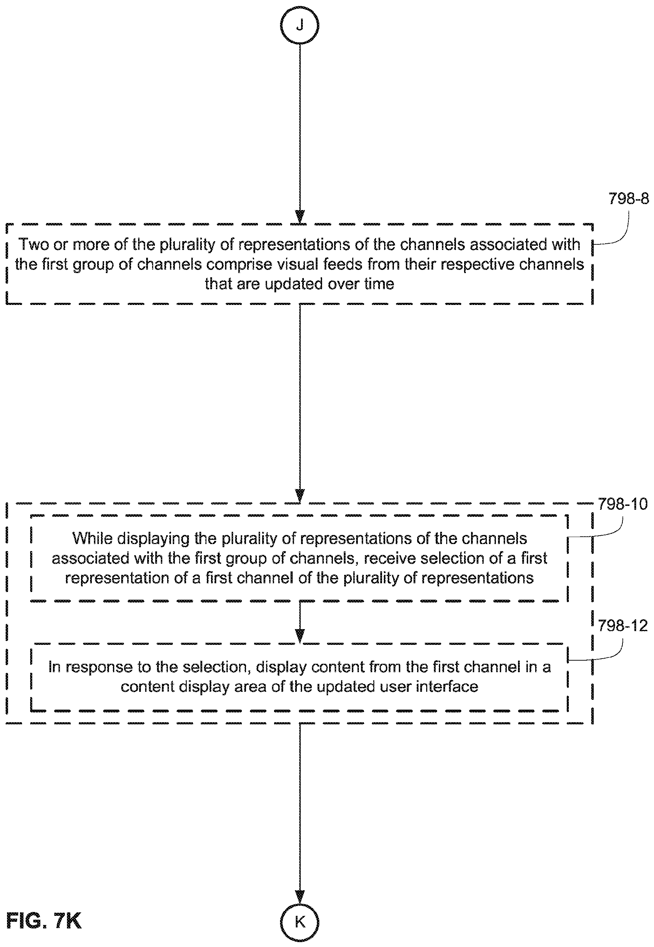

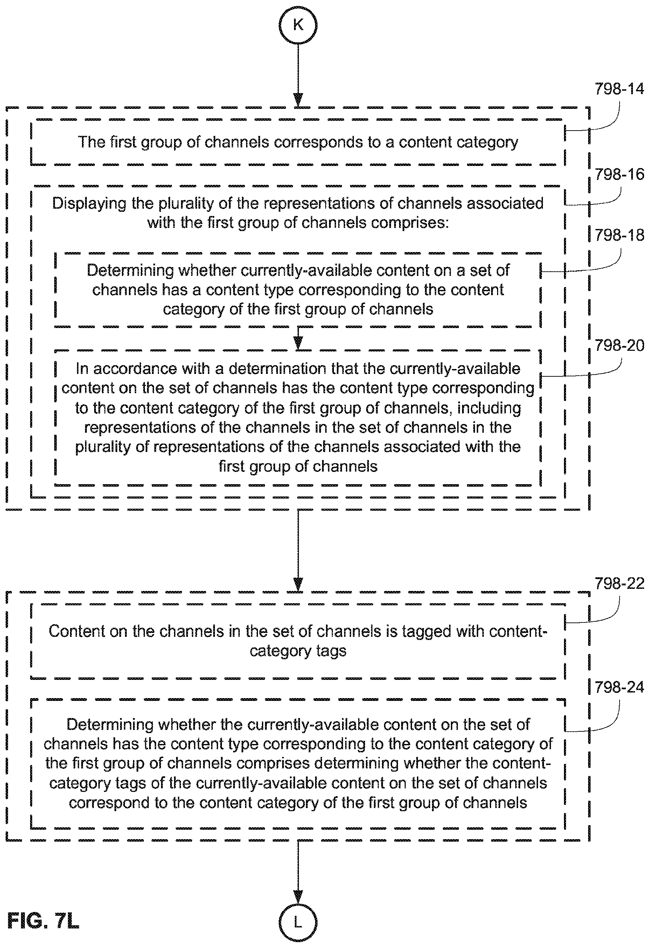

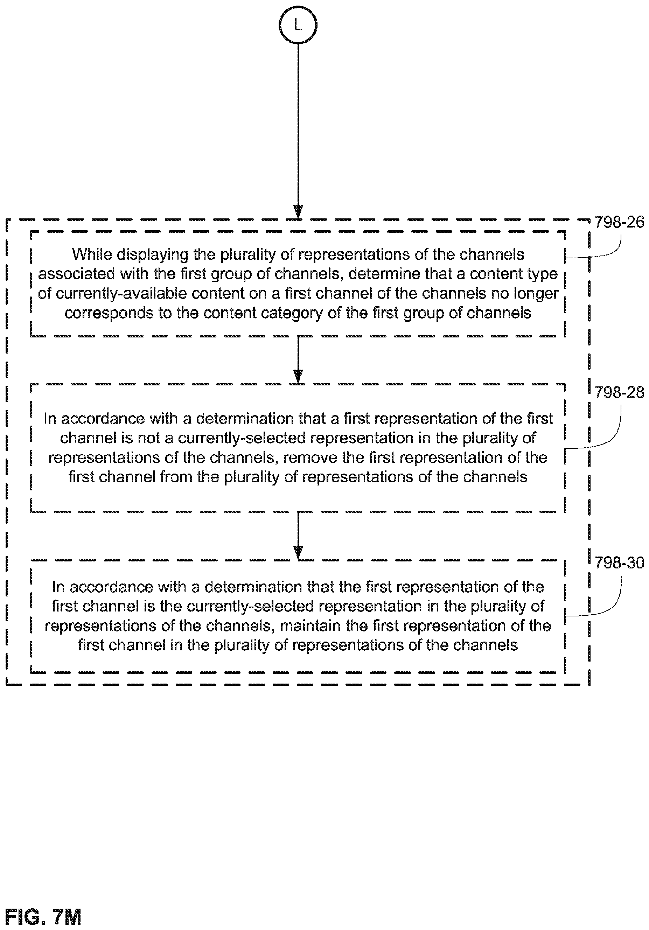

Figs. 6A-6S illustrate exemplary ways in which electronic devices allow users to navigate channels available on the electronic devices in accordance with some embodiments of the disclosure. The embodiments in these figures are used to illustrate the processes described below, including the processes described with reference to Figs. 7A-7M.

It should be noted that the examples illustrated in Figs. 6A-6S are directed to electronic devices that display information on non-touch-sensitive displays, though it is understood that the electronic devices may instead display information on displays having touch-sensitive capability (e.g., touch screens). For example, the electronic devices may include touch screens, or the electronic devices may be capable of outputting display information for display on separate touch screens, as previously described in this disclosure-in such circumstances, the displays described below optionally correspond to the touch screens mentioned above, and the inputs described below are optionally detected on the touch screens.

Fig. 6A illustrates exemplary display 514. Display 514 optionally displays one or more user interfaces that include various content. In the example illustrated in Fig. 6A, display 514 optionally displays a video application (e.g., a video playback application) running on an electronic device (e.g., electronic device 500 of Fig. 5A) of which display 514 is a part, or to which display 514 is connected. The video application optionally displays a content display area 602 where content such as video is displayed, and a plurality of representations of groups of channels 606 along a first axis (e.g., horizontally) in the user interface. Channels are optionally sources of content, such as video content, that can be displayed by the video application. The plurality of representations of groups of channels 606 is optionally referred to as a category bar 604. The groups of channels optionally correspond to categories of channels, such as sports channels, news channels, movie channels, television show channels, etc. Category bar 604 optionally includes representations 606-1, 606-2, 606-3, 606-4, and 606-5. Representations 606 are optionally images, icons or other visual elements corresponding to each respective group of channels (e.g., sports, news, movies, etc.).

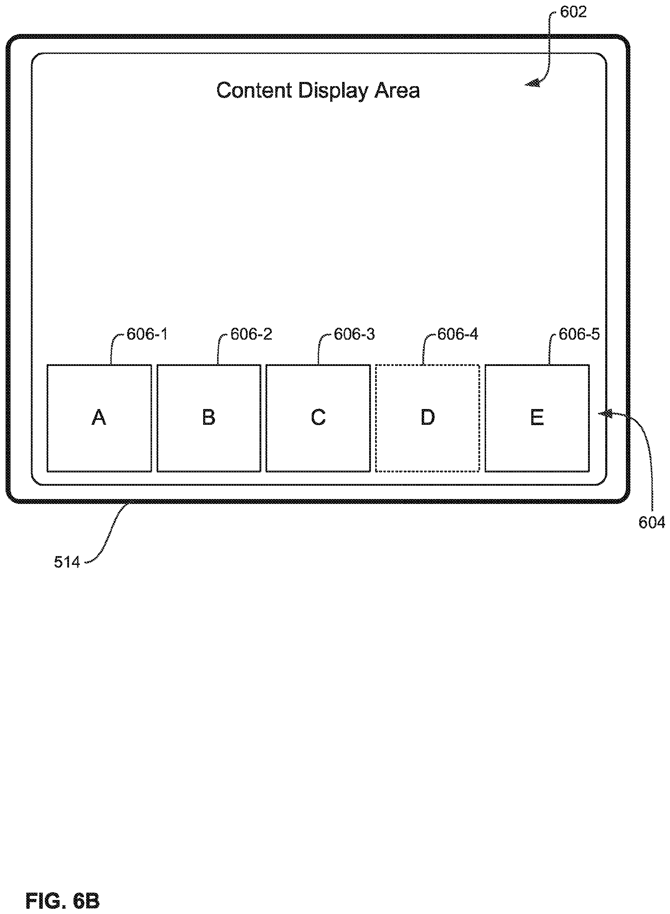

Fig. 6B illustrates selection of a particular representation of a group of channels. In Fig. 6B, representation 606-4 has a current focus, as reflected by the dashed-line border in Fig. 6B. A user has used a remote control (e.g., remote 510 in Fig. 5B) to move the current focus to representation 606-4. Representation 606-4 is optionally selected in response to an input from the remote control, such as a click of a button on the remote control, or a click of a touch-sensitive surface of the remote control. Representation 606-4 optionally corresponds to channel group D (e.g., sports channels).

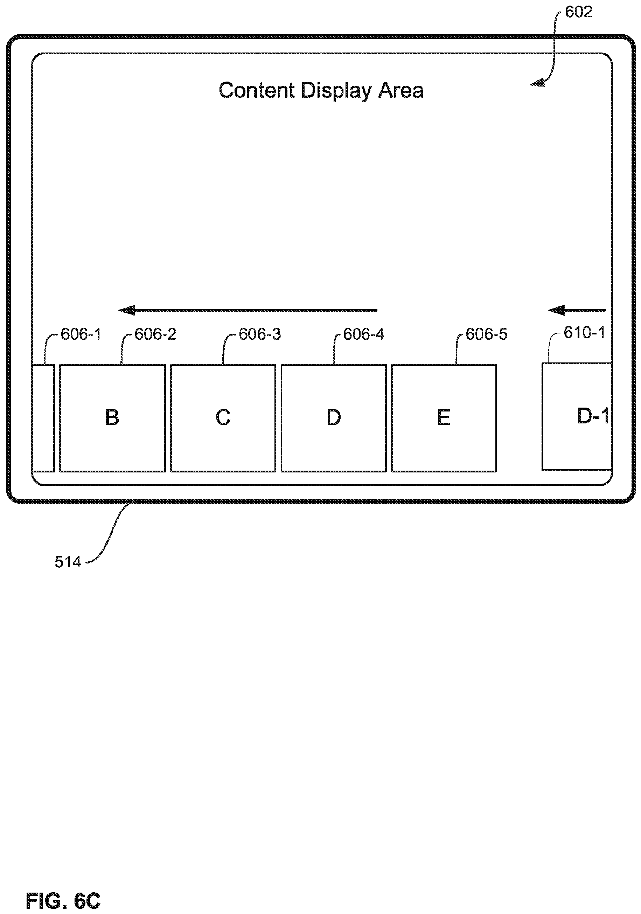

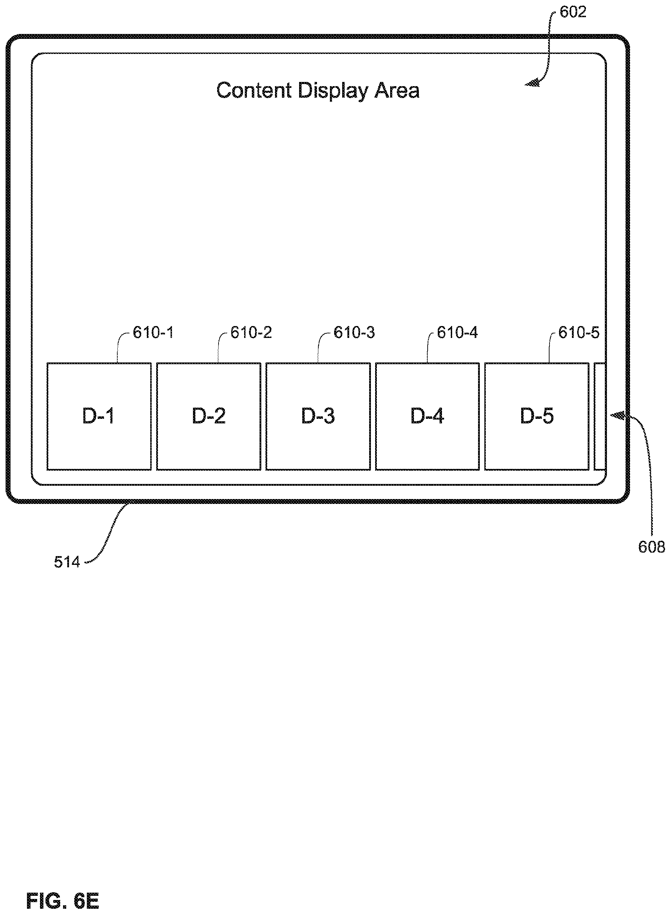

Figs. 6C-6E illustrate an exemplary result of selecting representation 606-4 in Fig. 6B, above. In particular, in response to receiving the selection input of representation 606-4, the electronic device optionally updates the user interface by ceasing display of category bar 604, and displaying channel bar 608 (e.g., a plurality of representations 610 of channels, such as D-1, D-2, D3, etc., associated with channel group D-the group of channels selected in Fig. 6B-along the first axis in the user interface, as illustrated in Fig. 6E. Channels D-1, D-2, D-3, D-4 and D-5 are optionally channels from channel group D (e.g., sports channels)). In some embodiments, the electronic device replaces the category bar 604 displayed along the bottom of the user interface with the channel bar 608 displayed along the bottom of the user interface that includes channels corresponding to channel category D-the category selected in Fig. 6B. For example, if the sports category was selected, the channel bar optionally displays a plurality of sports channels along the bottom of the user interface, replacing the categories of channels that were displayed prior to the selection. In some embodiments, in response to the selection of channel group D in Fig. 6B, the category bar 604 horizontally slides out of the user interface while the channel bar 608 horizontally slides into the user interface, as illustrated in Figs. 6C-6E.

In some embodiments, representations 610 comprise images corresponding to respective channels of the selected group of channels (channel group D). In particular, in some embodiments, the channel bar 608 is made up of images from content items associated with each channel in the channel bar 608. For example, a sports channel is optionally represented in the channel bar with an image of the logo of the sports channel, or an image from a currently-available sporting event on the sports channel. In some embodiments, the image of a channel that has a current focus in channel bar 608 is updated over time (e.g., the image of the channel that has the current focus is updated periodically (e.g., every 10, 30 or 60 seconds) based on the current content on the channel). In some embodiments, the content used to update the image of the channel with the current focus is also displayed in the content display area 602 of the user interface. In some embodiments, two or more of the representations of the channels in the channel bar 608 comprise visual feeds from their respective channels that are updated over time (e.g., updated based on content currently-available from each respective channel every 10, 30 or 60 seconds).

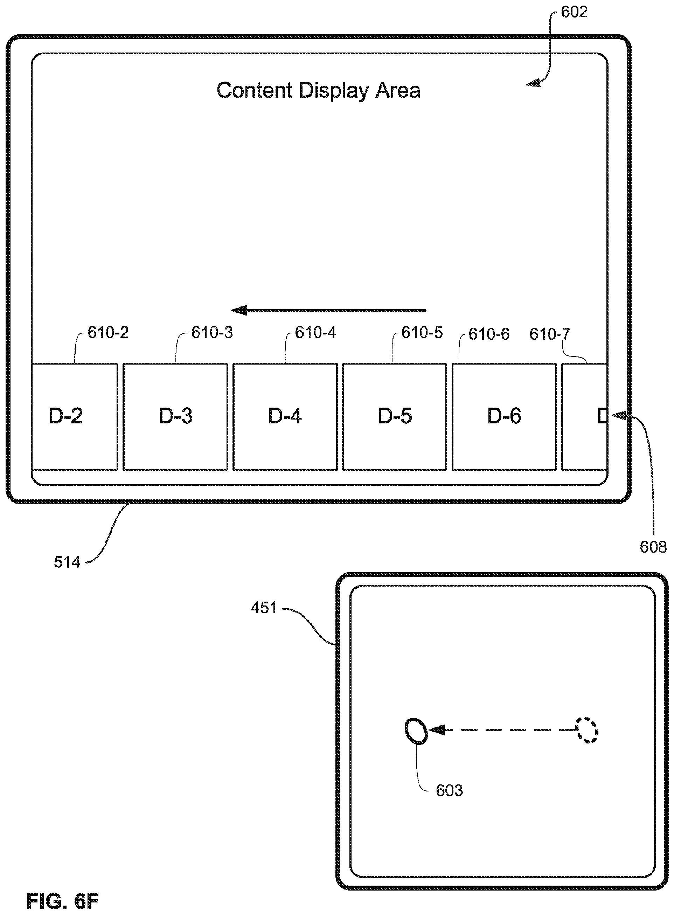

Fig. 6F illustrates scrolling through channels in the channel bar 608. In some embodiments, channels in the channel bar 608 are scrolled in response to horizontal swipes (e.g., swipes that move along the same axis along which channel bar 608 is displayed) detected on touch-sensitive surface 451. Touch-sensitive surface 451 is optionally a touch-sensitive surface on a second electronic device, such as a remote control (e.g., remote 510 in Figs. 5A-5B). For example, detecting a right-to-left movement of contact 603 on touch-sensitive surface 451 optionally results in scrolling to the right through channels 610, as illustrated in Fig. 6F. Analogously, a left-to-right movement of contact 603 on touch-sensitive surface 451 optionally results in scrolling to the left through channels 610.

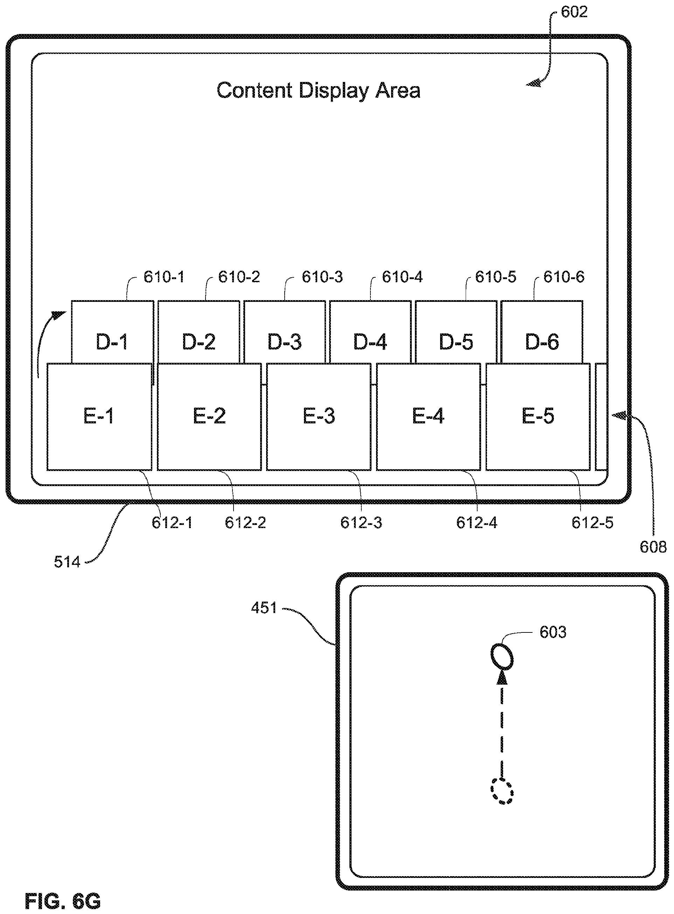

Fig. 6G illustrates an exemplary manner of switching channel bars 608 from one category/group of channels to another. In some embodiments, a vertical swipe (e.g., a swipe that moves along an axis orthogonal to the axis along which channel bar 608 is displayed) detected on touch-sensitive surface 451 optionally causes the device to switch the channel bar 608 from one category/group of channels (e.g., sports channels) to another category/group of channels (e.g., news channels). For example, a bottom-to-top movement of contact 603 detected on touch sensitive surface 451 optionally results in channel bar 608 switching from group D channels (representations 610-1, 610-2, 610-3, etc.) to group E channels (representations 612-1, 612-2, 612-3, etc.), as illustrated in Fig. 6G. In some embodiments, the transition of the channel bars is animated in a rolodex-like fashion, as shown in Fig. 6G.

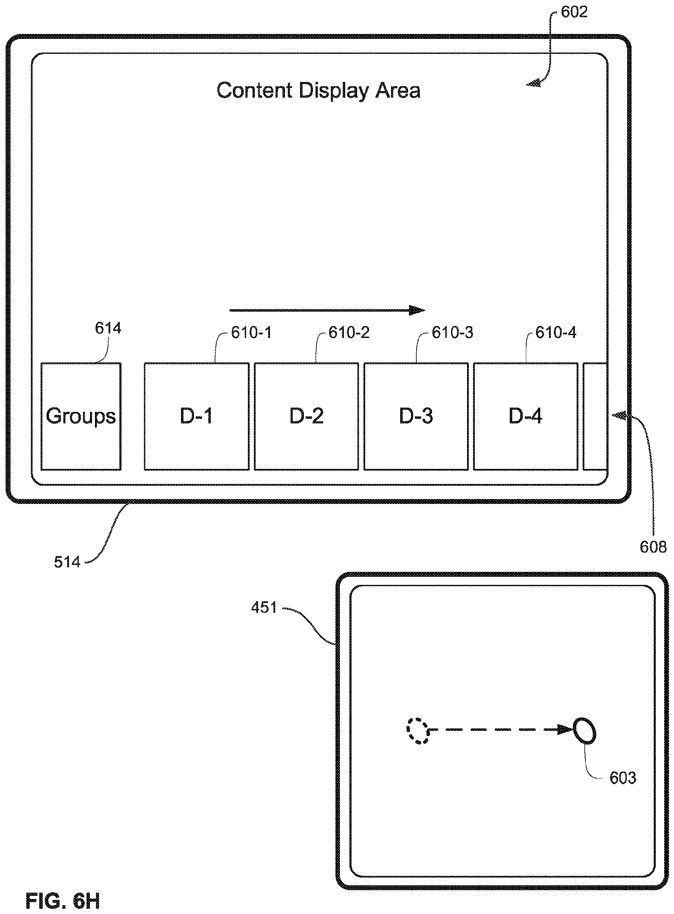

Fig. 6H illustrates an exemplary manner of switching back to the category bar 604 from the channel bar 608. In some embodiments, switching back to the category bar 604 is accomplished by scrolling past an end of the channel bar 608 using swipes (e.g., horizontal swipes) on touch-sensitive surface 451. For example, scrolling past the left end of the channel bar 608 is optionally performed by the device in response to detecting left-to-right movement of contact 603 on touch-sensitive surface 451, as illustrated in Fig. 6H. When the user scrolls past the end of the channel bar 608 in the manner described above, in some embodiments, the electronic device displays user interface element 614 for switching back to the category bar 604. Selection of user interface element 614 optionally results in the electronic device displaying the category bar 604, as illustrated in Fig. 6A, for example.

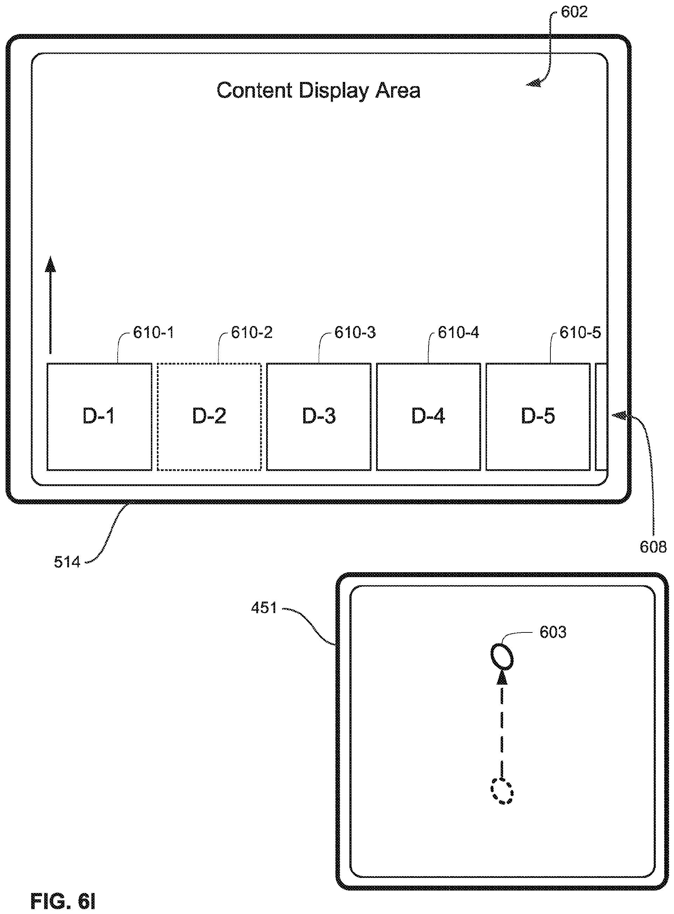

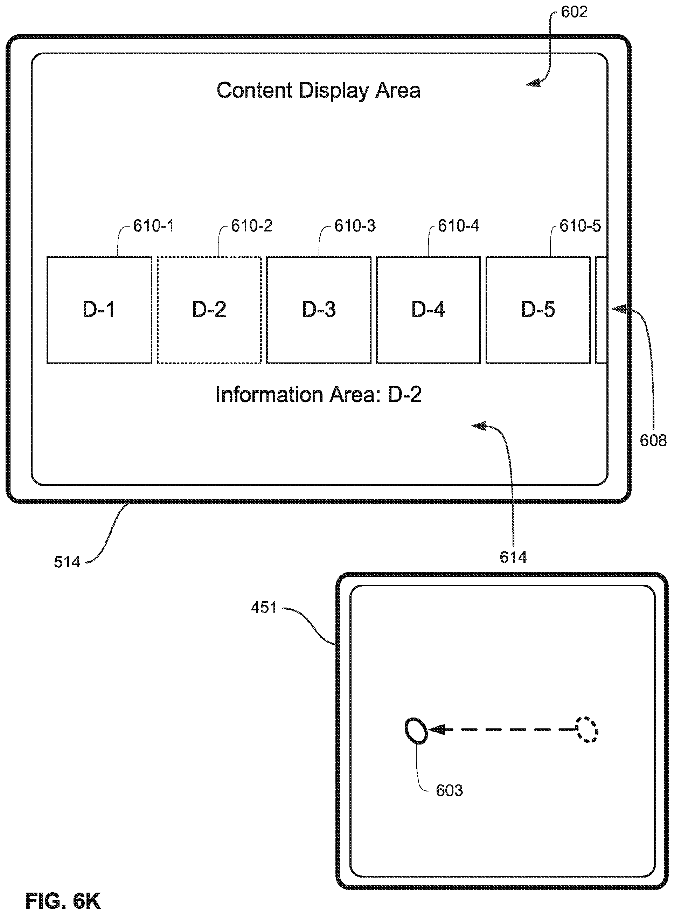

In some embodiments, while the channel bar 608 is displayed in the user interface, information about a channel that is currently-selected in the channel bar is displayed in response to specified inputs. Fig. 6I illustrates display of such information in response to a vertical swipe detected on touch-sensitive surface 451. Specifically, in Fig. 6I, channel bar 608 is optionally displayed, and representation 610-2 (corresponding to channel D-2) is optionally currently-selected, as reflected by the dashed-line border. A vertical swipe (e.g., bottom-to-top movement of contact 603) is optionally detected on touch-sensitive surface 451 while representation 610-2 is currently-selected. In response to detecting the vertical swipe, information about channel D-2 is optionally displayed in information area 614 in the user interface, as illustrated in Fig. 6K. The displayed information is optionally information about channel D-2, such as information about a currently-available show on the channel, the name of the show, the start/end times of the show, etc. In some embodiments, an animation is displayed of the channel bar 608 moving up vertically in the user interface to display the information in the information area 614 below the channel bar. In some embodiments, as the channel bar 608 is animated upwards in the user interface, the information area 614 is correspondingly animated into and upwards in the user interface.

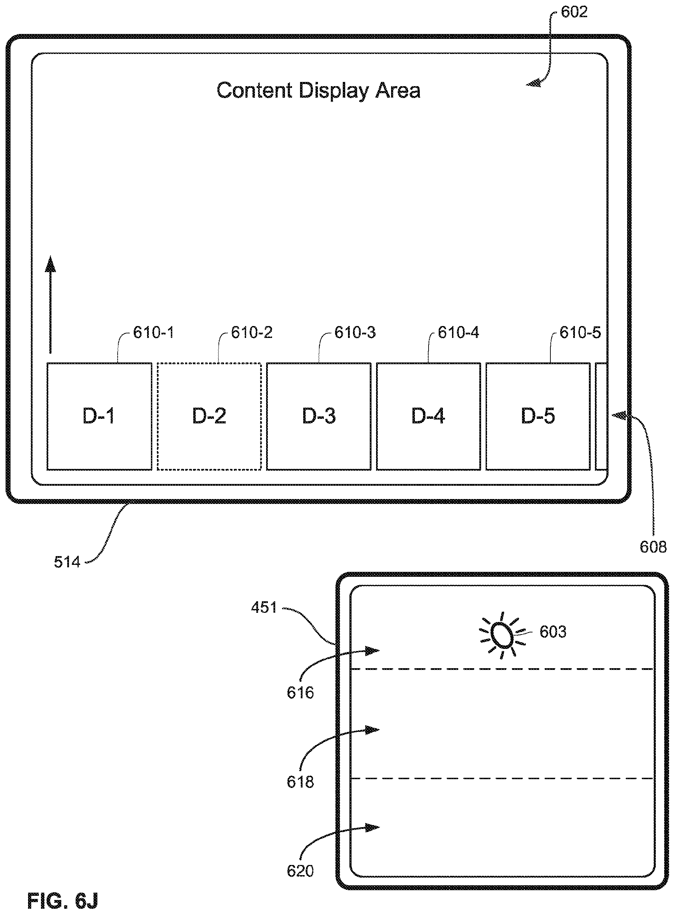

Fig. 6J illustrates display of channel information in response to a click detected in a predefined region of touch-sensitive surface 451. In particular, touch-sensitive surface 451 optionally has a plurality of predefined regions (e.g., top region 616, middle region 618, and bottom region 620). While representation 610-2 is currently-selected, a click (e.g., contact 603 having an intensity greater than an intensity threshold) detected in one of the predefined regions (e.g., top region 616) optionally results in display of information about channel D-2, as illustrated in Fig. 6K which, optionally, exhibits some or all of the characteristics of the information described with respect to Fig. 6I, above. In some embodiments, clicks detected in other regions optionally perform other actions. For example, a click detected in the middle 618 or lower 620 regions will optionally not cause the channel information to be displayed. In some embodiments, a middle region 618 click causes a channel in the channel bar to be played rather than information about that channel to be displayed. In some embodiments, after the information 614 is displayed in response to a first click detected in top region 616 of touch-sensitive surface 451, a second click detected in the top region 616 optionally causes display of an electronic program guide (e.g., as described below with reference to method 1300). In some embodiments, rather than a click detected in top region 616 of touch-sensitive surface 451, a click and hold detected on the touch-sensitive surface 451 (e.g., anywhere on the touch-sensitive surface 451) results in display of information 614 about a channel in channel bar 608 that is currently-selected.

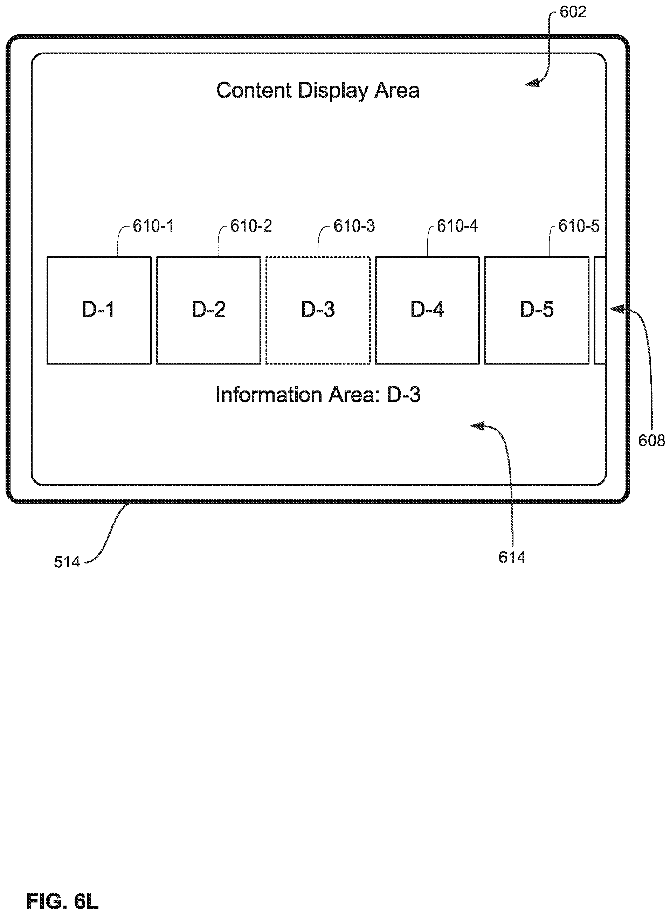

In some embodiments, channels in the channel bar 608 are scrollable while information area 614 is displayed in the user interface. Figs. 6K-6L illustrate scrolling of channels in the channel bar 608, and updating information in information area 614 in accordance with the scrolling. In Fig. 6K, representation 610-2 (corresponding to channel D-2) is optionally currently-selected. As previously described, horizontal swipes detected on touch-sensitive surface 451 optionally scroll through channels in the channel bar 608. In the example of Fig. 6K, a right-to-left movement of contact 603 has optionally been detected on touch-sensitive surface 451. In response, representation 610-3 (to the right of representation 610-2) is optionally selected, as shown in Fig. 6L. Additionally, information area 614 is optionally updated to include information about channel D-3 (corresponding to currently-selected representation 610-3), rather than channel D-2 (corresponding to previously-selected representation 610-2).

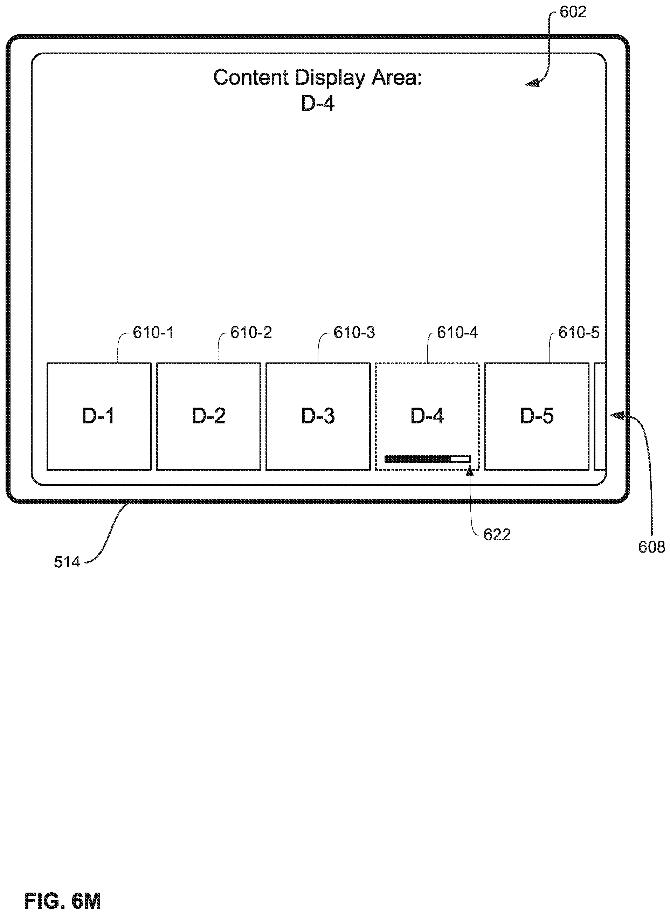

In some embodiments, the currently-selected channel in the channel bar 608 is displayed differently from the other channels in the channel bar, as illustrated in Fig. 6M. For example, representation 610-4 (corresponding to currently-selected channel D-4) is optionally displayed with a first visual characteristic (e.g., relatively large, relatively bright, in color, with a shadow, etc.), while the remaining representations 610-1, 610-2, 610-3 and 610-5 are optionally displayed with a second visual characteristic, different from the first visual characteristic (e.g., relatively small, relatively dim, black and white or grayscale, without a shadow, etc.). As the currently-selected channel changes, the visual characteristics of the representations are optionally updated according to the above, such that the currently-selected channel has the first visual characteristic while the remaining channels have the second visual characteristic.

In some embodiments, the representation of the channel that is currently-playing in the content display area 602 (e.g., representation 610-4 corresponding to channel D-4 in Fig. 6M) optionally includes a progress bar 622 that reflects a current play position associated with the currently-playing channel. For example, progress bar 622 optionally reflects how much of the currently-playing content on channel D-4 has been played so far by the electronic device.

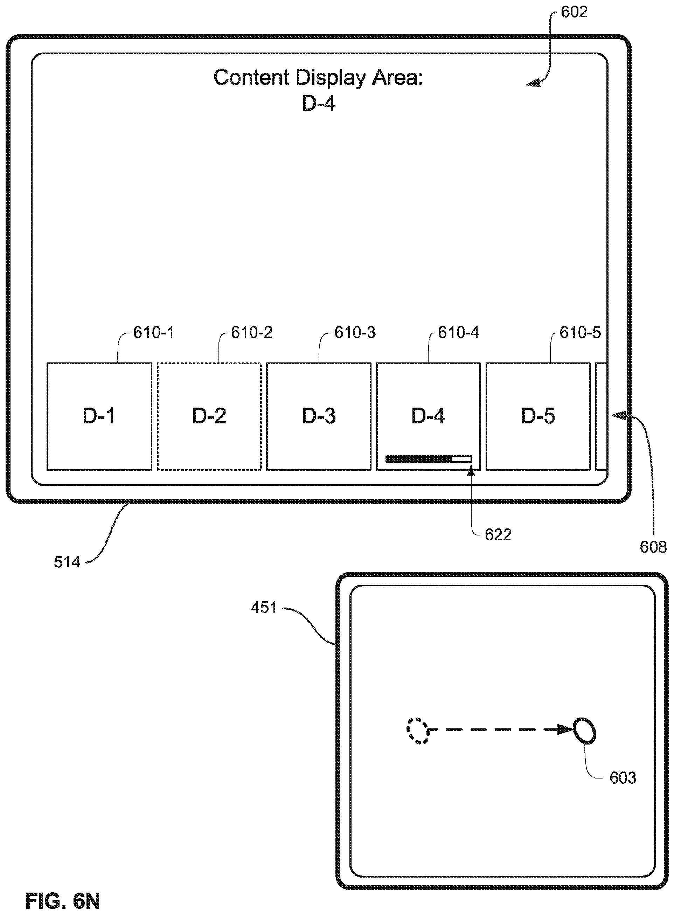

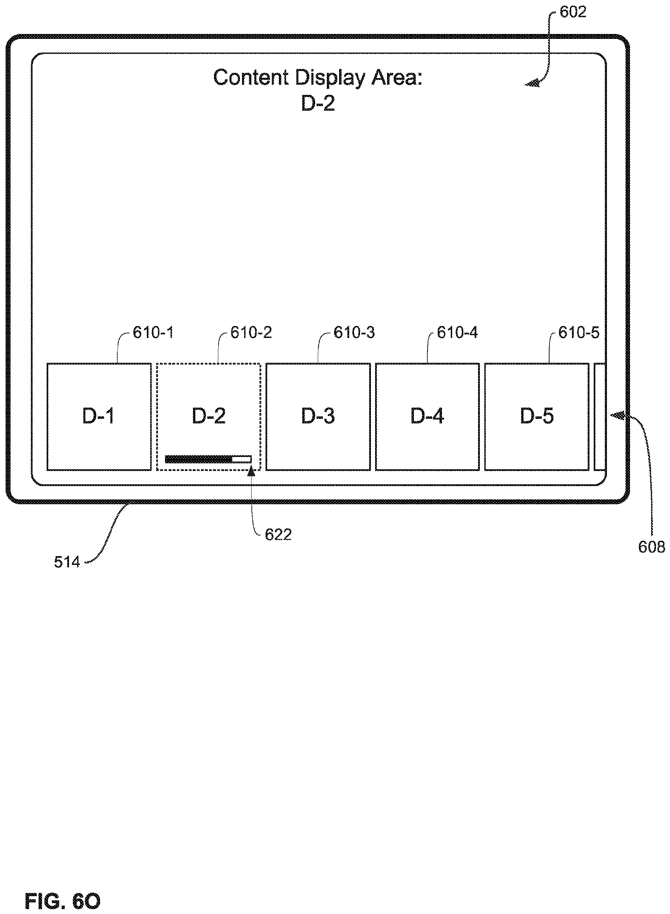

In some embodiments, selection of a different representation (e.g., different from representation 610-4) causes content from the channel corresponding to that different representation to play in the content display area 602 of the user interface. Figs. 6N-6O illustrate selection of different representations of channels causing playback of content from those channels in the user interface. In Fig. 6N, a left-to-right movement of contact 603 has been detected on touch-sensitive surface 451. In response, representation 610-2 (corresponding to channel D-2) optionally becomes currently-selected, though content from channel D-4 is optionally still playing in the content display area 602 of the user interface. If a click is detected on touch-sensitive surface 451 while representation 610-2 is currently-selected, the electronic device optionally plays content from channel D-2 (corresponding to representation 610-2) in the user interface, as illustrated in Fig. 6O. In Fig. 6O, 610-2 is also updated to include progress bar 622, because content from channel D-2 (corresponding to representation 610-2) is currently-playing in the user interface, and representation 610-4 is optionally updated to remove the progress bar therefrom, because content from channel D-4 (corresponding to representation 610-4) is no longer currently-playing in the user interface.

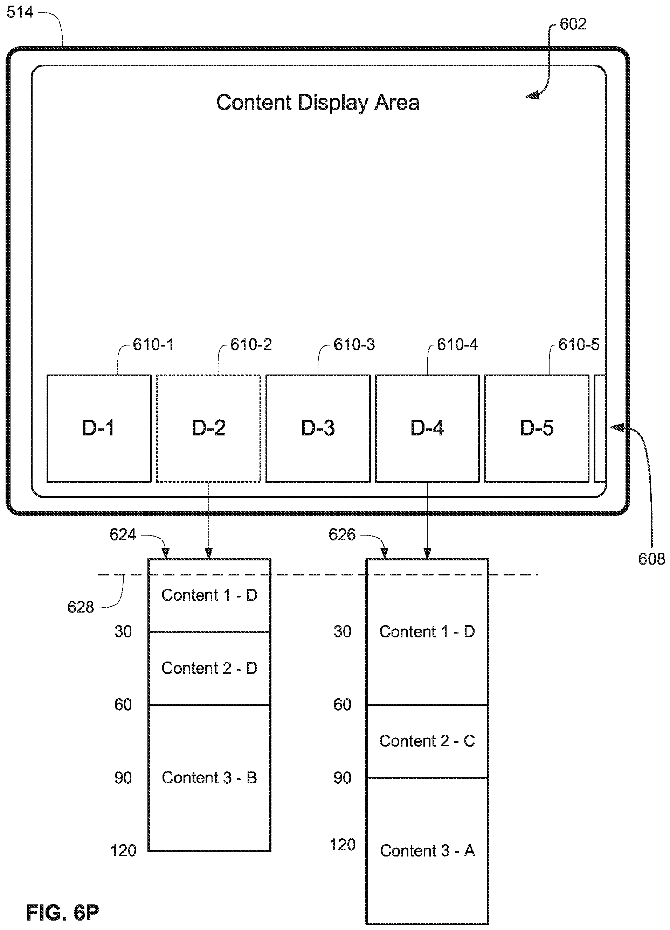

In some embodiments, whether a channel is included in the channel bar 608 for a given channel group (e.g., channel group D, as illustrated in Fig. O) is based on the content currently-available on that channel, and whether the category of that content matches the content category of the channel bar. Figs. 6P-6S illustrate management of the channel bar in such circumstances. In particular, with respect to Fig. 6P, the channels in channel bar 608 optionally correspond to a content category-content category D (e.g., sports content, news content, movie content, etc.). In some embodiments, to determine which channels should be included in the channel bar 608, the electronic device determines whether currently-available content on a set of channels has a content type corresponding to the content category of the channel bar (e.g., determines whether currently-playing content on a channel or multiple channels matches the type of content that should be included in the channel bar, such as news content for a news channel bar, sports content for a sports channel bar, etc.). If the electronic device determines that the currently-available content on the set of channels has the content type corresponding to the content category of the channel bar 608, the electronic device optionally includes representations of those channels in the channel bar (e.g., the channels in the channel bars are optionally selected based on the type of content that is currently playing on the channel). For example, if news content is currently-playing on a channel, the channel will optionally be displayed in the news channel bar but not the sports channel bar. If, however, that channel is playing sports content one hour from now, then in one hour, the channel will optionally appear on the sports channel bar and not the news channel bar, as will be described in more detail below.

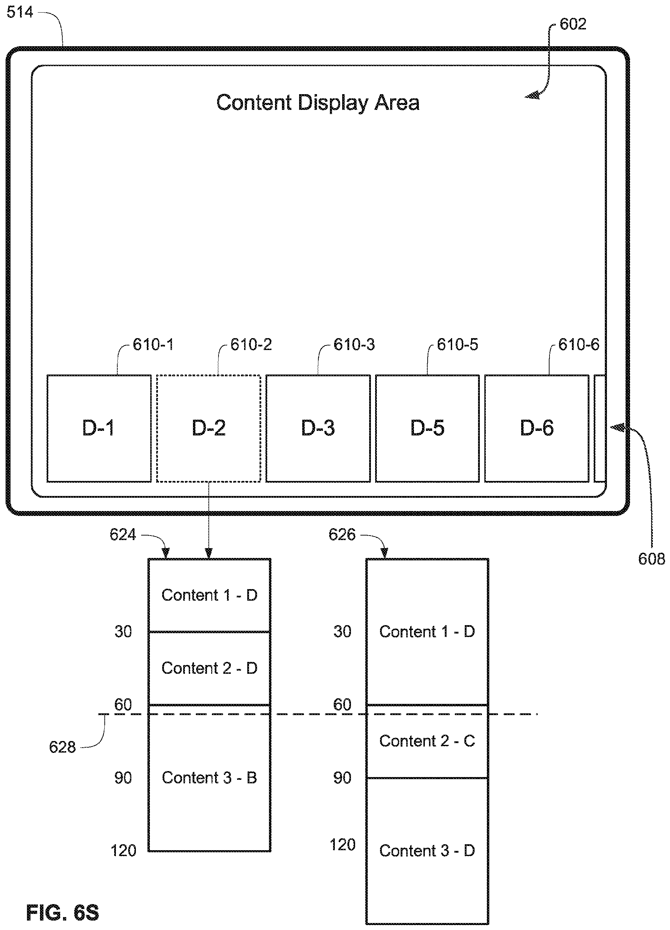

Fig. 6P illustrates exemplary content schedules for channels D-2 (corresponding to representation 610-2) and D-4 (corresponding to representation 610-4). Content schedule 624 for channel D-2 in Fig. 6S includes content 1 of category D (e.g., having a content tag D), followed by content 2 of category D (e.g., having a content tag D), followed by content 3 of category B (e.g., having a content tag B). Content schedule 626 for channel D-4 includes content 1 of category D (e.g., having a content tag D), followed by content 2 of category C (e.g., having a content tag C), followed by content 3 of category A (e.g., having a content tag A). Indicator 628 in Fig. 6S reflects a current time/current play position in the content schedules 624 and 626 for channels D-2 and D-4, respectively. As described above, because both channels D-2 and D-4 have currently-available content of category D, both channels are included in channel bar 608, which is a channel bar of content category D, as illustrated in Fig. 6P.

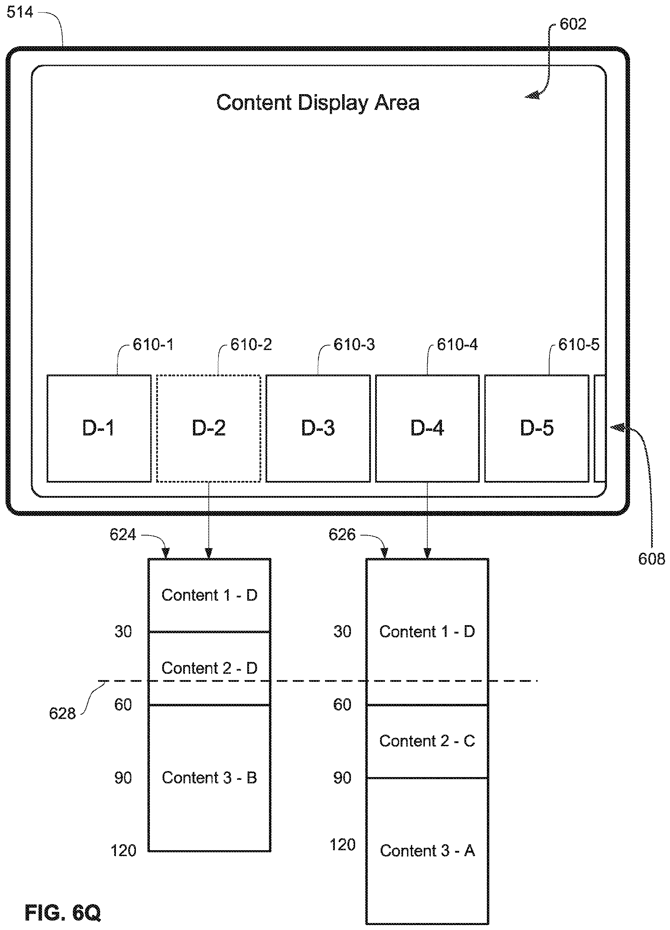

Fig. 6Q illustrates advancement of the current play position 628 through content schedules 624 and 626. As compared with Fig. 6P, channel D-2 has transitioned from playing its content 1 to its content 2, while channel D-4 is still playing content 1. Because channels D-2 and D-4 are still playing content of category D, both channels remain in channel bar 608.

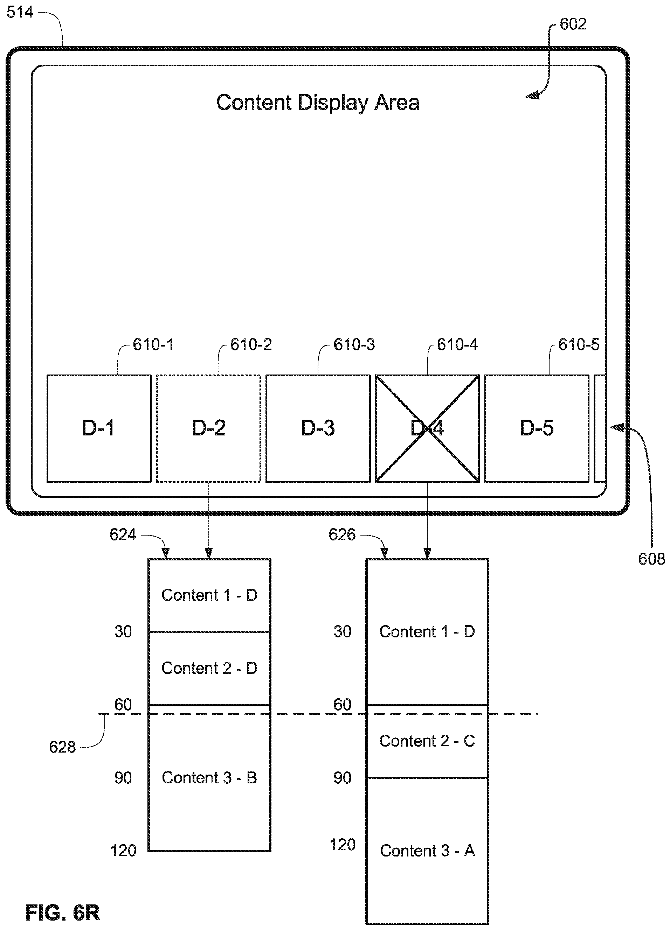

In Fig. 6R, the current play position 628 has further advanced through content schedules 624 and 626. In particular, channel D-2 has transitioned from playing its content 2 of category D to its content 3 of category B, and channel D-4 has transitioned from playing its content 1 of category D to its content 2 of category C. Thus, neither channel D-2 nor channel D-4 is currently-playing content of category D-the category of channel bar 608. In some embodiments, representation 610-4 (corresponding to channel D-4) is removed from the channel bar 608, because channel D-4 is no longer playing content of category D. However, in some embodiments, representation 610-2 (corresponding to channel D-2) is maintained in the channel bar 608, because as illustrated in Fig. 6R, representation 610-2 is currently-selected (reflected by the dashed-line border). Fig. 6S illustrates removal of representation 610-4 in the channel bar 608, and maintenance of representation 610-2 in the channel bar 608, as described above. Thus, in some embodiments, channels that are not currently-selected are treated differently from the currently-selected channel in the channel bar 608. Channels that are not currently-selected optionally leave the channel bar 608 if the currently-playing content on those channels changes and no longer corresponds to the content type of the channel bar 608. In contrast, the currently-selected channel is optionally sticky (e.g., so that even if the channel changes content, the currently-selected channel is not removed from the channel bar 608)). In some embodiments, channels are not added or removed from the channel bar 608 until the channel bar is dismissed from view (e.g., hidden from view due to a request to hide the channel bar, or a request to change the channel bar's category), so that: 1) a channel that is currently included in the channel bar 608, but no longer displays content matching the category of the channel bar, will be removed from the channel bar only after the channel bar is dismissed, and 2) a channel that is not currently included in the channel bar 608, but now displays content matching the category of the channel bar, will be added to the channel bar only after the channel bar is dismissed.

Figs. 7A-7M are flow diagrams illustrating a method 700 of navigating channels available on an electronic device in accordance with some embodiments of the disclosure. The method 700 is optionally performed at an electronic device such as device 100, device 300 or device 500 as described above with reference to Figs. 1A-1B, 2-3 and 5A-5B. Some operations in method 700 are, optionally, combined and/or the order of some operations is, optionally, changed.

As described below, the method 700 provides ways in which a user interacts with a device for navigating channels available on the device. The method reduces the cognitive burden on a user when interacting with a user interface (e.g., a playlist or now playing user interface) of the device of the disclosure, thereby creating a more efficient human-machine interface. For battery-operated electronic devices, increasing the efficiency of the user's interaction with the user interface conserves power and increases the time between battery charges.

In some embodiments, an electronic device (e.g., device 100, 300 or 500) with a display device (e.g., a display device included in or coupled to the electronic device, such as display 514 in Fig. 5A) and one or more input devices (e.g., one or more input devices included in or coupled to the electronic device; for example, a second electronic device, such as a remote control, with a touch-sensitive surface, such as remote 510 in Figs. 5A-5B) generates (702) for display, on the display device, a plurality of representations (e.g., images, icons, other visual elements) of groups of channels (e.g., categories of channels, such as sports channels, news channels, movie channels, television show channels) along a first axis in a user interface (e.g., displaying the representations horizontally along the bottom of the user interface, each representation being adjacent to another representation, such as in Fig. 6A). The user interface optionally includes a content display area in which content such as video is displayed, and a category bar area in which the plurality of representations is displayed, such as in Fig. 6A. In some embodiments, while the plurality of representations is displayed on the display device, the electronic device receives (704) an input (e.g., an input from a remote control, such as a click of a button on the remote control, or a click of a touch-sensitive surface on the remote control) corresponding to a selection of a respective representation of the plurality of representations corresponding to a first group of channels, such as in Fig. 6B (e.g., using the remote control to move the current focus to the representation corresponding to the sports channels, and clicking a button on the touch-sensitive surface to select the representation corresponding to the sports channels). In response to receiving the input, the electronic device optionally generates (706), for display on the display device, an updated user interface that includes: ceasing display (708) of the plurality of representations of the groups of channels in the user interface; and displaying (710) a plurality of representations of channels associated with the first group of channels along the first axis in the updated user interface, such as in Fig. 6E (e.g., replacing the categories of channels along the bottom of the user interface with a channel bar along the bottom of the user interface that includes channels corresponding to the category selected). For example, if the sports category was selected, the channel bar optionally displays a plurality of sports channels along the bottom of the user interface, replacing the categories of channels that were displayed prior to the selection.

In some embodiments, while displaying the plurality of representations of the channels associated with the first group of channels in the updated user interface (e.g., while displaying the channel bar), the electronic device receives (712) a second input comprising a contact and a movement of the contact detected on a touch-sensitive surface of a device (e.g., a touch input detected on the touchpad of a remote control). In accordance with a determination that the movement of the contact is in a direction substantially orthogonal to the first axis (714) (e.g., if the channel bar is displayed horizontally in the user interface, the second input optionally comprises a vertical swipe on the touchpad of a remote control), the electronic device optionally: ceases display (716) of the plurality of representations of the channels associated with the first group of channels in the updated user interface; and displays (718) a plurality of representations of channels associated with a second group of channels, different from the first group of channels, in the updated user interface, such as in Fig. 6G (e.g., replacing the channel bar that includes channels of a first category with another channel bar that includes channels of a different category). For example, replacing a channel bar having sports channels with a channel bar having movie channels in response to detecting the second input. In some embodiments, the transition of the channel bars is animated in a rolodex-like fashion.

In some embodiments, in accordance with a determination that the movement of the contact is in a direction substantially parallel to the first axis (e.g., if the channel bar is displayed horizontally in the user interface, the second input optionally comprises a horizontal swipe on the touchpad of a remote control), the electronic device scrolls (720) through the plurality of representations of the channels associated with the first group of channels in accordance with the movement of the contact, such as in Fig. 6F. In some embodiments, while displaying the plurality of representations of the channels associated with the first group of channels in the updated user interface, the electronic device receives (722) a second input corresponding to a request to redisplay the plurality of representations of the groups of channels, such as in Fig. 6H (e.g., receiving an input to switch back to displaying the categories of channels, such as sports channels, news channels, movie channels, television show channels instead of the channel bar). In response to receiving the second input, the electronic device optionally generates (724), for display on the display device, an updated user interface that includes: ceasing display (726) of the plurality of representations of the channels associated with the first group of channels in the updated user interface (e.g., stop displaying the channel bar); and redisplaying (728) the plurality of representations of the groups of channels in the updated user interface (e.g., redisplay the category bar).

In some embodiments, the second input comprises (730): a first portion detected on a touch-sensitive surface of a device, the first portion comprising a first contact and a first movement of the first contact substantially parallel to the first axis, the first portion corresponding to a request to scroll to an end of the plurality of representations of the channels associated with the first group of channels (732) (e.g., a horizontal swipe detected on the touchpad of a remote control with sufficient acceleration, velocity and/or movement to scroll to one end of the channel bar, such as the left-side end), a second portion detected on the touch-sensitive surface of the device after the first portion, the second portion comprising a second contact and a second movement of the second contact, the second movement of the second contact being in substantially a same direction as the first movement of the first contact, and the second movement of the second contact being greater than a movement threshold (730) (e.g., after scrolling to the end of the channel bar, a further swipe in the same direction and with sufficient movement to scroll past the end of the channel bar), and the electronic device, in response to receiving the second portion of the second input (736): scrolls (738) past the end of the plurality of representations of the channels associated with the first group of channels (e.g., a further horizontal swipe after reaching the end of the channel bar scrolls past the end of the channel bar), and displays (740) a selectable user interface element adjacent to the end of the plurality of representations of the channels along the first axis, the selectable user interface element being for displaying the plurality of representations of the groups of channels, such as in Fig. 6H (e.g., scrolling past the end of the channel bar pulls the selectable user interface element into the user interface). The user interface element is optionally selectable to switch back to the category bar view. In some embodiments, the electronic device receives (742) selection of the selectable user interface element, wherein ceasing display of the plurality of representations of the channels and redisplaying the plurality of representations of the groups of channels are in response to receiving selection of the selectable user interface element (e.g., receiving selection of the user interface element, and in response, switching back to the category bar view from the channel bar view).

In some embodiments, ceasing the display of the plurality of representations of the groups of channels in the user interface (e.g., the category bar) and displaying the plurality of representations of the channels associated with the first group of channels (e.g., the channel bar) along the first axis in the updated user interface comprises (744): displaying (746) an animation of the plurality of representations of the channels associated with the first group of channels sliding into the updated user interface along the first axis so as to obscure the plurality of representations of the groups of channels, such as in Figs. 6C-6D (e.g., the channel bar slides into the user interface over the category bar). In some embodiments, while the channel bar is sliding into the user interface, the category bar is gradually becoming more transparent. In some embodiments, while displaying the plurality of representations of the channels associated with the first group of channels along the first axis in the updated user interface, the electronic device receives (748) a second input corresponding to a request to display information related to a first channel of the first group of channels, such as in Figs. 6H-6I (e.g., scrolling to a channel in the channel bar by swiping left/right on a touchpad of a remote control, and clicking a predefined region of the touchpad while a desired channel is selected). In some embodiments, in response to receiving the second input, the electronic device displays (750) the information related to the first channel in the updated user interface, such as in Fig. 6K (e.g., information about a currently-available show on the channel, the name of the show, the start/end times of the show, etc.).

In some embodiments, the plurality of representations of the channels associated with the first group of channels is displayed at a first location in the updated user interface (752) (e.g., horizontally along the bottom of the user interface). In response to receiving the second input (e.g., the information-request input), the electronic device optionally displays (754) an animation of the plurality of representations of the channels associated with the first group of channels moving from the first location to a second location in the updated user interface in a direction substantially perpendicular to the first axis (e.g., displaying an animation of the channel bar translating vertically in the user interface), wherein the information related to the first channel is displayed in an area between the first location and the second location in the updated user interface, such as in Figs. 6I-6K (e.g., the channel information is displayed underneath the channel bar after the channel bar has moved vertically in the user interface). In some embodiments, the channel information moves into the user interface concurrently with the channel bar moving vertically in the user interface.

In some embodiments, the second input comprises (756): selection (758) of the first channel of the first group of channels (e.g., by scrolling to the desired channel using left/right swipes on a touchpad of a remote control); and after the selection of the first channel, a contact detected (760) in a first predefined region (e.g., an upper region) of a touch-sensitive surface of a device, the contact having an intensity greater than an intensity threshold (e.g., a click of the touchpad), and the touch-sensitive surface having a plurality of predefined regions including the first predefined region, such as in Fig. 6J (e.g., the touchpad includes three predefined regions: an upper region, a middle region and a lower region). In some embodiments, a click detected in the middle or lower region will not cause the channel information to be displayed; in some embodiments, such clicks trigger other actions to be performed, such as a middle region click causing selection of a channel in the channel bar to be played rather than information about that channel to be displayed. A second click in the upper region of the touchpad optionally causes display of an electronic program guide (e.g., as described below with reference to method 1300).

In some embodiments, the second input comprises (762): selection (764) of the first channel of the first group of channels (e.g., by scrolling to the desired channel using left/right swipes on a touchpad of a remote control); and after the selection of the first channel, a contact and a movement of the contact detected (766) on a touch-sensitive surface of a device, the movement of the contact being in a direction substantially perpendicular to the first axis, such as in Fig. 6I (e.g., if the channel bar is displayed horizontally in the user interface, a vertical swipe optionally displays information about the currently-selected channel in the user interface). In some embodiments, the second input comprises (768): selection (770) of the first channel of the first group of channels (e.g., by scrolling to the desired channel using left/right swipes on a touchpad of a remote control); and after the selection of the first channel, a contact detected (772) on a touch-sensitive surface of a device, the contact having an intensity greater than an intensity threshold for longer than a time threshold (e.g., a click and hold of a touchpad of a remote control for longer than .3, .5 or 1 second).

In some embodiments, while displaying the information related to the first channel in the updated user interface, the electronic device receives (774) a third input corresponding to a request to select a second channel of the first group of channels (e.g., scrolling to another channel using left/right swipes on a touchpad of a remote control while the channel information is displayed). In some embodiments, in response to receiving the third input (776): the electronic device ceases display (778) of the information related to the first channel in the updated user interface; and displays (780) information related to the second channel in the updated user interface, such as in Figs. 6K-6L (e.g., updating the channel information as the user selects different ones of the channels in the channel bar).

In some embodiments, a first representation of a first channel of the first group of channels is a currently-selected representation (782) (e.g., selected by scrolling to the channel using left/right swipes on a touchpad of a remote control), and the electronic device displays (784) the first representation of the first channel with a first visual characteristic (e.g., relatively large, relatively bright, in color, with a shadow, etc.); and displays (786) the representations of the channels of the first group of channels other than the first representation with a second visual characteristic, different from the first visual characteristic, such as in Figs. 6M-6O (e.g., relatively small, relatively dim, black and white or grayscale, without a shadow, etc.). In some embodiments, while displaying the first representation of the first channel with the first visual characteristic, the electronic device receives (788) a second input corresponding to a request to make a second representation of a second channel of the first group of channels the currently-selected representation (e.g., by scrolling to the channel using left/right swipes on a touchpad of a remote control). In some embodiments, in response to receiving the second input (790): the electronic device updates (792) the first representation of the first channel to have the second visual characteristic instead of the first visual characteristic; and updates (794) the second representation of the second channel to have the first visual characteristic instead of the second visual characteristic, such as in Figs. 6M-6O (e.g., updating the visual characteristics of the channels in the channel bar depending on which channel is the currently-selected channel).

In some embodiments, the first representation of the first channel includes a visual indication of a current play position associated with the first channel (e.g., a progress bar indicating how much of the currently-playing content the user has watched), and the updated user interface includes content associated with the current play position (796), such as in Figs. 6M-6O (e.g., the content is being displayed in the user interface at the play position indicated by the progress bar). In some embodiments, each respective representation of the plurality of representations of the channels associated with the first group of channels comprises an image corresponding to a respective channel of the first group of channels (798) (e.g., the channel bar is made up of images from content items associated with each channel). For example, a sports channel is optionally represented in the channel bar with an image of the logo of the sports channel, or an image from a currently-available sporting event on the sports channel.

In some embodiments, a first representation of a first channel of the first group of channels has a current focus and comprises a first image (798-2), and, while displaying the plurality of representations of the channels associated with the first group of channels in the updated user interface, the electronic device updates (798-4) the first image over time based on content associated with the first channel (e.g., updating the image of the channel that has the current focus periodically (e.g., every 10, 30 or 60 seconds) with the current content on the channel). In some embodiments, while updating the first image over time based on content associated with the first channel and displaying the plurality of representations of the channels associated with the first group of channels in the updated user interface, the electronic device displays (798-6) the content associated with the first channel in a content display area of the updated user interface (e.g., playing content from the current channel in the user interface, and updating the representation of the current channel in the channel bar based on the content that is being played in the user interface).

In some embodiments, two or more of the plurality of representations of the channels associated with the first group of channels comprise visual feeds from their respective channels that are updated over time (798-8) (e.g., updated based on content currently-available from each respective channel every 10, 30 or 60 seconds). In some embodiments, while displaying the plurality of representations of the channels associated with the first group of channels, the electronic device receives (798-10) selection of a first representation of a first channel of the plurality of representations (e.g., scrolling to the channel using left/right swipes on a touchpad of a remote control, and receiving a touchpad click on the remote control after the desired channel has been scrolled-to); and in response to the selection, displays (798-12) content from the first channel in a content display area of the updated user interface (e.g., clicking on a channel causes currently-available content from that channel to be displayed in the user interface).

In some embodiments, the first group of channels corresponds to a content category (798-14) (e.g., sports content, news content, movie content, etc.), and displaying the plurality of the representations of channels associated with the first group of channels comprises (798-16): determining (798-18) whether currently-available content on a set of channels has a content type corresponding to the content category of the first group of channels (e.g., determining whether currently-playing content on a channel or multiple channels matches the type of content that should be included in the channel bar, such as news content for a news channel bar, sports content for a sports channel bar, etc.); and in accordance with a determination that the currently-available content on the set of channels has the content type corresponding to the content category of the first group of channels, including (798-20) representations of the channels in the set of channels in the plurality of representations of the channels associated with the first group of channels, such as in Figs. 6P-6Q (e.g., the channels in the channel bars are selected based on the type of content that is currently playing on the channel). For example, if news content is playing on a channel now, the channel will be displayed in the news channel bar but not the sports channel bar, and if sports are playing in 1 hour on the channel, then in 1 hour the channel will appear on the sports channel bar and not the news channel bar. In some embodiments, content on the channels in the set of channels is tagged with content-category tags (798-22) (e.g., content on channels is optionally tagged with content-descriptive tags, such as news, sports, movies, etc.), and determining whether the currently-available content on the set of channels has the content type corresponding to the content category of the first group of channels comprises determining (798-24) whether the content-category tags of the currently-available content on the set of channels correspond to the content category of the first group of channels (e.g., compare the content-category tags to the content category of the channel bar to determine whether the currently-available content on a given channel has a content category that corresponds to the category of the channel bar, and thus should be included in the channel bar).

In some embodiments, while displaying the plurality of representations of the channels associated with the first group of channels, the electronic device determines (798-26) that a content type of currently-available content on a first channel of the channels no longer corresponds to the content category of the first group of channels (e.g., while displaying a news channel bar, determining that one of the channels in the channel bar is no longer playing news content). In some embodiments, in accordance with a determination that a first representation of the first channel is not a currently-selected representation in the plurality of representations of the channels, the electronic device removes (798-28) the first representation of the first channel from the plurality of representations of the channels, such as in Fig. 6R; and in accordance with a determination that the first representation of the first channel is the currently-selected representation in the plurality of representations of the channels, the electronic device maintains (798-30) the first representation of the first channel in the plurality of representations of the channels, such as in Fig. 6R (e.g., channels that are not currently-selected are optionally treated differently from the currently-selected channel in the channel bar). Channels that are not currently-selected optionally leave the channel bar if the currently-playing content on those channels changes and no longer corresponds to the content type of the channel bar. In contrast, the currently-selected channel is optionally sticky (e.g., so that even if the channel changes content, the currently-selected channel is not removed from the channel bar)). In some embodiments, channels are not added or removed from the channel bar until the channel bar is dismissed from view (e.g., hidden from view due to a request to hide the channel bar, or a request to change the channel bar's category), so that: 1) a channel that is currently included in the channel bar, but no longer displays content matching the category of the channel bar, will be removed from the channel bar only after the channel bar is dismissed, and 2) a channel that is not currently included in the channel bar, but now displays content matching the category of the channel bar, will be added to the channel bar only after the channel bar is dismissed.

It should be understood that the particular order in which the operations in Figs. 7A-7M have been described is merely exemplary and is not intended to indicate that the described order is the only order in which the operations could be performed. One of ordinary skill in the art would recognize various ways to reorder the operations described herein. Additionally, it should be noted that details of other processes described herein with respect to other methods described herein (e.g., methods 900, 1100 and 1300) are also applicable in an analogous manner to method 700 described above with respect to Figs. 7A-7M. For example, the plurality of representations of channels described above with reference to method 700 optionally has one or more of the characteristics of the plurality of representations of channels described herein with reference to other methods described herein (e.g., methods 900, 1100 and 1300). For brevity, these details are not repeated here.

The operations in the information processing methods described above are, optionally, implemented by running one or more functional modules in an information processing apparatus such as general purpose processors (e.g., as described with respect to Figs. 1A, 3, 5A and 14) or application specific chips. Further, the operations described above with reference to Figs. 7A-7M are, optionally, implemented by components depicted in Figs. 1A-1B. For example, generating operations 702 and 706, and receiving operation 704 are, optionally, implemented by event sorter 170, event recognizer 180, and event handler 190. Event monitor 171 in event sorter 170 detects a contact on touch-sensitive surface 451, and event dispatcher module 174 delivers the event information to application 136-1. A respective event recognizer 180 of application 136-1 compares the event information to respective event definitions 186, and determines whether a first contact at a first location on the touch-sensitive surface corresponds to a predefined event or sub-event, such as selection of an object on a user interface. When a respective predefined event or sub-event is detected, event recognizer 180 activates an event handler 190 associated with the detection of the event or sub-event. Event handler 190 optionally utilizes or calls data updater 176 or object updater 177 to update the application internal state 192. In some embodiments, event handler 190 accesses a respective GUI updater 178 to update what is displayed by the application. Similarly, it would be clear to a person having ordinary skill in the art how other processes can be implemented based on the components depicted in Figs. 1A-1B.

### Managing Subscribed and Unsubscribed Channels

Users interact with electronic devices in many different manners, including interacting with content (e.g., music, movies, etc.) that may be available (e.g., stored or otherwise accessible) on the electronic devices. In some circumstances, the users desire to view and manage channels available on the electronic devices. The embodiments described below provide ways in which electronic devices allow users to view and manage subscribed and unsubscribed channels available on the electronic devices, thereby enhancing users' interactions with the electronic devices. Enhancing interactions with a device reduces the amount of time needed by a user to perform operations, and thus reduces the power usage of the device and increases battery life for battery-powered devices. It is understood that people use devices. When a person uses a device, that person is optionally referred to as a user of the device.

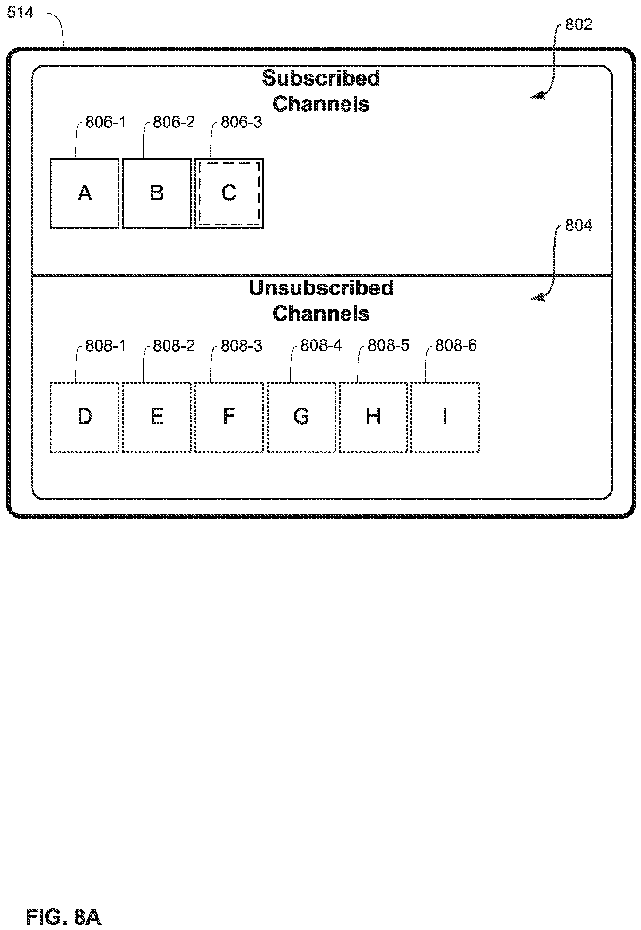

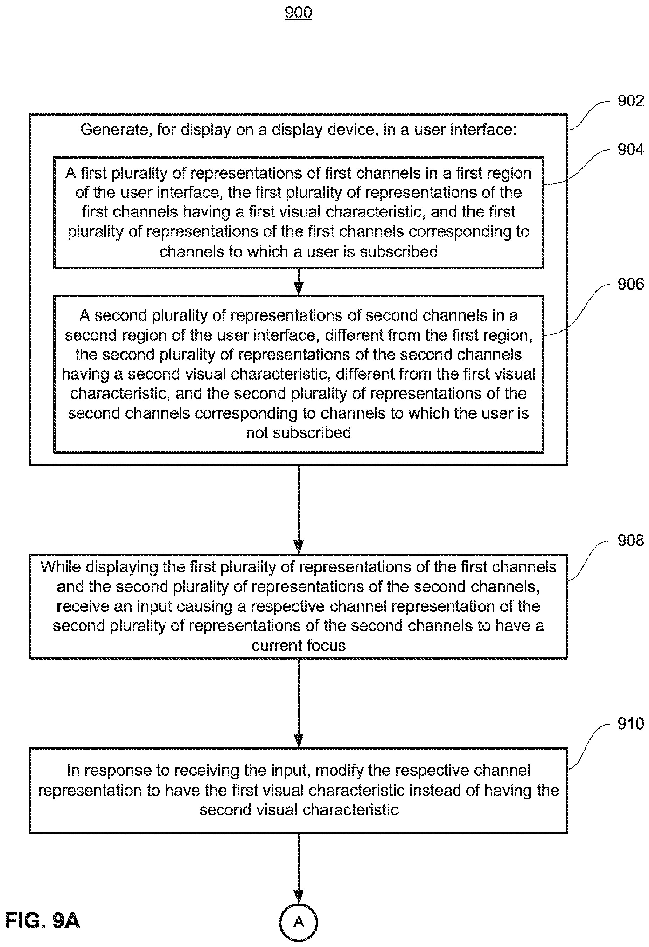

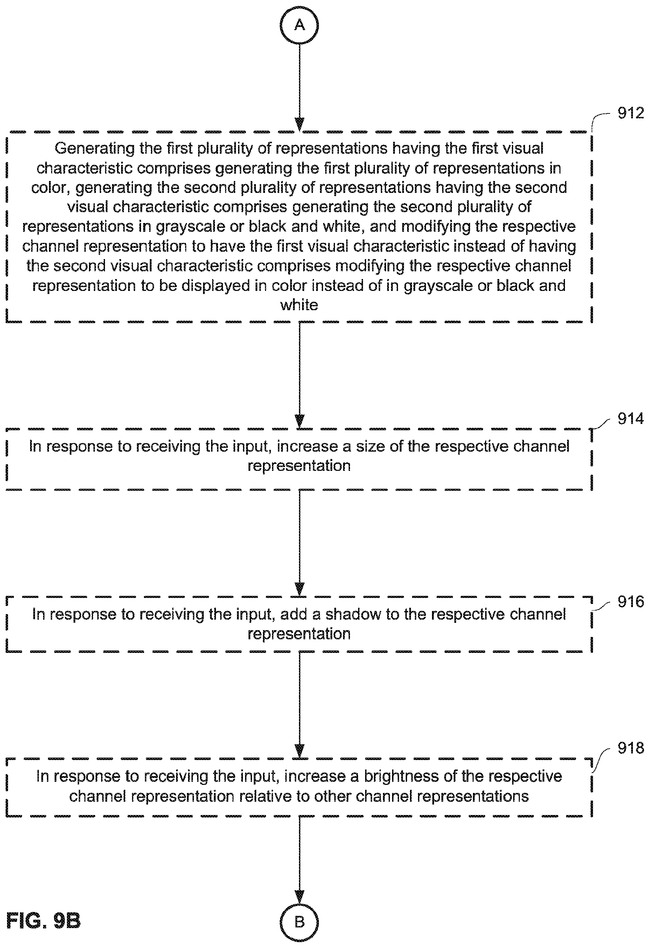

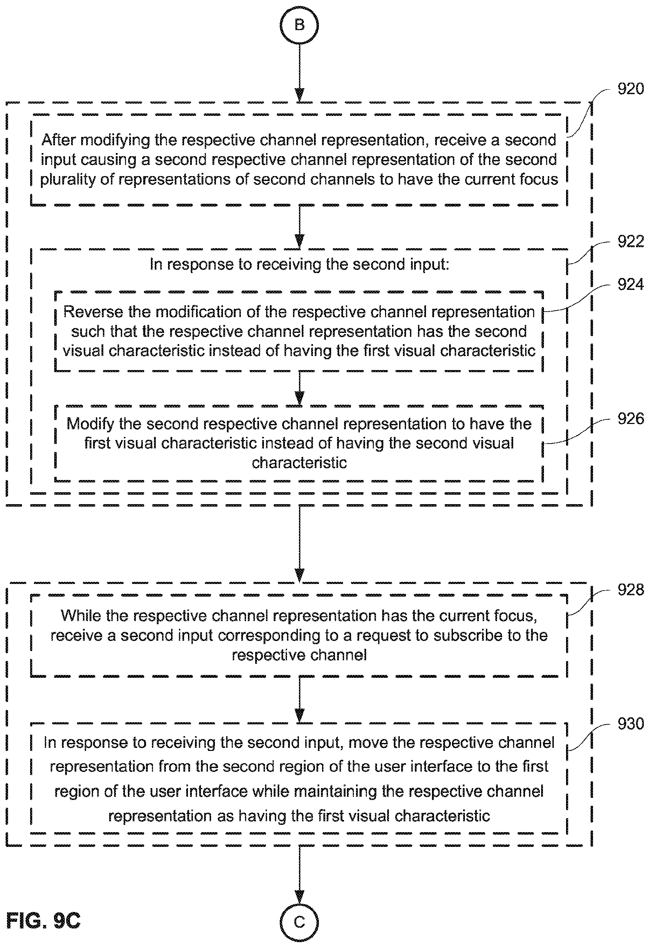

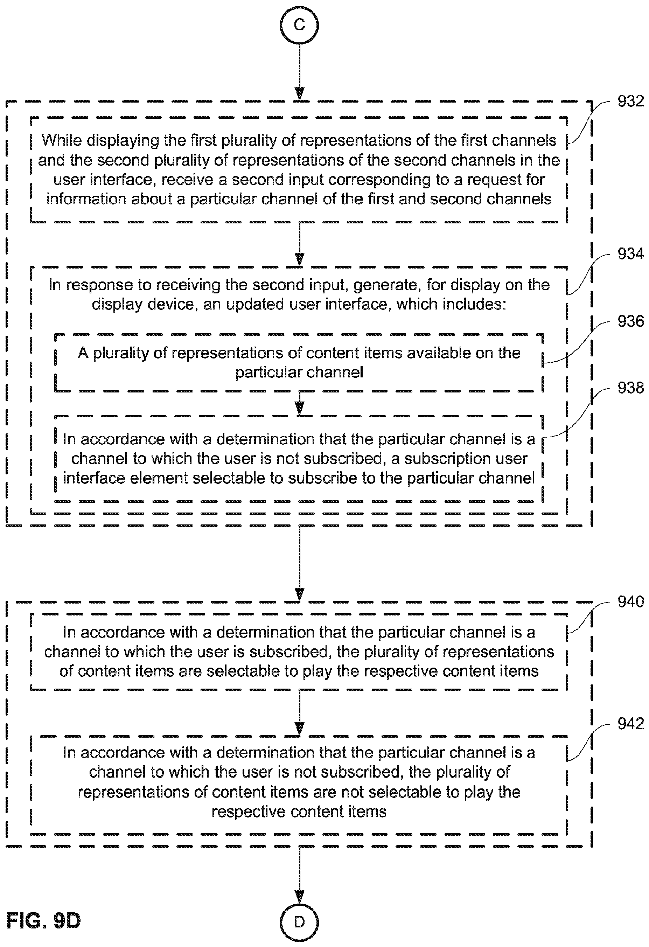

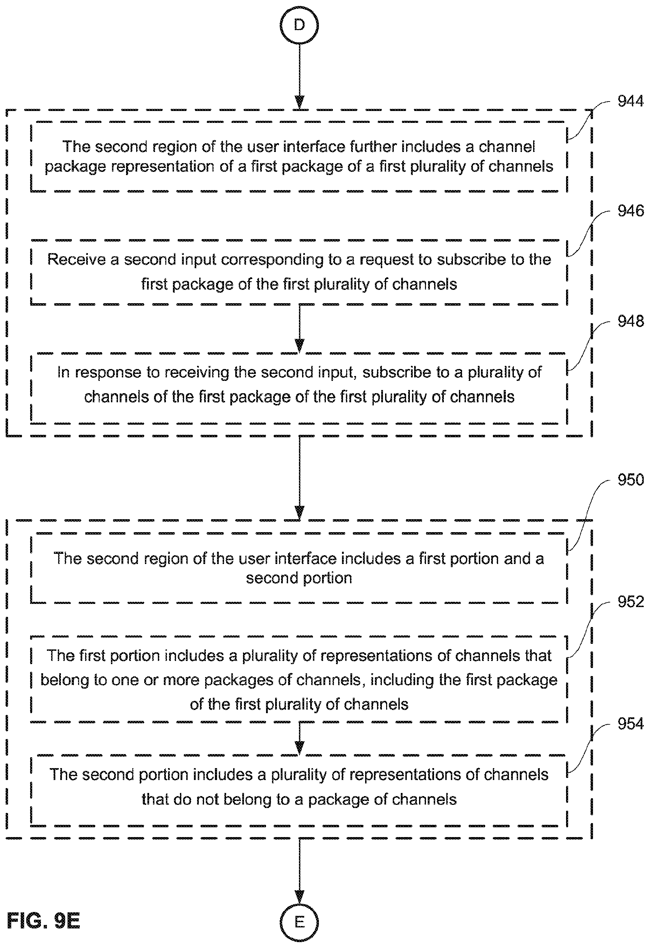

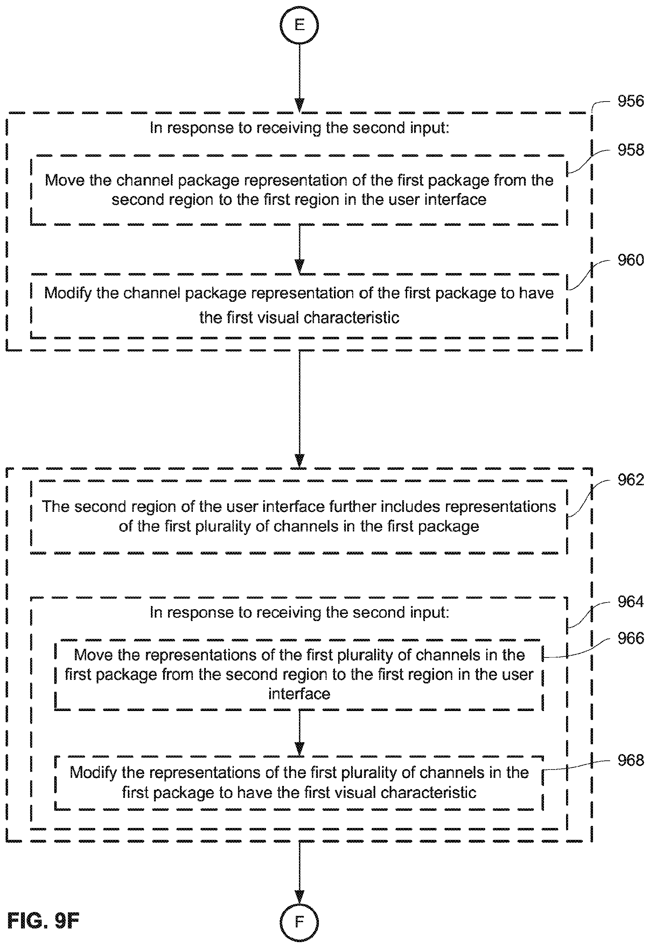

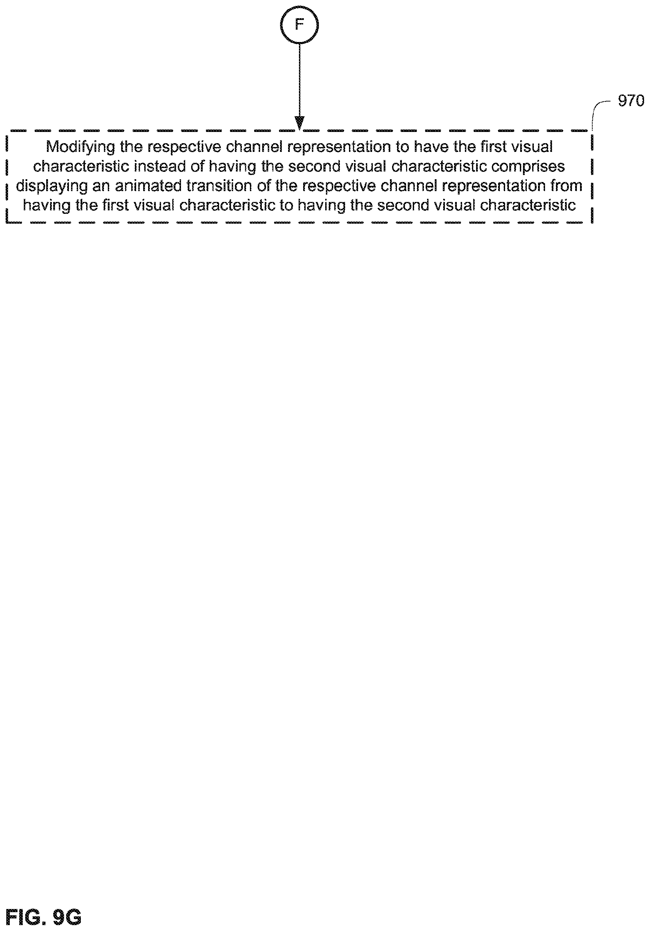

Figs. 8A-8L illustrate exemplary ways in which electronic devices allow users to view and manage subscribed and unsubscribed channels available on the electronic devices in accordance with some embodiments of the disclosure. The embodiments in these figures are used to illustrate the processes described below, including the processes described with reference to Figs. 9A-9G.

It should be noted that the examples illustrated in Figs. 8A-8L are directed to electronic devices that display information on non-touch-sensitive displays, though it is understood that the electronic devices may instead display information on displays having touch-sensitive capability (e.g., touch screens). For example, the electronic devices may include touch screens, or the electronic devices may be capable of outputting display information for display on separate touch screens, as previously described in this disclosure-in such circumstances, the displays described below optionally correspond to the touch screens mentioned above, and the inputs described below are optionally detected on the touch screens.

Fig. 8A illustrates exemplary display 514. Display 514 optionally displays one or more user interfaces that include various content. In the example of illustrated in Fig. 8A, display 514 displays a channel management application (e.g., an application for managing channels to which a user is subscribed and channels to which a user is not subscribed) running on an electronic device (e.g., electronic device 500 of Fig. 5A) of which display 514 is a part, or to which display 514 is connected. The electronic device displays representations 806 of channels to which the user is subscribed in region 802 of the user interface. The representations 806 are optionally images, icons or other visual elements that optionally include visual indications of the channels to which they correspond. For example, the images optionally include logos corresponding to the channel, text that includes the name of the channel, or any other visual indication of the channel. In some embodiments, representations 806 have a first visual characteristic (e.g., rendered in color, have a relatively high level of brightness, have a relatively large size, etc.). In Fig. 8A, this first visual characteristic is reflected by representations 806 having solid-line borders.

In some embodiments, the electronic device also displays representations 808 of channels to which the user is not subscribed in region 804 of the user interface. Representations 808 optionally have a second visual characteristic, different from the first visual characteristic (e.g., rendered in grayscale or black and white, have a relatively low brightness, have a relatively small size, etc.). In Fig. 8A, this second visual characteristic is reflected by representations 808 having dashed-line borders. Additionally, as reflected in Fig. 8A, representation 806-3 (corresponding to channel C) has a current focus, reflected by the dashed-line indicator within representation 806-3.

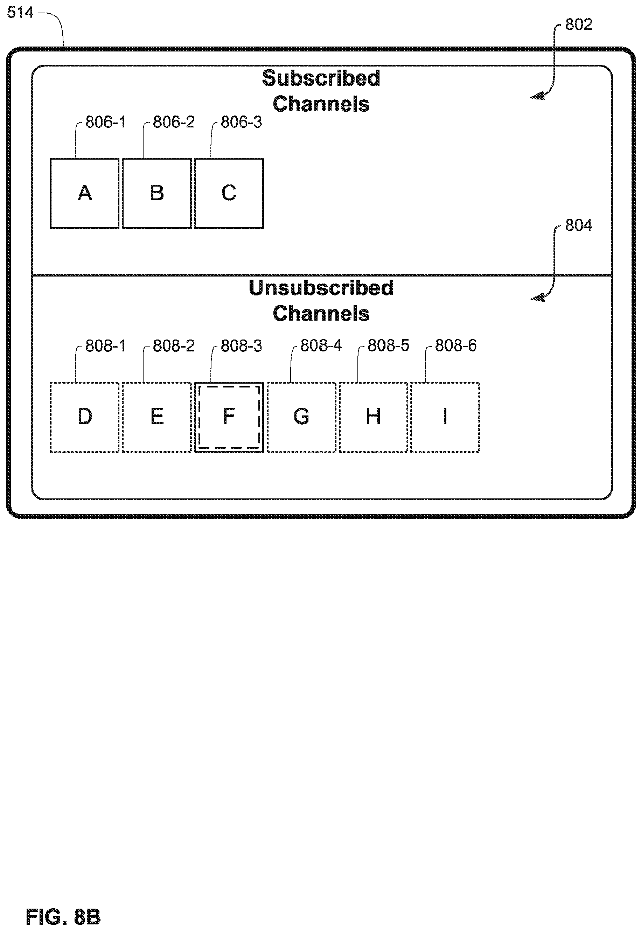

In some embodiments, the electronic device receives an input (e.g., a directional input detected on a touch-sensitive surface of a remote control, such as remote control 510 in Fig. 5B) causing a representation of an unsubscribed channel to have the current focus, as illustrated in Fig. 8B. In particular, representation 808-3 now has the current focus. In response, the electronic device modifies representation 808-3 to have the first visual characteristic (e.g., the visual characteristic of the subscribed channels) instead of the second visual characteristic (e.g., the visual characteristic of the unsubscribed channels), as shown in Fig. 8B. This modification optionally includes rendering representation 808-3 in color (like the channels to which the user is subscribed), while the other channels to which the user is not subscribed remain grayscale or black and white. In some embodiments, modifying representation 808-3 additionally or alternatively includes increasing a brightness of the representation, enlarging the representation, adding a shadow to the representation, and/or otherwise highlighting the representation.

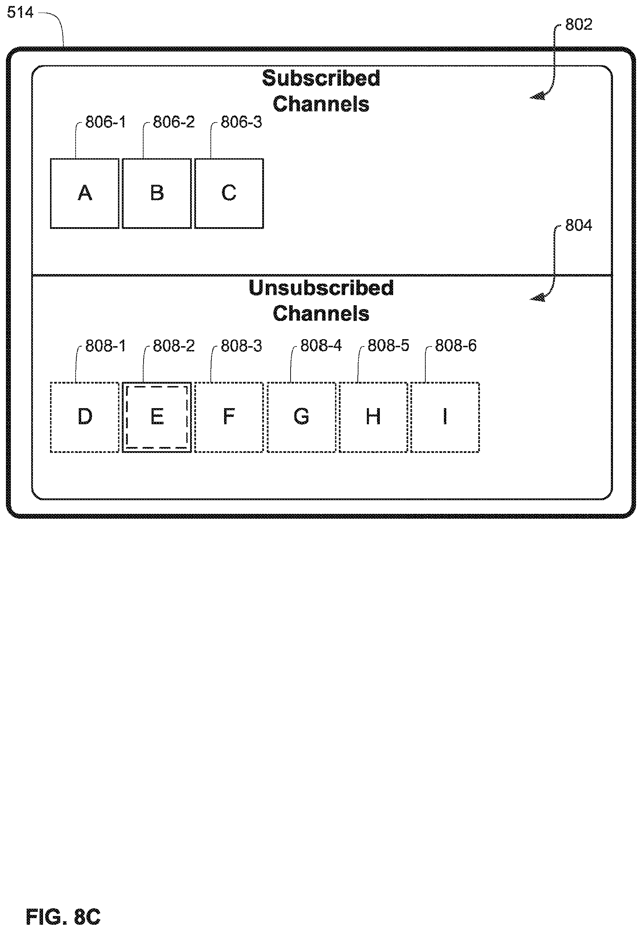

If the electronic device receives an input moving the current focus away from representation 808-3 to another representation of a channel to which the user is not subscribed, representation 808-3 optionally reverts back to having the second visual characteristic, and the representation that now has the current focus is optionally updated to have the first visual characteristic, as described above, the details of which will be omitted here for brevity. For example, in Fig. 8C, the current focus is moved from representation 808-3 to 808-2. As a result, representation 808-3 is updated to have the second visual characteristic (reflected by the dashed-line border in Fig. 8C), and representation 808-2 is updated to have the first visual characteristic (reflected by the solid-line border in Fig. 8C).

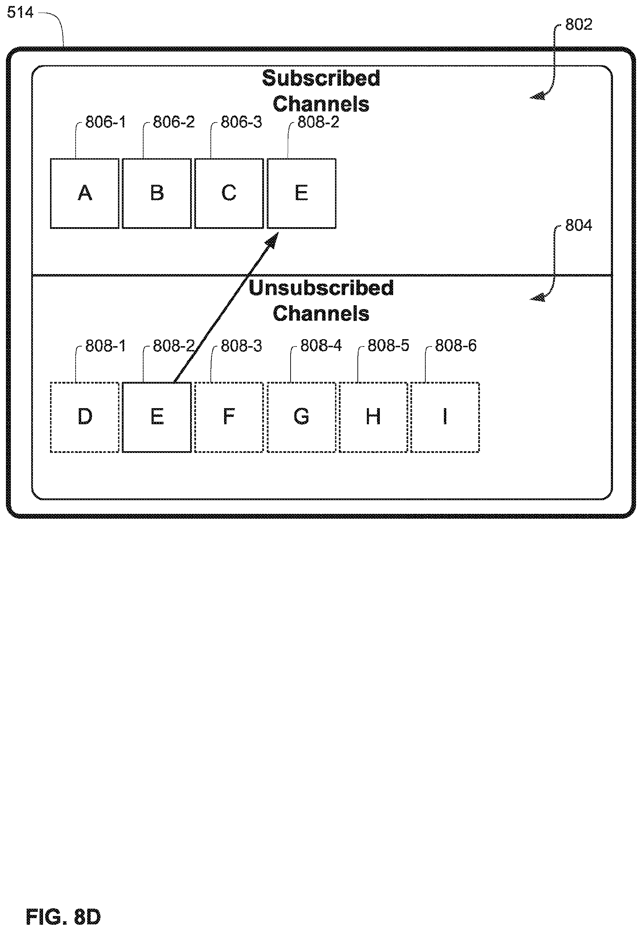

In some embodiments, a user is able to subscribe to an unsubscribed channel, and in response, that channel's representation is optionally moved from region 804 in the user interface (the region corresponding to unsubscribed channels) to region 802 in the user interface (the region corresponding to subscribed channels). Figs. 8D-8E illustrate such channel subscription. Specifically, while representation 808-2 has the current focus in Fig. 8D, the electronic device receives an input corresponding to a request to subscribe to the channel corresponding to representation 808-2 (e.g., channel E). The input is optionally a click detected on a touchpad of a remote control (or in a predefined region of the touchpad) while representation 808-2 has the current focus, followed, optionally, by one or more steps in which the user authorizes a subscription to channel E (corresponding to representation 808-2) (e.g., providing payment information or authorization, agreeing to subscription terms and conditions, etc.). In some embodiments, after receiving the click, a confirmation is displayed requesting confirmation of the request to subscribe before the subscription is effectuated.

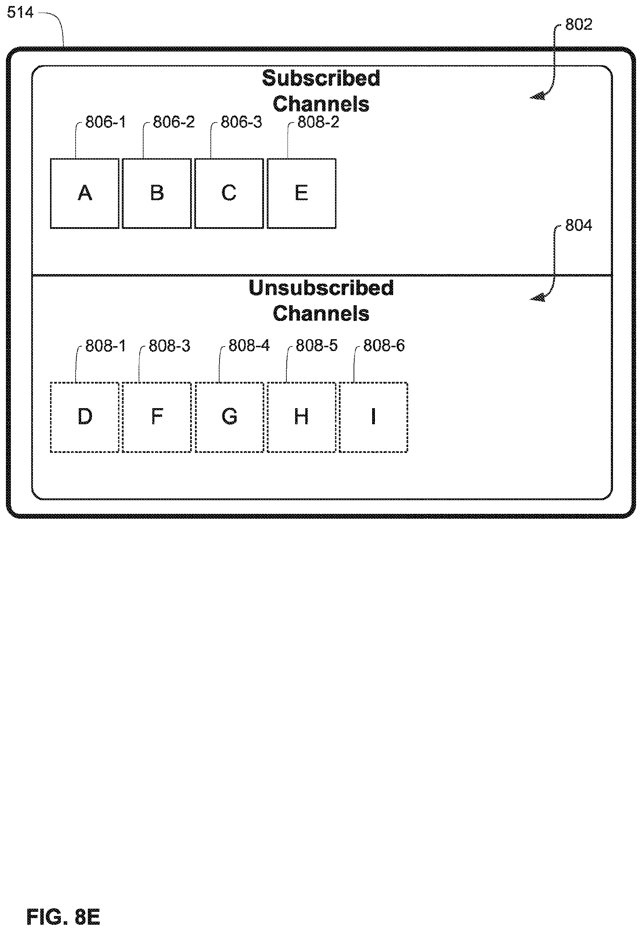

In response to receiving the request to subscribe to channel E, the electronic device optionally moves representation 808-2 from region 804 of the user interface to region 802 of the user interface (reflected by the arrow in Fig. 8D) while maintaining representation 808-2 as having the first visual characteristic (e.g., moving representation 808-2 into the subscribed channel region of the user interface, because channel E, corresponding to representation 808-2, is now a channel to which the user is subscribed). Fig. 8E illustrates representation 808-2 having moved into region 802 of the user interface, as described above. In some embodiments, modifying representation 808-2 to have the first visual characteristic instead of having the second visual characteristic includes displaying an animated transition of representation 808-2 from having the first visual characteristic to having the second visual characteristic (e.g., an animation of representation 808-2 floating upward towards region 802 of the user interface, gradually increasing in saturation, and/or gradually increasing in brightness, etc.).

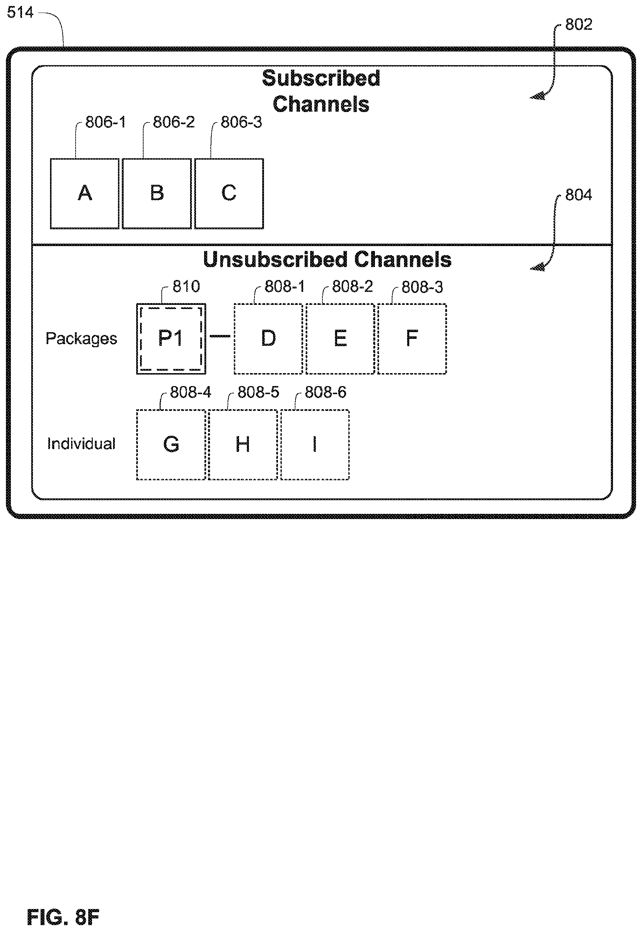

In some embodiments, region 804 of the user interface (corresponding to unsubscribed channels) includes representations of individual channels as well as channel packages. Specifically, referring to Fig. 8F, region 804 of the user interface includes channel package representation 810, corresponding to channel package P1. Channel package P1 includes multiple channels, such as channels D, E and F, corresponding to representations 806-1, 806-2 and 806-3. Channel package P1 is optionally a package of channels, such as a sports channel package that includes multiple sports channels. If the user subscribes to the sports channel package, the user is optionally subscribed to each channel in the sports channel package. In some embodiments, channels that belong to channel packages (e.g., channels D, E and F) are displayed in a first portion of region 804 of the user interface (e.g., an upper region, as illustrated in Fig. 8F), and channels that do not belong to channel packages (e.g., channels G, H and I) are displayed in a second portion of region 804 of the user interface (e.g., a lower region, as illustrated in Fig. 8F).

In Fig. 8F, representation 810 has the current focus. In some embodiments, the electronic device receives an input corresponding to a request to subscribe to channel package P1 (e.g., a click detected on a touchpad of a remote control (or in a predefined region of the touchpad) while representation 810, corresponding to channel package PI, has the current focus). In some embodiments, after receiving the click, a confirmation is displayed requesting confirmation of the request to subscribe before the subscription is effectuated. In some embodiments, in response to receiving the input to subscribe to channel package PI, the electronic device subscribes to the channels in channel package P1 (e.g., subscribes to each of channels D, E and F in channel package P1).

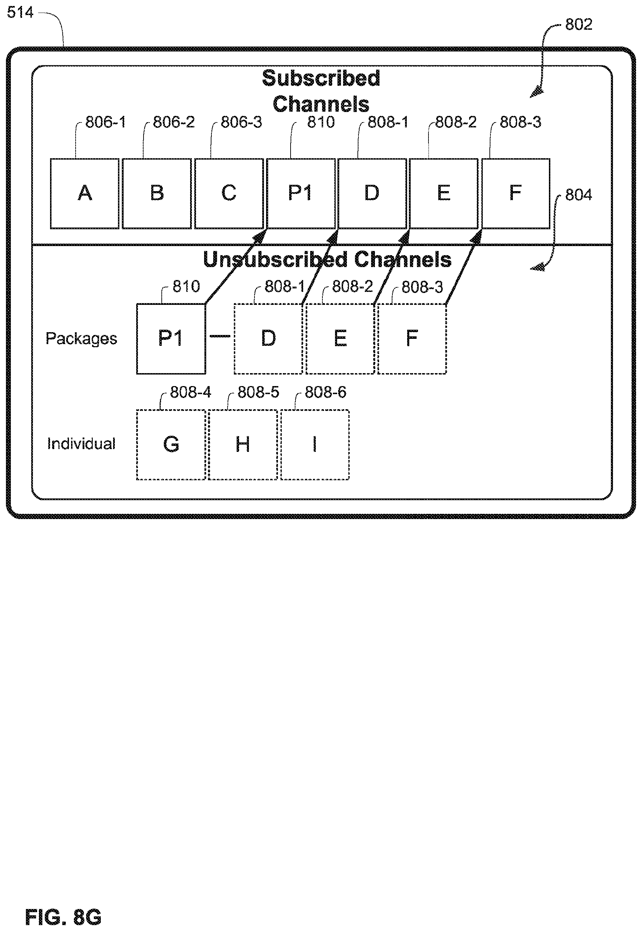

In some embodiments, in response to subscribing to a channel package (e.g., channel package P1), the representation of the channel package, the representations of the channels that belong to the channel package, or both, are moved to region 802 of the user interface, as illustrated in Figs. 8G-8H. Specifically, in some embodiments, the channel package representation (e.g., representation 810 of channel package PI) is moved from region 804 to region 802 of the user interface, and the electronic device displays the channel package representation (e.g., representation 810) in region 802 of the user interface with the first visual characteristic, the visual characteristic corresponding to subscribed channels-for example, the electronic device optionally displays the channel package representation in color (as opposed to black and white) to signify that the user is subscribed to the channel package.

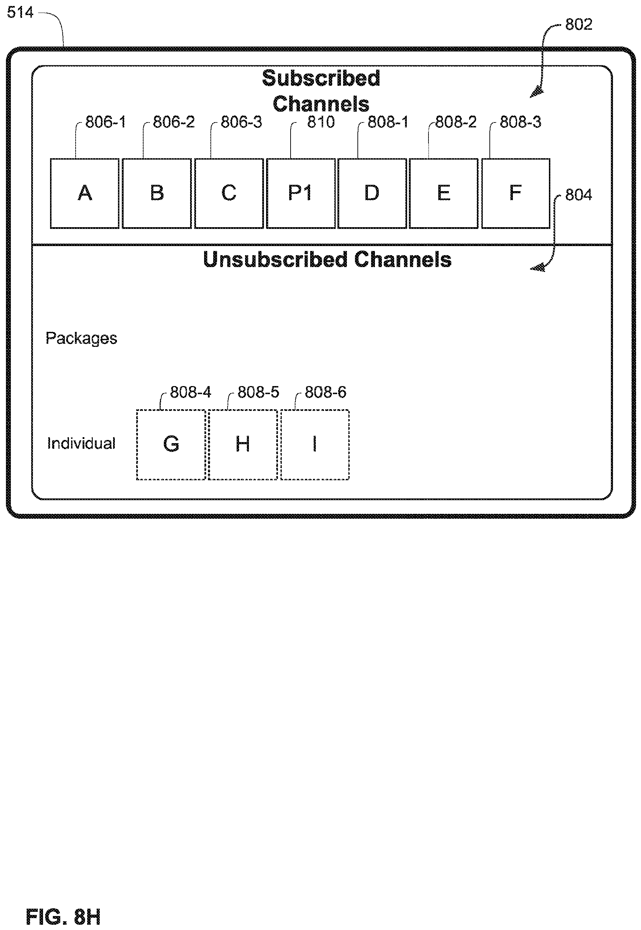

In some embodiments, in addition to including representation 810, corresponding to channel package PI, the user interface includes representations of the channels that belong to channel package P1 (e.g., representations 808-1, 808-2 and 808-3 of channels D, E and F, respectively), as illustrated in Fig. 8F. In some embodiments, in response to subscribing to channel package PI, the representations of channels D, E and F (e.g., representations 808-1, 808-2 and 808-3) are also moved from region 804 to region 802 in the user interface, as illustrated in Figs. 8G-8H. Analogously to as described with reference to the movement of representation 810 from region 804 to region 802 in the user interface, representations 808-1, 808-2 and 808-3 are optionally also moved from region 804 to region 802 in the user interface in response to subscribing to channel package PI, and are optionally also displayed by the electronic device with the first visual characteristic (e.g., displaying the moved channel representations in color (as opposed to black and white) to signify that the user is subscribed to the channels). Fig. 8H illustrates the result of moving representations 810 and/or 808-1, 808-2 and 808-3 from region 804 to region 802 of the user interface.

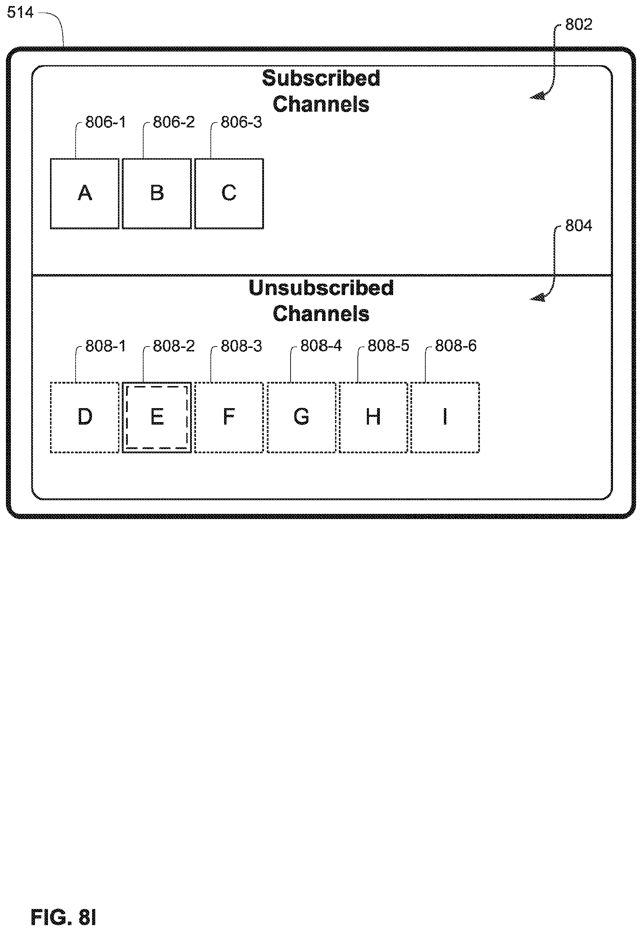

In some embodiments, an input corresponding to a request to display information about a particular channel is received by the electronic device while displaying the channels to which the user is subscribed and not subscribed. Fig. 8I illustrates a user interface including representations of channels to which the user is subscribed displayed in region 802 of the user interface, and representations of channels to which the user is not subscribed in region 804 of the user interface, as previously described. In Fig. 8I, representation 808-2, corresponding to channel E, has the current focus.

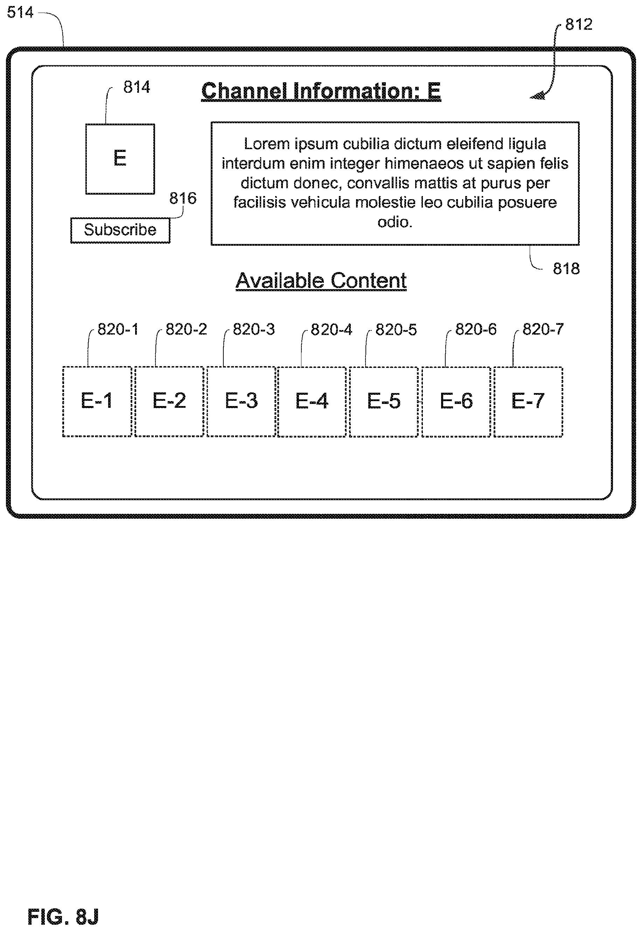

In some embodiments, the electronic device receives an input corresponding to a request for information about channel E (corresponding to representation 808-2 in Fig. 8I) (e.g., by receiving up/down/left/right swipes on the touchpad of the remote control to give representation 808-2 the current focus, followed by a click on the touchpad of the remote control). In response to receiving the input, in some embodiments, the electronic device displays a channel information page 812 including information about, and/or a plurality of representations of content items available on, channel E, as illustrated in Fig. 8J. In particular, the channel information page 812 includes user interface element 814, which optionally is an image associated with channel E, information 818 about channel E and/or representations 820 of content items available on channel E (e.g., content items E-1, E-2, E-3, etc.). For example, when information about a sports channel is requested, images and/or other information about sporting events available for viewing on the sports channel are displayed in the user interface. Further, in some embodiments, if the user is not subscribed to the channel for which the user requested information, the channel information page 812 also includes a subscription user interface element 816 selectable to subscribe to the channel (e.g., channel E, in Fig. 8J).

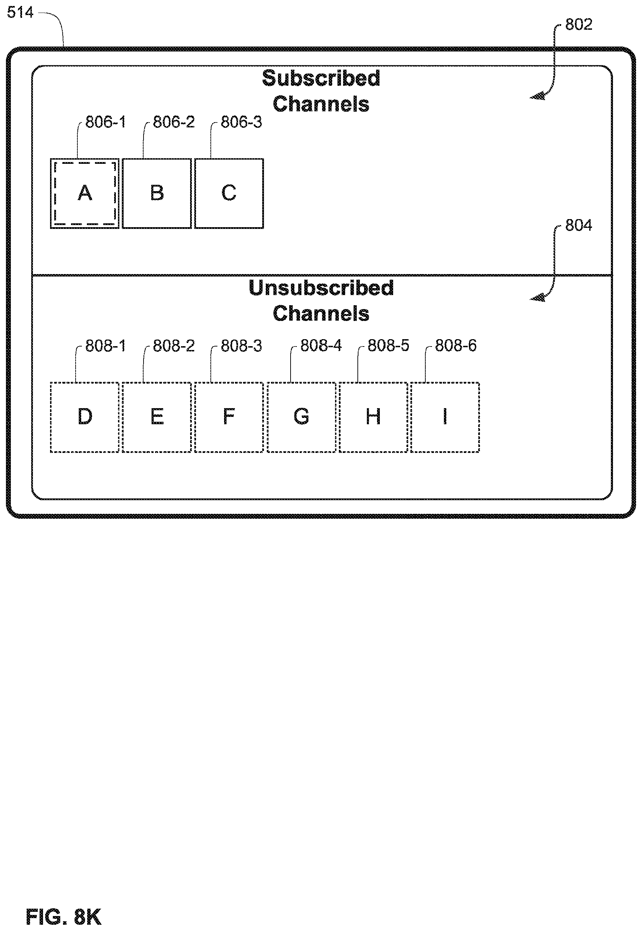

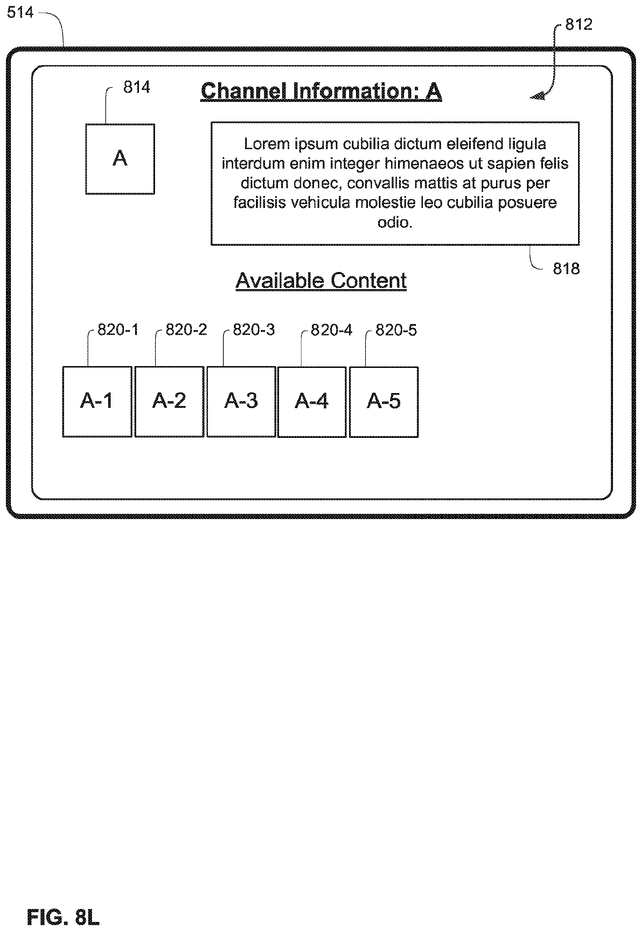

In some embodiments, because the user is not subscribed to channel E in Fig. 8J, representations 820 are not selectable to play their respective content items (e.g., selection of a representation 820 corresponding to a content item associated with channel E-an unsubscribed channel-does not cause the content item to begin playing in the user interface). However, in some embodiments, if the user requests information for a channel to which the user is subscribed, as illustrated in Figs. 8K-8L, representations 820 are selectable to play their respective content items. For example, selection of representation 820-1 in Fig. 8L causes content item A-1 to be played in the user interface. The details of requesting information for a subscribed channel, as illustrated in Figs. 8K-8L, are optionally analogous to the details of requesting information for an unsubscribed channel, as illustrated in Figs. 8I-8J.

Figs. 9A-9G are flow diagrams illustrating a method 900 of viewing and managing subscribed and unsubscribed channels available on an electronic device in accordance with some embodiments of the disclosure. The method 900 is optionally performed at an electronic device such as device 100, device 300 or device 500 as described above with reference to Figs. 1A-1B, 2-3 and 5A-5B. Some operations in method 900 are, optionally, combined and/or the order of some operations is, optionally, changed.

As described below, the method 900 provides ways in which a user interacts with a device for viewing and managing subscribed and unsubscribed channels available on the device. The method reduces the cognitive burden on a user when interacting with a user interface (e.g., a playlist or now playing user interface) of the device of the disclosure, thereby creating a more efficient human-machine interface. For battery-operated electronic devices, increasing the efficiency of the user's interaction with the user interface conserves power and increases the time between battery charges.

In some embodiments, an electronic device (e.g., device 100, 300 or 500) with a display device (e.g., a display device included in or coupled to the electronic device, such as display 514 in Fig. 5A) and one or more input devices (e.g., one or more input devices included in or coupled to the electronic device; for example, a second electronic device, such as a remote control, with a touch-sensitive surface, such as remote 510 in Figs. 5A-5B) generates (902), for display on the display device, in a user interface: a first plurality of representations of first channels in a first region (e.g., an upper region) of the user interface (e.g., images, icons or other visual elements that optionally include visual indications of the channels to which they correspond. For example, the images optionally include logos corresponding to the channel, text that includes the name of the channel, or any other visual indication of the channel), the first plurality of representations of the first channels having a first visual characteristic (e.g., the first plurality of channels are rendered in color, have a relatively high level of brightness, have a relatively large size, etc.), and the first plurality of representations of the first channels corresponding to channels to which a user is subscribed (904), such as in Fig. 8A (e.g., the user of the electronic device is optionally subscribed to the channels in the first plurality of channels). In some embodiments, the user has paid to subscribe to one or more of the channels, and in some embodiments, the user subscription to one or more of the channels is free of charge. In some embodiments, the user interface also includes a second plurality of representations of second channels in a second region (e.g., a lower region) of the user interface, different from the first region, the second plurality of representations of the second channels having a second visual characteristic, different from the first visual characteristic (e.g., the second plurality of channels are rendered in grayscale or black and white, have a relatively low brightness, have a relatively small size, etc.), and the second plurality of representations of the second channels corresponding to channels to which the user is not subscribed (906), such as in Fig. 8A (e.g., because the user of the electronic device has not yet attempted to subscribe to the channels, or does not wish to subscribe to the channels).

In some embodiments, while displaying the first plurality of representations of the first channels and the second plurality of representations of the second channels, the electronic device receives (908) an input (e.g., an input from a remote control, such as a directional input detected on a touch-sensitive surface of the remote control. For example, an up/down/left/right swipe on the remote control) causing a respective channel representation of the second plurality of representations of the second channels to have a current focus (e.g., moving a visible or invisible cursor on top of the respective channel in accordance with the input from the remote control so as to cause the respective channel to have the current focus). In some embodiments, in response to receiving the input, the electronic device modifies (910) the respective channel representation to have the first visual characteristic instead of having the second visual characteristic, such as in Fig. 8B (e.g., modifying the display of the respective channel so that the respective channel is displayed in a manner similar to the channels to which the user is subscribed). For example, rendering the respective channel in color (like the channels to which the user is subscribed), while the other channels of the second plurality of channels remain grayscale or black and white. In some embodiments, modifying the respective channel additionally or alternatively includes increasing a brightness of the respective channel, enlarging the respective channel, and/or otherwise highlighting the respective channel.

In some embodiments, generating the first plurality of representations having the first visual characteristic comprises generating the first plurality of representations in color, generating the second plurality of representations having the second visual characteristic comprises generating the second plurality of representations in grayscale or black and white, and modifying the respective channel representation to have the first visual characteristic instead of having the second visual characteristic comprises modifying the respective channel representation to be displayed in color instead of in grayscale or black and white (912) (e.g., subscribed channels are displayed in color, while unsubscribed channels are displayed in black and white or grayscale). In some embodiments, in response to receiving the input, the electronic device increases (914) a size of the respective channel representation (e.g., the channel representation with the current focus). In some embodiments, increasing the size of the respective channel representation is part of a graphical effect that gives the appearance of the respective channel representation lifting off of a plane on which the channel representations are displayed. In some embodiments, in response to receiving the input, the electronic device adds (916) a shadow to the respective channel representation (e.g., the channel representation with the current focus). In some embodiments, adding a shadow to the respective channel representation is part of a graphical effect that gives the appearance of the respective channel representation lifting off of a plane on which the channel representations are displayed. In some embodiments, in response to receiving the input, the electronic device increases (918) a brightness of the respective channel representation relative to other channel representations (e.g., increasing the brightness of the channel representation with the current focus or decreasing a brightness of other channel representations that are not currently in focus).

In some embodiments, after modifying the respective channel representation, the electronic device receives (920) a second input causing a second respective channel representation of the second plurality of representations of second channels to have the current focus (e.g., by receiving up/down/left/right swipes on the touchpad of the remote control). In some embodiments, in response to receiving the second input (922): the electronic device reverses (924) the modification of the respective channel representation such that the respective channel representation has the second visual characteristic instead of having the first visual characteristic (e.g., changing the respective channel representation to be rendered in black and white instead of color, because the respective channel representation no longer has the current focus); and modifies (926) the second respective channel representation to have the first visual characteristic instead of having the second visual characteristic, such as in Fig. 8C (e.g., changing the second respective channel representation to be rendered in color instead of black and white, because it now has the current focus).

In some embodiments, while the respective channel representation has the current focus, the electronic device receives (928) a second input corresponding to a request to subscribe to the respective channel (e.g., a click detected on a touchpad of a remote control (or in a predefined region of the touchpad) while the respective channel representation has the current focus that is, optionally, followed by one or more steps in which the user authorizes a subscription to the respective channel (e.g., providing payment information or authorization, agreeing to subscription terms and conditions, etc.). In some embodiments, after receiving the click, a confirmation is displayed requesting confirmation of the request to subscribe before the subscription is effectuated). In some embodiments, in response to receiving the second input: the electronic device moves (930) the respective channel representation from the second region of the user interface to the first region of the user interface while maintaining the respective channel representation as having the first visual characteristic, such as in Figs. 8D-8E (e.g., moving the respective channel representation into the subscribed channel region of the user interface, because the respective channel is now a channel to which the user is subscribed).

In some embodiments, while displaying the first plurality of representations of the first channels and the second plurality of representations of the second channels in the user interface, the electronic device receives (932) a second input corresponding to a request for information about a particular channel of the first and second channels (e.g., by receiving up/down/left/right swipes on the touchpad of the remote control, followed by a click on the touchpad of the remote control). In some embodiments, in response to receiving the second input, the electronic device generates (934), for display on the display device, an updated user interface, which includes: a plurality of representations of content items available on the particular channel (936), such as in Fig. 8J (e.g., when information about a sports channel is requested, images and/or other information about sporting events available on the sports channel are displayed in the user interface. From here, the user optionally selects a content item to watch (if subscribed to the channel), or is presented with an option to subscribe to the channel (if not subscribed to the channel)); and in accordance with a determination that the particular channel is a channel to which the user is not subscribed, a subscription user interface element selectable to subscribe to the particular channel (938), such as in Fig. 8J (e.g., a button for subscribing to the channel).

In some embodiments, in accordance with a determination that the particular channel is a channel to which the user is subscribed, the plurality of representations of content items are selectable to play the respective content items (940), such as in Fig. 8L (e.g., selection of a content item associated with a subscribed channel causes the content item to begin playing in the user interface), and in accordance with a determination that the particular channel is a channel to which the user is not subscribed, the plurality of representations of content items are not selectable to play the respective content items (942), such as in Fig. 8J (e.g., selection of a content item associated with an unsubscribed channel does not cause the content item to begin playing in the user interface). In some embodiments, such content items are not selectable.

In some embodiments, the second region of the user interface further includes a channel package representation of a first package of a first plurality of channels (944), such as in Fig. 8F (e.g., a sports channel package that includes multiple sports channels). If the user subscribes to the sports channel package, the user is optionally subscribed to each channel in the sports channel package. In some embodiments, the electronic device receives (946) a second input corresponding to a request to subscribe to the first package of the first plurality of channels (e.g., a click detected on a touchpad of a remote control (or in a predefined region of the touchpad) while the channel package representation has the current focus. In some embodiments, after receiving the click, a confirmation is displayed requesting confirmation of the request to subscribe before the subscription is effectuated. In some embodiments, in response to receiving the second input, the electronic device subscribes (948) to a plurality of channels of the first package of the first plurality of channels, such as in Fig. 8G (e.g., subscribing to each channel in the first package).

In some embodiments, the second region of the user interface includes a first portion (e.g., an upper portion) and a second portion (950) (e.g., a lower portion), the first portion includes a plurality of representations of channels that belong to one or more packages of channels, including the first package of the first plurality of channels (952) (e.g., channels that are part of packages are displayed in the first portion of the second region), and the second portion includes a plurality of representations of channels that do not belong to a package of channels (954), such as in Fig. 8F (e.g., channels that are not part of packages are displayed in the second portion of the second region). In some embodiments, in response to receiving the second input (956) (e.g., an input to subscribe to the channel package): the electronic device moves (958) the channel package representation of the first package from the second region to the first region in the user interface, such as Figs. 8G-8H (e.g., moving the channel package representation from the unsubscribed region of the user interface to the subscribed region of the user interface); and modifies (960) the channel package representation of the first package to have the first visual characteristic (e.g., displaying the channel package representation in color (as opposed to black and white) to signify that the user is subscribed to the channel package).

In some embodiments, the second region of the user interface further includes representations of the first plurality of channels in the first package (962), such as in Fig. 8F (e.g., in addition to displaying a sports package representation in the user interface, each channel included in the sports channel also has a representation that is displayed in the user interface). In some embodiments, in response to receiving the second input (964) (e.g., an input to subscribe to the channel package): the electronic device moves (966) the representations of the first plurality of channels in the first package from the second region to the first region in the user interface (e.g., moving the channel representations in the channel package from the unsubscribed region of the user interface to the subscribed region of the user interface); and modifies (968) the representations of the first plurality of channels in the first package to have the first visual characteristic, such as in Figs. 8G-8H (e.g., displaying the moved channel representations in color (as opposed to black and white) to signify that the user is subscribed to the channels).

In some embodiments, modifying the respective channel representation to have the first visual characteristic instead of having the second visual characteristic comprises displaying an animated transition of the respective channel representation from having the first visual characteristic to having the second visual characteristic (970) (e.g., an animation of the respective channel representation floating upward, gradually increasing in saturation, and/or gradually increasing in brightness, etc.).

It should be understood that the particular order in which the operations in Figs. 9A-9G have been described is merely exemplary and is not intended to indicate that the described order is the only order in which the operations could be performed. One of ordinary skill in the art would recognize various ways to reorder the operations described herein. Additionally, it should be noted that details of other processes described herein with respect to other methods described herein (e.g., methods 700, 1100 and 1300) are also applicable in an analogous manner to method 900 described above with respect to Figs. 9A-9G. For example, the representations of channels described above with reference to method 900 optionally have one or more of the characteristics of the representations of channels described herein with reference to other methods described herein (e.g., methods 700, 1100 and 1300). For brevity, these details are not repeated here.

The operations in the information processing methods described above are, optionally, implemented by running one or more functional modules in an information processing apparatus such as general purpose processors (e.g., as described with respect to Figs. 1A, 3, 5A and 15) or application specific chips. Further, the operations described above with reference to Figs. 9A-9G are, optionally, implemented by components depicted in Figs. 1A-1B. For example, generating operation 902, receiving operation 908 and modifying operation 910 are, optionally, implemented by event sorter 170, event recognizer 180, and event handler 190. Event monitor 171 in event sorter 170 detects a contact on touch-sensitive surface 451, and event dispatcher module 174 delivers the event information to application 136-1. A respective event recognizer 180 of application 136-1 compares the event information to respective event definitions 186, and determines whether a first contact at a first location on the touch-sensitive surface corresponds to a predefined event or sub-event, such as selection of an object on a user interface. When a respective predefined event or sub-event is detected, event recognizer 180 activates an event handler 190 associated with the detection of the event or sub-event. Event handler 190 optionally utilizes or calls data updater 176 or object updater 177 to update the application internal state 192. In some embodiments, event handler 190 accesses a respective GUI updater 178 to update what is displayed by the application. Similarly, it would be clear to a person having ordinary skill in the art how other processes can be implemented based on the components depicted in Figs. 1A-1B.

### Content Navigation

Users interact with electronic devices in many different manners, including interacting with content (e.g., music, movies, etc.) that may be available (e.g., stored or otherwise accessible) on the electronic devices. In some circumstances, the users desire to navigate content available on the electronic devices. The embodiments described below provide ways in which electronic devices allow users to navigate content items available on the electronic devices, thereby enhancing users' interactions with the electronic devices. Enhancing interactions with a device reduces the amount of time needed by a user to perform operations, and thus reduces the power usage of the device and increases battery life for battery-powered devices. It is understood that people use devices. When a person uses a device, that person is optionally referred to as a user of the device.

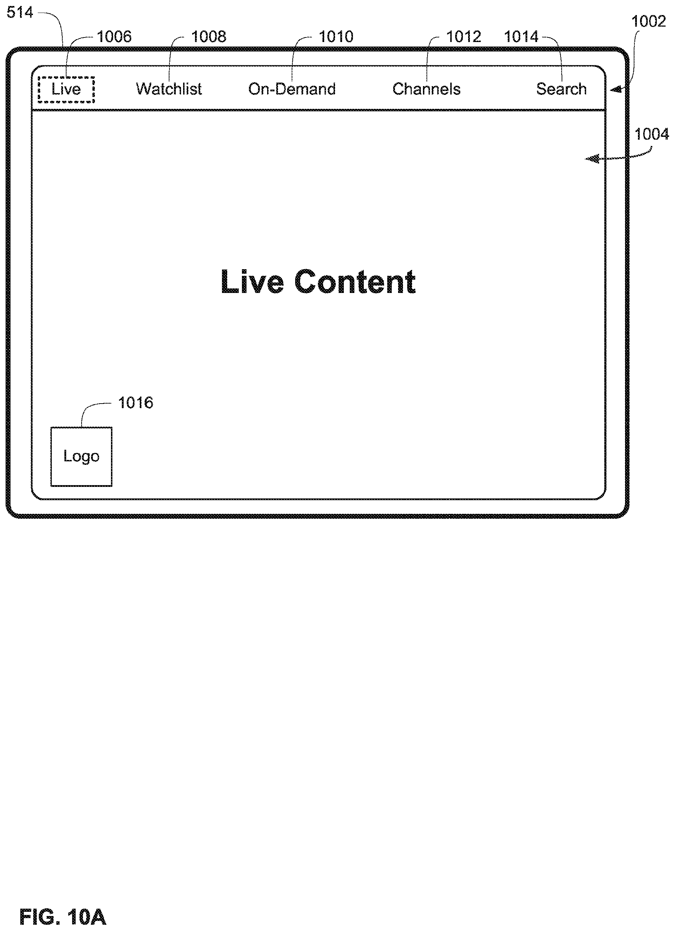

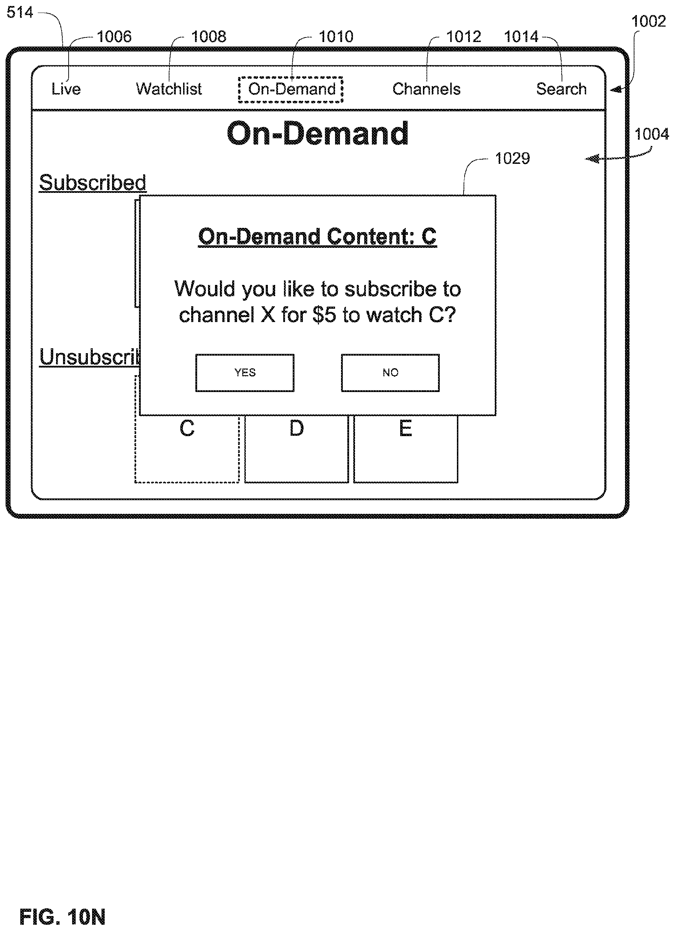

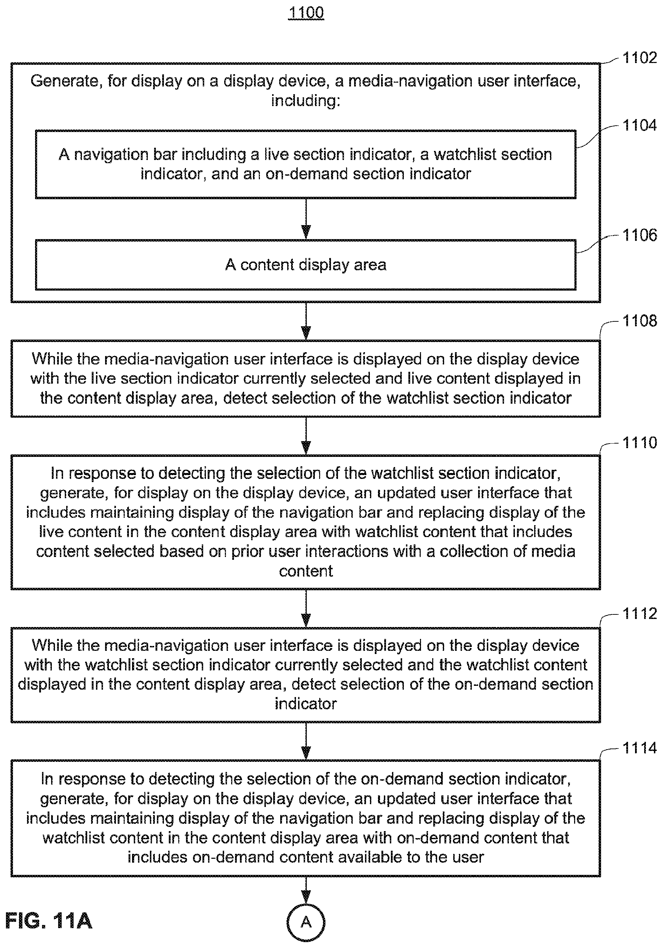

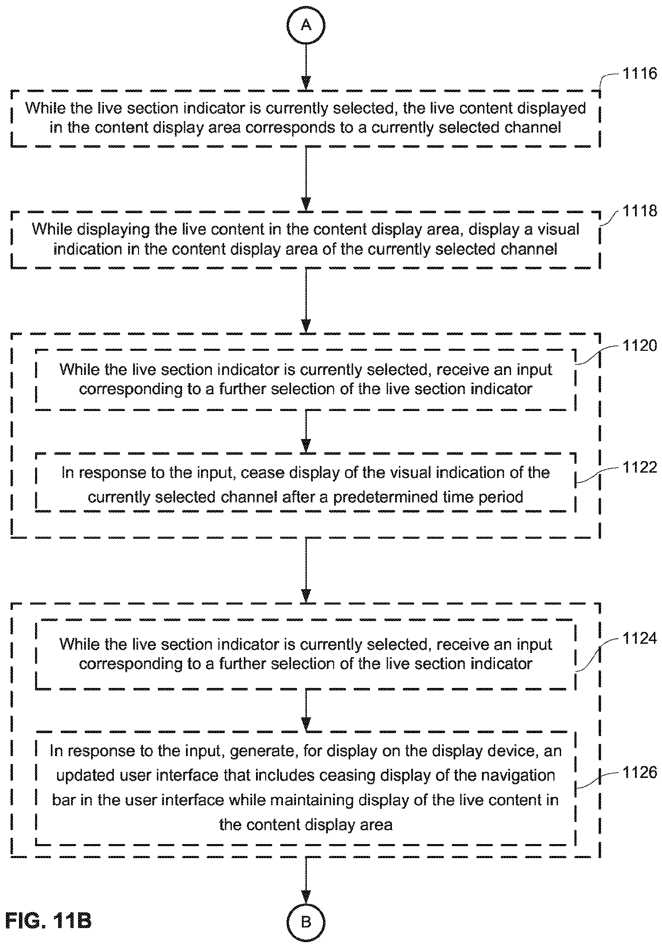

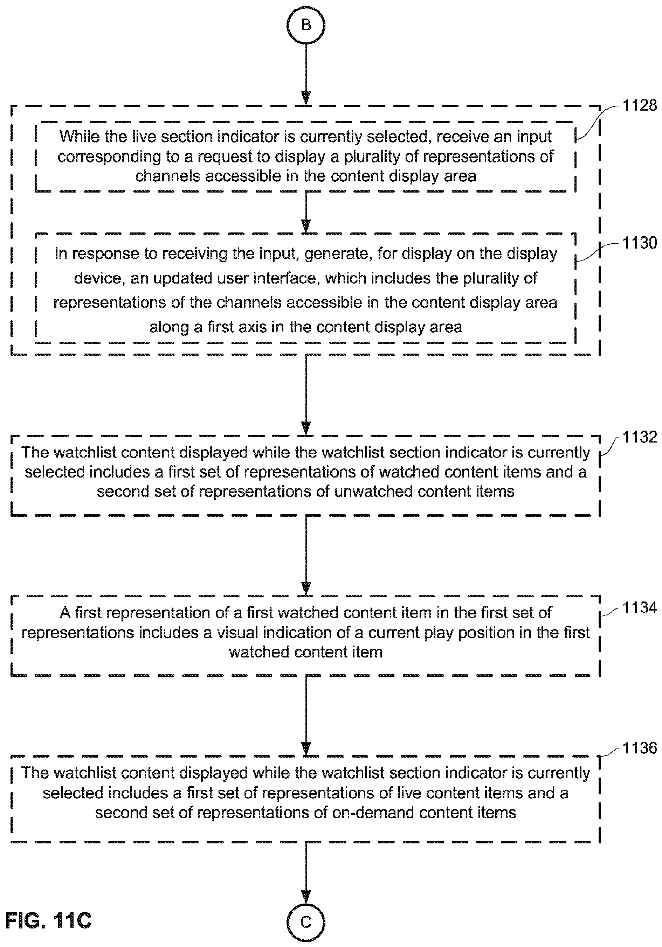

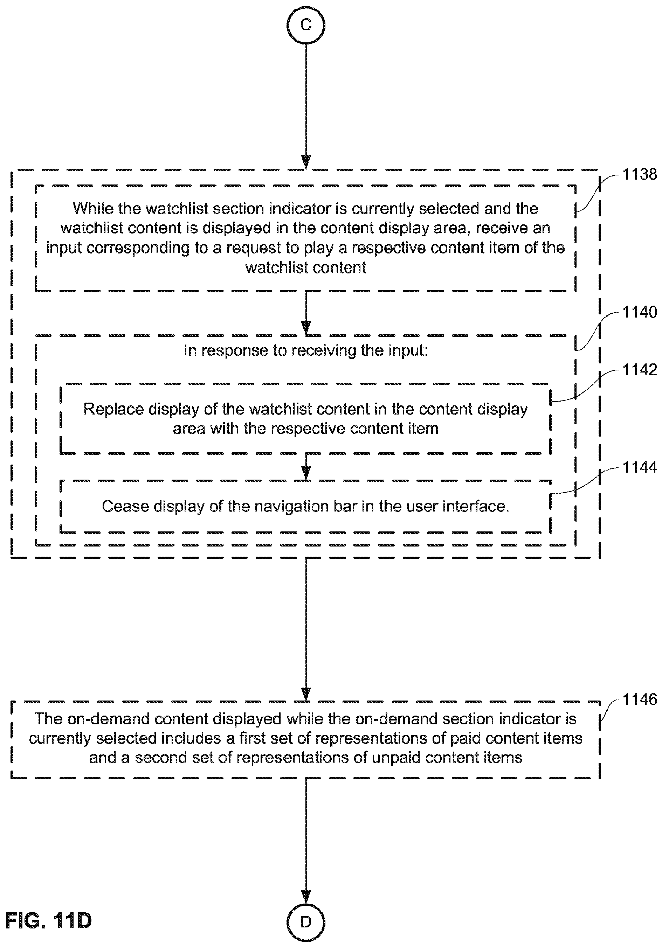

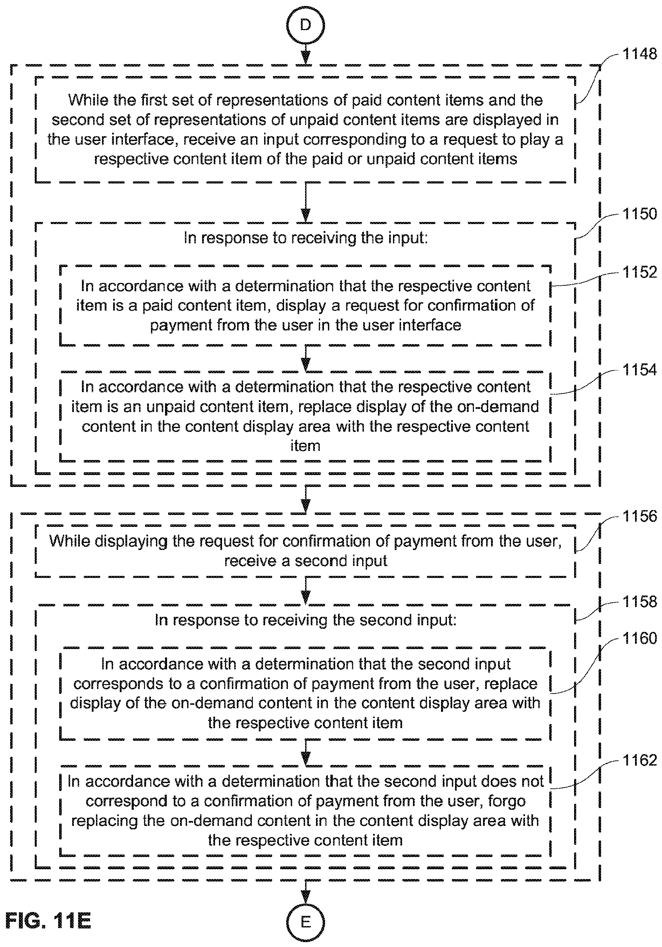

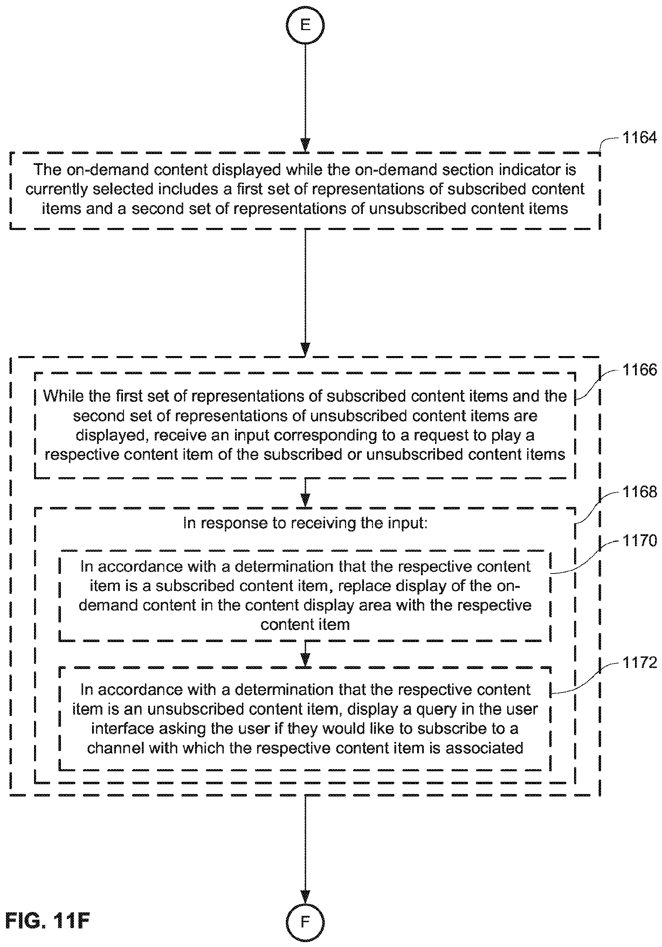

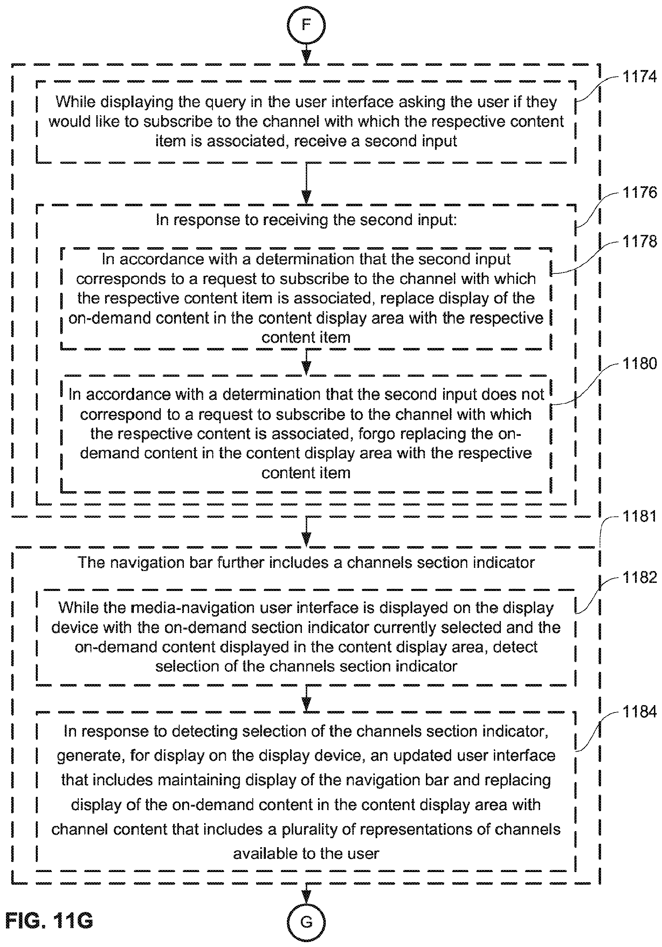

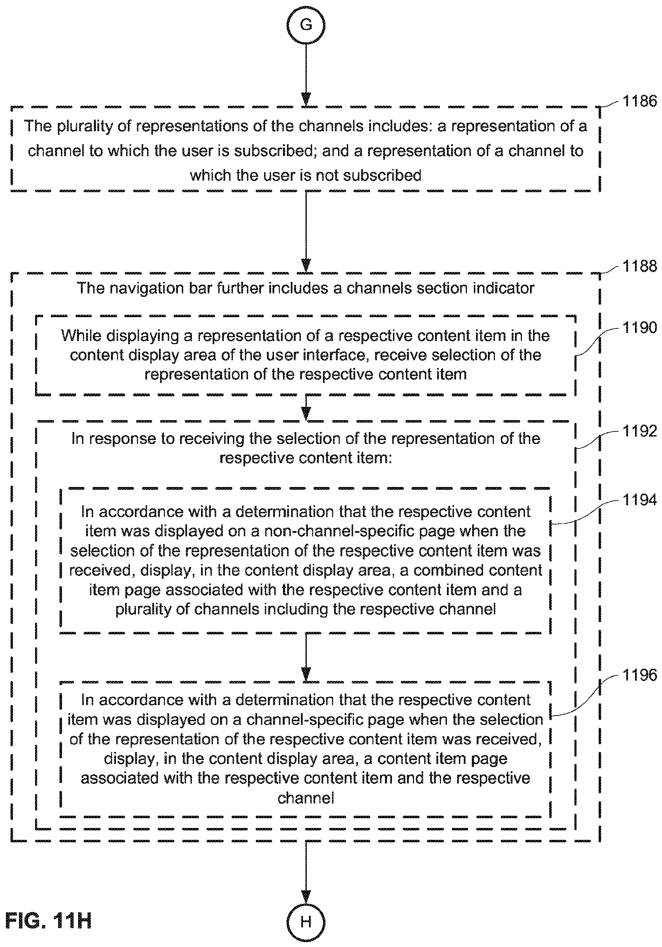

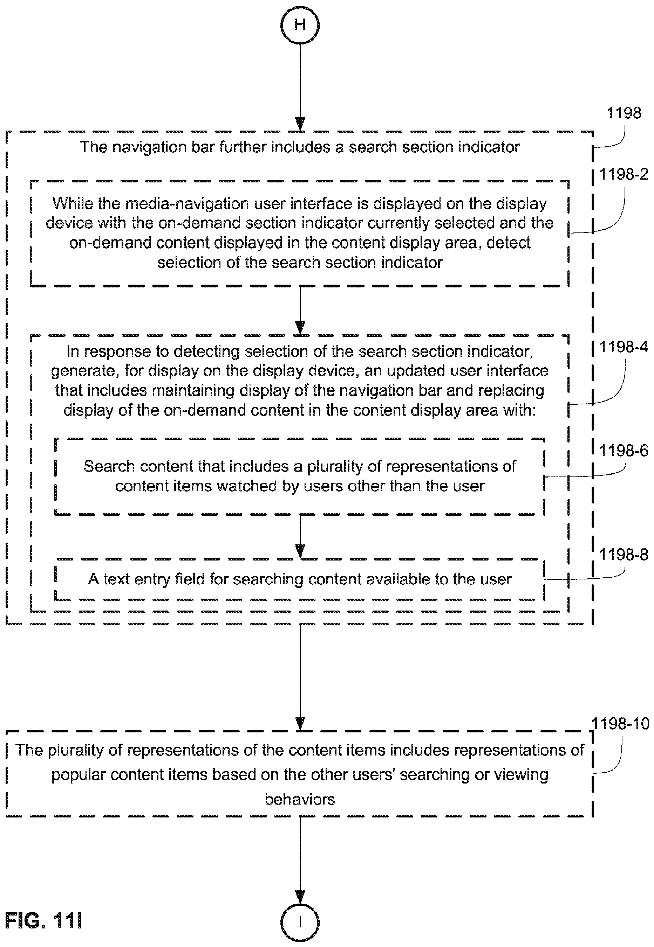

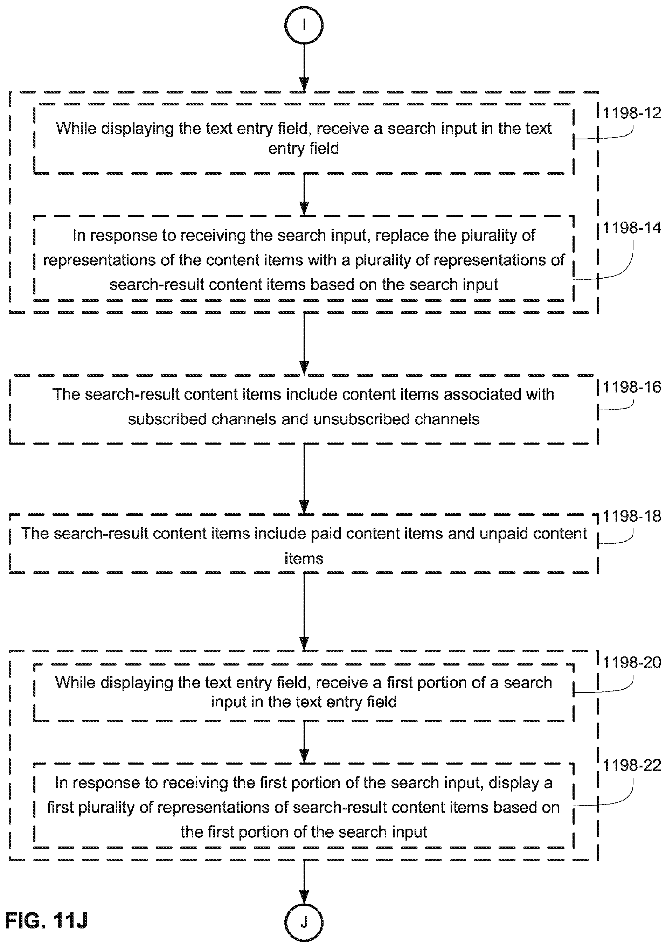

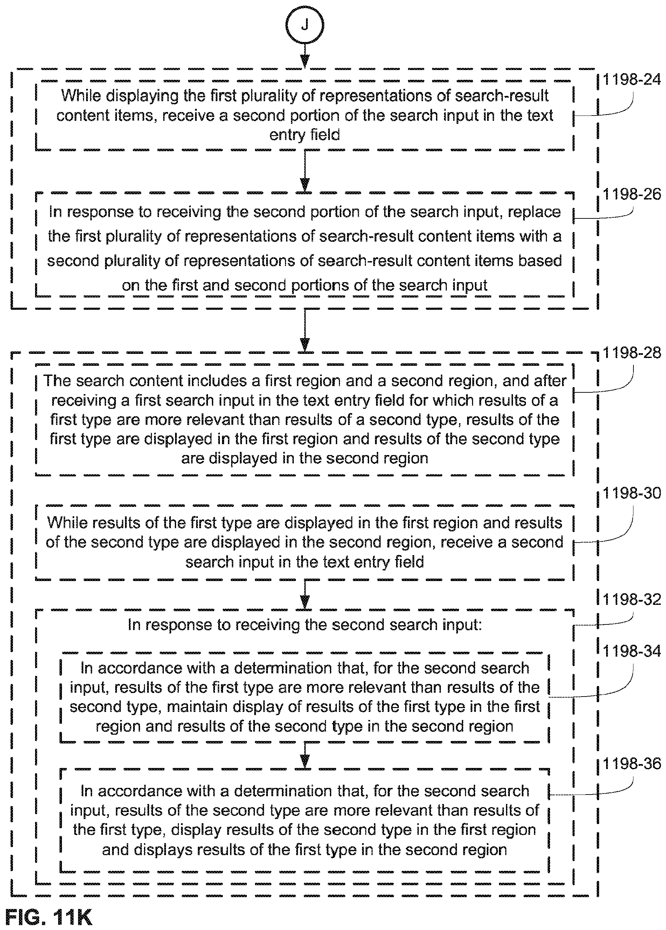

Figs. 10A-10X illustrate exemplary ways in which electronic devices allow users to navigate content items available on the electronic devices in accordance with some embodiments of the disclosure. The embodiments in these figures are used to illustrate the processes described below, including the processes described with reference to Figs. 11A-11K.

It should be noted that the examples illustrated in Figs. 10A-10X are directed to electronic devices that display information on non-touch-sensitive displays, though it is understood that the electronic devices may instead display information on displays having touch-sensitive capability (e.g., touch screens). For example, the electronic devices may include touch screens, or the electronic devices may be capable of outputting display information for display on separate touch screens, as previously described in this disclosure-in such circumstances, the displays described below optionally correspond to the touch screens mentioned above, and the inputs described below are optionally detected on the touch screens.

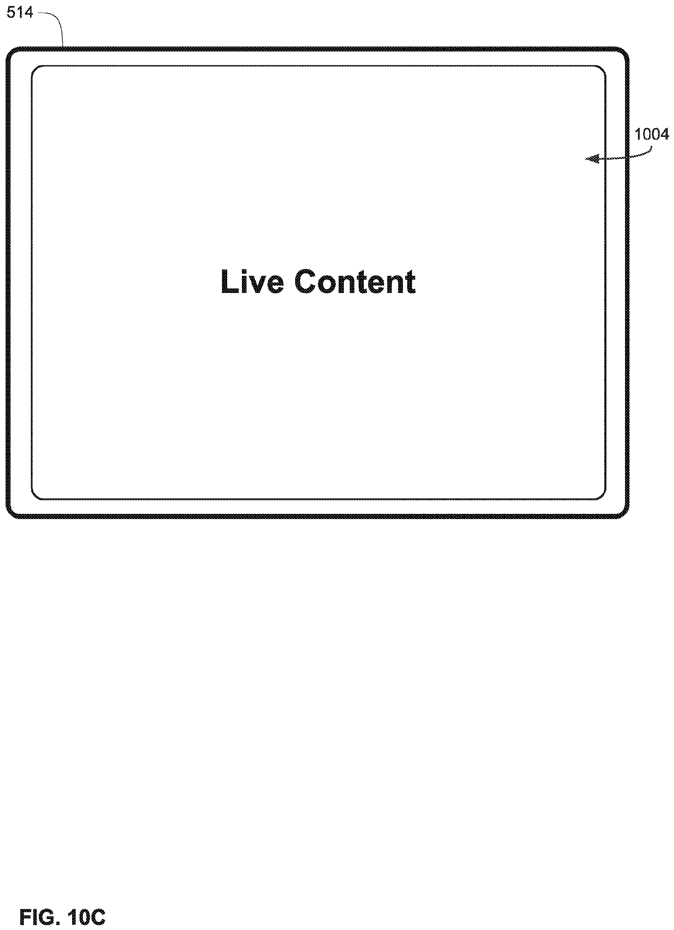

Fig. 10A illustrates exemplary display 514. Display 514 optionally displays one or more user interfaces that include various content. In the example illustrated in Fig. 10A, display 514 optionally displays a content navigation application (e.g., an application for navigating content to which an electronic device has access) running on the electronic device (e.g., electronic device 500 of Fig. 5A) of which display 514 is a part, or to which display 514 is connected. The user interface optionally includes navigation bar 1002 and content display area 1004. The navigation bar 1002 optionally includes a live section indicator 1006, a watchlist section indicator 1008, an on-demand section indicator 1010, a channels section indicator 1012, and/or a search section indicator 1014. In Fig. 10A, the live section indicator 1006 is currently-selected, as reflected by the dashed-line box around the live section indicator 1006. In some embodiments, when the live section indicator 1006 is currently-selected, the content display area 1004 includes live content from a currently-selected channel accessible on the electronic device (e.g., a currently-selected channel in a channel bar, as described with reference to method 700, above). In some embodiments, the content display area 1004 also includes a visual indication 1016 of the currently-selected channel (e.g., a logo corresponding to the live content displayed in the content display area 1004 of the currently-selected channel). In some embodiments, the electronic device receives a further selection of the live section indicator 1006 while it is currently-selected (illustrated in Fig. 8B with the solid-line box around the live section indicator 1006). For example, the original selection of the live section indicator 1006 is optionally movement of a cursor to the live section indicator 1006, and the further selection of the live section indicator 1006 is optionally a click detected on a touchpad of a remote control when the live section indicator 1006 is currently-selected. In some embodiments, this further selection of the live section indicator 1006 causes the electronic device to hide logo 1016 after a predetermined time period (e.g., 1, 3 or 5 seconds), and causes the electronic device to hide the navigation bar 1002 while maintaining display of the live content in the content display area 1004, as shown in Fig. 10C. In this way, a user is optionally able to view the live content in full screen on display 514.

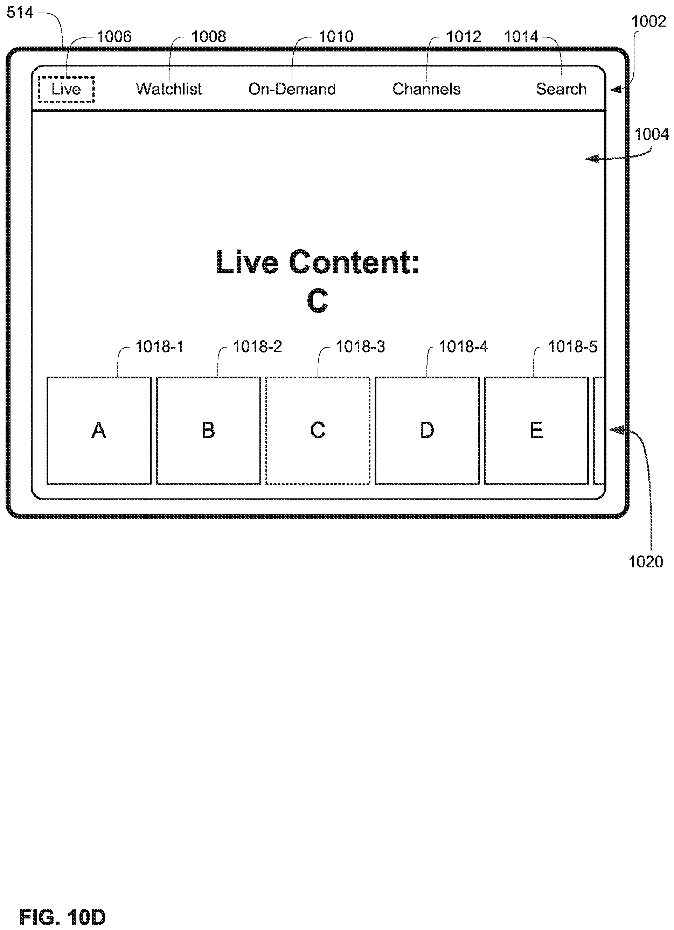

In some embodiments, a channel bar is displayed in the user interface when the live section indicator 1006 is currently-selected, as illustrated in Fig. 10D. The channel bar optionally exhibits some or all of the characteristics of the channel bars described with respect to Figs. 6A-6R. Specifically, while the live section indicator 1006 is currently-selected, the electronic device optionally receives an input corresponding to a request to display channel bar 1020 (e.g., a plurality of representations of channels accessible in the content display area 1004 of the user interface). In response to the input, the electronic device optionally displays channel bar 1020 along an axis (e.g., horizontally, as illustrated in Fig. 10D) in the content display area 1004 of the user interface. In some embodiments, channel bar 1020 has one or more properties of the channel bar described above with reference to method 700. Channel bar 1020 in Fig. 10D includes representations 1018, corresponding to channels A, B, C, D and E that are accessible on the electronic device. In the example of Fig. 10D, representation 1018-3 (corresponding to channel C) is selected, as reflected by the dashed-line border, and live content from channel C is displayed in the content display area 1004 of the user interface.

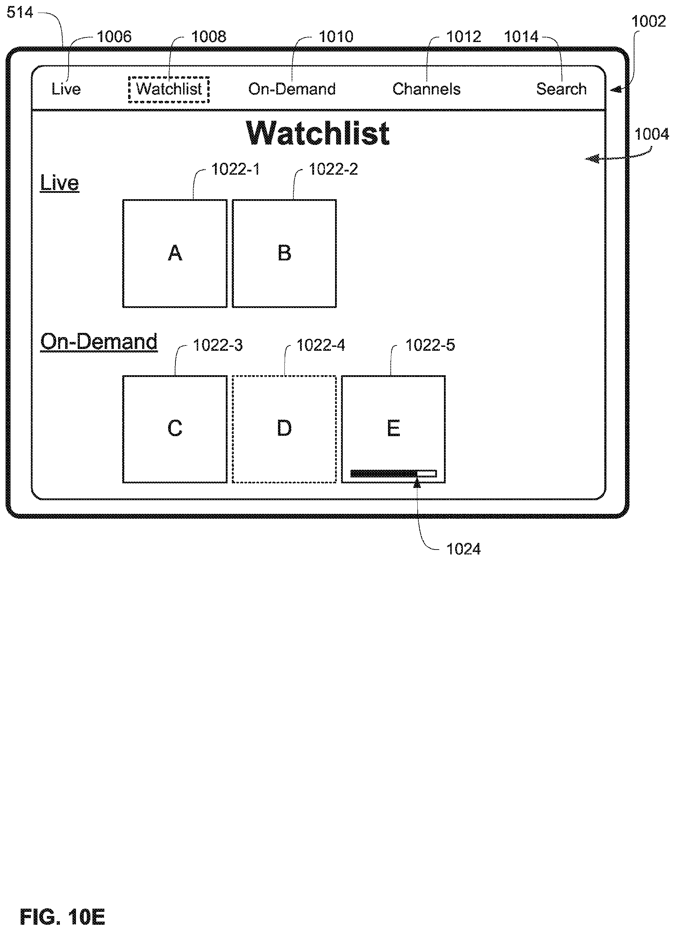

Fig. 10E illustrates selection of watchlist section indicator 1008 in navigation bar 1002 (from, for example, Figs. 10A or 10D). When watchlist section indicator 1008 is selected, the electronic device optionally maintains display of navigation bar 1002 in the user interface, and optionally replaces display of the live content in the content display area 1004 with watchlist content (e.g., content selected based on prior user interactions with a collection of media content, such as content that a user of the electronic device has previously indicated should be added to the watchlist). The watchlist content optionally includes live content (e.g., corresponding to representations 1022-1 and 1022-2) and on-demand content (e.g., corresponding to representations 1022-3, 1022-4 and 1022-5). In some embodiments, the watchlist content includes watched content items and unwatched content items (e.g., content item E, corresponding to representation 1022-5, is a previously-watched content item). In some embodiments, representation 1022-5, corresponding to watched content item E, includes indication 1024 (e.g., a progress bar) of a current play position in content item E.

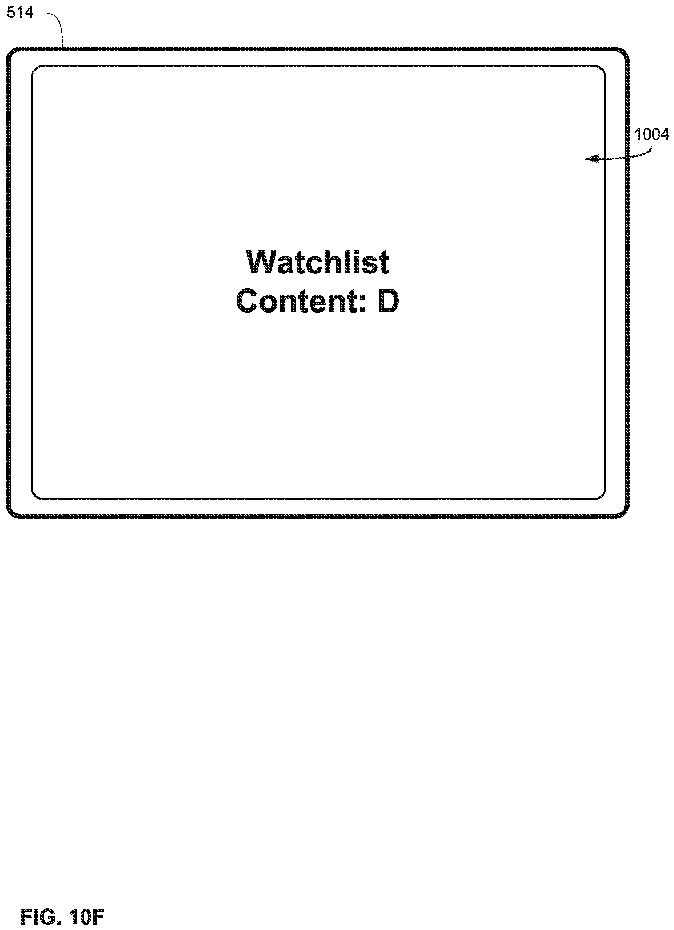

In some embodiments, a user is able to select a content item in the content display area 1004 to play that content item in the content display area 1004. For example, in Fig. 10E, representation 1022-4, corresponding to content item D, has the current focus. In response to receiving an input corresponding to a request to play content item D (e.g., a click detected on a touchpad of a remote control while content item D has the current focus), the electronic device optionally replaces display of the watchlist content items with content item D, as illustrated in Fig. 10F.

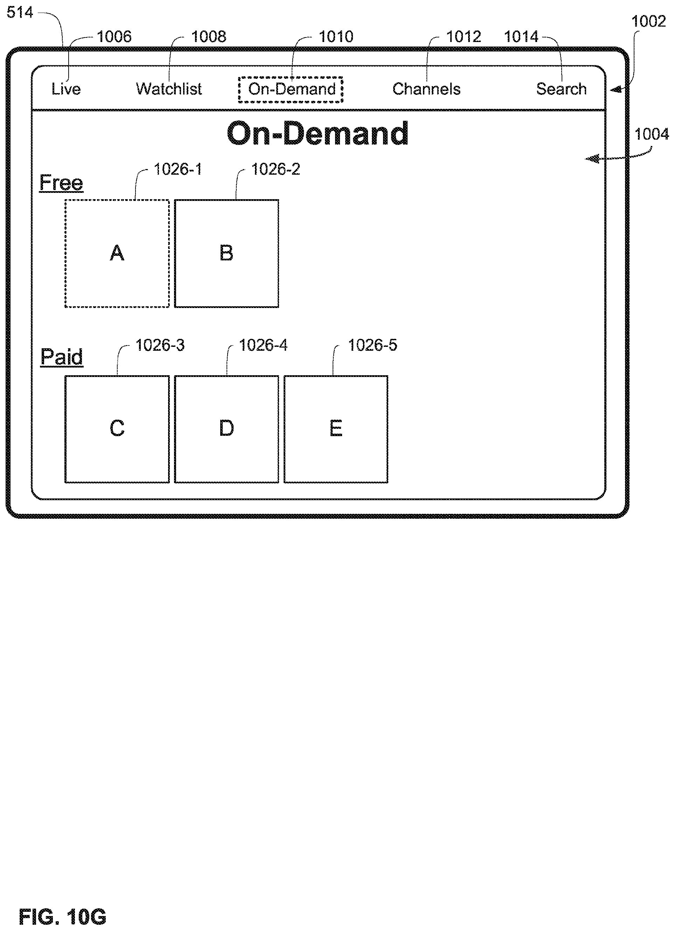

Fig. 10G illustrates selection of the on-demand section indicator 1010 in navigation bar 1002. In Fig. 10G, on-demand section indicator 1010 is selected in a manner analogous to selection of the watchlist section indicator 1008 described above. In response to selection of the on-demand section indicator 1010, the electronic device optionally replaces display of the watchlist content in the content display area 1004 with on-demand content that includes on-demand content available to the user (e.g., free on-demand content, paid on-demand content, on-demand content from channels to which the user is subscribed, on-demand content from channels to which the user is not subscribed, etc.). For example, the electronic device optionally displays representations 1026-1 (corresponding to content item A) and representation 1026-2 (corresponding to representation 1026-2) as free on-demand content, and representation 1026-3 (corresponding to content item C), representation 1026-4 (corresponding to content item D) and representation 1026-5 (corresponding to content item E) as paid on-demand content.

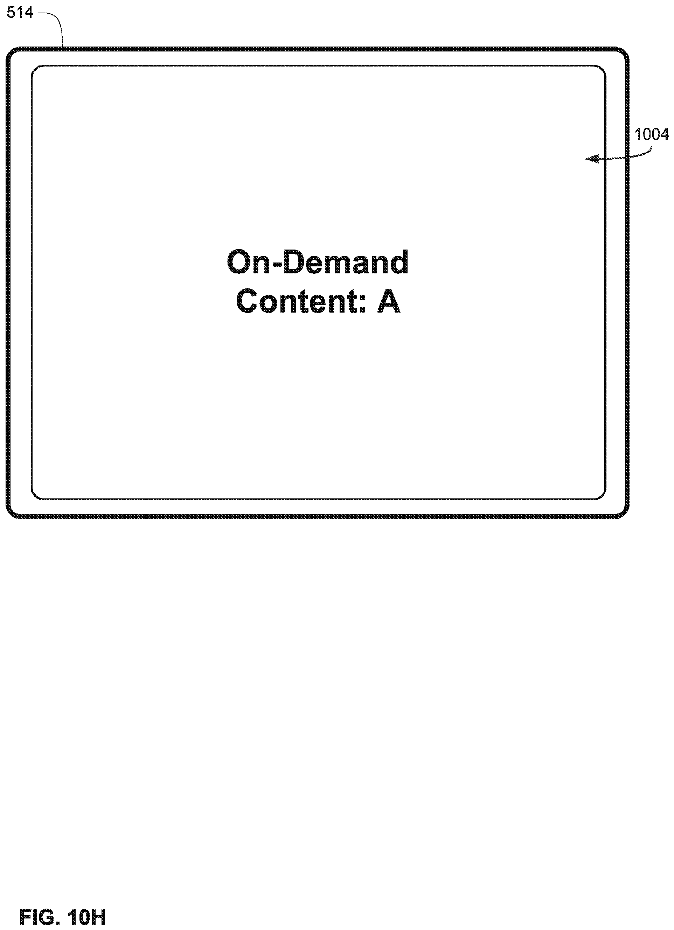

In some circumstances, the user selects a representation of on-demand content to play that on-demand content. For example, in Fig. 10G, representation 1026-1, corresponding to content item A, has the current focus. In Fig. 10G, the electronic device receives an input corresponding to a request to play content item A (e.g., a click detected on a touchpad of a remote control while representation 1026-1 has the current focus), and in response, because content item A is free on-demand content, the electronic device plays content item A in the content display area 1004 of the user interface, as illustrated in Fig. 10H.

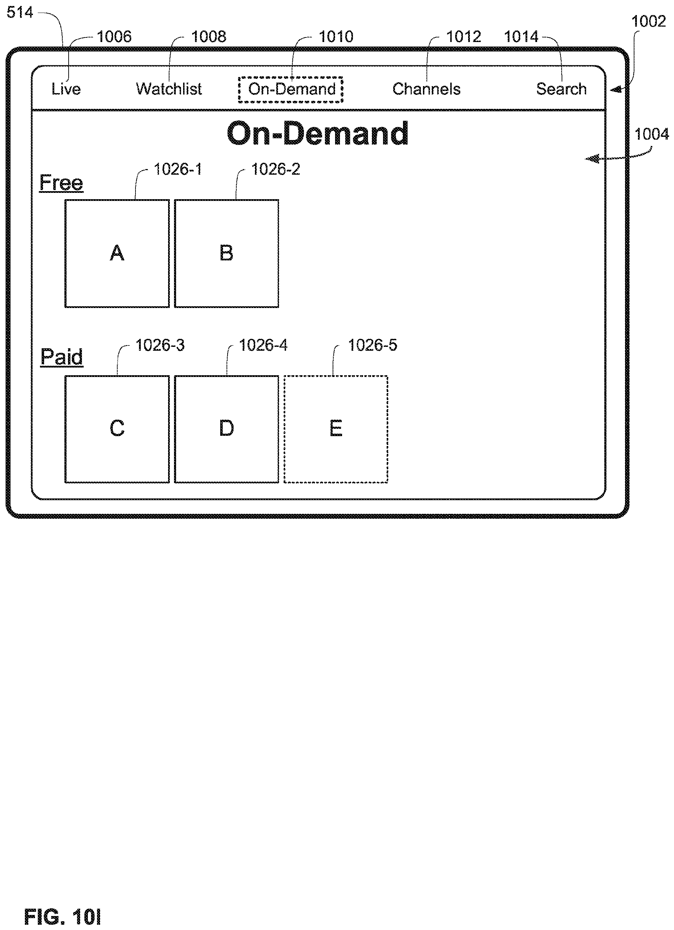

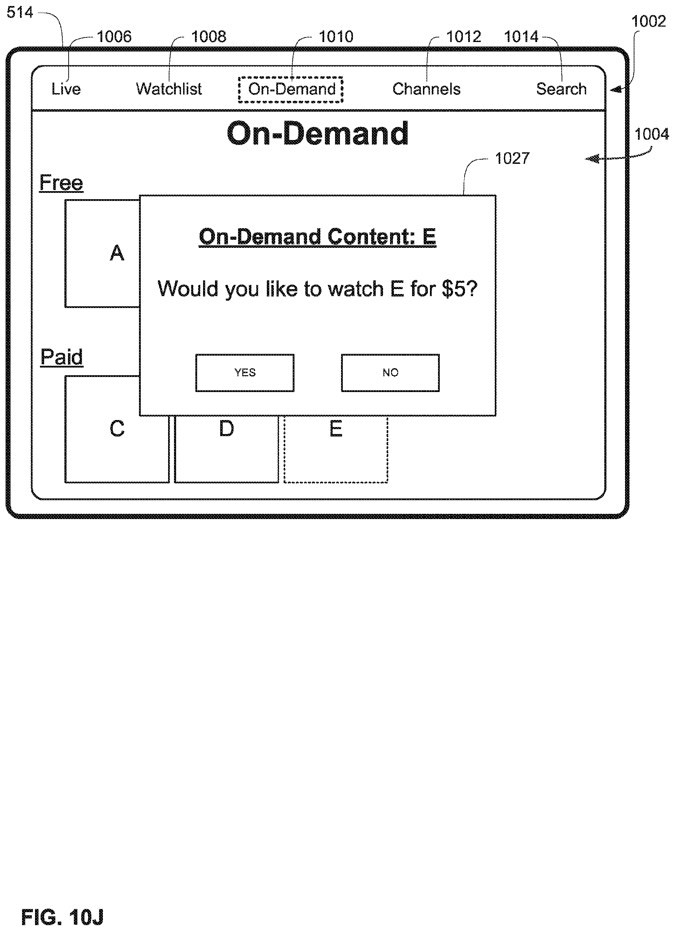

Fig. 10I illustrates selection of a paid on-demand content item. In Fig. 10I, representation 1026-5, corresponding to paid content item E, has the current focus. The electronic device optionally receives an input corresponding to a request to play content item E, and in response, because content item A is optionally paid on-demand content, the electronic device displays a payment confirmation dialog box 1027 for confirming payment to watch content item E, as illustrated in Fig. 10J. If the user confirms payment (e.g., by selecting "Yes" in dialog box 1027), the electronic device optionally plays content item E in the content display area 1004 of the user interface. If the user declines payment (e.g., by selecting "No" in dialog box 1027), the electronic device optionally does not play content item E in the content display area 1004 of the user interface.

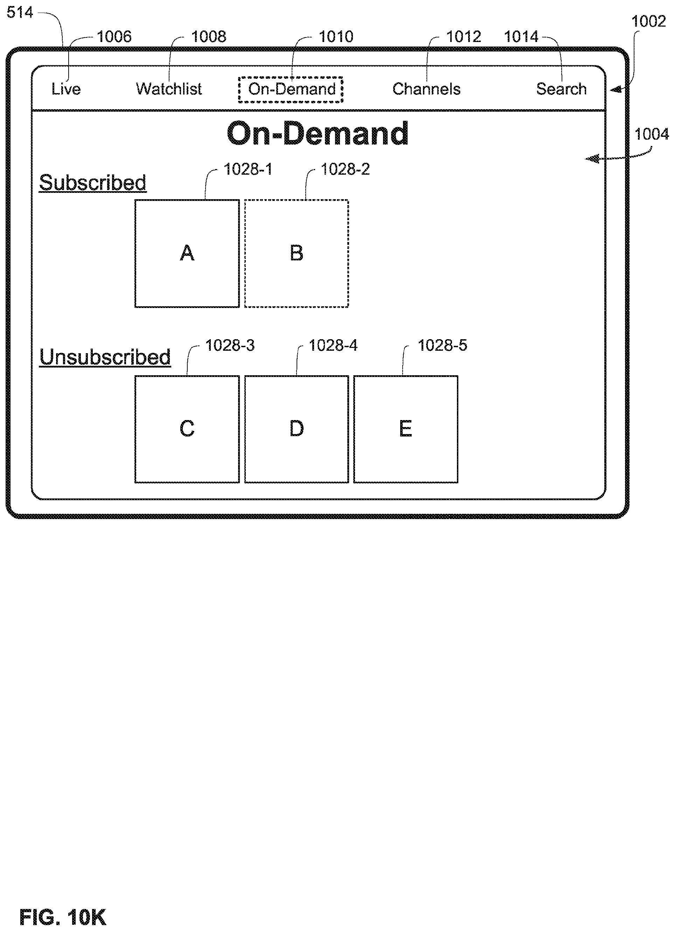

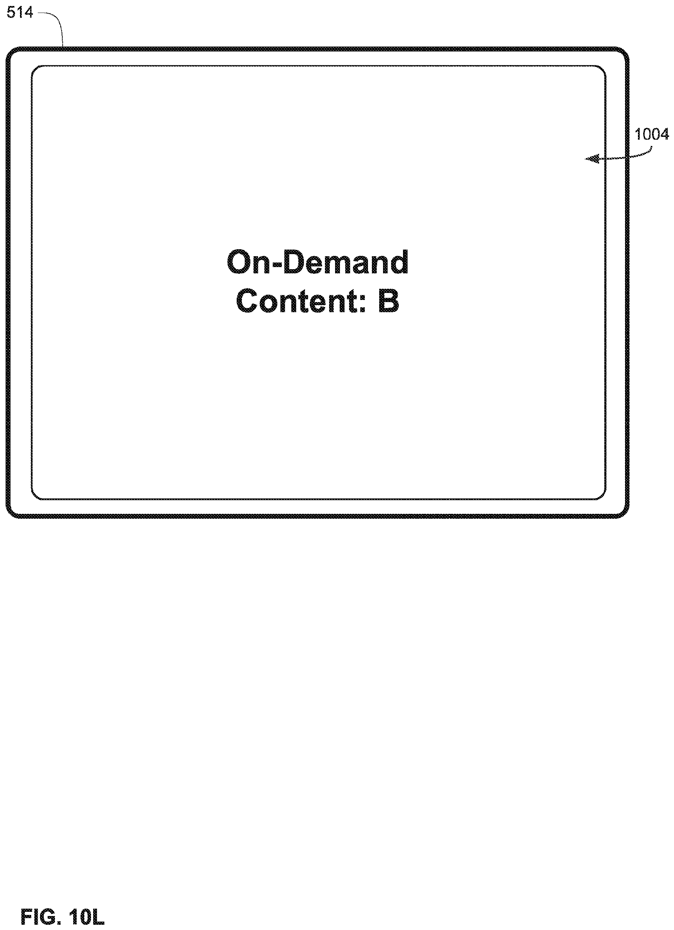

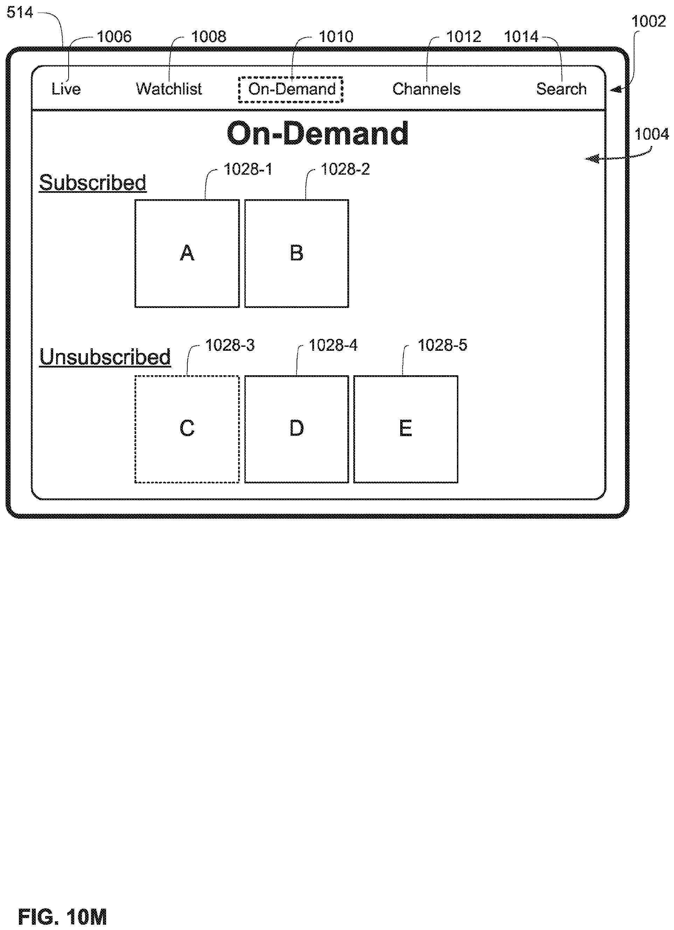

In some embodiments, the electronic device displays on-demand content from channels to which the user is subscribed, and channels to which the user is not subscribed, in the user interface, as illustrated in Fig. 10K. For example, representations 1028-1 (corresponding to content item A) and 1028-2 (corresponding to content item B) optionally correspond to content from channels to which the user is subscribed. Representations 1028-3 (corresponding to content item C), 1028-4 (corresponding to content item D) and 1028-5 (corresponding to content item E) optionally correspond to content from channels to which the user is not subscribed. As described with reference to paid and unpaid on-demand content, above, in some embodiments, the user selects a content item to play the content item in the user interface. For example, in Fig. 10K, the user selects representation 1028-2 to play content item B. Because content item B is from a channel to which the user is subscribed, the electronic device plays content item B in the content display area 1004 of the user interface, as illustrated in Fig. 10L. In Fig. 10M, the user selects representation 1028-3 to play content item C. Because content item C is from a channel to which the user is not subscribed, the electronic device displays dialog box 1029, asking if the user would like to subscribe to the channel with which content item C is associated, as illustrated in Fig. ION. If the user selects "Yes" in dialog box 1029, the electronic device optionally plays content item C in the content display area 1004 of the user interface. If the user selects "No" in dialog box 1029, the electronic device does not play content item C in the content display area 1004 of the user interface.

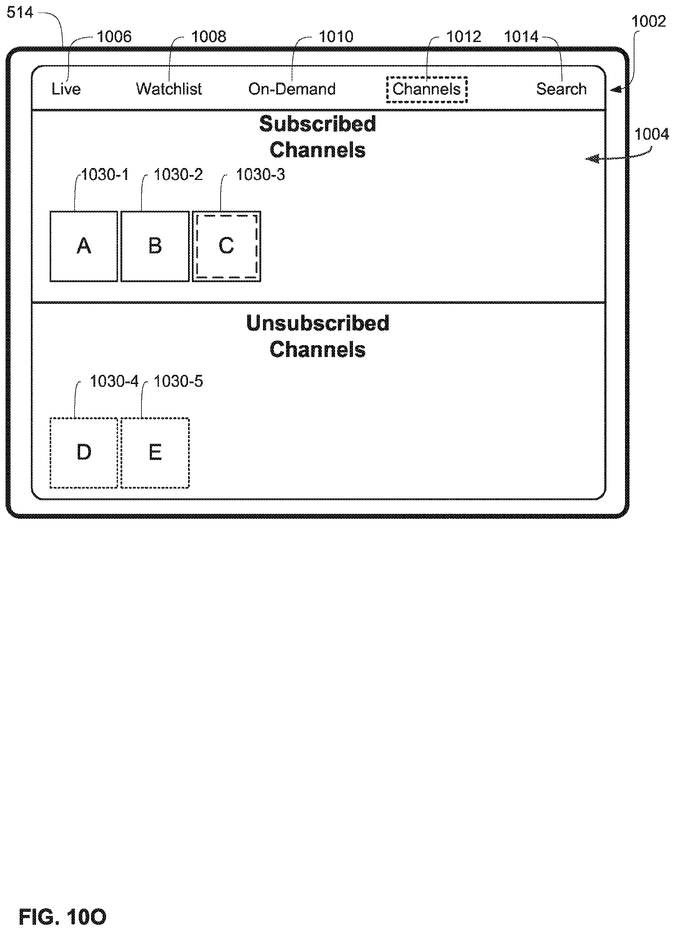

Fig. 10O illustrates selection of the channels section indicator 1012 in the navigation bar 1002. When the user selects the channels section indicator 1012, the electronic device displays representations of channels available to the user in the content display area 1004 of the user interface. For example, in Fig. 10O, the electronic device displays representations 1030-1 (corresponding to channel A), 1030-2 (corresponding to channel B) and 1030-3 (corresponding to channel C) as channels to which the user is subscribed, and representations 1030-4 (corresponding to channel D) and 1030-5 (corresponding to channel E) as channels to which the user is not subscribed. The subscribed channels and the unsubscribed channels are optionally displayed in separate regions of the content display area 1004 of the user interface. The channels displayed in content display area 1004 optionally have one or more of the properties of the channels described with reference to Figs. 8A-8L and method 900 in Figs. 9A-9G, above.

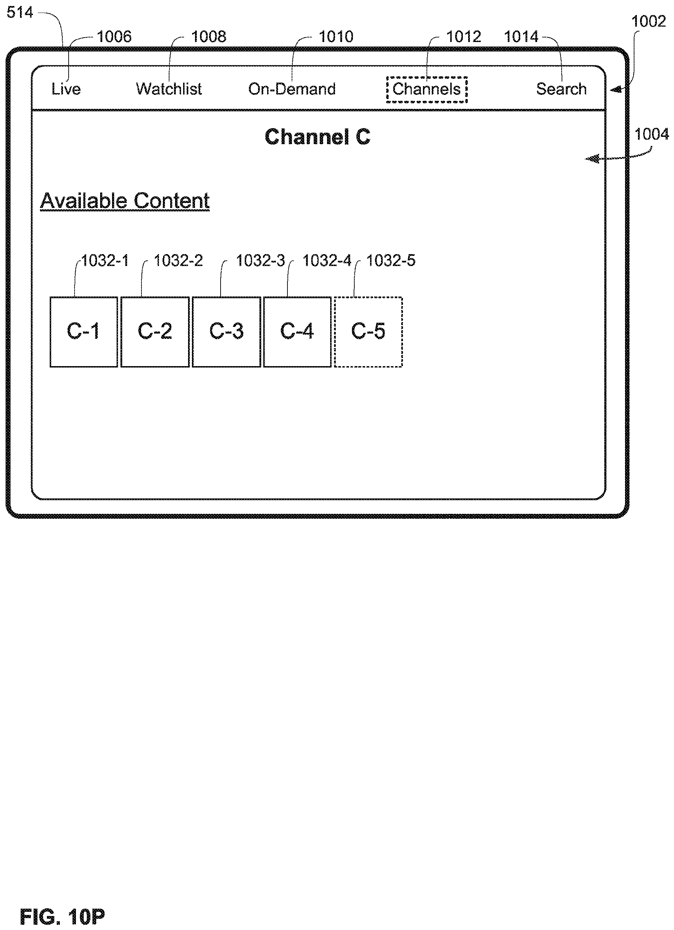

In some embodiments, selection of a representation of a channel in Fig. 10O results in the electronic device displaying representations of content items available on that channel, as illustrated in Fig. 10P. Specifically, in Fig. 10O, the user has selected representation 1030-3 (corresponding to subscribed channel C), which has the current focus in Fig. 10O. In response to the selection, the electronic device displays representations 1032 in the content display area 1004 of the user interface. Representations 1032 correspond to content items (e.g., C-1, C-2, C-3, etc.) available on channel C.

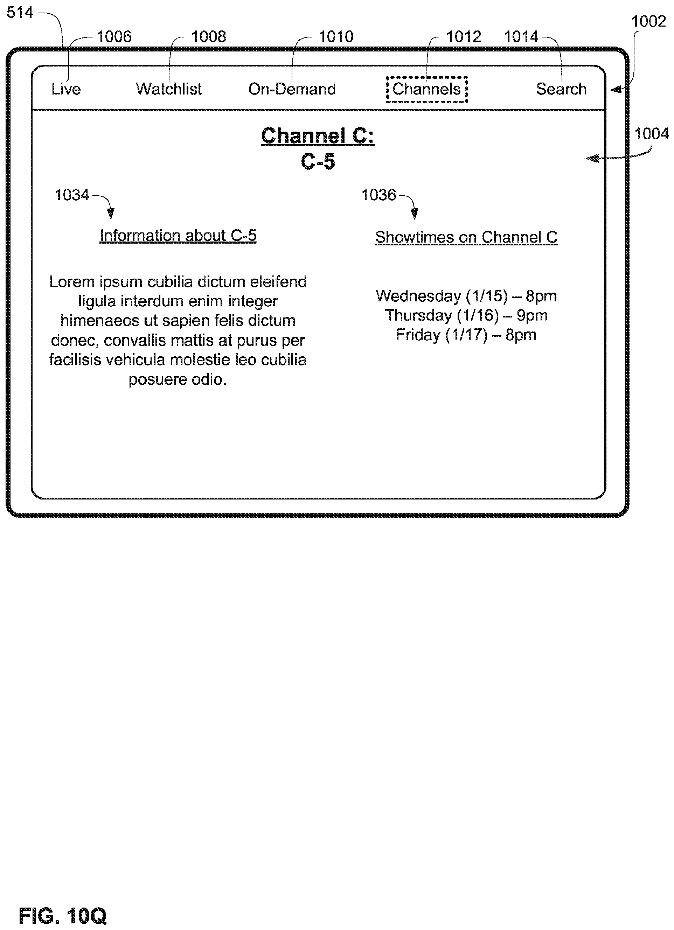

In some embodiments, selection of a content item from the channel C-specific page in Fig. 10P causes the electronic device to display information related to the selected content item on channel C in the content display area 1004 of the user interface, as illustrated in Fig. 10Q. Specifically, in Fig. 10P, representation 1032-5 (corresponding to content item C-5) has a current focus. Selection of representation 1032-5 in Fig. 10P causes the electronic device to display information 1034 and 1035 about content item C-5 on channel C in the content display area 1004, as illustrated in Fig. 10Q. The information 1034 and 1035 includes information such as information about related content items on channel C, the showtimes of content item C-5 on channel C, etc.

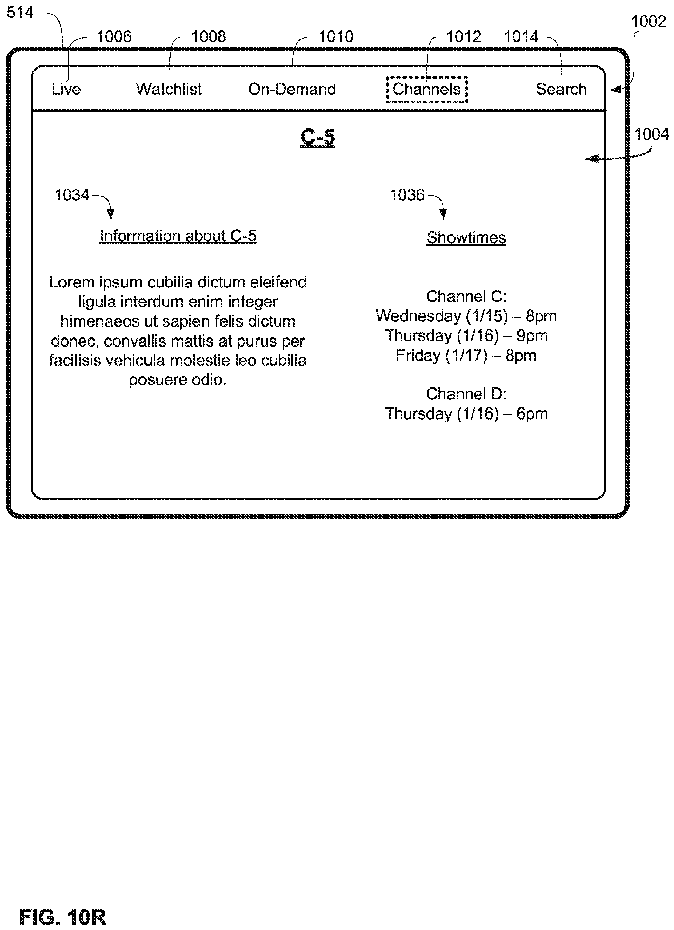

In some embodiments, requesting additional information about a content item from a channel-specific user interface (e.g., as in Fig. 10P) results in a display of information that is different from information that is displayed in response to a request for additional information about the content item from a non-channel-specific user interface. In particular, as discussed above with reference to Fig. 10Q, information 1034 and 1036 about content item C-5 on channel C is displayed in response to selection of a representation of content item C-5 from a channel C-specific user interface (e.g., representation 1032-5 on the channel C-specific user interface in Fig. 10P). However, in some examples, information about a content item is alternatively displayed in response to selection of a representation of the content item from a non-channel specific user interface (e.g., an on-demand page as discussed above, or a search-results page as will be discussed below). In such circumstances, the electronic device optionally displays a combined content item page that is associated with the content item at issue and with a plurality of channels on which the content item is available (rather than a specific channel on which the content item is available). Fig. 10R illustrates such a combined content item page for content item C-5. The combined content item page optionally displays information about content item C-5 that is not channel-specific, such as information about multiple channels on which content item C-5 is available, its showtimes, etc. (as shown in information 1036 in Fig. 10R).

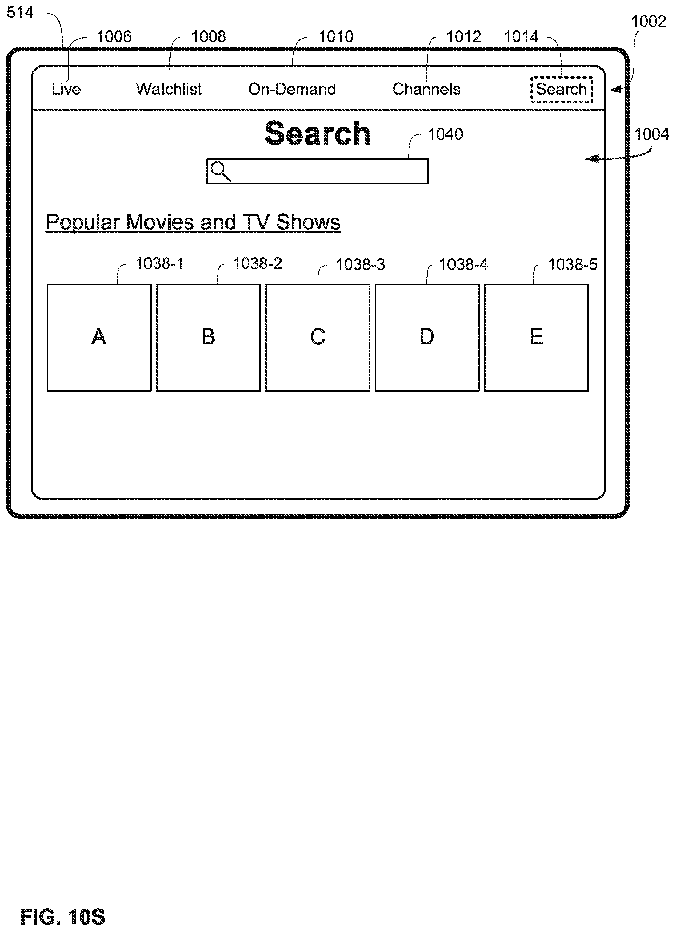

Fig. 10S illustrates selection of the search section indicator 1014 in the navigation bar 1002. The electronic device displays, in content display area 1004, a text entry field 1040 for searching for content available on the electronic device, and representations 1038 of content items (e.g., movies and/or TV shows) watched by users other than the user of the electronic device (e.g., popular content items available to the user, content items searched for by other users, etc.). In some embodiments, representations 1038 correspond to popular content items based on other users' searching or viewing behaviors (e.g., content items viewed most frequently by other users, searched most frequently by other users, highly rated by other users, etc.).

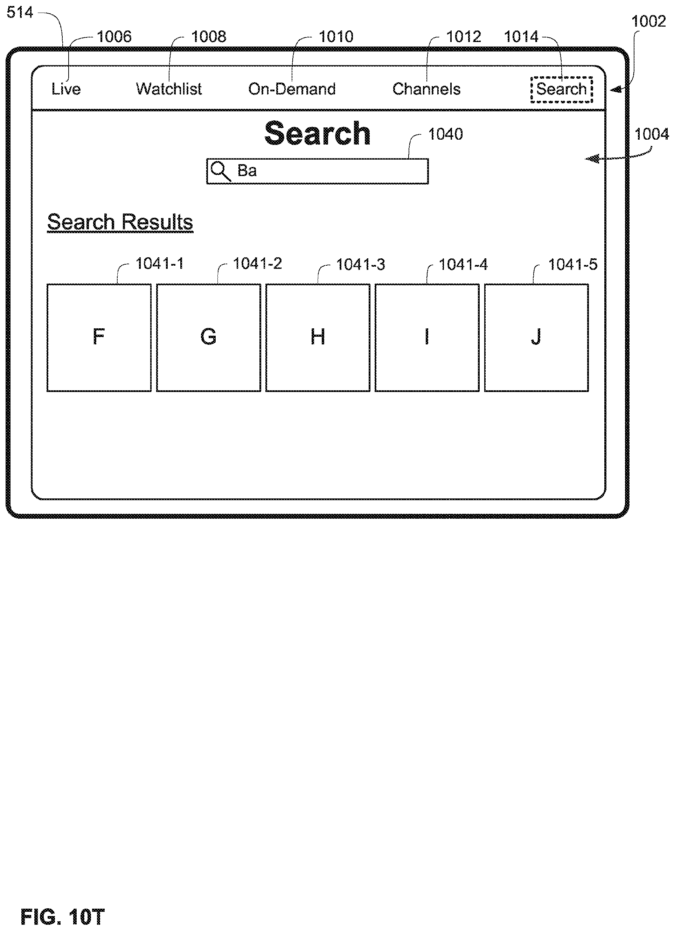

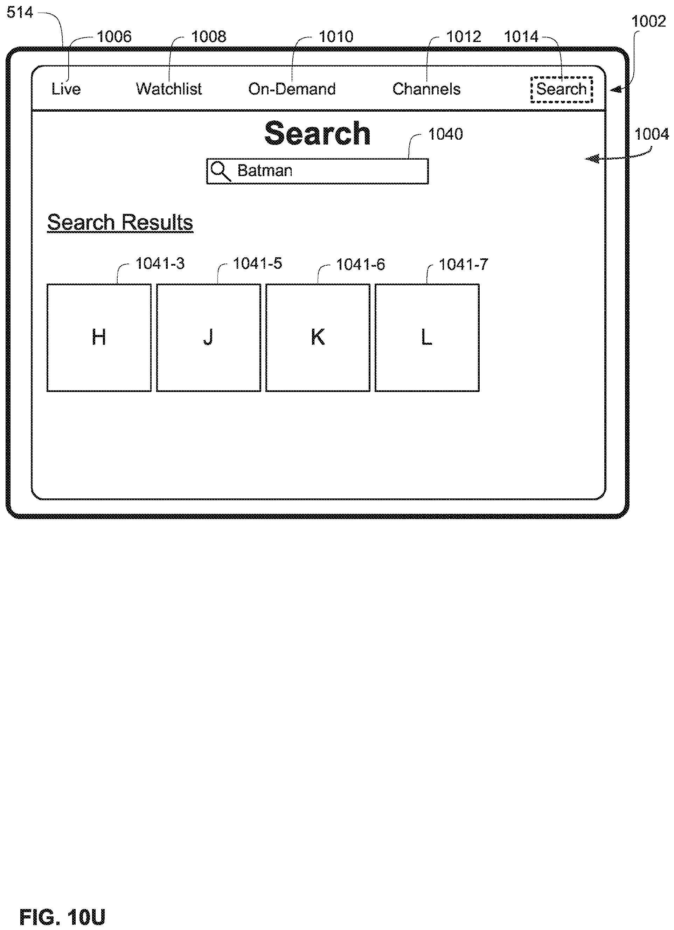

Fig. 10T illustrates searching for content items using the text entry field 1040. In particular, a first portion of a search input (e.g., "Ba") is entered in the text entry field 1040. In response, the electronic device displays representations 1041 of search-result content items based on the first portion of the search input in the text entry field 1040. In some embodiments, the search-result content items include content items associated with subscribed channels and unsubscribed channels. In some embodiments, the search-result content items include paid content items and unpaid content items. In some embodiments, the representations 1041 are updated/refined as further search input is received in the text entry field 1040. For example, in Fig. 10U, further search input has been received in text entry field 1040 (e.g., "Ba" has been completed to "Batman"). In response, the electronic device optionally updates representations 1041 based on the new search input. For example, in Fig. 10U, in response to the completion of "Ba" to "Batman" in the text entry field 1040, the electronic device has removed representations 1041-1, 1041-2 and 1041-4 (which were previously displayed in Fig. 10T), and has added representations 1041-6 and 1041-7 based on an updated determination of the electronic device as to the likely intended search result of the user.

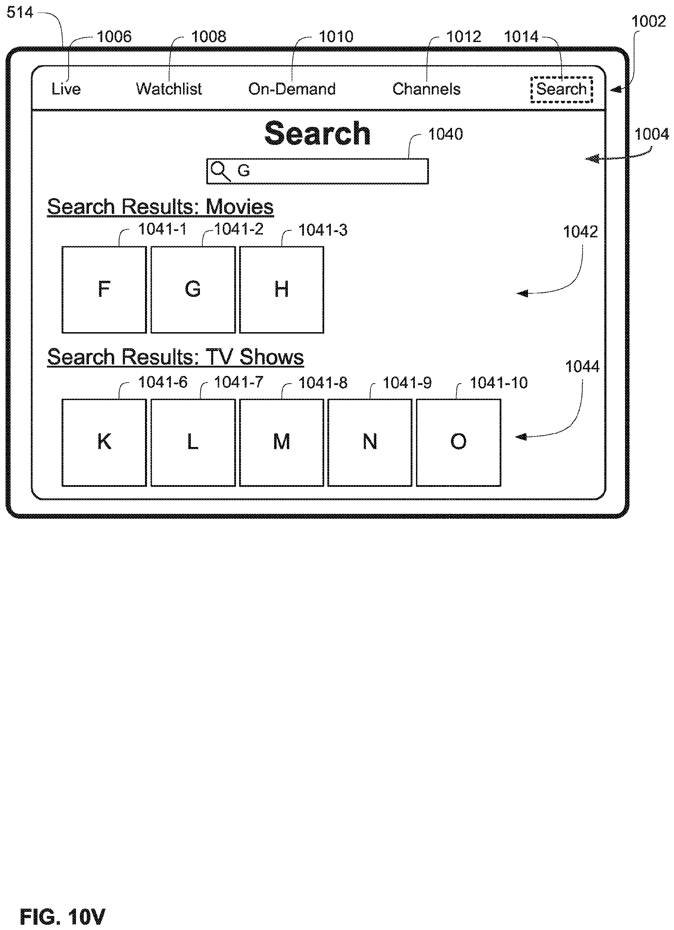

In some embodiments, the electronic device displays search-result content items in tiers or "shelves," as will be described with reference to Figs. 10V-10X. In Fig. 10V, a first portion of a search input (e.g., "G") has been inputted into text entry field 1040. As a result, the electronic device displays representations 1041 of search-result content items based on the first portion of the search input. In displaying representations 1041, the electronic device optionally separates the search-result content items by content type (e.g., movies and TV shows, in Fig. 10V). Further, the electronic device optionally displays representations of search-result content items of the type that the electronic device determines is more relevant to the currently-inputted search input in a first region 1042 of the content display area 1004. The electronic device optionally similarly displays representations of search-result content items of the type that the electronic device determines is less relevant to the currently-inputted search input in a second region 1044 of the content display area 1004. It is understood that in some embodiments, the search-result content items include content items of more than two types, and in such circumstances, the electronic device displays search-result content items in more than two regions of the user interface in a manner analogous to that described above.

In the example of Fig. 10V, the electronic device has determined that the movie search results are more relevant than the TV show search results based on the search input "G". As a result, the electronic device has displayed representations 1041-1, 1041-2 and 1041-3, corresponding to movie content items, in region 1042 of the content display area 1004. Analogously, the electronic device has displayed representations 1041-6, 1041-7, 1041-8, 1041-9 and 1041-10, corresponding to TV show content items, in region 1044 of the content display area 1004. In some embodiments, the ordering of the representations 1041 within each of regions 1042 and 1044 of the user interface is based on the likelihoods that their corresponding content items are associated with the search being performed (e.g., the search results in each region 1042 and 1044 are optionally displayed from most likely on the left to least likely on the right). In some embodiments, the arrangement of the search result representations changes as additional search input is inputted into text entry field 1040, as will now be described.

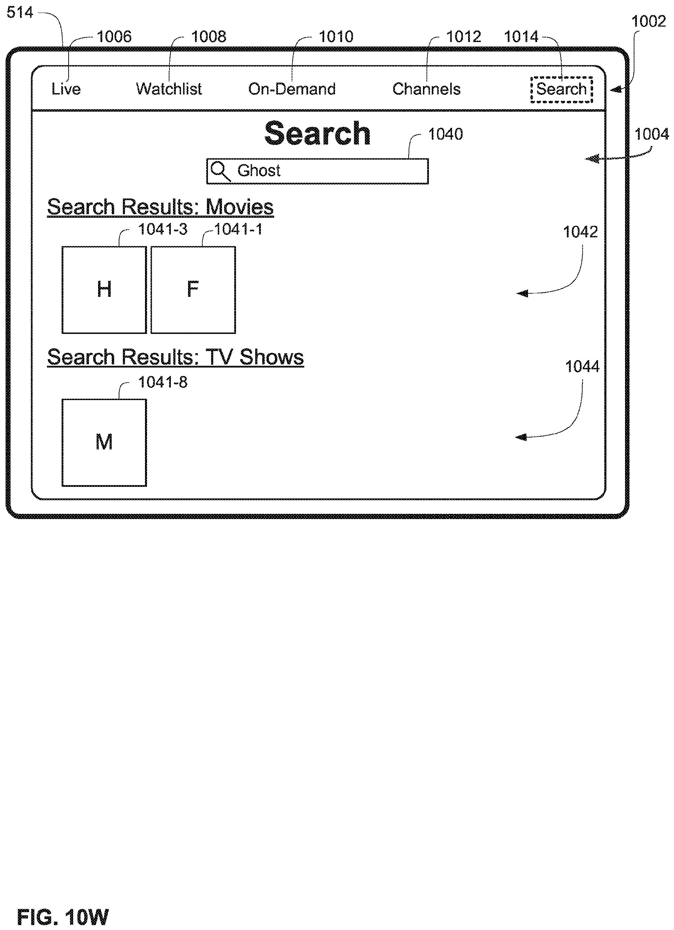

Fig. 10W illustrates further entry of text into text entry field 1040 to complete "G" to "Ghost". In response, the electronic device has refined the search-result content items, and has reduced the number of representations 1041 displayed in the content display area 1004 of the user interface, as illustrated in Fig. 10W. Further, the electronic device has determined that the search input continues to be more related to movies than it is to TV shows (e.g., by determining that "Ghost" most likely corresponds to a search for the movie "Ghostbusters"), and thus maintains representations of movies in region 1042 of the content display area 1004, and maintains representations of TV shows in region 1044 of the content display area 1004.

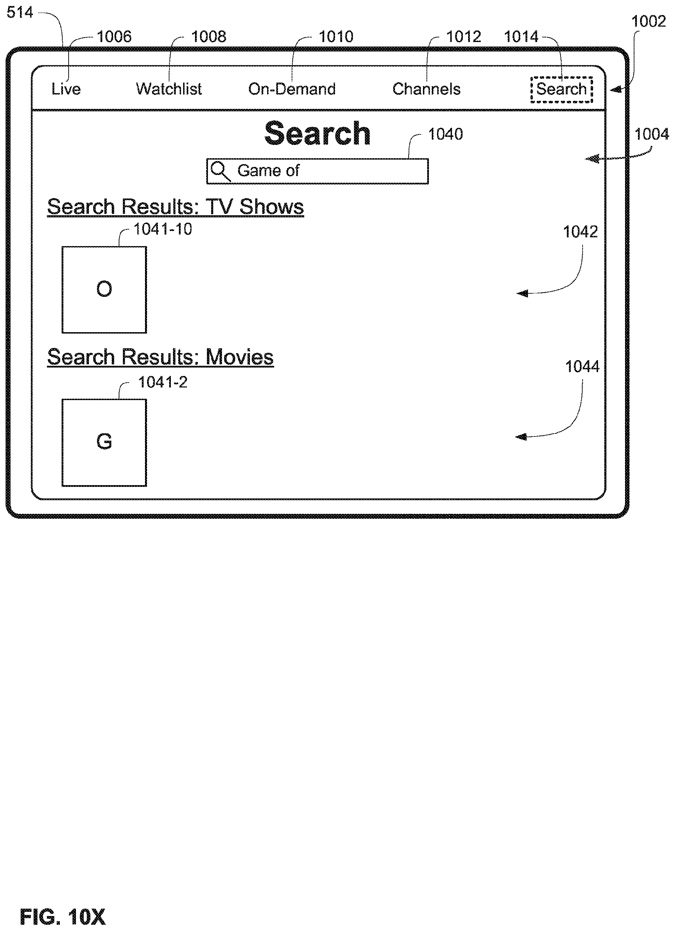

Fig. 10X illustrates further entry of text into text entry field 1040 to complete "G" to "Game of". Similar to as described above, in response, the electronic device has refined the search-result content items, and has reduced the number of representations 1041 displayed in the content display area 1004 of the user interface, as illustrated in Fig. 10X. However, in contrast to Fig. 10W, the electronic device has determined that the search input is more related to TV shows than it is to movies (e.g., by determining that "Game of" most likely corresponds to a search for the TV show "Game of Thrones"). Thus, the electronic device switches the representations of TV shows to be in region 1042 of the content display area 1004, and switches the representations of movies to be in region 1044 of the content display area 1004, as illustrated in Fig. 10X.

Figs. 11A-11K are flow diagrams illustrating a method 1100 of navigating content items available on an electronic device in accordance with some embodiments of the disclosure. The method 1100 is optionally performed at an electronic device such as device 100, device 300 or device 500 as described above with reference to Figs. 1A-1B, 2-3 and 5A-5B. Some operations in method 1100 are, optionally, combined and/or the order of some operations is, optionally, changed.

As described below, the method 1100 provides ways in which a user interacts with a device for navigating content items available on the device. The method reduces the cognitive burden on a user when interacting with a user interface (e.g., a playlist or now playing user interface) of the device of the disclosure, thereby creating a more efficient human-machine interface. For battery-operated electronic devices, increasing the efficiency of the user's interaction with the user interface conserves power and increases the time between battery charges.

In some embodiments, an electronic device (e.g., device 100, 300 or 500) with a display device (e.g., a display device included in or coupled to the electronic device, such as display 514 in Fig. 5A) and one or more input devices (e.g., one or more input devices included in or coupled to the electronic device; for example, a second electronic device, such as a remote control, with a touch-sensitive surface, such as remote 510 in Figs. 5A-5B) generates (1102), for display on the display device, a media-navigation user interface, including: a navigation bar including a live section indicator (e.g., an indicator corresponding to live content accessible on the electronic device), a watchlist section indicator (e.g., an indicator corresponding to content that a user of the electronic device has previously indicated should be added to the watchlist. The content optionally includes live content and on-demand content), and an on-demand section indicator (1104) (e.g., an indicator corresponding to on-demand content accessible on the electronic device); and a content display area (1106), such as in Fig. 10A (e.g., an area of the user interface in which content corresponding to a selected/focused indicator in the navigation bar is displayed). For example, when the live section indicator in the navigation bar has the current focus, content corresponding to the live section indicator is optionally displayed in the content display area, such as in Fig. 10A. In some embodiments, while the media-navigation user interface is displayed on the display device with the live section indicator currently-selected and live content displayed in the content display area, the electronic device detects (1108) selection of the watchlist section indicator (e.g., in response to an input from a remote control, such as a directional input detected on a touch-sensitive surface of the remote control). For example, an up/down/left/right swipe on the remote control that makes the watchlist section indicator currently-selected.

In some embodiments, in response to detecting the selection of the watchlist section indicator, the electronic device generates (1110), for display on the display device, an updated user interface that includes maintaining display of the navigation bar and replacing display of the live content in the content display area with watchlist content, such as in Fig. 10E (e.g., content that a user of the electronic device has previously indicated should be added to the watchlist. The content optionally includes live content and on-demand content), which includes content selected based on prior user interactions with a collection of media content (e.g., the navigation bar remains visible in the user interface while different indicators in the navigation bar are selected. The content in the content display area is optionally updated depending on which navigation bar indicator is selected). In some embodiments, while the media-navigation user interface is displayed on the display device with the watchlist section indicator currently-selected and the watchlist content displayed in the content display area, the electronic device detects (1112) selection of the on-demand section indicator; and in response to detecting the selection of the on-demand section indicator, the electronic device generates (1114), for display on the display device, an updated user interface that includes maintaining display of the navigation bar and replacing display of the watchlist content in the content display area with on-demand content that includes on-demand content available to the user, such as in Fig. 10G (e.g., free on-demand content, paid on-demand content, on-demand from channels to which the user is subscribed, on-demand content from channels to which the user is not subscribed, etc.).

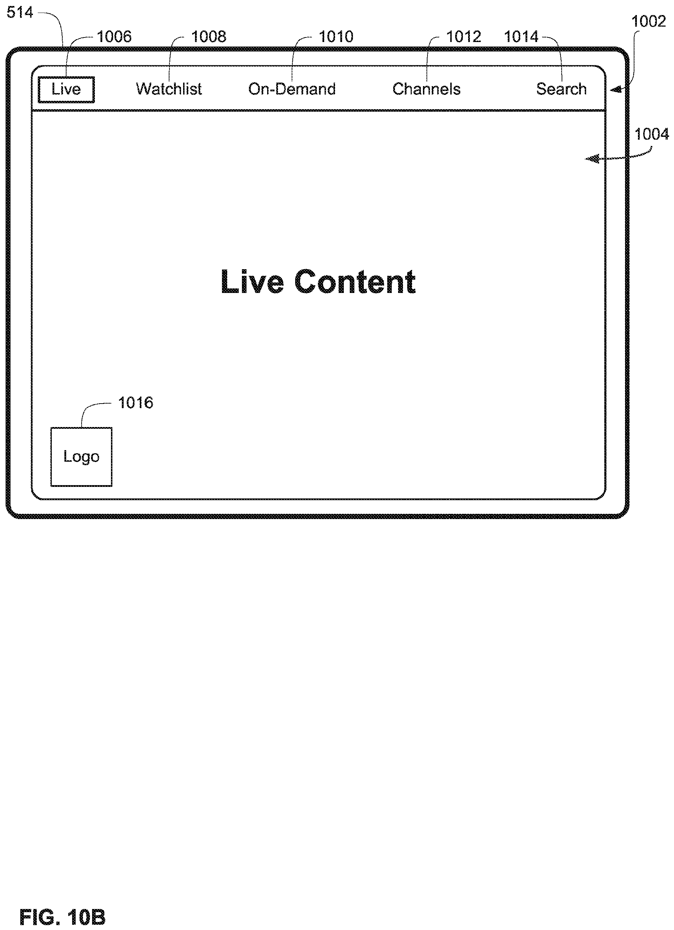

In some embodiments, while the live section indicator is currently-selected, the live content displayed in the content display area corresponds to a currently-selected channel (1116), such as in Fig. 10D (e.g., a currently-selected channel in a channel bar). In some embodiments, while displaying the live content in the content display area, the electronic device displays (1118) a visual indication in the content display area of the currently-selected channel, such as in Figs. 10A-10B (e.g., a logo of the currently-selected channel displayed in a lower-left hand corner of the content display area). In some embodiments, while the live section indicator is currently-selected, the electronic device receives (1120) an input corresponding to a further selection of the live section indicator (e.g., the original selection of the live section indicator is merely movement of a cursor to the live section indicator, and the further selection of the live section indicator is a click detected on a touchpad of a remote control when the live section indicator is currently-selected). In some embodiments, in response to the input, the electronic device ceases (1122) display of the visual indication of the currently-selected channel after a predetermined time period, such as in Figs. 10B-10C (e.g., hiding the channel logo after 1, 3, or 5 seconds).

In some embodiments, while the live section indicator is currently-selected, the electronic device receives (1124) an input corresponding to a further selection of the live section indicator (e.g., the original selection of the live section indicator is merely movement of a cursor to the live section indicator, and the further selection of the live section indicator is a click detected on a touchpad of a remote control when the live section indicator is currently-selected); and in response to the input, the electronic device generates (1126), for display on the display device, an updated user interface that includes ceasing display of the navigation bar in the user interface while maintaining display of the live content in the content display area, such as in Figs. 10B-10C (e.g., hiding the navigation bar so that the content is displayed on the entirety of the display device). In some embodiments, while the live section indicator is currently-selected, the electronic device receives (1128) an input corresponding to a request to display a plurality of representations of channels accessible in the content display area, such as in Fig. 10D (e.g., receiving selection of a button on a remote control that causes a channel bar to be displayed, the channel bar including representations of live channels available to the user). In some embodiments, in response to receiving the input, the electronic device generates (1130), for display on the display device, an updated user interface, which includes the plurality of representations of the channels accessible in the content display area along a first axis in the content display area, such as in Fig. 10D (e.g., display the channel bar in the content display area). In some embodiments, the channel bar has one or more of the properties of the channel bar described above with reference to method 700.

In some embodiments, the watchlist content displayed while the watchlist section indicator is currently-selected includes a first set of representations of watched content items and a second set of representations of unwatched content items (1132), such as in Fig. 10E. In some embodiments, a first representation of a first watched content item in the first set of representations includes a visual indication of a current play position in the first watched content item (1134), such as in Fig. 10E (e.g., those content items that have been previously watched include a progress bar indicating a current play position in the content items). In some embodiments, the watchlist content displayed while the watchlist section indicator is currently-selected includes a first set of representations of live content items and a second set of representations of on-demand content items (1136), such as in Fig. 10E.

In some embodiments, while the watchlist section indicator is currently-selected and the watchlist content is displayed in the content display area, the electronic device receives (1138) an input corresponding to a request to play a respective content item of the watchlist content (e.g., a click detected on a touchpad of a remote control while the respective content item representation has the current focus). In some embodiments, in response to receiving the input (1140): the electronic device replaces (1142) display of the watchlist content in the content display area with the respective content item; and ceases display (1144) of the navigation bar in the user interface, such as in Fig. 10F.

In some embodiments, the on-demand content displayed while the on-demand section indicator is currently-selected includes a first set of representations of paid content items and a second set of representations of unpaid content items (1146), such as in Fig. 10G. In some embodiments, while the first set of representations of paid content items and the second set of representations of unpaid content items are displayed in the user interface, the electronic device receives (1148) an input corresponding to a request to play a respective content item of the paid or unpaid content items (e.g., a click detected on a touchpad of a remote control while the respective content item representation has the current focus). In some embodiments, in response to receiving the input (1150): in accordance with a determination that the respective content item is a paid content item, the electronic device displays (1152) a request for confirmation of payment from the user in the user interface, such as in Figs. 10I-10J (e.g., displaying a dialog box asking if the user would like to pay to watch the content item or not); and in accordance with a determination that the respective content item is an unpaid content item, the electronic device replaces (1154) display of the on-demand content in the content display area with the respective content item, such as in Figs. 10G-10H.

In some embodiments, while displaying the request for confirmation of payment from the user, the electronic device receives (1156) a second input (e.g., an input either agreeing to pay or declining to pay). In some embodiments, in response to receiving the second input (1158): in accordance with a determination that the second input corresponds to a confirmation of payment from the user (e.g., an agreement by the user to pay to view the content item), the electronic device replaces (1160) display of the on-demand content in the content display area with the respective content item; and in accordance with a determination that the second input does not correspond to a confirmation of payment from the user (e.g., refusal by the user to pay to view the content item), the electronic device forgoes replacing (1162) the on-demand content in the content display area with the respective content item (e.g., do not play the paid content item if the user does not wish to pay to view it).

In some embodiments, the on-demand content displayed while the on-demand section indicator is currently-selected includes a first set of representations of subscribed content items (1164) (e.g., content items from channels to which the user is subscribed) and a second set of representations of unsubscribed content items, such as in Fig. 10K (e.g., content items from channels to which the user is not subscribed). In some embodiments, while the first set of representations of subscribed content items and the second set of representations of unsubscribed content items are displayed, the electronic device receives (1166) an input corresponding to a request to play a respective content item of the subscribed or unsubscribed content items (e.g., a click detected on a touchpad of a remote control while the respective content item representation has the current focus); and in response to receiving the input (1168): in accordance with a determination that the respective content item is a subscribed content item, the electronic device replaces (1170) display of the on-demand content in the content display area with the respective content item, such as in Figs. 10K-10L (e.g., play the content item if the user is subscribed to the channel with which the content item is associated); and in accordance with a determination that the respective content item is an unsubscribed content item, the electronic device displays (1172) a query in the user interface asking the user if they would like to subscribe to a channel with which the respective content item is associated, such as in Figs. 10M-10N (e.g., if the user is not subscribed to the channel with which the content item is associated, provide the user an opportunity to subscribe to the channel).

In some embodiments, while displaying the query in the user interface asking the user if they would like to subscribe to the channel with which the respective content item is associated, the electronic device receives (1174) a second input (e.g., an input either agreeing to subscribe or declining to subscribe). In some embodiments, in response to receiving the second input (1176): in accordance with a determination that the second input corresponds to a request to subscribe to the channel with which the respective content item is associated, the electronic device replaces (1178) display of the on-demand content in the content display area with the respective content item (e.g., play the content item if the user subscribes to the channel); and in accordance with a determination that the second input does not correspond to a request to subscribe to the channel with which the respective content is associated, the electronic device forgoes replacing (1180) the on-demand content in the content display area with the respective content item (e.g., do not play the content item if the user does not subscribe to the channel).

In some embodiments, the navigation bar further includes a channels section indicator (1181). In some embodiments, while the media-navigation user interface is displayed on the display device with the on-demand section indicator currently-selected and the on-demand content displayed in the content display area, the electronic device detects (1182) selection of the channels section indicator, such as in Fig. 10O (e.g., in response to an input from a remote control, such as a directional input detected on a touch-sensitive surface of the remote control). For example, an up/down/left/right swipe on the remote control that makes the channels section indicator currently-selected. In some embodiments, in response to detecting selection of the channels section indicator, the electronic device generates (1184), for display on the display device, an updated user interface that includes maintaining display of the navigation bar and replacing display of the on-demand content in the content display area with channel content that includes a plurality of representations of channels available to the user, such as in Fig. 10O (e.g., representations of channels that the user is subscribed to and not subscribed to, but available for subscription).

In some embodiments, the plurality of representations of the channels includes: a representation of a channel to which the user is subscribed; and a representation of a channel to which the user is not subscribed, such as in Fig. 10O (1186). In some embodiments, the navigation bar further includes a channels section indicator (1188). In some embodiments, while displaying a representation of a respective content item in the content display area of the user interface, such as in Fig. 10P (e.g., displaying the representation in a page corresponding to a specific channel, or in another page such as an on-demand page corresponding to the on-demand section indicator. For example, the representation of a movie is, in some embodiments, displayed on a page of a movie channel on which the movie is available and that displays content items that are available on that movie channel, while in some embodiments, the representation of the movie is displayed on an on-demand page that displays content items available from any number of channels), the electronic device receives (1190) selection of the representation of the respective content item (e.g., a click detected on a touchpad of a remote control while the respective content item representation has the current focus). In some embodiments, in response to receiving the selection of the representation of the respective content item (1192): in accordance with a determination that the respective content item was displayed on a non-channel-specific page (e.g., an on-demand page, or a search-results page) when the selection of the representation of the respective content item was received, the electronic device displays (1194), in the content display area, a combined content item page associated with the respective content item and a plurality of channels including the respective channel, such as in Fig. 10R (e.g., a content item page that displays information about the respective content item that is not channel-specific, such as information about multiple channels on which the content item is available, its airtimes, etc.). In some embodiments, in accordance with a determination that the respective content item was displayed on a channel-specific page (e.g., a channel page navigated to from the channels section that displays content items available on a specific channel) when the selection of the representation of the respective content item was received, the electronic device displays (1196), in the content display area, a content item page associated with the respective content item and the respective channel, such as in Fig. 10Q (e.g., a content item page that displays information about the respective content item that is channel-specific, such as information about related content items on the specific channel, the airtime of the respective content item on the specific channel, etc.).

In some embodiments, the navigation bar further includes a search section indicator (1198). In some embodiments, while the media-navigation user interface is displayed on the display device with the on-demand section indicator currently-selected and the on-demand content displayed in the content display area, the electronic device detects (1198-2) selection of the search section indicator, such as in Fig. 10S (e.g., in response to an input from a remote control, such as a directional input detected on a touch-sensitive surface of the remote control). For example, an up/down/left/right swipe on the remote control that makes the search section indicator currently-selected. In some embodiments, in response to detecting selection of the search section indicator, the electronic device generates (1198-4), for display on the display device, an updated user interface that includes maintaining display of the navigation bar and replacing display of the on-demand content in the content display area with: search content that includes a plurality of representations of content items watched by users other than the user (1198-6) (e.g., popular content items available to the user, content items searched for by other users, etc.); and a text entry field for searching content available to the user (1198-8), such as in Fig. 10S. In some embodiments, the plurality of representations of the content items includes representations of popular content items based on the other users' searching or viewing behaviors (1198-10) (e.g., representations of those content items viewed most frequently by other users, searched most frequently by other users, highly rated by other users, etc., are displayed in the search section).

In some embodiments, while displaying the text entry field, the electronic device receives (1198-12) a search input in the text entry field; and in response to receiving the search input (e.g., a text or voice input to search for content available on the electronic device), the electronic device replaces (1198-14) the plurality of representations of the content items with a plurality of representations of search-result content items based on the search input, such as in Fig. 10T. In some embodiments, the search-result content items include content items associated with subscribed channels and unsubscribed channels (1198-16). In some embodiments, the search-result content items include paid content items and unpaid content items (1198-18). In some embodiments, while displaying the text entry field, the electronic device receives (1198-20) a first portion of a search input in the text entry field; and in response to receiving the first portion of the search input (e.g., a text or voice input to search for content available on the electronic device), the electronic device displays (1198-22) a first plurality of representations of search-result content items based on the first portion of the search input, such as in Fig. 10T.

In some embodiments, while displaying the first plurality of representations of search-result content items, the electronic device receives (1198-24) a second portion of the search input in the text entry field; and in response to receiving the second portion of the search input, the electronic device replaces (1198-26) the first plurality of representations of search-result content items with a second plurality of representations of search-result content items based on the first and second portions of the search input, such as in Fig. 10U. In some embodiments, the search content includes a first region and a second region, after receiving a first search input in the text entry field for which results of a first type (e.g., movies) are more relevant than results of a second type (e.g., TV shows), results of the first type are displayed in the first region and results of the second type are displayed in the second region (1198-28), such as in Fig. 10V. In some embodiments, while results of the first type are displayed in the first region and results of the second type are displayed in the second region, the electronic device receives (1198-30) a second search input in the text entry field (e.g., one or more characters in addition to the first search input); and in response to receiving the second search input (1198-32): in accordance with a determination that, for the second search input, results of the first type (e.g., movies) are more relevant than results of the second type (e.g., TV shows), the electronic device maintains (1198-34) display of results of the first type in the first region and results of the second type in the second region, such as in Fig. 10W (while, optionally, updating the results in the first and/or second region to account for the second search input); and in accordance with a determination that, for the second search input, results of the second type (e.g., TV shows) are more relevant than results of the first type (e.g., movies), the electronic device displays (1198-36) results of the second type in the first region and displays results of the first type in the second region, such as in Fig. 10X (while, optionally, updating the results in the first and/or second region to account for the second search input). For example, when the user types "G," in the search field, "Ghostbusters" is the top result, so movies that start with the letter G are displayed in the top region and TV shows that start with the letter G are displayed in a region below the top region. However when the user types an "a" in addition to the "G," and "Game of Thrones" is the top result, then TV shows that start with "Ga" are displayed in the top region while movies that start with "Ga" are displayed in the lower region. In contrast, if the user had typed "h" and "Ghostbusters" is still the top result, movies that start with "Gh" would be displayed in the top region and TV shows that start with "Gh" would be displayed in a region below the top region.

It should be understood that the particular order in which the operations in Figs. 11A-11K have been described is merely exemplary and is not intended to indicate that the described order is the only order in which the operations could be performed. One of ordinary skill in the art would recognize various ways to reorder the operations described herein. Additionally, it should be noted that details of other processes described herein with respect to other methods described herein (e.g., methods 700, 900 and 1300) are also applicable in an analogous manner to method 1100 described above with respect to Figs. 11A-11K. For example, the representations of channels described above with reference to method 1100 optionally have one or more of the characteristics of the representations of channels described herein with reference to other methods described herein (e.g., methods 700, 900 and 1300). For brevity, these details are not repeated here.

The operations in the information processing methods described above are, optionally, implemented by running one or more functional modules in an information processing apparatus such as general purpose processors (e.g., as described with respect to Figs. 1A, 3, 5A and 16) or application specific chips. Further, the operations described above with reference to Figs. 11A-11K are, optionally, implemented by components depicted in Figs. 1A-1B. For example, generating operations 1102, 1110 and 1114, and detecting operations 1110 and 1112 are, optionally, implemented by event sorter 170, event recognizer 180, and event handler 190. Event monitor 171 in event sorter 170 detects a contact on touch-sensitive surface 451, and event dispatcher module 174 delivers the event information to application 136-1. A respective event recognizer 180 of application 136-1 compares the event information to respective event definitions 186, and determines whether a first contact at a first location on the touch-sensitive surface corresponds to a predefined event or sub-event, such as selection of an object on a user interface. When a respective predefined event or sub-event is detected, event recognizer 180 activates an event handler 190 associated with the detection of the event or sub-event. Event handler 190 optionally utilizes or calls data updater 176 or object updater 177 to update the application internal state 192. In some embodiments, event handler 190 accesses a respective GUI updater 178 to update what is displayed by the application. Similarly, it would be clear to a person having ordinary skill in the art how other processes can be implemented based on the components depicted in Figs. 1A-1B.

### Content Guide

Users interact with electronic devices in many different manners, including interacting with content (e.g., music, movies, etc.) that may be available (e.g., stored or otherwise accessible) on the electronic devices. In some circumstances, the users desire to view, navigate and play current and future content from channels available on the electronic devices. The embodiments described below provide ways in which electronic devices allow users to view, navigate and play current and future content from channels available on the electronic devices, thereby enhancing users' interactions with the electronic devices. Enhancing interactions with a device reduces the amount of time needed by a user to perform operations, and thus reduces the power usage of the device and increases battery life for battery-powered devices. It is understood that people use devices. When a person uses a device, that person is optionally referred to as a user of the device.

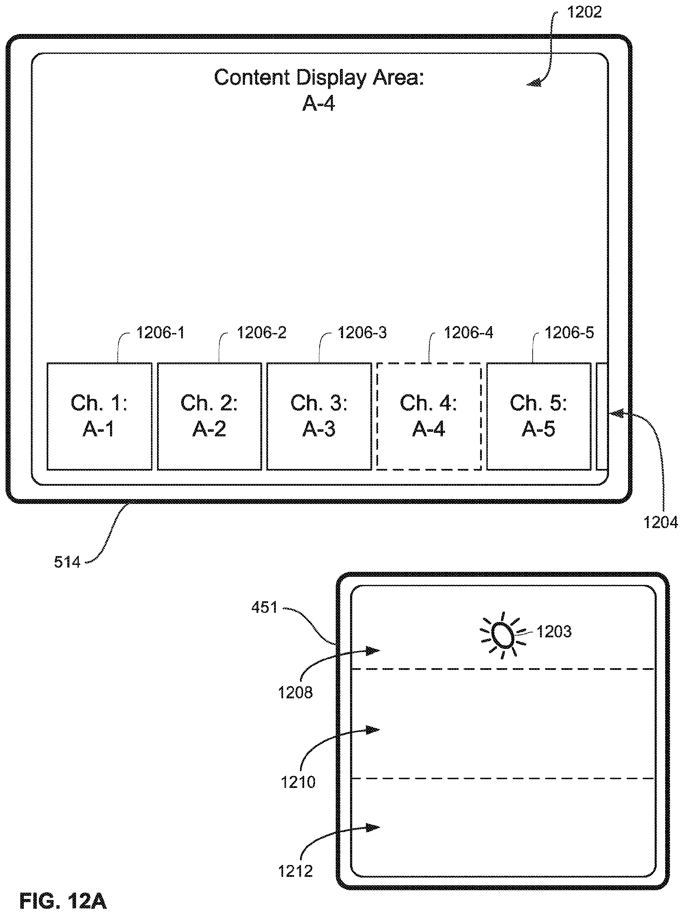

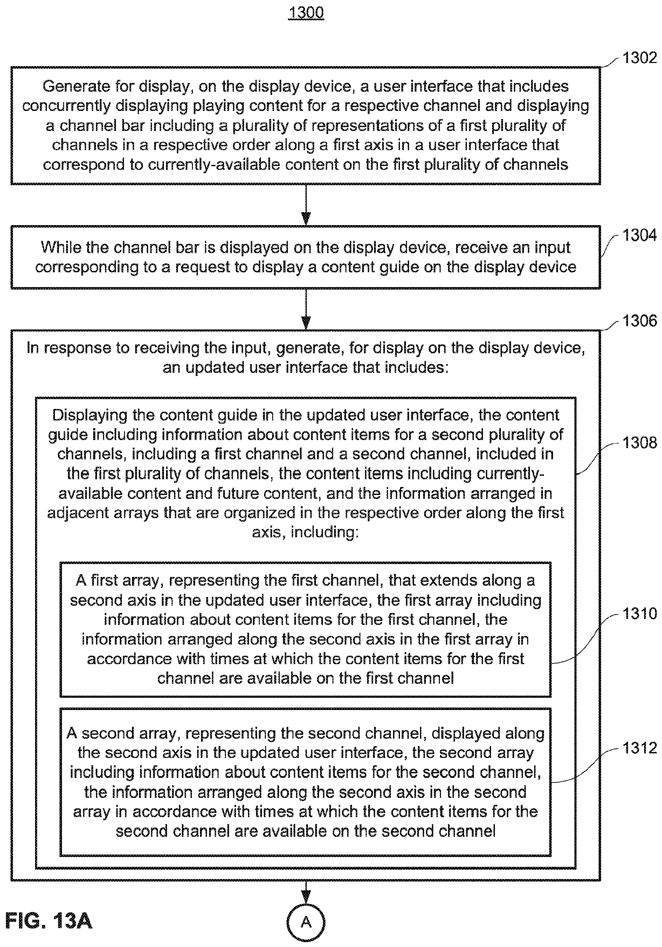

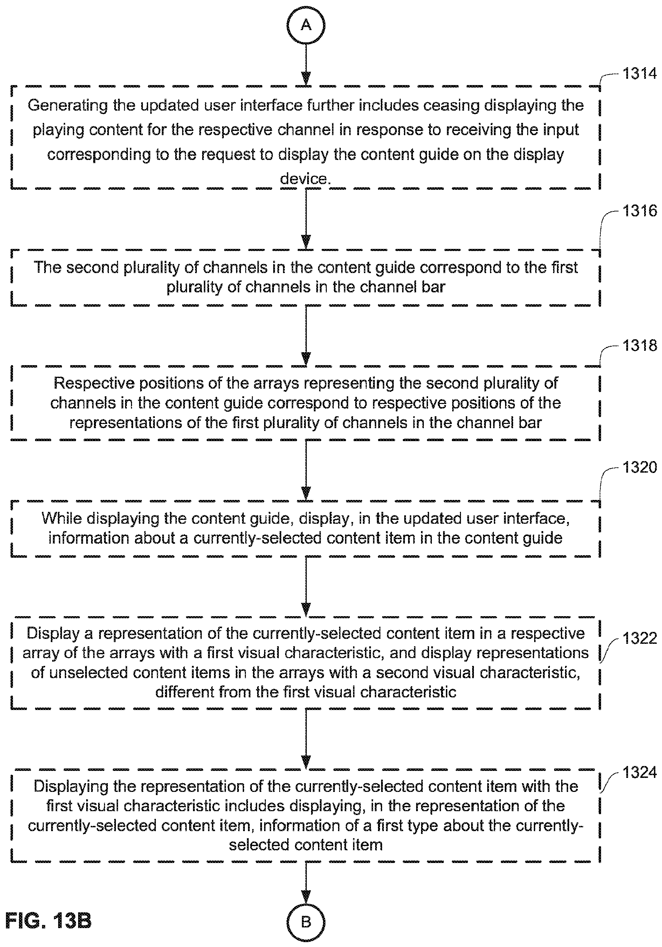

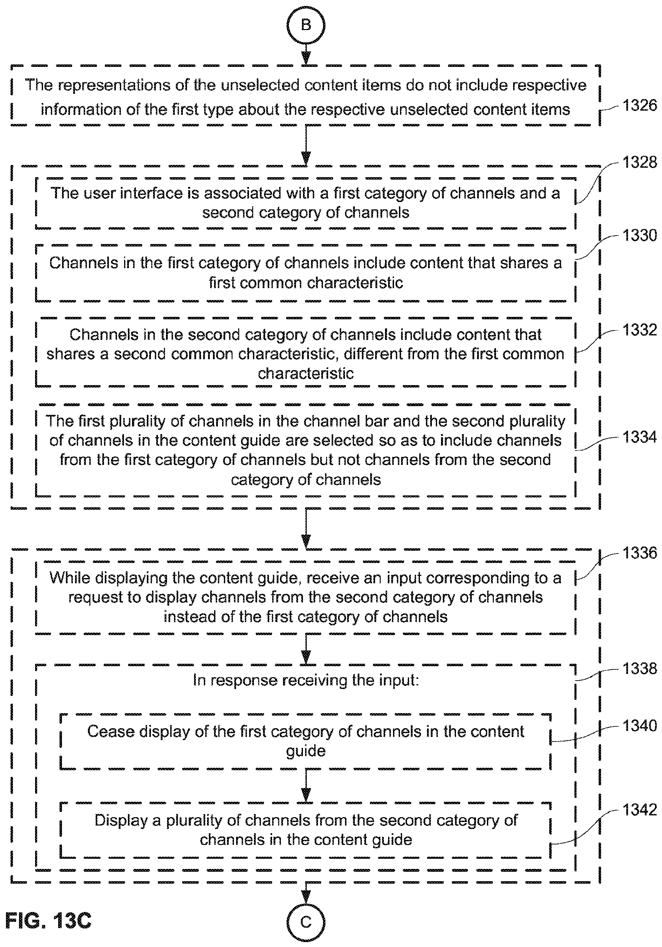

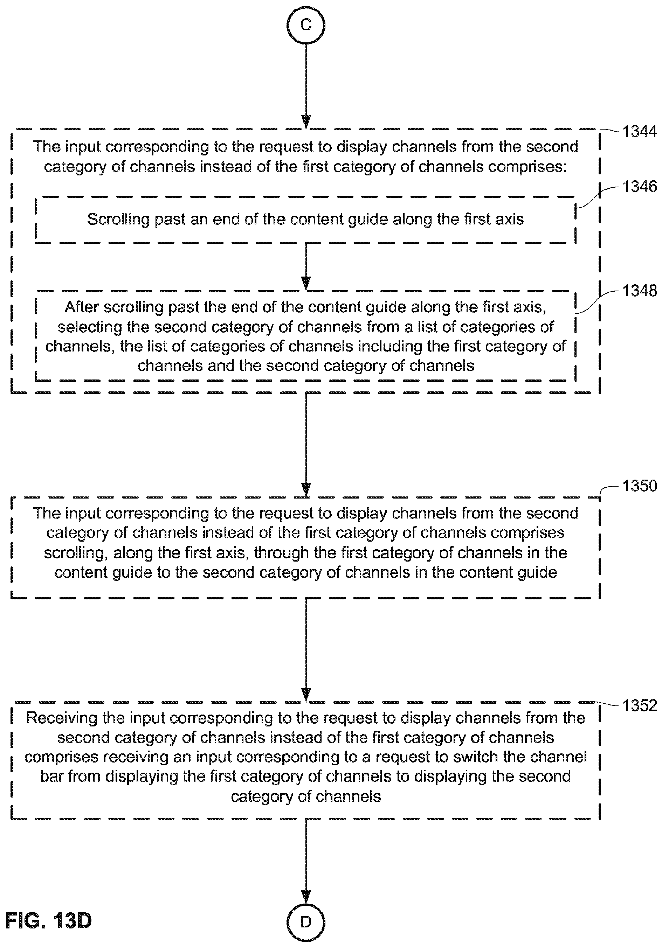

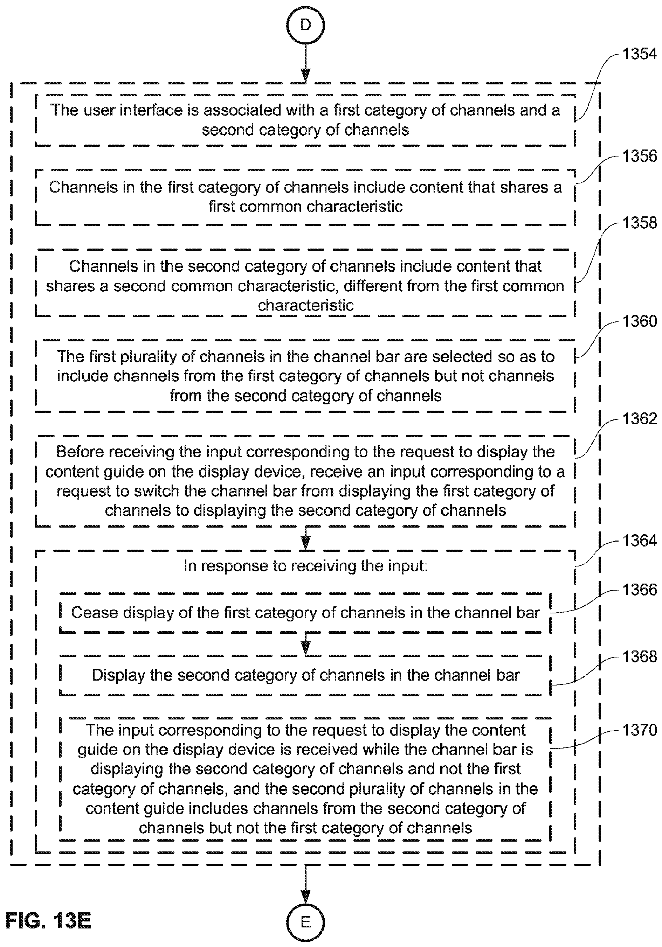

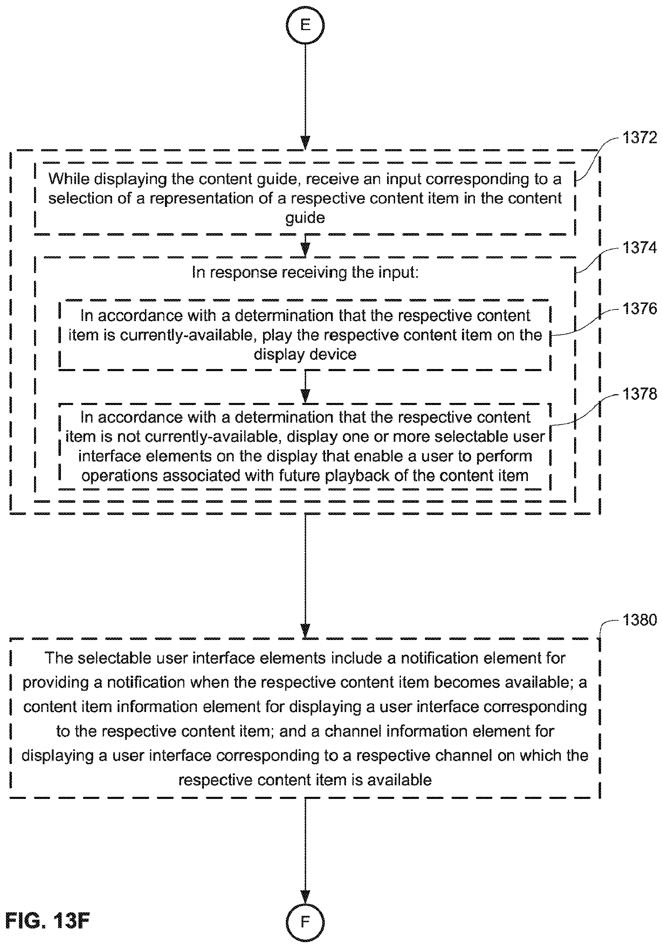

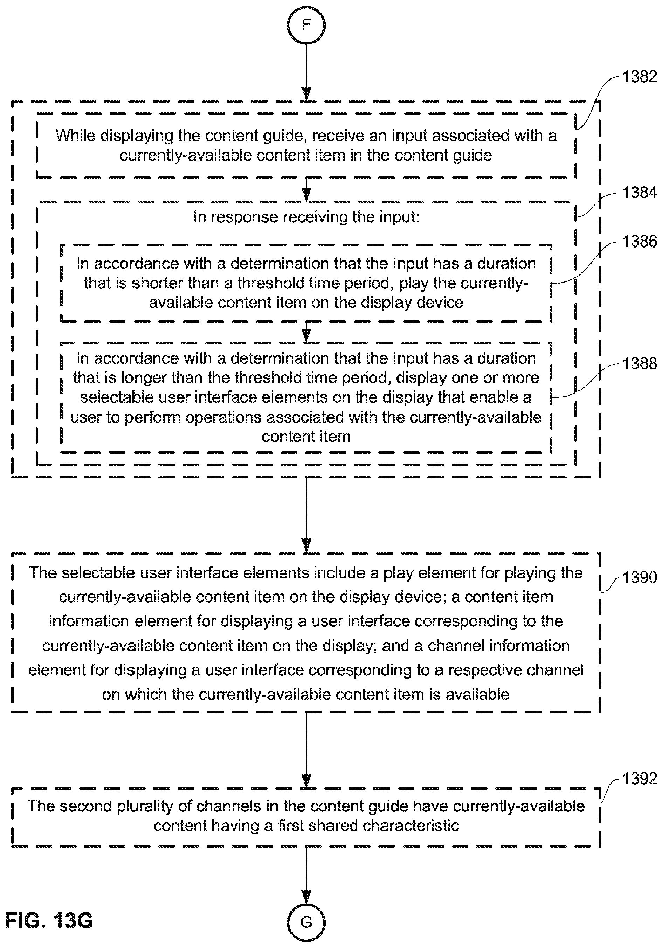

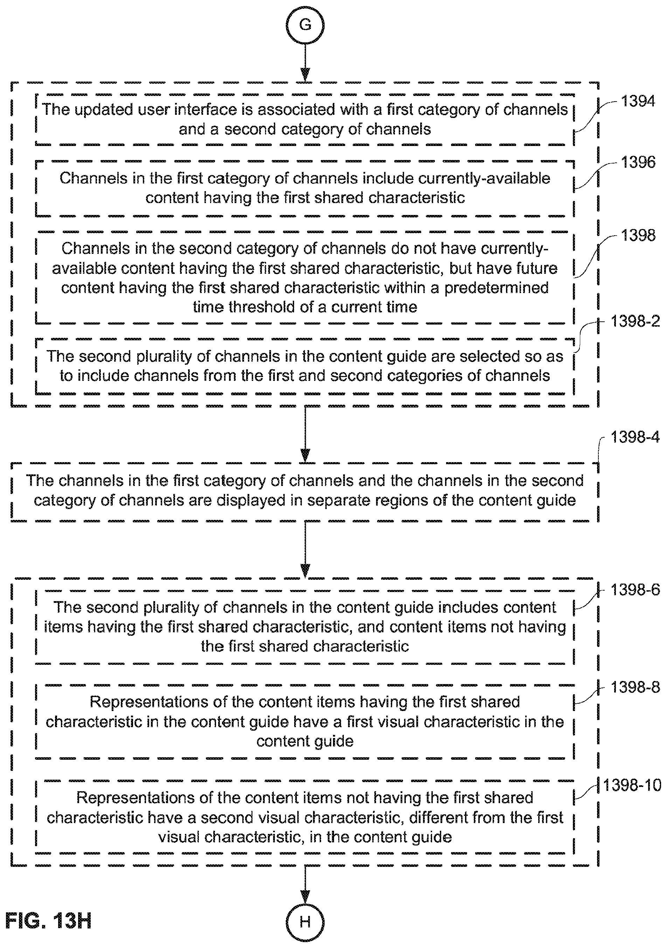

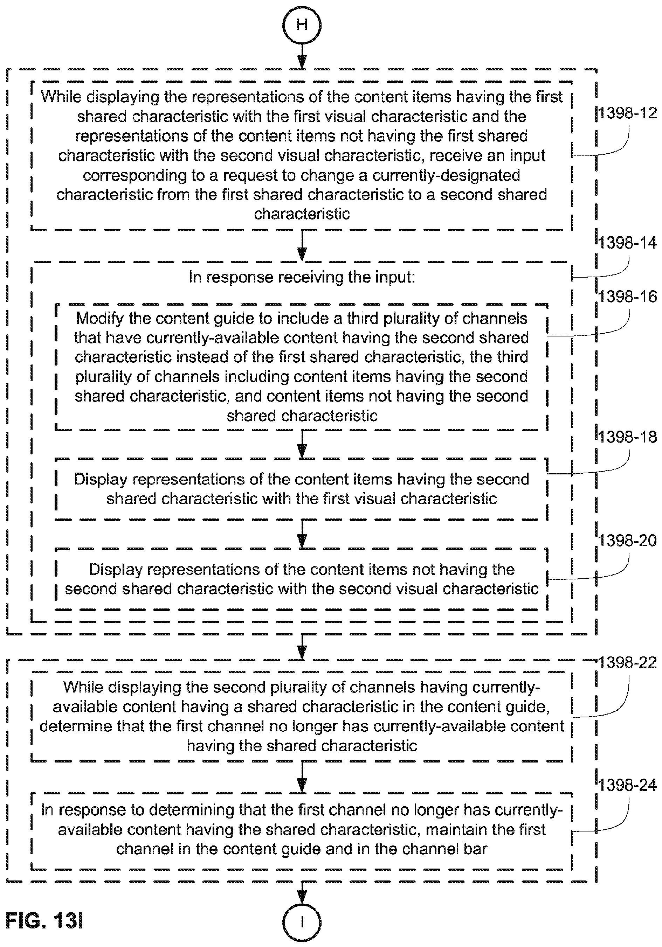

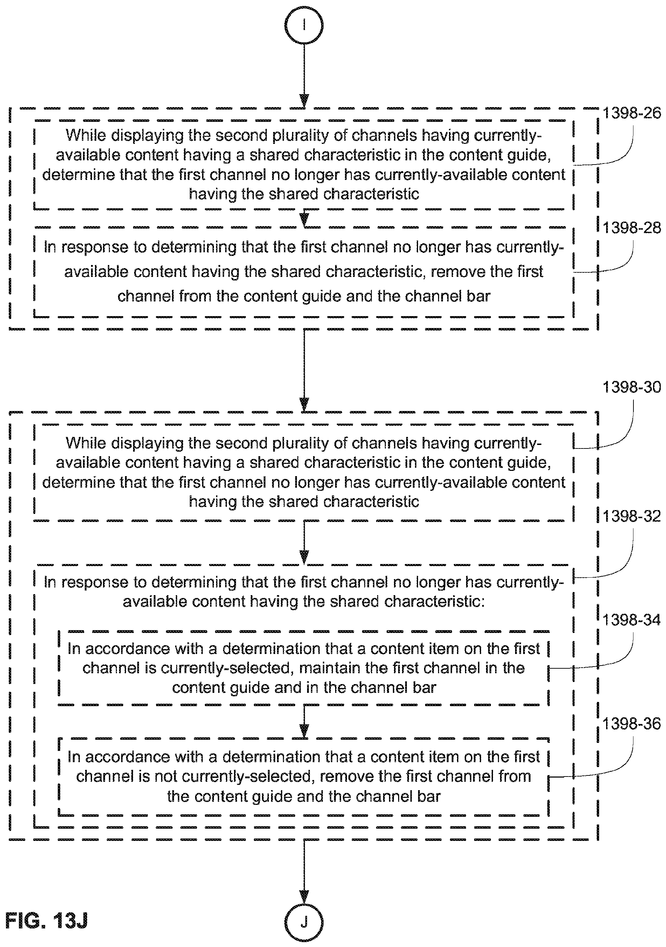

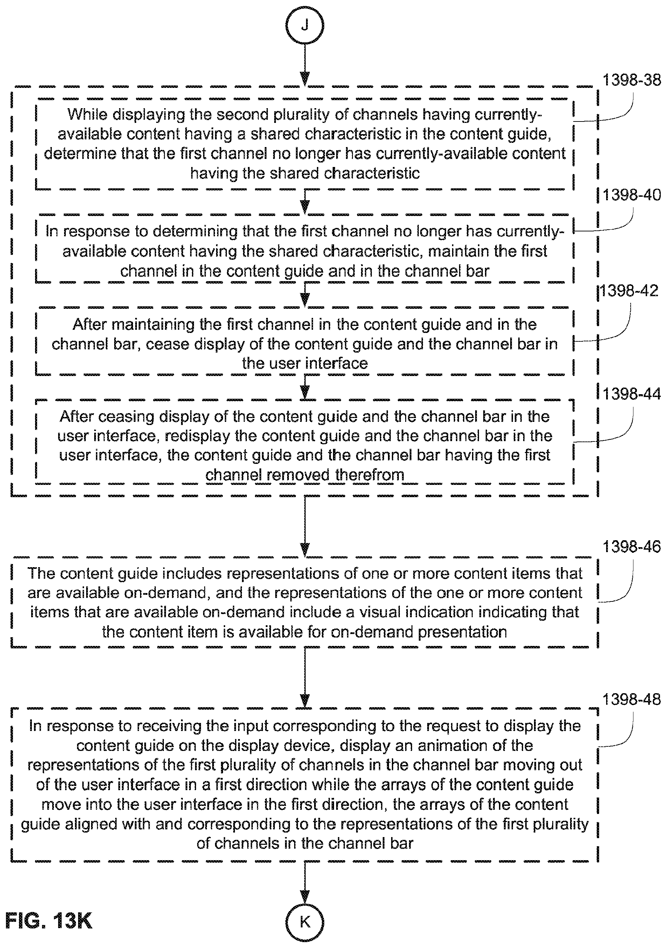

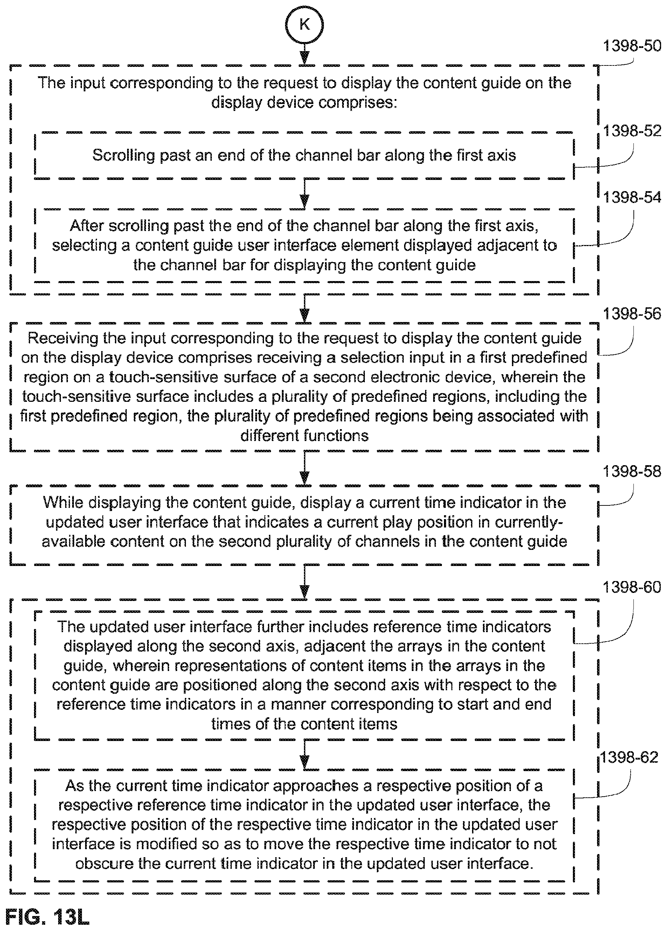

Figs. 12A-12FF illustrate exemplary ways in which electronic devices allow users to view, navigate and play current and future content from channels available on the electronic devices in accordance with some embodiments of the disclosure. The embodiments in these figures are used to illustrate the processes described below, including the processes described with reference to Figs. 13A-13K.

It should be noted that the examples illustrated in Figs. 12A-12FF are directed to electronic devices that display information on non-touch-sensitive displays, though it is understood that the electronic devices may instead display information on displays having touch-sensitive capability (e.g., touch screens). For example, the electronic devices may include touch screens, or the electronic devices may be capable of outputting display information for display on separate touch screens, as previously described in this disclosure-in such circumstances, the displays described below optionally correspond to the touch screens mentioned above, and the inputs described below are optionally detected on the touch screens.

Fig. 12A illustrates exemplary display 514. Display 514 optionally displays one or more user interfaces that include various content. In the example illustrated in Fig. 12A, display 514 optionally displays a content application (e.g., an application for navigating content to which an electronic device has access) running on the electronic device (e.g., electronic device 500 of Fig. 5A) of which display 514 is a part, or to which display 514 is connected. The user interface includes a content display area 1202, and a channel bar 1204, the channel bar 1204 including a plurality of representations 1206 of channels to which the electronic device has access. In some embodiments, each representation 1206 in the channel bar 1204 corresponds to a content item that is currently-available on a respective channel. Channel bar 1204 optionally exhibits some or all of the characteristics of the channel bars described with respect to Figs. 6A-6R and 10D, above. Selection of a representation 1206 in the channel bar 1204 optionally causes playback of the corresponding currently-available content item in the content display area 1202 of the user interface. For example, representation 1206-1 corresponds to content item A-1 that is currently-available on channel 1. The remaining representations 1206 correspond to respective content items that are currently-available on their respective channels. In Fig. 12A, representation 1206-4 is currently-selected, as reflected by the dashed-line border, and thus content item A-4 from channel 4 (corresponding to representation 1206-4) is playing in the content display area 1202 of the user interface.

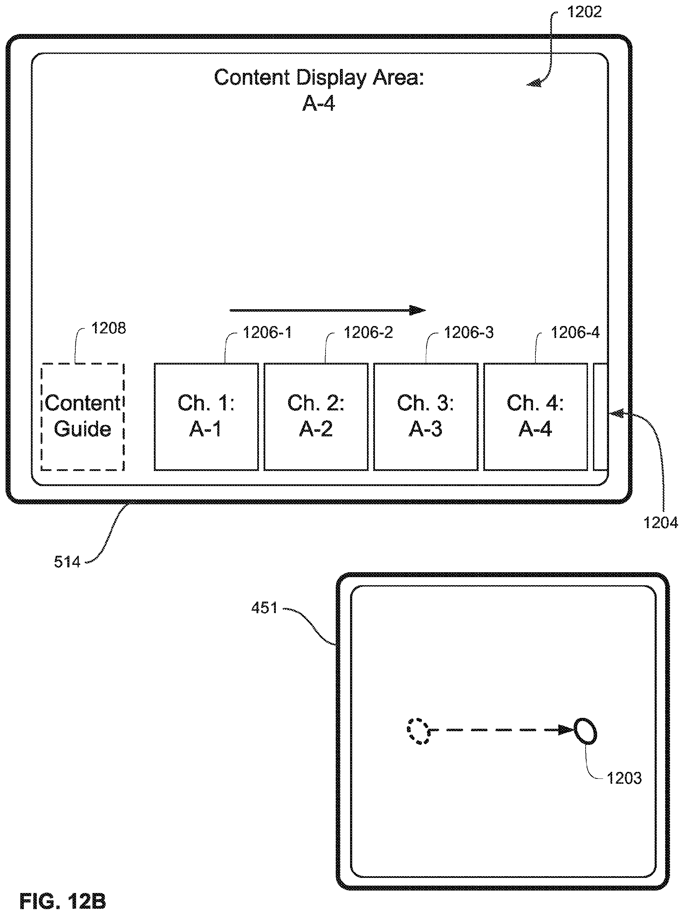

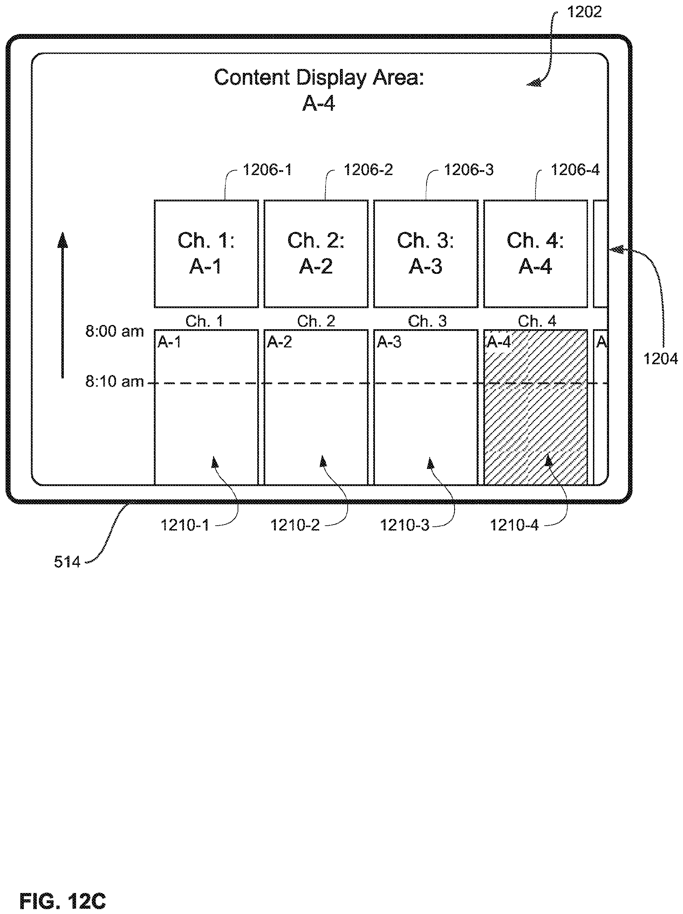

In some embodiments, the electronic device is capable of displaying a content guide that includes information about current and future content items available on channels accessible from the electronic device (e.g., the channels in channel bar 1204). In some embodiments, a click detected in a top region 1208 of touch-sensitive surface 451 causes the content guide to be displayed, as will be described with reference to Fig. 12C. Touch-sensitive surface 451 is optionally a touch-sensitive surface on a second electronic device, such as a remote control (e.g., remote 510 in Figs. 5A-5B). In some embodiments, rather than a click in a top region 1208 of touch-sensitive surface 451, the content guide is accessed by scrolling past an end of the channel bar 1204 (e.g., scrolling past the left end of the channel bar 1204), which optionally causes a content guide user interface element 1208 to appear on display 514, as illustrated in Fig. 12B. The user then optionally selects the content guide user interface element 1208 to display the content guide, as will be described with reference to Fig. 12C.

Fig. 12C illustrates the content guide beginning to be displayed in the user interface in response to the inputs of Figs. 12A or 12B. In particular, the channel bar 1204 is optionally animated to move out of the user interface (e.g., up and out of the user interface), while the content guide (comprising arrays 1210, as will be described later) is optionally concurrently animated to move into the user interface (e.g., into and up the user interface). As illustrated in Fig. 12C, the channel bar 1204 and the content guide are animated in the same direction (e.g., upwards).

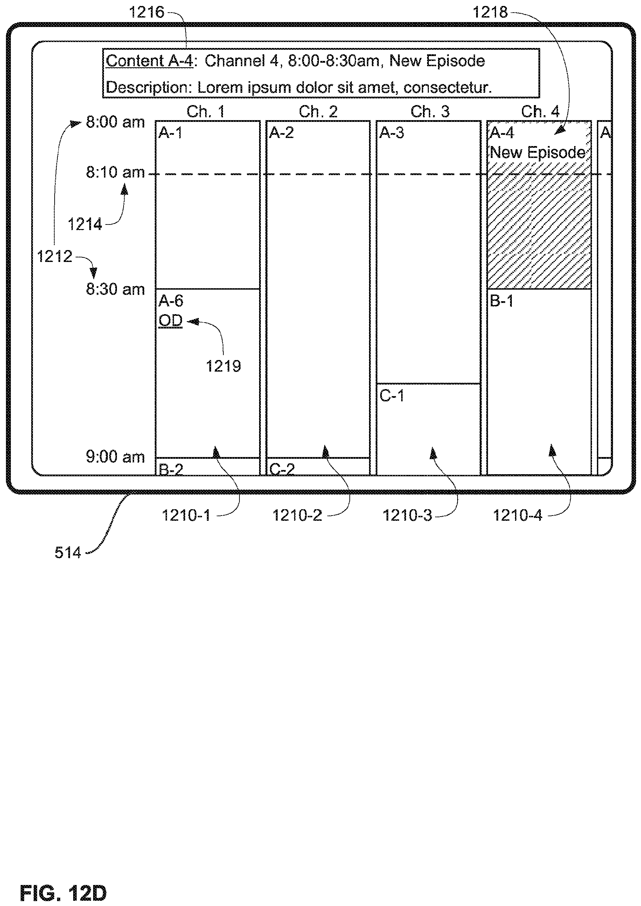

Fig. 12D illustrates an exemplary content guide user interface in which the content guide (comprising arrays 1210) has moved completely into the user interface, and the channel bar 1204 has moved completely out of the user interface. The content guide includes arrays 1210 arranged horizontally, each of which corresponds to a channel accessible on the electronic device. For example, array 1210-1 corresponds to channel 1, array 1210-2 corresponds to channel 2, and so on. The arrays 1210 optionally include information about content items for the channels, the information arranged vertically within each array according to the time that each content item is available on that channel. For example, array 1210-1 vertically displays content item A-1, followed by content item A-6, followed by content item B-2, each of which is positioned in the array based on when that content item is available on channel 1 (corresponding to array 1210-1). For example, content item A-6 is displayed below content item A-1 in array 1210-1, because content item A-6 is available after content item A-1 on channel 1. The remaining arrays optionally similarly display information about content items available on their corresponding channels.

In some embodiments, the content guide also includes reference time indicators 1212 displayed alongside arrays 1210, which reflect absolute time at predefined intervals (e.g., every 30 minutes) during which the content items are scheduled to be available. For example, the reference time indicators 1212 in Fig. 12D indicate 8:00am, 8:30am, and 9:00am, and the representations of the content items in arrays 1210 are positioned with respect to those reference time indicators 1212 based on the start/end times of the content items. Further, in some embodiments, the content guide includes a current time indicator 1214 that indicates a current play position in the content items in arrays 1210 (e.g., a line that horizontally extends across the arrays 1210 in the content guide). The position of the current time indicator 1214 relative to the start/end times of the content items in the arrays 1210 optionally reflects the relative current play position with respect to those start/end times. The relative position of the current time indicator 1214 with respect to the content items is optionally updated as the current play position/current time changes.

In some embodiments, the content guide also includes information area 1216. Information area 1216 optionally includes information about a currently-selected content item 1218 in arrays 1210. For example, in Fig. 12D, content item A-4 in array 1210-4 is the currently-selected content item 1218. As such, information area 1216 includes information about content item A-4 (e.g., title, channel, show time, description, etc.). In some embodiments, the currently-selected content item 1218 is displayed differently than unselected content items. For example, as illustrated in Fig. 12D, content item A-4 in array 1210-4 is displayed with a visual characteristic different from the visual characteristic of the remaining content items (e.g., in color as opposed to black and white, with a border as opposed to without a border, with shading as opposed to without shading, etc.). Further, in some embodiments, the currently-selected content item 1218 in arrays 1210 includes information of a type that is not included in unselected content items. For example, content item A-4 includes information that content item A-4 is a "New Episode", while the remaining content items in the remaining arrays 1210 do not include such information (e.g., information such as new episode, repeat episode, etc.). Other kinds of such information are optionally additionally or alternatively displayed in the currently-selected content item 1218, such as the rating of the content item, the run time of the content item, the genre of the content item, etc. In some embodiments, the content guide includes representations of one or more content items that are available on-demand (e.g., content item A-6), and the representations of the one or more content items that are available on-demand include a visual indication indicating that the content item is available for on-demand presentation (e.g., visual indication 1219).

In some embodiments, the channels that correspond to arrays 1210 are the same channels that are included in the channel bar 1204 before the content guide was displayed. For example, in Fig. 12A, the channel bar 1204 includes representations 1206 of channels 1, 2, 3, 4, and 5, and in Fig. 12D, the content guide includes arrays 1210 corresponding to channels 1, 2, 3, 4, and 5 (hidden from view on the right side of display 514). Further, in some examples, the positions of the representations 1206 of channels in the channel bar 1204 optionally correspond to the positions of the corresponding arrays 1210 in the content guide. For example, representation 1206-3 (corresponding to channel 3) in Fig. 12A is displayed between representations 1206-2 (corresponding to channel 2) and 1206-4 (corresponding to channel 4) in the channel bar 1204, and array 1210-3 (corresponding to channel 3) in Fig. 12D is similarly displayed between arrays 1210-2 (corresponding to channel 2) and 1210-4 (corresponding to channel 4) in the content guide.

In some embodiments, as illustrated in Figs. 12A and 12D, the channels displayed in the channel bar 1204 and the content guide are channels that include content (e.g., currently-playing or future content) that share a common characteristic (e.g., a common subject matter or theme, such as being sports-related content). In Fig. 12A, for example, the currently-available content items on channels 1-5 (e.g., content items A-1, A-2, A-3, A-4 and A-5) share common characteristic A (e.g., are of content type A, such as sports-related content). Similarly, in Fig. 12D, the currently-available content items on channels 1-4 (e.g., content items A-1, A-2, A-3 and A-4) also share common characteristic A. In some embodiments, the channel bar 1204 and the content guide do not include channels that do not have currently-available or future content (e.g., playing within the next hour or two) sharing the currently-designated shared characteristic (e.g., characteristic or content type A).

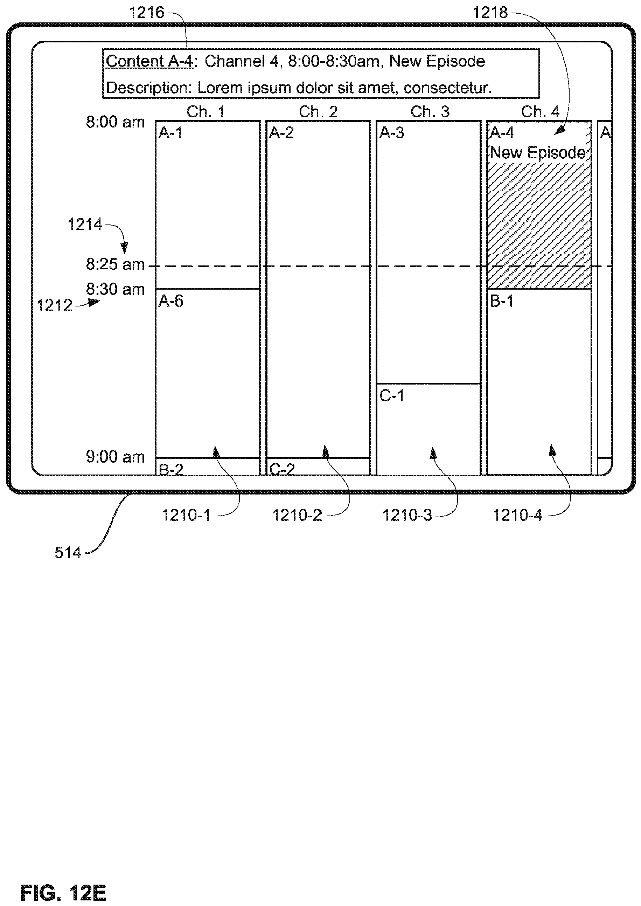

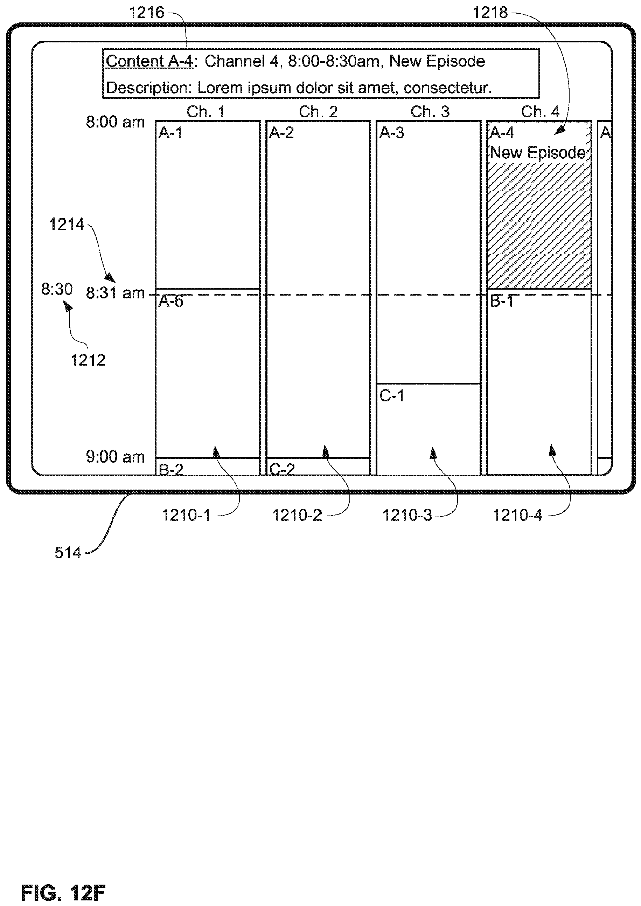

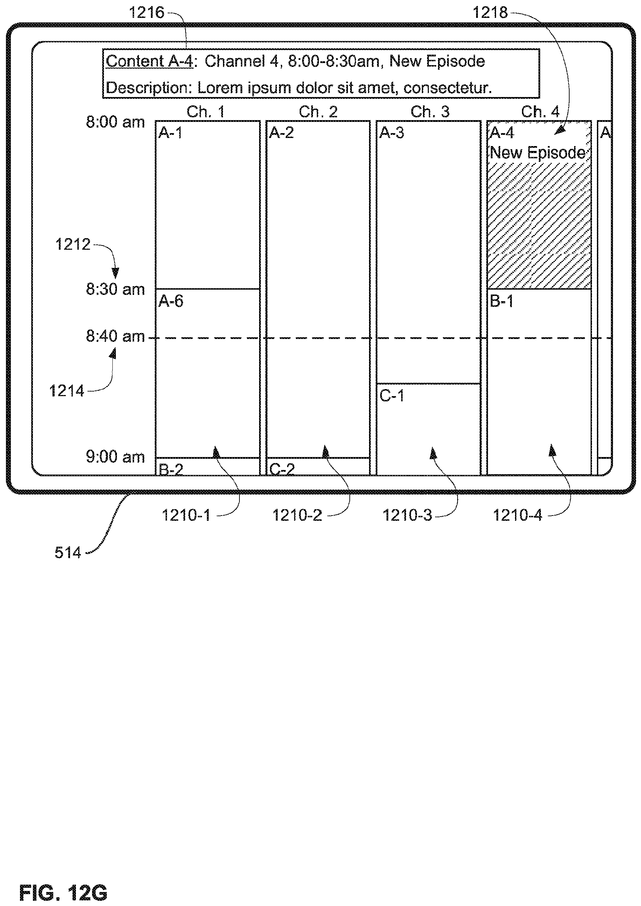

As previously described, in some embodiments, current time indicator 1214 moves in accordance with the passage of time, as illustrated in Figs. 12E-12G. Specifically, in Fig. 12E, the current time indicator 1214 has moved from a position corresponding to 8:10am in Fig. 12D to a position corresponding to 8:25am in Fig. 12E. In Fig. 12F, the current time indicator 1214 has continued moving to a position corresponding to 8:31am. In some embodiments, reference time indicators 1212 move to avoid the current time indicator 1214 when the current time indicator 1214 approaches the reference time indicators 1212. For example, in Fig. 12F, reference time indicator 1212 (corresponding to 8:30am) has moved so as to not obscure current time indicator 1214. In some embodiments, as the current time indicator 1214 continues moving and passes the original position of the reference time indicator 1212, the reference time indicator 1212 optionally moves back to its original position, as illustrated in Fig. 12G.

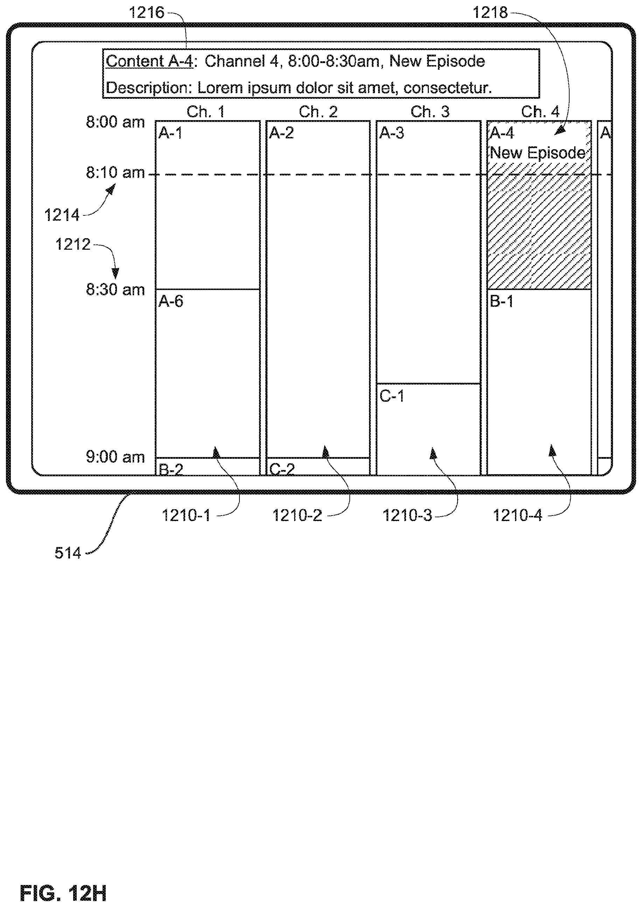

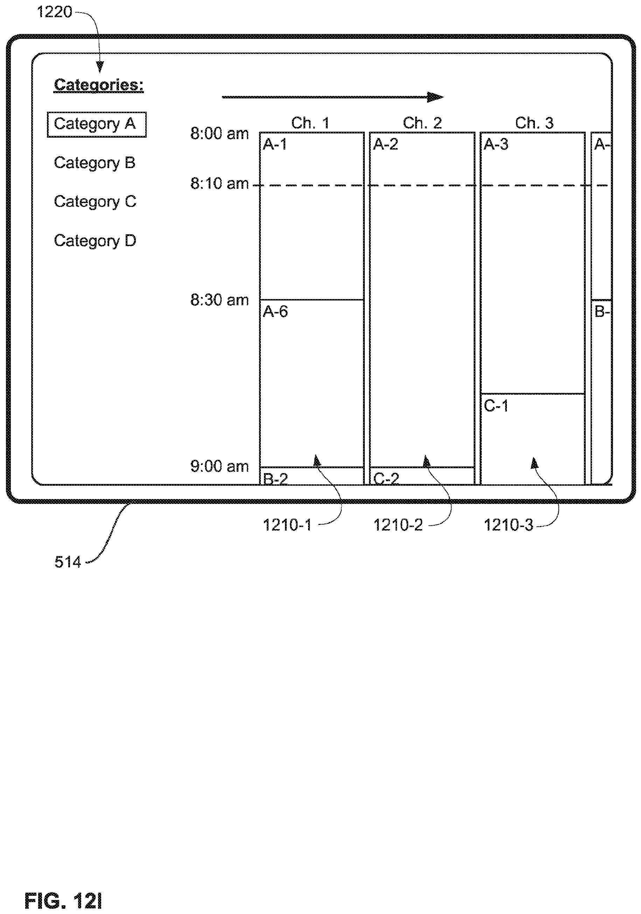

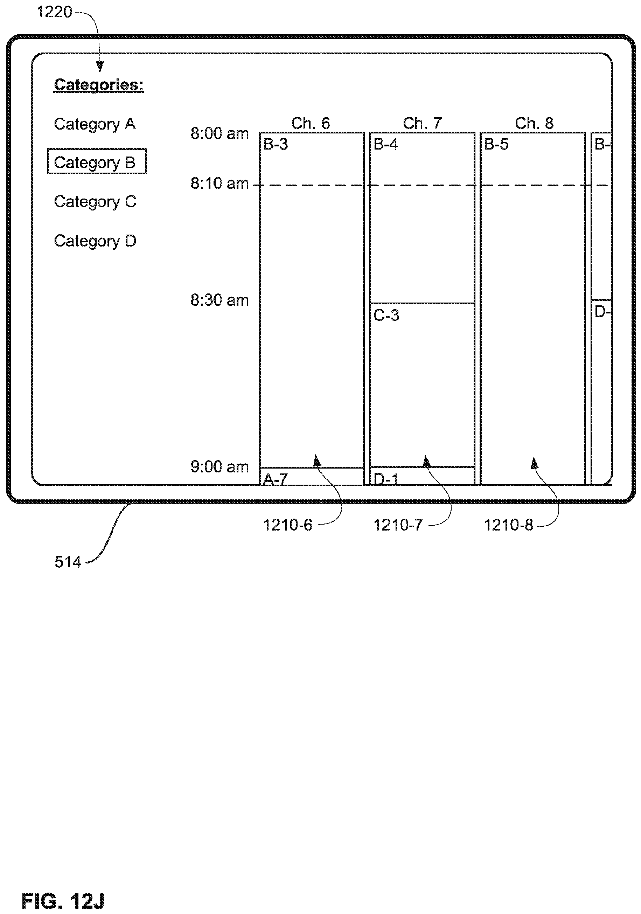

Figs. 12H-12I illustrate changing of the currently-designated content category in the content guide. Fig. 12H substantially corresponds to Fig. 12D. As previously discussed, the currently-designated content category (e.g., shared characteristic) is optionally category A. In some embodiments, a user scrolls past an end of the content guide to change the currently-designated category. For example, in Fig. 12I, the user has scrolled past the left end of the content guide. In response, the electronic device displays a category selection area 1220, which includes a plurality of categories from which the user chooses. In Fig. 12I, category A is currently-designated (reflected by the solid-line border surrounding category A), as previously described. In Fig. 12J, the user has selected category B from category selection area 1220. In response, arrays 1210 in the content guide are updated to include information about channels that include content (e.g., currently-available content or future content) of category B instead of content of category A. For example, in Fig. 12J, arrays 1210 corresponding to channels 1-3 have been replaced by arrays 1210 corresponding to channels 6-8, because channels 6-8 include currently-playing content of category B (e.g., content items B-3, B-4 and B-5).

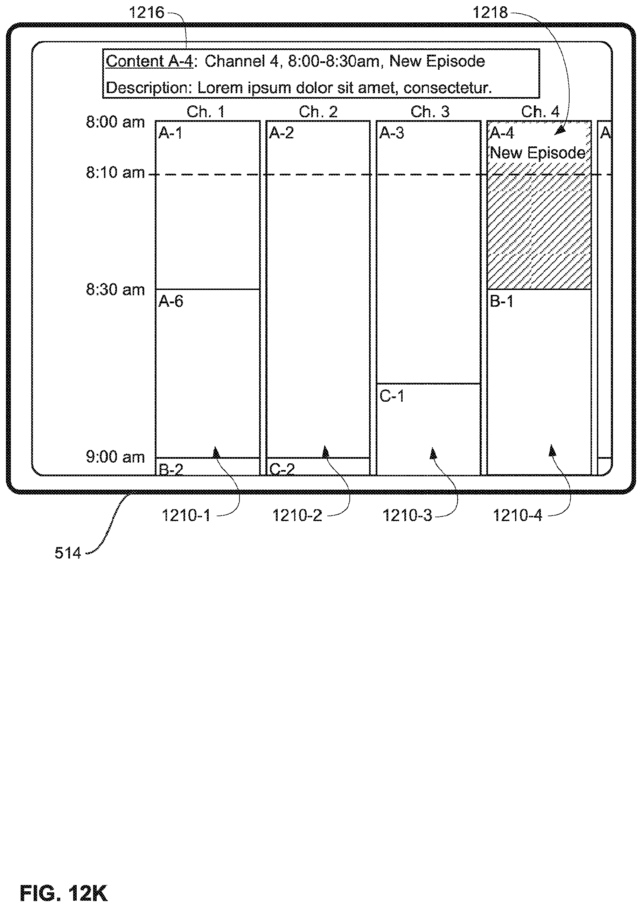

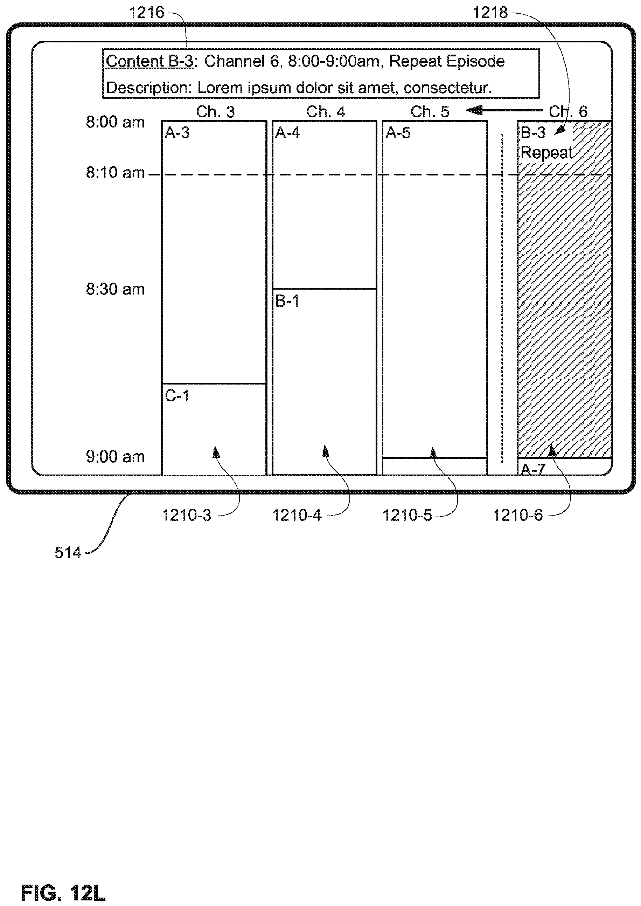

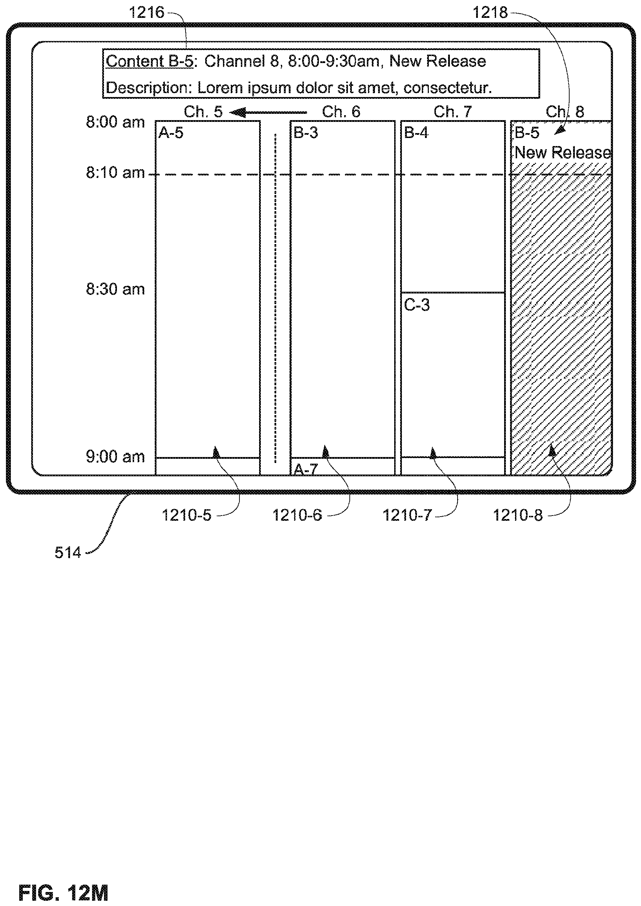

In some circumstances, rather than scrolling past an end of the content guide to change the currently-designated category in the content guide, the user scrolls through the different categories of channels by scrolling through the content guide, as illustrated in Figs. 12K-12M. Fig. 12K substantially corresponds to Fig. 12H. The channels displayed in Fig. 12K are channels of category A. To view channels of category B, the user optionally scrolls to the right through the content guide, as illustrated in Fig. 12L. In Fig. 12L, the user has scrolled to the right through the content guide, past array 1210-5, corresponding to channel 5-the last channel of category A in the example of Fig. 12L. As a result, the user has reached array 1210-6 corresponding to channel 6, which is a channel of category B, as previously described. In some embodiments, arrays 1210 corresponding to channels of different categories are visually separated in the content guide (e.g., displayed in different regions of the content guide, as reflected by the dashed-line between arrays 1210-5 and 1210-6). Also, in Fig. 12L, content item B-3 in array 1210-6 is now currently-selected 1218 (e.g., as a result of scrolling through arrays 1210). In response, the electronic device changes the appearance of content item A-4 (which was previously currently-selected in Fig. 12K) to that of an unselected content item, and changes the appearance of content item B-3 to that of a selected content item, as previously described. In Fig. 12M, the user has further scrolled to the right in the content guide, resulting in display of arrays 1210-7 (corresponding to channel 7) and 1210-8 (corresponding to channel 8), which also correspond to channels of category B. The user may further scroll through the content guide in the manner described above to view channels of category C and D (and optionally any other category of channels available on the electronic device).

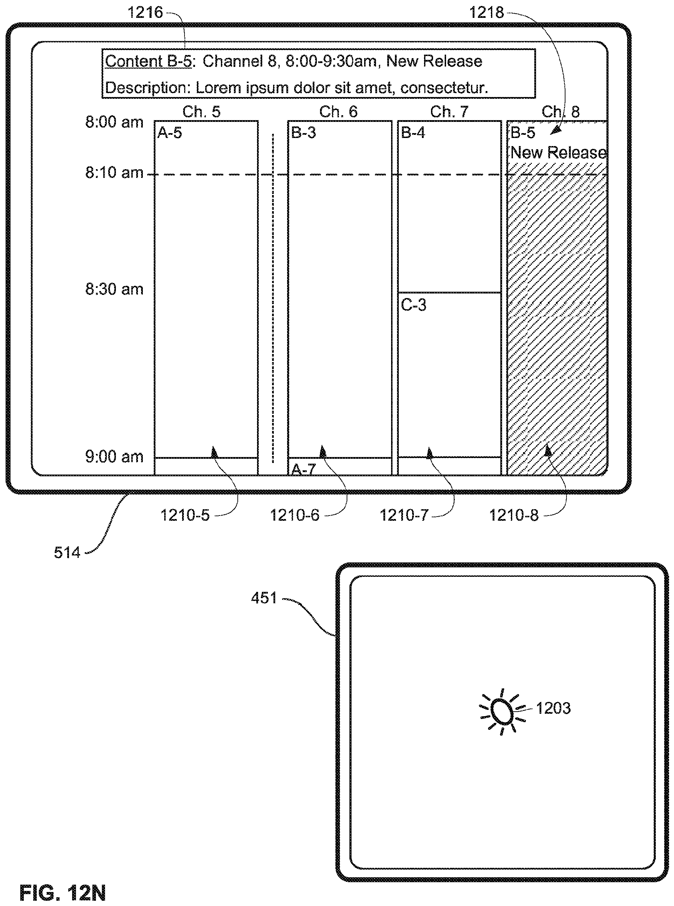

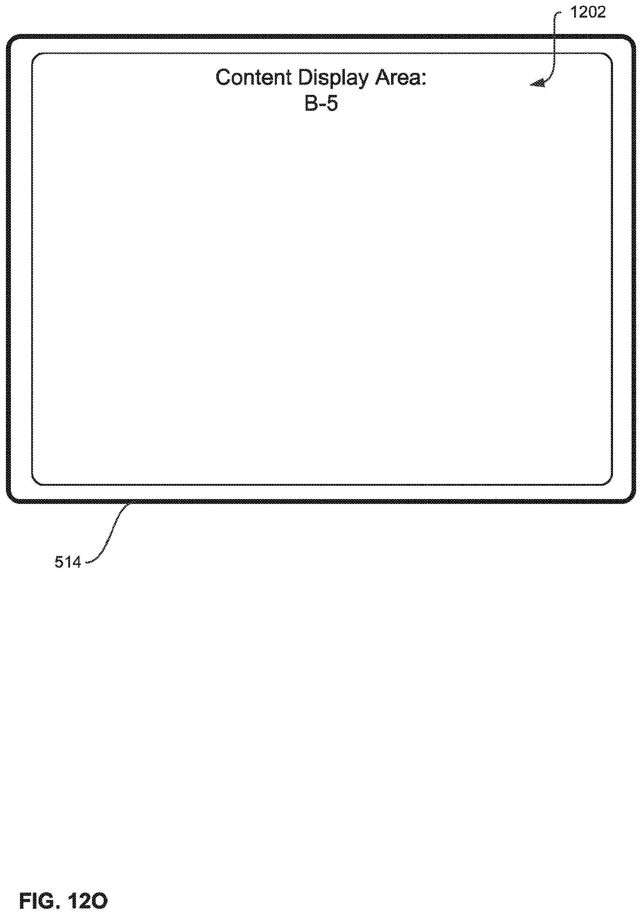

In some embodiments, the user is able to select content items from the content guide to perform various actions. Figs. 12N-12O illustrate selection of a content item that is currently-available in the content guide. In Fig. 12N, the user has selected (e.g., using contact 1203 to click touch-sensitive surface 451) content item B-5 (the currently-selected content item 1218 in the content guide). Because content item B-5 is currently-available on channel 8, in response to the click detected on touch-sensitive surface 451, the electronic device plays content item B-5 in the content display area 1202 of the user interface on display 514, as illustrated in Fig. 12O.

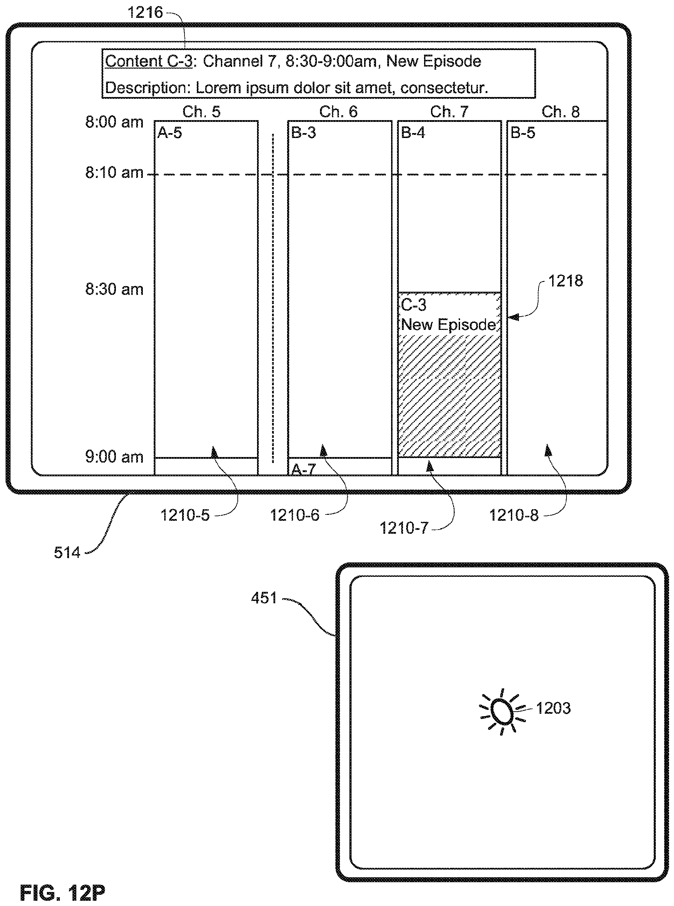

Figs. 12P-12Q illustrate selection of a content item that is not currently-available in the content guide. In Fig. 12P, the user has selected (e.g., using contact 1203 to click touch-sensitive surface 451) content item C-3 (the currently-selected content item 1218 in the content guide). Because content item C-3 is not currently-available on channel 7, in response to the click detected on touch-sensitive surface 451, the electronic device displays dialog box 1222. Dialog box 1222 optionally includes a notification element for providing a notification when content item C-3 becomes available (e.g., a reminder button for being reminded about the content item when it becomes available). If the user selects the notification element, a reminder is optionally provided to the user at a predetermined time period before the start time of content item C-3, such as 15, 10 or 5 minutes before the start time of content item C-3. In some embodiments, selection of the notification element causes the electronic device to add content item C-3 to a watch list, such as described with reference to Fig. 10E, for later viewing. Dialog box 1222 optionally also includes a content item information element for displaying a user interface corresponding to content item C-3 (e.g., a button for displaying a content item page corresponding to content item C-3). For example, if the user selects the content item information element, a content item-specific page with information about content item C-3 is optionally displayed on the display 514, including information such as a description of content item C-3, the channels on which it is available, the times at which it is available, the rating of content item C-3, the run time of content item C-3, the title of content item C-3, the genre of content item C-3, etc. Dialog box 1222 optionally also includes a channel information element for displaying a user interface corresponding to channel 7 on which content item C-3 is available (e.g., a button for displaying a channel page). For example, if the user selects the channel information element, a channel-specific page with information about channel 7 is optionally displayed on the display 514, including information such as the name of the channel, other content available on the channel, the genre of the channel, etc.

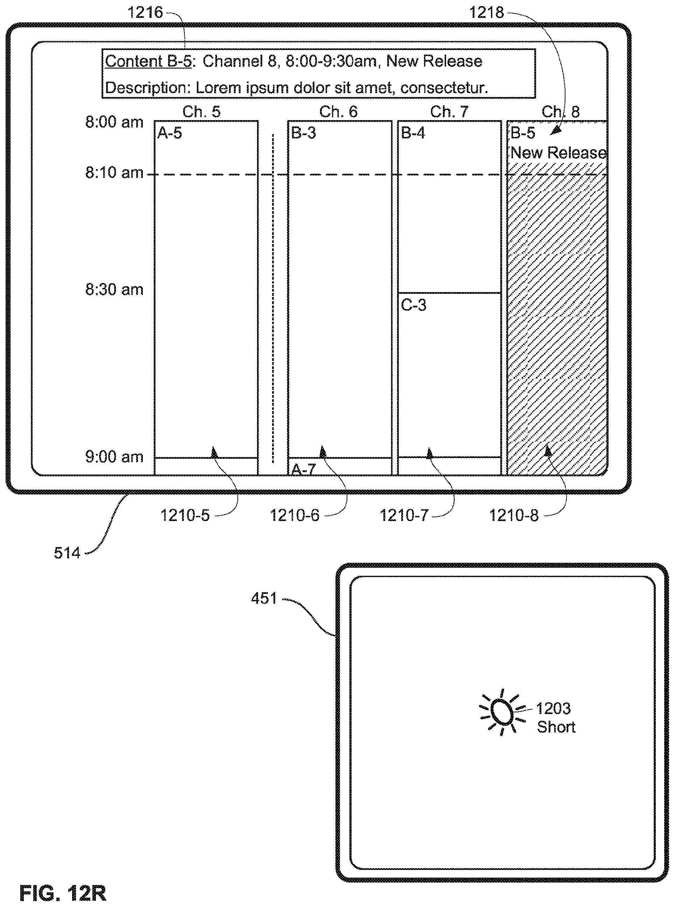

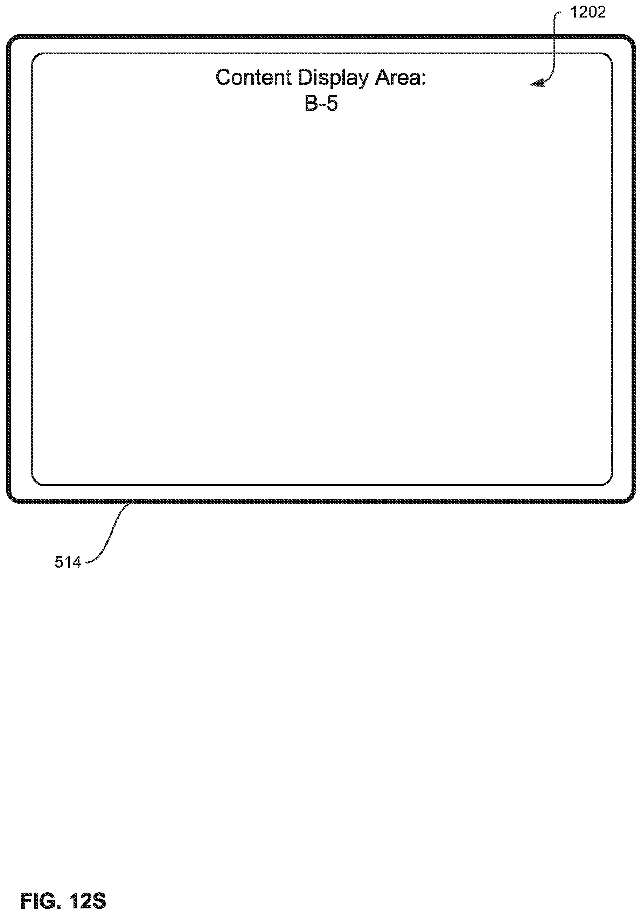

Figs. 12R-12U illustrate different actions that the electronic device optionally performs in response to selection of a currently-available content item using an input with a short duration (e.g., a click) versus an input with a long duration (e.g., a click and hold). In Fig. 12R, the user has selected content item B-5, which is currently-available on channel 8, with a short click on touch-sensitive surface 451 (e.g., an input having a duration shorter than a predetermined duration threshold, such as .1, .3 or .5 seconds). In response, the electronic device plays content item B-5 on display 514, as illustrated in Fig. 12S.

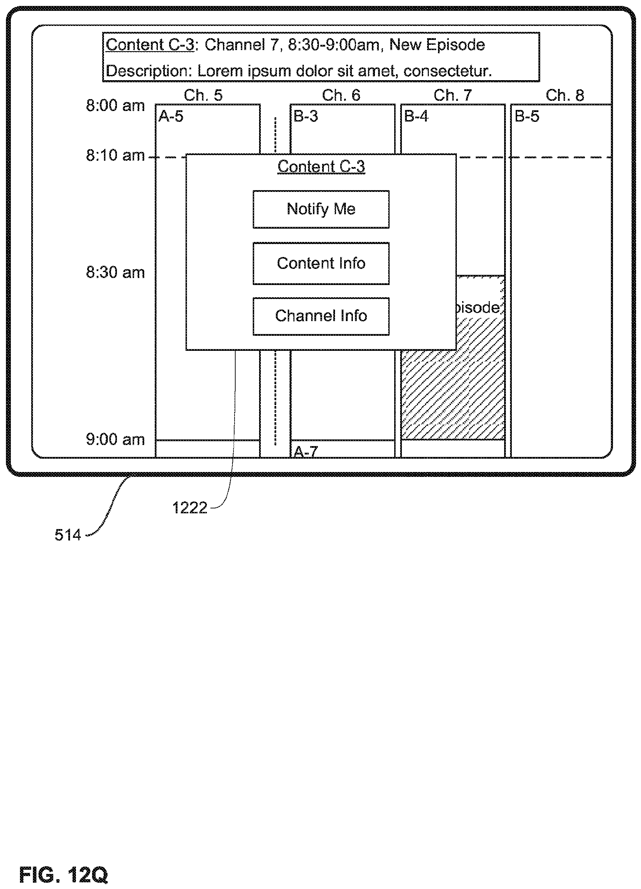

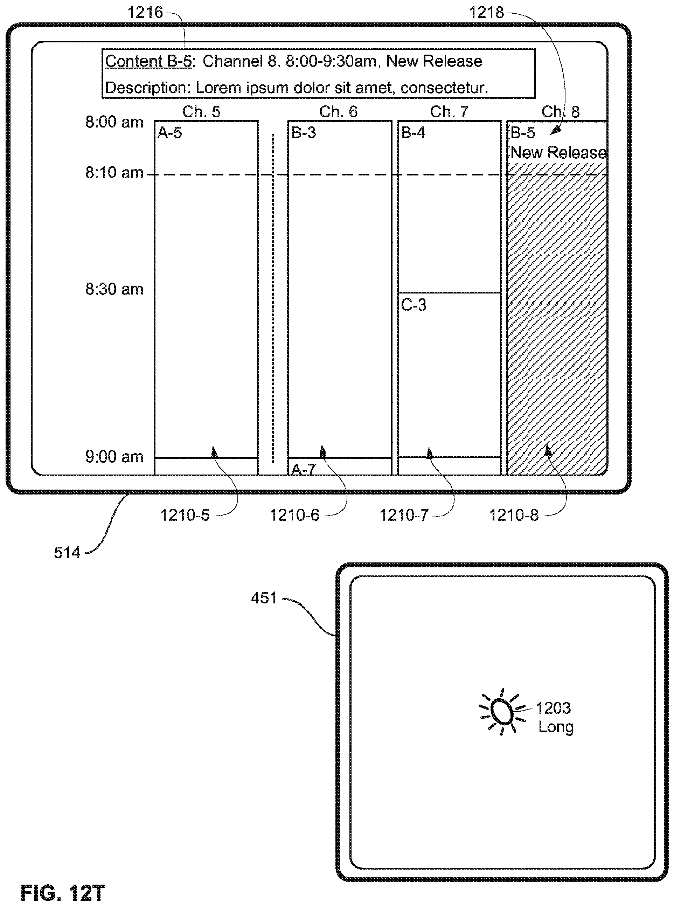

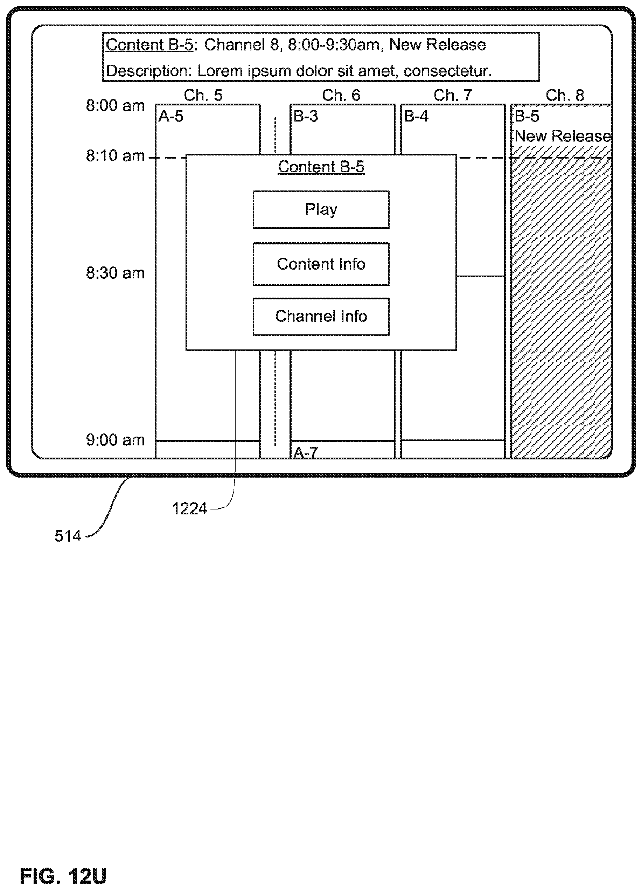

In Fig. 12T, the user has selected content item B-5 with a long click (e.g., a click and hold) on touch-sensitive surface 451 (e.g., an input having a duration longer than a predetermined duration threshold, such as .1, .3 or .5 seconds). In response, the electronic device displays dialog box 1224, as illustrated in Fig. 12U. Dialog box 1224 optionally includes a content item information element and a channel information element, as described with reference to Fig. 12Q. Dialog box 1224 optionally also includes a play element for playing content item B-5 on the display 514 (e.g., if the user selects the play button, content item B-5 is optionally played on the display).

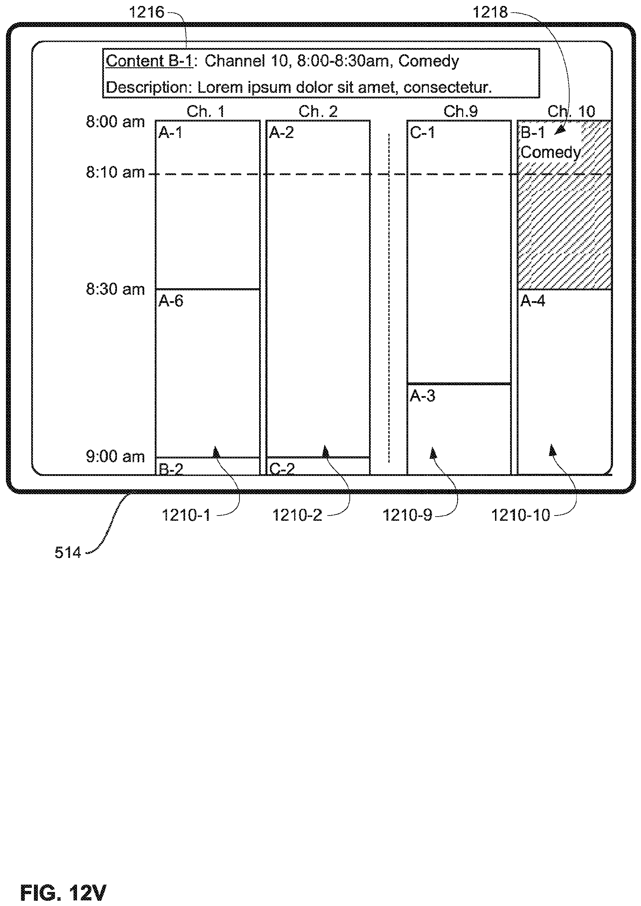

In some embodiments, the content guide includes not only channels with currently-available content items of the currently-designated category, but also includes channels with future content of the currently-designated category within a predetermined time period of a current time. For example, in Fig. 12V, the currently-designated category is category A. Thus, the content guide includes arrays 1210-1 and 1210-2, corresponding to channels 1 and 2, which have currently-available content of category A. The content guide also includes arrays 1210-9 and 1210-10, corresponding to channels 9 and 10, because channels 9 and 10 have future content of category A (content items A-3 and A-4) within a predetermined time period of the current time (e.g., within one hour of the current time). Further, in some embodiments, the arrays 1210 corresponding to channels that do not have currently-available content of the currently-designated category, but do have future content of the currently-designated category (e.g., arrays 1210-9 and 1210-10), are displayed in a different region of the user interface than are the arrays corresponding to the channels that have currently-available content of the currently-designated category (e.g., arrays 1210-1 and 1210-2), as illustrated in Fig. 12V.

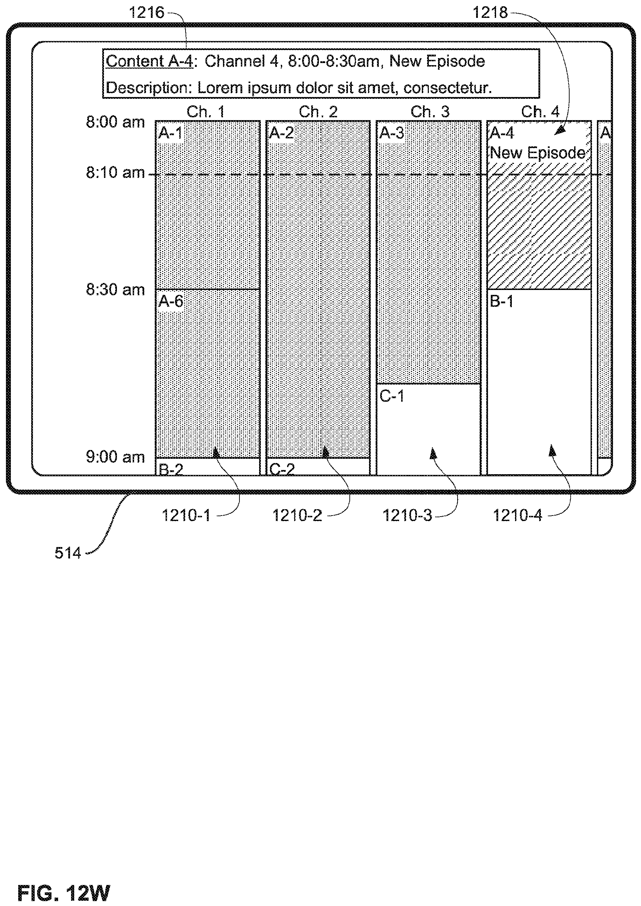

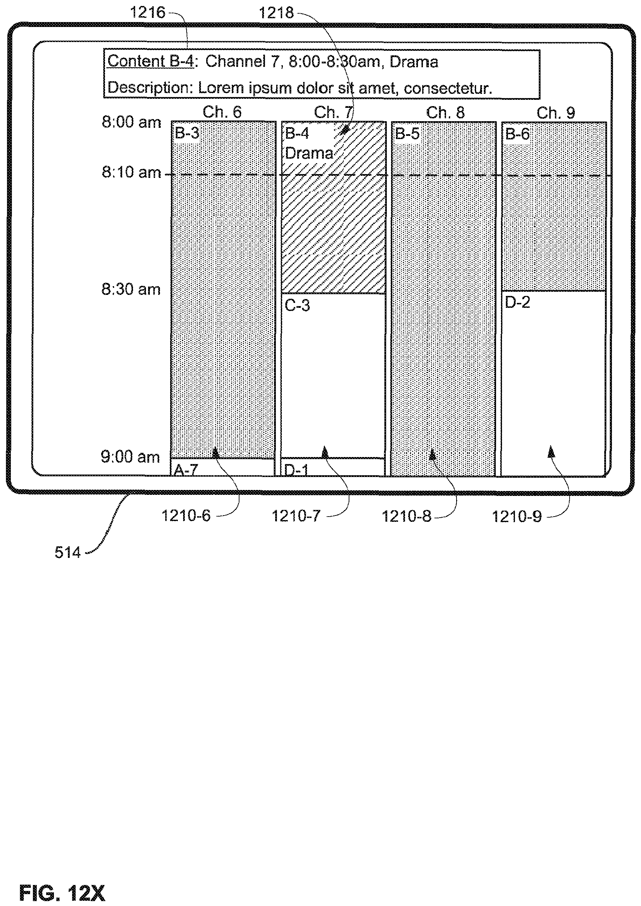

In some embodiments, content items of the currently-designated category are displayed with a different visual characteristic than are content items not of the currently-designated category. For example, in Fig. 12W, the currently-designated category is category A. As a result, content items in arrays 1210 that are of category A are displayed with a first visual characteristic (e.g., in color, with shading, etc.), while content items in arrays 1210 that are not of category A are displayed with a second visual characteristic, different from the first visual characteristic (e.g., in black and white, without shading, etc.). For example, each of content items B-1, B-2, C-1 and C-2 are displayed with a different visual characteristic than are content items A-1, A-2, A-3 and A-6. It is understood that in some embodiments, the currently-selected content item 1218 is displayed with yet another visual characteristic so that a user is able to visually differentiate the currently-displayed content item 1218 from other content items. If the user changes the currently-designated category, the content guide is optionally updated with channels corresponding to the changed category, and the content items in the resulting content guide are displayed analogously to above. For example, in Fig. 12X, the user has changed the currently-designated category to category B. In response, the electronic device has updated the content guide to include channels 6-9, and has displayed content items of category B (e.g., B-3, B-4, B-5 and B-6) with a first visual characteristic, and content items not of category B (e.g., A-7, C-3, D-1 and D-2) with a second visual characteristic, as described above.

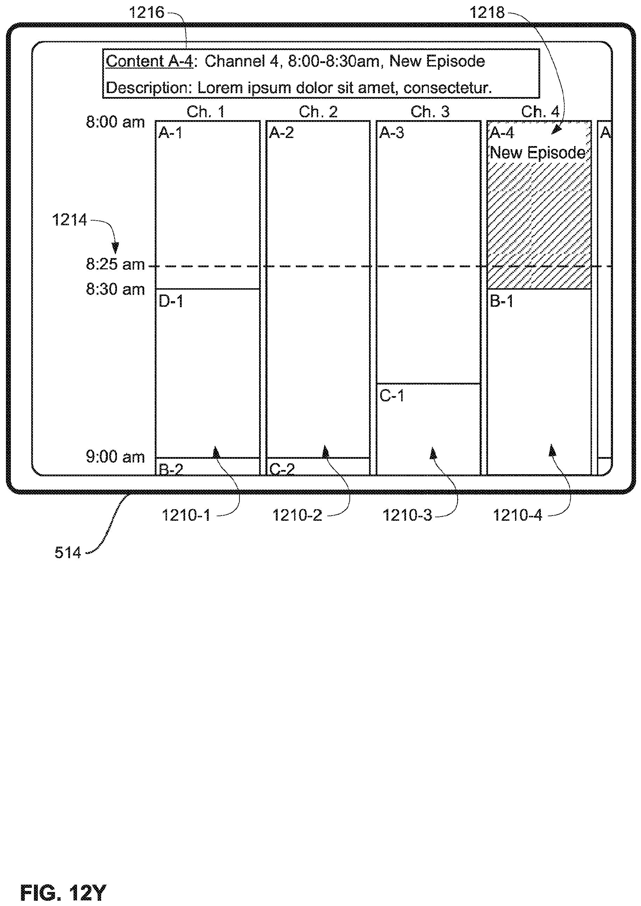

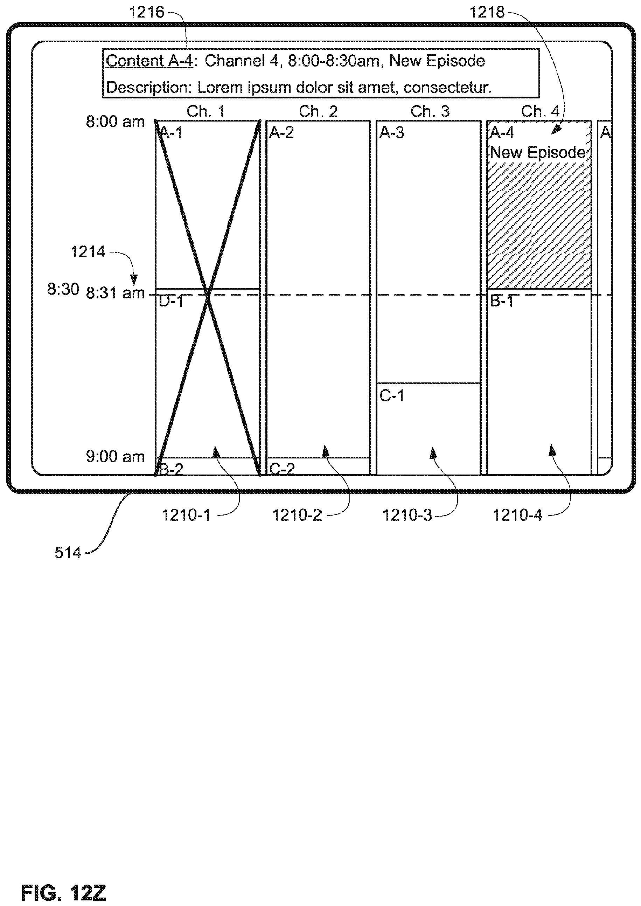

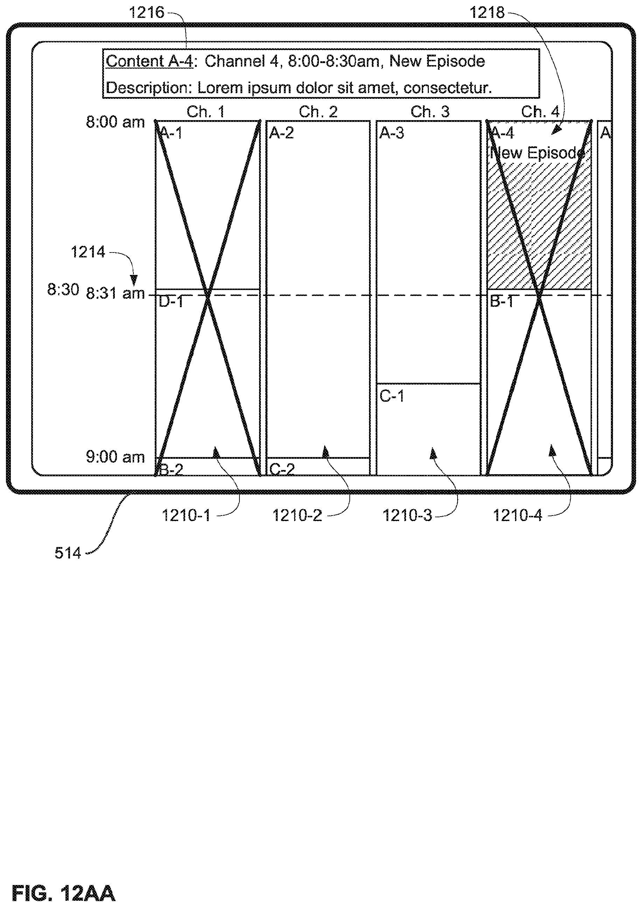

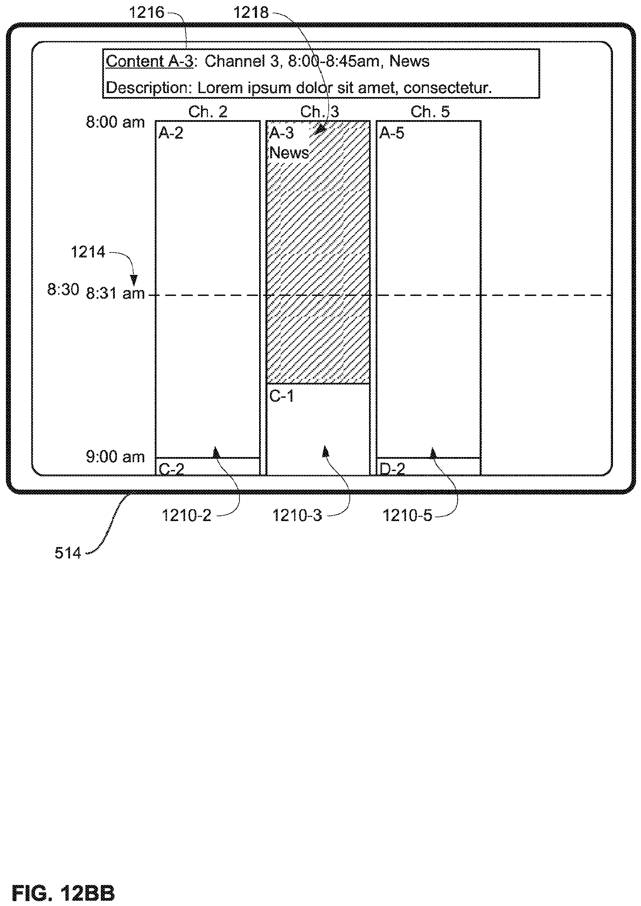

Figs. 12Y-12Z and 12AA-12FF illustrate various actions of the electronic device when a channel included in the content guide no longer has currently-available content of the currently-designated category. In Fig. 12Y, the currently-designated category is category A. Further, channels 1-4 have currently-available content of category A, because current time indicator 1214 reflects that content items A-1, A-2, A-3 and A-4 are currently-playing on channels 1-4, respectively. In Fig. 12Z, current time indicator 1214 has progressed to 8:31 am. At 8:31am, channels 2 and 3 still have currently-available content of category A (e.g., content items A-2 and A-3). However, channels 1 and 4 no longer have currently-available content of category A-channel 1 has currently-available content of category D (e.g., content item D-1), and channel 4 has currently-available content of category B (e.g., content item B-1). In response, the electronic device removes array 1210-1 (corresponding to channel 1) from the content guide, because the currently-available content of channel 1 is not of category A (the currently-designated category). However, in some embodiments, the electronic device does not remove array 1210-4 (corresponding to channel 4) from the content guide. In some embodiments, this is because the currently-selected content item 1218 is on channel 4, and the electronic device does not remove an array corresponding to a channel from the content guide if that channel has a content item that is currently-selected. In some embodiments, however, the electronic device removes arrays corresponding to channels without currently-available content of the currently-designated category regardless of whether a content item on those channels is currently-selected, as illustrated in Fig. 12AA. Fig. 12BB illustrates the content guide having arrays 1210-1 (corresponding to channel 1) and 1210-4 (corresponding to channel 4) removed therefrom.

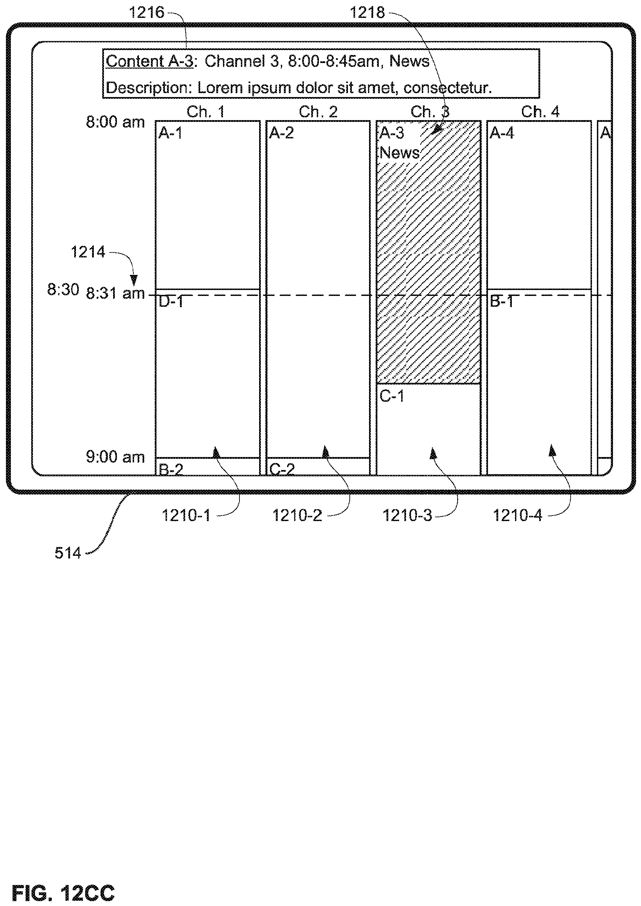

In some embodiments, the electronic device only removes arrays corresponding to channels without currently-available content of the currently-designated category after the content guide has been dismissed from the display. For example, in Fig. 12CC, channels 1 and 4 no longer have currently-available content of category A-the currently-designated category, as described with reference to Figs. 12Z and 12AA. However, the electronic device does not remove arrays 1210-1 (corresponding to channel 1) and 1210-4 (corresponding to channel 4) from the content guide.

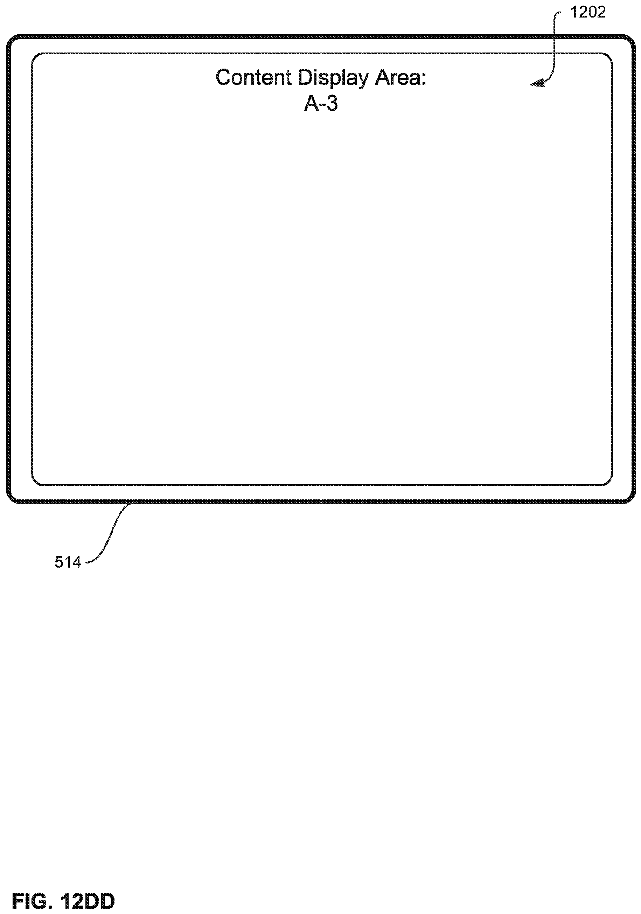

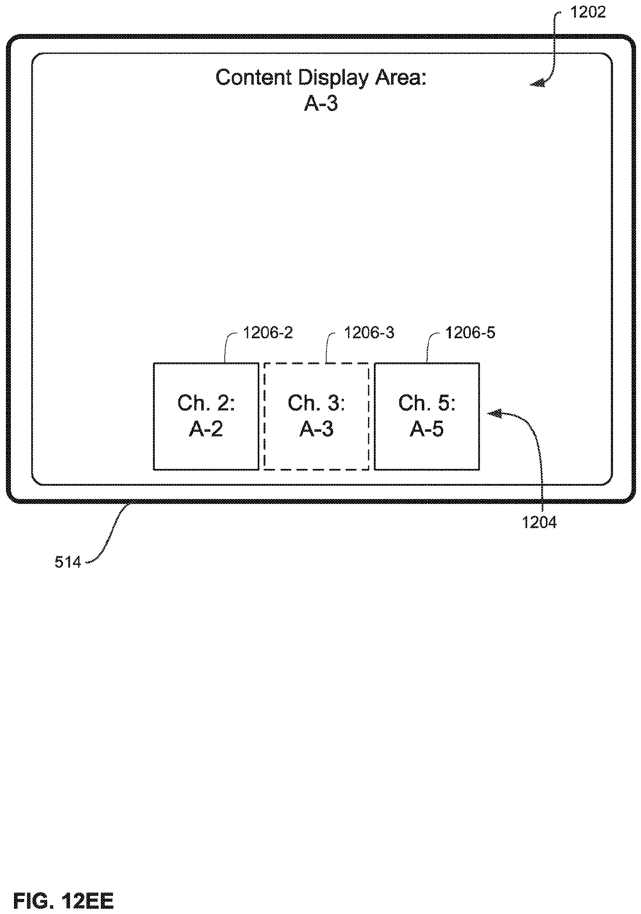

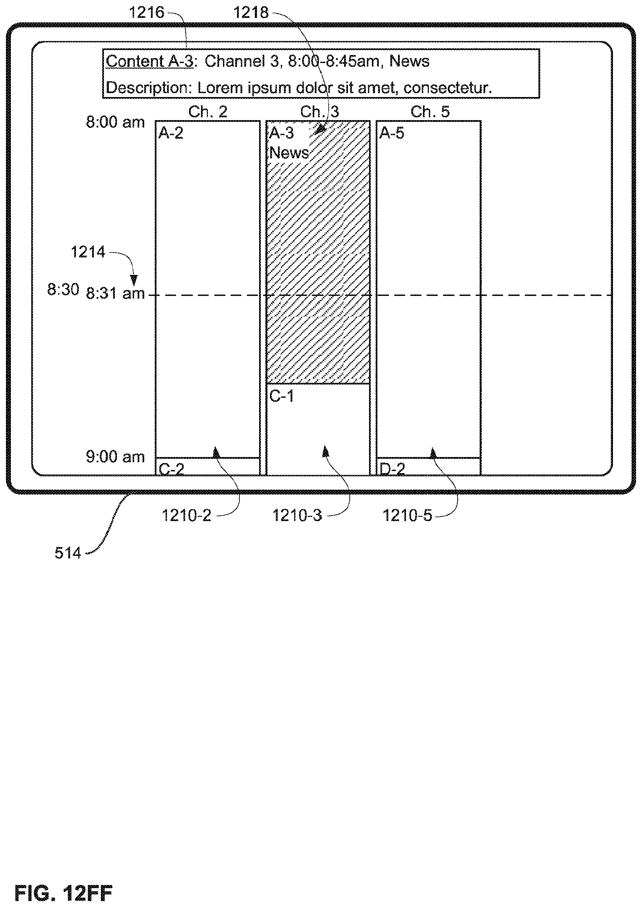

In Fig. 12DD, the user has dismissed the content guide from display 514 (e.g., by requesting playback of content item A-3 on display 514). In Fig. 12EE, the user has requested display of channel bar 1204. Channel bar 1204 does not include representations 1206 corresponding to channels 1 and 4, because as previously discussed, channels 1 and 4 no longer have currently-available content of category A-the currently-designated category. In Fig. 12FF, the user has requested display of the content guide. Similar to as with the channel bar 1204 in Fig. 12EE, the content guide in Fig. 12FF does not include arrays 1210 corresponding to channels 1 and 4, because as previously discussed, channels 1 and 4 no longer have currently-available content of category A-the currently-designated category. Therefore, as described with reference to Figs. 12CC-12FF, in some embodiments, the electronic device only removes arrays corresponding to channels without currently-available content of the currently-designated category from the content guide (or representations corresponding to channels without currently-available content of the currently-designated category from the channel bar) after the content guide (or the channel bar) has been dismissed from display 514. When the content guide (or the channel bar) are redisplayed on display 514, the content guide (or the channel bar) optionally no longer includes the channels that do have currently-available content of the currently-designated category.

Figs. 13A-13L are flow diagrams illustrating a method 1300 of viewing, navigating and playing current and future content from channels available on an electronic device in accordance with some embodiments of the disclosure. The method 1300 is optionally performed at an electronic device such as device 100, device 300 or device 500 as described above with reference to Figs. 1A-1B, 2-3 and 5A-5B. Some operations in method 1300 are, optionally, combined and/or the order of some operations is, optionally, changed.

As described below, the method 1300 provides ways in which a user interacts with a device for viewing, navigating and playing current and future content from channels available on the device. The method reduces the cognitive burden on a user when interacting with a user interface (e.g., a playlist or now playing user interface) of the device of the disclosure, thereby creating a more efficient human-machine interface. For battery-operated electronic devices, increasing the efficiency of the user's interaction with the user interface conserves power and increases the time between battery charges.

In some embodiments, an electronic device (e.g., device 100, 300 or 500) with a display device (e.g., a display device included in or coupled to the electronic device, such as display 514 in Fig. 5A) and one or more input devices (e.g., one or more input devices included in or coupled to the electronic device; for example, a second electronic device, such as a remote control, with a touch-sensitive surface, such as remote 510 in Figs. 5A-5B) generates (1302) for display, on the display device, a user interface that includes concurrently displaying playing content for a respective channel and displaying a channel bar including a plurality of representations (e.g., images, icons, other visual elements) of a first plurality of channels in a respective order along a first axis in a user interface (e.g., displaying the representations horizontally along the bottom of the user interface, each representation being adjacent to another representation. The user interface optionally includes a content display area in which content such as video is displayed, and a channel bar area in which the plurality of representations is displayed) that correspond to currently-available content on the first plurality of channels, such as in Fig. 12A (e.g., each representation in the channel bar corresponds to a content item that is currently-available on that channel. Selection of a representation optionally causes playback of the corresponding currently-available content item in the user interface). In some embodiments, while the channel bar is displayed on the display device, the electronic device receives (1304) an input (e.g., an input from a remote control, such as a click of a button on the remote control, or a click of a touch-sensitive surface on the remote control) corresponding to a request to display a content guide on the display device, such as in Figs. 12A-12B. In some embodiments, in response to receiving the input, the electronic device generates (1306) for display on the display device, an updated user interface that includes: displaying the content guide in the updated user interface, the content guide including information about content items for a second plurality of channels, including a first channel and a second channel, included in the first plurality of channels, the content items including currently-available content and future content, and the information arranged in adjacent arrays that are organized in the respective order along the first axis (1308), such as in Fig. 12D (e.g., the order in which the channels appear horizontally in the content guide optionally corresponds to the order in which the channels appear horizontally in the channel bar). In some embodiments, the channels that appear in the content guide are the same channels, in the same order, as appear in the channel bar. In some embodiments, the arrays include a first array, representing the first channel, that extends along a second axis in the updated user interface (e.g., vertically in the updated user interface), the first array including information about content items for the first channel, the information arranged along the second axis in the first array in accordance with times at which the content items for the first channel are available on the first channel (1310); and a second array, representing the second channel, displayed along the second axis in the updated user interface, the second array including information about content items for the second channel, the information arranged along the second axis in the second array in accordance with times at which the content items for the second channel are available on the second channel (1312), such as in Fig. 12D (e.g., channels are optionally represented in the content guide as columns arranged horizontally). The columns optionally include content items for the channels that are arranged vertically within each column, where the content items are arranged vertically according to the time that each content item is available on that channel. For example, a column representing a first channel optionally displays information about a currently-available content item at the top of the column, and displays future content items progressively further down the column as the availability-time for those content items is further into the future. In some embodiments, while displaying the content guide, an input is received, and if the input is a horizontal swipe, the columns in the content guide are scrolled, and if the input is a vertical swipe, the content items in the channel-columns are scrolled.

In some embodiments, generating the updated user interface further includes: ceasing displaying the playing content for the respective channel in response to receiving the input corresponding to the request to display the content guide on the display device (1314), such as in Fig. 12D. In some embodiments, the second plurality of channels in the content guide correspond to the first plurality of channels in the channel bar (1316), such as in Figs. 12A-12D (e.g., the channels in the channel bar are the same channels as are in the content guide). For example, if the channel bar includes only sports channels, the content guide would optionally include only the same sports channels. In some embodiments, respective positions of the arrays representing the second plurality of channels in the content guide correspond to respective positions of the representations of the first plurality of channels in the channel bar (1318), such as in Figs. 12A-12D (e.g., the respective positions of the channels in the channel bar optionally correspond to the respective positions of the corresponding channel arrays in the content guide). For example, if a first channel is to the left of a second channel in the channel bar, the channel array for the first channel is also to the left of the channel array for the second channel in the content guide. In some embodiments, while displaying the content guide, the electronic device displays (1320), in the updated user interface, information about a currently-selected content item in the content guide, such as in Fig. 12D (e.g., displaying information such as the title, description, show time, etc., of a content item that is currently-selected in the content guide). The information is optionally displayed along the top of the updated user interface, and is updated as the currently-selected content item changes in response to user input.

In some embodiments, the electronic device displays (1322) a representation of the currently-selected content item in a respective array of the arrays with a first visual characteristic (e.g., displaying the currently-selected content item in the content guide in color, with a border, with shading, etc.), and displays representations of unselected content items in the arrays with a second visual characteristic, different from the first visual characteristic, such as in Fig. 12D (e.g., displaying the unselected content items in the content guide in black and white, without a border, without shading, etc.). In some embodiments, displaying the representation of the currently-selected content item with the first visual characteristic includes displaying (1324), in the representation of the currently-selected content item, information of a first type about the currently-selected content item, such as in Fig. 12D (e.g., when the representation of a content item is selected in the content guide, the representation of the content item is optionally updated to include additional information about the content item that was not displayed before the content item was selected). For example, the representation of the content item optionally displayed the title of the content item before it was selected, and after it is selected, the representation is optionally updated to include information of another type, such as the rating of the content item, the run time of the content item, the genre of the content item, etc.

In some embodiments, the representations of the unselected content items do not include respective information of the first type about the respective unselected content items (1326), such as in Fig. 12D. In some embodiments, the user interface (e.g., a live TV application) is associated with a first category of channels and a second category of channels (1328) (e.g., more than one type of channel has content that is currently-available. For example, sports channels and news channels have content that is currently-available), channels in the first category of channels include content (e.g., currently-playing content) that shares a first common characteristic (1330) (e.g., a common subject matter or theme, such as being sports-related content for currently-playing or soon to be playing content), channels in the second category of channels include content (e.g., currently-playing content) that shares a second common characteristic, different from the first common characteristic (1332) (e.g., news-related content for currently-playing or soon to be playing content), and the first plurality of channels in the channel bar and the second plurality of channels in the content guide are selected so as to include channels from the first category of channels but not channels from the second category of channels (1334), such as in Fig. 12D (e.g., the channel bar and the content guide are configured to display one category of channels, such as sports channels or news channels). When sports channels (e.g., channels with currently-playing sports content and, optionally, scheduled soon-to-be-playing sports content) are displayed, news channels (e.g., channels with currently-playing news content and, optionally, scheduled soon-to-be-playing news content) are optionally not displayed, and vice versa.

In some embodiments, while displaying the content guide, the electronic device receives (1336) an input corresponding to a request to display channels from the second category of channels instead of the first category of channels, such as in Figs. 12I-12J. In some embodiments, in response receiving the input (1338): the electronic device ceases display (1340) of the first category of channels in the content guide; and the electronic device displays (1342) a plurality of channels from the second category of channels in the content guide, such as in Fig. 12J (e.g., switching the currently-designated category of channels from the first category of channels to the second category of channels switches the content guide from displaying the first category of channels-e.g., sports channels-to the second category of channels-e.g., news channels). In some embodiments, the input corresponding to the request to display channels from the second category of channels instead of the first category of channels comprises (1344): scrolling (1346) past an end of the content guide along the first axis (e.g., scrolling horizontally to the very left or very right of the content guide); and after scrolling past the end of the content guide along the first axis, selecting (1348) the second category of channels from a list of categories of channels, the list of categories of channels including the first category of channels and the second category of channels, such as in Figs. 12I-12J (e.g., once a user scrolls past an end of the content guide, a list of categories of channels is optionally displayed in the user interface. The user then optionally selects a category of channels from the list of categories).

In some embodiments, the input corresponding to the request to display channels from the second category of channels instead of the first category of channels comprises: scrolling, along the first axis, through the first category of channels in the content guide to the second category of channels in the content guide (1350), such as in Figs. 12K-12M (e.g., a user optionally switches from one category of channels to another category of channels by scrolling horizontally through the categories of channels in the content guide). For example, the user optionally scrolls through all of the channels in the first category of channels in the content guide, and reaches the second category of channels, at which point the user optionally scrolls through all of the channels in the second category of channels, and reaches a third category of channels, and so on. In some embodiments, receiving the input corresponding to the request to display channels from the second category of channels instead of the first category of channels comprises: receiving (1352) an input corresponding to a request to switch the channel bar from displaying the first category of channels to displaying the second category of channels.

In some embodiments, the user interface is associated with a first category of channels and a second category of channels (1354) (e.g., more than one type of channel has content that is currently-available. For example, sports channels and news channels have content that is currently-available). In some embodiments, channels in the first category of channels include content (e.g., currently-playing content) that shares a first common characteristic (1356) (e.g., a common subject matter or theme, such as being sports-related content for currently-playing or soon to be playing content), channels in the second category of channels include content (e.g., currently-playing content) that shares a second common characteristic, different from the first common characteristic (1358) (e.g., news-related content for currently-playing or soon to be playing content), and the first plurality of channels in the channel bar are selected so as to include channels from the first category of channels but not channels from the second category of channels (1360) (e.g., the channel bar is configured to display one category of channels, such as sports channels or news channels). For example, when sports channels (e.g., channels with currently-playing sports content and, optionally, scheduled soon-to-be-playing sports content) are displayed, news channels (e.g., channels with currently-playing news content and, optionally, scheduled soon-to-be-playing news content) are optionally not displayed, and vice versa. In some embodiments, before receiving the input corresponding to the request to display the content guide on the display device, the electronic device receives (1362) an input corresponding to a request to switch the channel bar from displaying the first category of channels to displaying the second category of channels (e.g., switching the channel bar from a sports channel bar to a news channel bar). In some embodiments, in response to receiving the input (1364): the electronic device ceases display (1366) of the first category of channels in the channel bar; and displays (1368) the second category of channels in the channel bar. In some embodiments, the input corresponding to the request to display the content guide on the display device is received while the channel bar is displaying the second category of channels and not the first category of channels, and the second plurality of channels in the content guide includes channels from the second category of channels but not the first category of channels (1370) (e.g., the channels displayed in the content guide are optionally controlled by the channels displayed in the channel bar). For example, if the content guide is displayed while a sports channel bar is displayed, the content guide optionally displays sports channels (like the channel bar). If the content guide is displayed while a news channel bar is displayed, the content guide optionally displays news channels (like the channel bar).

In some embodiments, while displaying the content guide, the electronic device receives (1372) an input corresponding to a selection of a representation of a respective content item in the content guide (e.g., an input from a remote control, such as a click of a button on the remote control, or a click of a touch-sensitive surface on the remote control to select the respective content item). In some embodiments, in response to receiving the input (1374): in accordance with a determination that the respective content item is currently-available, the electronic device plays (1376) the respective content item on the display device , such as in Figs. 12N-12O (e.g., if the user has selected a content item that is currently playing on its respective channel, the content item is optionally played in response to the selection); and in accordance with a determination that the respective content item is not currently-available (e.g., the user has selected a content item that is not currently playing on its respective channel, such as a content item that will be playing in the future), the electronic device displays (1378) one or more selectable user interface elements on the display that enable a user to perform operations associated with future playback of the content item, such as in Figs. 12P-12Q.

In some embodiments, the selectable user interface elements include (1380): a notification element for providing a notification when the respective content item becomes available (e.g., a reminder button for being reminded about the content item when it becomes available. If the user selects this button, a reminder is optionally provided to the user at a predetermined time period before the start time of the content item, such as 15, 10 or 5 minutes before the start time of the content item); a content item information element for displaying a user interface corresponding to the respective content item (e.g., a button for displaying a content item page. For example, if the user selects this button, a content item-specific page with information about the content item is optionally displayed on the display device, including information such as a description of the content item, the channels on which it is available, the times at which it is available, the rating of the content item, the run time of the content item, the title of the content item, the genre of the content item, etc.); and a channel information element for displaying a user interface corresponding to a respective channel on which the respective content item is available, such as in Fig. 12Q (e.g., a button for displaying a channel page. For example, if the user selects this button, a channel-specific page with information about the channel on which the content items is available is optionally displayed on the display device, including information such as the name of the channel, other content available on the channel, the genre of the channel, etc.).

In some embodiments, while displaying the content guide, the electronic device receives (1382) an input associated with a currently-available content item in the content guide (e.g., an input from a remote control, such as a click of a button on the remote control, or a click of a touch-sensitive surface on the remote control). In some embodiments, in response to receiving the input (1384): in accordance with a determination that the input has a duration that is shorter than a threshold time period (e.g., a click input, such as a click of a button on the remote control, or a click of a touch-sensitive surface on the remote control and, optionally an intensity greater than an intensity threshold), the electronic device plays (1386) the currently-available content item on the display device, such as in Figs. 12R-12S. In some embodiments, in accordance with a determination that the input has a duration that is longer than the threshold time period (e.g., a click-and-hold input, such as a click-and-hold of a button on the remote control, or a click-and-hold of a touch-sensitive surface on the remote control and, optionally an intensity greater than an intensity threshold), the electronic device displays (1388) one or more selectable user interface elements on the display that enable a user to perform operations associated with the currently-available content item, such as in Figs. 12T-12U.

In some embodiments, the selectable user interface elements include (1390): a play element for playing the currently-available content item on the display device (e.g., if the user selects the play button, the content item is optionally played on the display); a content item information element for displaying a user interface corresponding to the currently-available content item on the display (e.g., a button for displaying a content item page. For example, if the user selects this button, a content item-specific page with information about the content item is optionally displayed on the display device, including information such as a description of the content item, the channels on which it is available, the times at which it is available, the rating of the content item, the run time of the content item, the title of the content item, the genre of the content item, etc.); and a channel information element for displaying a user interface corresponding to a respective channel on which the currently-available content item is available, such as in Fig. 12U (e.g., a button for displaying a channel page). For example, if the user selects this button, a channel-specific page with information about the channel on which the content items is available is optionally displayed on the display device, including information such as the name of the channel, other content available on the channel, the genre of the channel, etc.

In some embodiments, the second plurality of channels in the content guide has currently-available content having a first shared characteristic (1392) (e.g., a common subject matter or theme, such as being sports-related content). In some embodiments, the updated user interface is associated with a first category of channels and a second category of channels (1394), channels in the first category of channels include currently-available content having the first shared characteristic (1396), channels in the second category of channels do not have currently-available content having the first shared characteristic, but have future content having the first shared characteristic within a predetermined time threshold (1398) (e.g., 30 minutes, 1 hour or 2 hours) of a current time, and the second plurality of channels in the content guide are selected so as to include channels from the first and second categories of channels (1398-2), such as in Fig. 12V (e.g., the content guide optionally includes channels that have currently-available content of the currently-designated category-e.g., sports-as well as channels that do not have such currently-available content but do have future content that of the currently-designated category). In some embodiments, the channels in the first category of channels and the channels in the second category of channels are displayed in separate regions of the content guide (1398-4), such as in Fig. 12V (e.g., the channels in the second category of channels are accessible in response to a scroll input detected at an input device, such as a remote control, for scrolling past the channels in the first category of channels in the content guide into the channels in the second category of channels).

In some embodiments, the second plurality of channels in the content guide includes content items having the first shared characteristic, and content items not having the first shared characteristic (1398-6) (e.g., currently-available content items on the second plurality of channels optionally have the shared characteristic, but not all of the future content items on the second plurality of channels have the shared characteristic). For example, all of the channels have sports content currently-available, but one of the channels has a news content item scheduled in the future. In some embodiments, representations of the content items having the first shared characteristic in the content guide have a first visual characteristic in the content guide (1398-8) (e.g., the content items having the shared characteristic are displayed with a first color, a first shading, a first border style, etc.), and representations of the content items not having the first shared characteristic have a second visual characteristic, different from the first visual characteristic, in the content guide (1398-10), such as in Fig. 12W (e.g., content items in the category of content that is currently-selected have a first visual characteristic, and content items in all other categories of content have a second visual characteristic). For example, the content items not having the shared characteristic are displayed with a second color, a second shading, a second border style, etc.

In some embodiments, while displaying the representations of the content items having the first shared characteristic with the first visual characteristic and the representations of the content items not having the first shared characteristic with the second visual characteristic, the electronic device receives (1398-12) an input corresponding to a request to change a currently-designated characteristic (e.g., an input to change channel bars or an input to change channel categories in the content guide) from the first shared characteristic (e.g., sports-related content) to a second shared characteristic (e.g., news-related content). In some embodiments, in response to receiving the input (1398-14): the electronic device modifies (1398-16) the content guide to include a third plurality of channels that have currently-available content having the second shared characteristic instead of the first shared characteristic, the third plurality of channels including content items having the second shared characteristic, and content items not having the second shared characteristic, such as in Fig. 12X (e.g., currently-available content items on the third plurality of channels have the second shared characteristic, but not all of the future content items on the third plurality of channels have the second shared characteristic). For example, all of the channels have news content currently-available, but one of the channels has a movie content item scheduled in the future. In some embodiments, the electronic device displays (1398-18) representations of the content items having the second shared characteristic with the first visual characteristic; and the electronic device displays (1398-20) representations of the content items not having the second shared characteristic with the second visual characteristic, such as in Fig. 12X (e.g., the same visual characteristic that was used to distinguish the content items with the first shared characteristic from the other content items is optionally used to distinguish the content items with the second shared characteristic from the other content items after the currently-designated characteristic is changed).

In some embodiments, while displaying the second plurality of channels having currently-available content having a shared characteristic in the content guide, the electronic device determines (1398-22) that the first channel no longer has currently-available content having the shared characteristic, such as in Fig. 12Z (e.g., the currently-playing content on the first channel used to have the shared characteristic, but that content is optionally over, and the next content on the first channel optionally doesn't have the shared characteristic). In some embodiments, in response to determining that the first channel no longer has currently-available content having the shared characteristic, the electronic device maintains (1398-24) the first channel in the content guide and in the channel bar, such as in Fig. 12Z (e.g., maintain the first channel in the content guide and in the channel bar, even if the current content does not have the shared characteristic, to prevent changes to the user interface that may confuse the user). In some embodiments, while displaying the second plurality of channels having currently-available content having a shared characteristic in the content guide, the electronic device determines (1398-26) that the first channel no longer has currently-available content having the shared characteristic (e.g., the currently-playing content on the first channel used to have the shared characteristic, but that content is optionally over, and the next content on the first channel optionally doesn't have the shared characteristic). In some embodiments, in response to determining that the first channel no longer has currently-available content having the shared characteristic, the electronic device removes (1398-28) the first channel from the content guide and the channel bar, such as in Fig. 12Z.

In some embodiments, while displaying the second plurality of channels having currently-available content having a shared characteristic in the content guide, the electronic device determines (1398-30) that the first channel no longer has currently-available content having the shared characteristic (e.g., the currently-playing content on the first channel used to have the shared characteristic, but that content is optionally over, and the next content on the first channel optionally doesn't have the shared characteristic). In some embodiments, in response to determining that the first channel no longer has currently-available content having the shared characteristic (1398-32): in accordance with a determination that a content item on the first channel is currently-selected, the electronic device maintains (1398-34) the first channel in the content guide and in the channel bar, such as in Fig. 12Z; and in accordance with a determination that a content item on the first channel is not currently-selected, the electronic device removes (1398-36) the first channel from the content guide and the channel bar, such as in Fig. 12Z. For example, if the user has selected a content item on the first channel, optionally maintain the first channel in the content guide so as to not cause a change in the user interface that would be unexpected or confusing to the user. On the other hand, if the user has not selected a content item on the first channel, the first channel is optionally removed, as its removal may be unlikely to confuse the user, whose attention may be on another channel.

In some embodiments, while displaying the second plurality of channels having currently-available content having a shared characteristic in the content guide, the electronic device determines (1398-38) that the first channel no longer has currently-available content having the shared characteristic (e.g., the currently-playing content on the first channel used to have the shared characteristic, but that content is optionally over, and the next content on the first channel does not have the shared characteristic). In some embodiments, in response to determining that the first channel no longer has currently-available content having the shared characteristic, the electronic device maintains (1398-40) the first channel in the content guide and in the channel bar, such as in Fig. 12CC. In some embodiments, after maintaining the first channel in the content guide and in the channel bar, the electronic device ceases display (1398-42) of the content guide and the channel bar in the user interface, such as in Fig. 12DD (e.g., in response to an input corresponding to a request to cease display of the content guide and/or the channel bar). In some embodiments, after ceasing display of the content guide and the channel bar in the user interface (e.g., sometimes, for a predetermined amount of time, such as 5 seconds, 30 seconds or 1 minute), the electronic device redisplays (1398-44) the content guide and the channel bar in the user interface (e.g., in response to an input corresponding to a request to display the content guide and/or the channel bar), the content guide and the channel bar having the first channel removed therefrom, such as in Figs. 12EE and 12FF (e.g., remove the first channel from the content guide and the channel bar only after the user has dismissed the channel bar and the content guide from the display. The next time the user requests display of the channel bar or the content guide, the channel bar or the content guide is optionally displayed without the first channel).

In some embodiments, the content guide includes representations of one or more content items that are available on-demand, and the representations of the one or more content items that are available on-demand include a visual indication indicating that the content item is available for on-demand presentation (1398-46), such as in Fig. 12D. In some embodiments, in response to receiving the input corresponding to the request to display the content guide on the display device, the electronic device displays (1398-48) an animation of the representations of the first plurality of channels in the channel bar moving out of the user interface in a first direction while the arrays of the content guide move into the user interface in the first direction, the arrays of the content guide aligned with and corresponding to the representations of the first plurality of channels in the channel bar, such as in Figs. 12C-12D (e.g., the channel bar slides up out of the user interface as the content guide slides up into the user interface).

In some embodiments, the input corresponding to the request to display the content guide on the display device comprises 1398-50: scrolling past an end of the channel bar along the first axis (1398-52) (e.g., scrolling horizontally to the very left or very right of the channel bar); and after scrolling past the end of the channel bar along the first axis, selecting a content guide user interface element displayed adjacent to the channel bar for displaying the content guide (1398-54), such as in Fig. 12B (e.g., once a user scrolls past an end of the channel bar, a content guide user interface element is optionally displayed adjacent the channel bar. The user then optionally selects the content guide user interface element to display the content guide). In some embodiments, receiving the input corresponding to the request to display the content guide on the display device comprises: receiving (1398-56) a selection input (e.g., a tap input, a click input, or another input having an intensity greater than an intensity threshold for shorter than a threshold time period) in a first predefined region (e.g., upper region) on a touch-sensitive surface of a second electronic device (e.g., a remote control), wherein the touch-sensitive surface includes a plurality of predefined regions, including the first predefined region, the plurality of predefined regions being associated with different functions, such as in Fig. 12A (e.g., the touch-sensitive surface optionally has two or more predefined regions). For example, an upper region that, when clicked, displays the content guide on the display device, a left region that, when clicked, rewinds the currently-playing content in the user interface, and a right region that, when clicked, fast forwards the currently-playing content in the user interface. In some embodiments, predefined regions other than the region associated with displaying the content guide perform no action in response to being clicked.

In some embodiments, while displaying the content guide, the electronic device displays (1398-58) a current time indicator in the updated user interface that indicates a current play position in currently-available content on the second plurality of channels in the content guide, such as in Fig. 12D (e.g., a line that extends across the arrays in the content guide along the first axis, the position of the line relative to the start/end times of the content times reflecting the relative current play position with respect to those start/end times. The relative position of the line with respect to the content items optionally changes as the current play position/current time changes). In some embodiments, the updated user interface further includes reference time indicators displayed along the second axis, adjacent the arrays in the content guide, wherein representations of content items in the arrays in the content guide are positioned along the second axis with respect to the reference time indicators in a manner corresponding to start and end times of the content items (1398-60), such as in Fig. 12D (e.g., the reference time indicators reflect absolute times at predefined intervals-e.g., 30 minute intervals-during which the content items are scheduled to be available. For example, the reference time indicators indicate 8pm, 8:30pm, 9pm, etc., and the representations of the content items are positioned with respect to those reference time indicators based on the start/end times of the content items). In some embodiments, as the current time indicator approaches a respective position of a respective reference time indicator in the updated user interface, the respective position of the respective time indicator in the updated user interface is modified so as to move the respective time indicator to not obscure the current time indicator in the updated user interface (1398-62), such as in Figs. 12E-12G (e.g., the respective time indicators move out of the way of the current time indicator as the current time indicator moves along the second axis in the updated user interface).

It should be understood that the particular order in which the operations in Figs. 13A-13L have been described is merely exemplary and is not intended to indicate that the described order is the only order in which the operations could be performed. One of ordinary skill in the art would recognize various ways to reorder the operations described herein. Additionally, it should be noted that details of other processes described herein with respect to other methods described herein (e.g., methods 700, 900 and 1100) are also applicable in an analogous manner to method 1300 described above with respect to Figs. 13A-13L. For example, the representations of channels described above with reference to method 1300 optionally have one or more of the characteristics of the representations of channels described herein with reference to other methods described herein (e.g., methods 700, 900 and 1100). For brevity, these details are not repeated here.

The operations in the information processing methods described above are, optionally, implemented by running one or more functional modules in an information processing apparatus such as general purpose processors (e.g., as described with respect to Figs. 1A, 3, 5A and 17) or application specific chips. Further, the operations described above with reference to Figs. 13A-13L are, optionally, implemented by components depicted in Figs. 1A-1B. For example, generating operations 1302 and 1306, and receiving operation 1304, are, optionally, implemented by event sorter 170, event recognizer 180, and event handler 190. Event monitor 171 in event sorter 170 detects a contact on touch-sensitive surface 451, and event dispatcher module 174 delivers the event information to application 136-1. A respective event recognizer 180 of application 136-1 compares the event information to respective event definitions 186, and determines whether a first contact at a first location on the touch-sensitive surface corresponds to a predefined event or sub-event, such as selection of an object on a user interface. When a respective predefined event or sub-event is detected, event recognizer 180 activates an event handler 190 associated with the detection of the event or sub-event. Event handler 190 optionally utilizes or calls data updater 176 or object updater 177 to update the application internal state 192. In some embodiments, event handler 190 accesses a respective GUI updater 178 to update what is displayed by the application. Similarly, it would be clear to a person having ordinary skill in the art how other processes can be implemented based on the components depicted in Figs. 1A-1B.

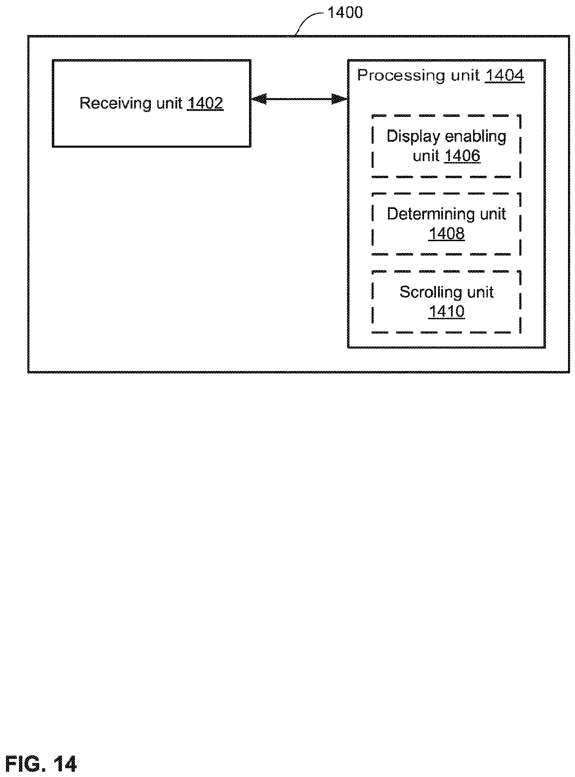

In accordance with some embodiments, Fig. 14 shows a functional block diagram of an electronic device 1400 (e.g., device 100 in Fig. 1A, 300 in Fig. 3 and/or 500 in Fig. 5A) configured in accordance with the principles of the various described embodiments. The functional blocks of the device are, optionally, implemented by hardware, software, or a combination of hardware and software, to carry out the principles of the various described embodiments. It is understood by persons of skill in the art that the functional blocks described in Fig. 1400 are, optionally, combined or separated into sub-blocks to implement the principles of the various described embodiments. Therefore, the description herein optionally supports any possible combination or separation or further definition of the functional blocks described herein.

As shown in Fig. 14, an electronic device 1400 optionally includes a receiving unit 1402 configured to receive inputs, and a processing unit 1404 coupled to the receiving unit 1402. In some embodiments, the processing unit 1404 includes a display enabling unit 1406, a determining unit 1408, and a scrolling unit 1410.

In some embodiments, the receiving unit 1402 is configured to, while a plurality of representations in a user interface is displayed on a display device, receive an input, via one or more input devices, corresponding to a selection of a respective representation of the plurality of representations corresponding to a first group of channels. In some embodiments, the processing unit 1404 is configured to: generate for display (e.g., with the display enabling unit 1406), on the display device, the plurality of representations of groups of channels along a first axis in the user interface, and in response to receiving the input, generate (e.g., with the display enabling unit 1406), for display on the display device, an updated user interface that includes: ceasing display of the plurality of representations of the groups of channels in the user interface; and displaying a plurality of representations of channels associated with the first group of channels along the first axis in the updated user interface. In some embodiments, the receiving unit 1402 is further configured to, while displaying the plurality of representations of the channels associated with the first group of channels in the updated user interface, receive a second input comprising a contact and a movement of the contact detected on a touch-sensitive surface of a device. In some embodiments, the processing unit 1404 is further configured to: in accordance with a determination (e.g., with the determining unit 1408) that the movement of the contact is in a direction substantially orthogonal to the first axis: cease display (e.g., with the display enabling unit 1406) of the plurality of representations of the channels associated with the first group of channels in the updated user interface; and display (e.g., with the display enabling unit 1406) a plurality of representations of channels associated with a second group of channels, different from the first group of channels, in the updated user interface.

In some embodiments, the processing unit 1404 is further configured to: in accordance with a determination (e.g., with the determining unit 1408) that the movement of the contact is in a direction substantially parallel to the first axis, scroll (e.g., with the scrolling unit 1410) through the plurality of representations of the channels associated with the first group of channels in accordance with the movement of the contact. In some embodiments, the receiving unit 1402 is further configured to, while displaying the plurality of representations of the channels associated with the first group of channels in the updated user interface, receive a second input corresponding to a request to redisplay the plurality of representations of the groups of channels. In some embodiments, the processing unit 1404 is further configured to: in response to receiving the second input, generate (e.g., with the display enabling unit 1406), for display on the display device, an updated user interface that includes: ceasing display of the plurality of representations of the channels associated with the first group of channels in the updated user interface; and redisplaying the plurality of representations of the groups of channels in the updated user interface. In some embodiments, the second input comprises: a first portion detected on a touch-sensitive surface of a device, the first portion comprising a first contact and a first movement of the first contact substantially parallel to the first axis, the first portion corresponding to a request to scroll to an end of the plurality of representations of the channels associated with the first group of channels, a second portion detected on the touch-sensitive surface of the device after the first portion, the second portion comprising a second contact and a second movement of the second contact, the second movement of the second contact being in substantially a same direction as the first movement of the first contact, and the second movement of the second contact being greater than a movement threshold. In some embodiments, the processing unit 1404 is further configured to: in response to receiving the second portion of the second input: scroll (e.g., with the scrolling unit 1410) past the end of the plurality of representations of the channels associated with the first group of channels, and display (e.g., with the display enabling unit 1406) a selectable user interface element adjacent to the end of the plurality of representations of the channels along the first axis, the selectable user interface element being for displaying the plurality of representations of the groups of channels; and receive selection (e.g., with the receiving unit 1402) of the selectable user interface element, wherein ceasing display of the plurality of representations of the channels and redisplaying the plurality of representations of the groups of channels are in response to receiving selection of the selectable user interface element.

In some embodiments, ceasing the display of the plurality of representations of the groups of channels in the user interface and displaying the plurality of representations of the channels associated with the first group of channels along the first axis in the updated user interface comprises: displaying (e.g., with the display enabling unit 1406) an animation of the plurality of representations of the channels associated with the first group of channels sliding into the updated user interface along the first axis so as to obscure the plurality of representations of the groups of channels. In some embodiments, the receiving unit 1402 is further configured to, while displaying the plurality of representations of the channels associated with the first group of channels along the first axis in the updated user interface, receive a second input corresponding to a request to display information related to a first channel of the first group of channels. In some embodiments, the processing unit 1404 is further configured to, in response to receiving the second input, display (e.g., with the display enabling unit 1406) the information related to the first channel in the updated user interface. In some embodiments, the plurality of representations of the channels associated with the first group of channels is displayed at a first location in the updated user interface, and the processing unit 1404 is further configured to: in response to receiving the second input, display (e.g., with the display enabling unit 1406) an animation of the plurality of representations of the channels associated with the first group of channels moving from the first location to a second location in the updated user interface in a direction substantially perpendicular to the first axis, wherein the information related to the first channel is displayed in an area between the first location and the second location in the updated user interface.

In some embodiments, the second input comprises: selection (e.g., with the receiving unit 1402) of the first channel of the first group of channels; and after the selection of the first channel, a contact detected (e.g., with the receiving unit 1402) in a first predefined region of a touch-sensitive surface of a device, the contact having an intensity greater than an intensity threshold, and the touch-sensitive surface having a plurality of predefined regions including the first predefined region. In some embodiments, the second input comprises: selection of the first channel of the first group of channels; and after the selection of the first channel, a contact and a movement of the contact detected on a touch-sensitive surface of a device, the movement of the contact being in a direction substantially perpendicular to the first axis. In some embodiments, the second input comprises: selection of the first channel of the first group of channels; and after the selection of the first channel, a contact detected on a touch-sensitive surface of a device, the contact having an intensity greater than an intensity threshold for longer than a time threshold.

In some embodiments, the receiving unit 1402 is further configured to, while displaying the information related to the first channel in the updated user interface, receive a third input corresponding to a request to select a second channel of the first group of channels. In some embodiments, the processing unit 1404 is further configured to, in response to receiving the third input: cease display (e.g., with the display enabling unit 1406) of the information related to the first channel in the updated user interface; and display (e.g., with the display enabling unit 1406) information related to the second channel in the updated user interface. In some embodiments, a first representation of a first channel of the first group of channels is a currently-selected representation, and the processing unit 1404 is further configured to: display (e.g., with the display enabling unit 1406) the first representation of the first channel with a first visual characteristic; and display (e.g., with the display enabling unit 1406) the representations of the channels of the first group of channels other than the first representation with a second visual characteristic, different from the first visual characteristic. In some embodiments, the receiving unit 1402 is further configured to, while displaying the first representation of the first channel with the first visual characteristic, receive a second input corresponding to a request to make a second representation of a second channel of the first group of channels the currently-selected representation, and the processing unit 1404 is further configured to, in response to receiving the second input: update (e.g., with the display enabling unit 1406) the first representation of the first channel to have the second visual characteristic instead of the first visual characteristic; and update (e.g., with the display enabling unit 1406) the second representation of the second channel to have the first visual characteristic instead of the second visual characteristic.

In some embodiments, the first representation of the first channel includes a visual indication of a current play position associated with the first channel, and the updated user interface includes content associated with the current play position. In some embodiments, each respective representation of the plurality of representations of the channels associated with the first group of channels comprises an image corresponding to a respective channel of the first group of channels. In some embodiments, a first representation of a first channel of the first group of channels has a current focus and comprises a first image, and the processing unit 1404 is further configured to: while displaying (e.g., with the display enabling unit 1406) the plurality of representations of the channels associated with the first group of channels in the updated user interface, update (e.g., with the display enabling unit 1406) the first image over time based on content associated with the first channel. In some embodiments, the processing unit 1404 is further configured to: while updating (e.g., with the display enabling unit 1406) the first image over time based on content associated with the first channel and displaying (e.g., with the display enabling unit 1406) the plurality of representations of the channels associated with the first group of channels in the updated user interface, display (e.g., with the display enabling unit 1406) the content associated with the first channel in a content display area of the updated user interface.

In some embodiments, two or more of the plurality of representations of the channels associated with the first group of channels comprise visual feeds from their respective channels that are updated over time. In some embodiments, the receiving unit 1402 is further configured to, while displaying the plurality of representations of the channels associated with the first group of channels, receive selection of a first representation of a first channel of the plurality of representations, and the processing unit 1404 is further configured to, in response to the selection, display (e.g., with the display enabling unit 1406) content from the first channel in a content display area of the updated user interface. In some embodiments, the first group of channels corresponds to a content category, and displaying the plurality of the representations of channels associated with the first group of channels comprises: determining (e.g., with the determining unit 1408) whether currently-available content on a set of channels has a content type corresponding to the content category of the first group of channels; and in accordance with a determination that the currently-available content on the set of channels has the content type corresponding to the content category of the first group of channels, including (e.g., with the display enabling unit 1406) representations of the channels in the set of channels in the plurality of representations of the channels associated with the first group of channels. In some embodiments, content on the channels in the set of channels is tagged with content-category tags, and determining whether the currently-available content on the set of channels has the content type corresponding to the content category of the first group of channels comprises determining (e.g., with the determining unit 1408) whether the content-category tags of the currently-available content on the set of channels correspond to the content category of the first group of channels.

In some embodiments, the processing unit 1404 is further configured to: while displaying the plurality of representations of the channels associated with the first group of channels, determine (e.g., with the determining unit 1408) that a content type of currently-available content on a first channel of the channels no longer corresponds to the content category of the first group of channels; in accordance with a determination that a first representation of the first channel is not a currently-selected representation in the plurality of representations of the channels, remove (e.g., with the display enabling unit 1406) the first representation of the first channel from the plurality of representations of the channels; and in accordance with a determination that the first representation of the first channel is the currently-selected representation in the plurality of representations of the channels, maintain (e.g., with the display enabling unit 1406) the first representation of the first channel in the plurality of representations of the channels.

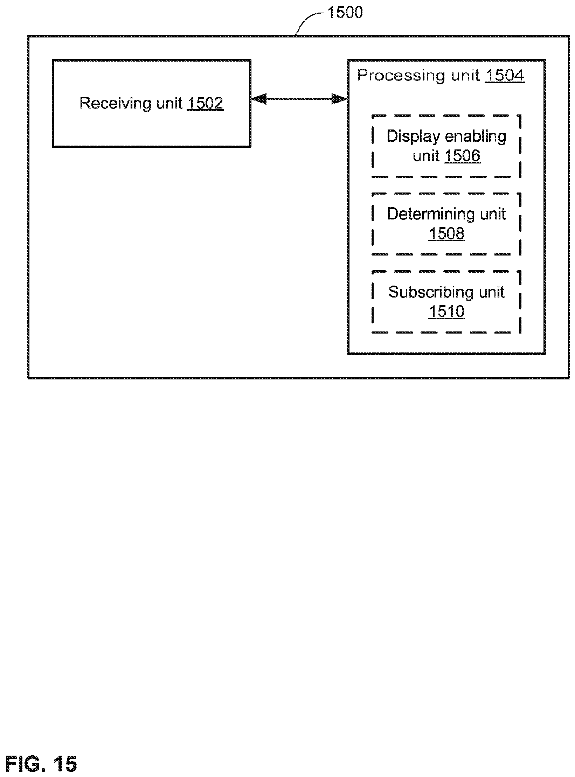

In accordance with some embodiments, Fig. 15 shows a functional block diagram of an electronic device 1500 (e.g., device 100 in Fig. 1A, 300 in Fig. 3 and/or 500 in Fig. 5A) configured in accordance with the principles of the various described embodiments. The functional blocks of the device are, optionally, implemented by hardware, software, or a combination of hardware and software, to carry out the principles of the various described embodiments. It is understood by persons of skill in the art that the functional blocks described in Fig. 1500 are, optionally, combined or separated into sub-blocks to implement the principles of the various described embodiments. Therefore, the description herein optionally supports any possible combination or separation or further definition of the functional blocks described herein.

As shown in Fig. 15, an electronic device 1500 optionally includes a receiving unit 1502 configured to receive inputs, and a processing unit 1504 coupled to the receiving unit 1502. In some embodiments, the processing unit 1504 includes a display enabling unit 1506, a determining unit 1508, and a subscribing unit 1510.

In some embodiments, the receiving unit 1502 is configured to, while displaying (e.g., with the display enabling unit 1506), on a display device, a first plurality of representations of first channels and a second plurality of representations of second channels in a user interface, receive an input, via one or more input devices, causing a respective channel representation of the second plurality of representations of the second channels to have a current focus. In some embodiments, the processing unit 1504 is configured to: generate (e.g., with the display enabling unit 1506), for display on the display device, in the user interface: the first plurality of representations of the first channels in a first region of the user interface, the first plurality of representations of the first channels having a first visual characteristic, and the first plurality of representations of the first channels corresponding to channels to which a user is subscribed; and the second plurality of representations of the second channels in a second region of the user interface, different from the first region, the second plurality of representations of the second channels having a second visual characteristic, different from the first visual characteristic, and the second plurality of representations of the second channels corresponding to channels to which the user is not subscribed; and in response to receiving the input, modifying (e.g., with the display enabling unit 1506) the respective channel representation to have the first visual characteristic instead of having the second visual characteristic.

In some embodiments, generating the first plurality of representations having the first visual characteristic comprises generating (e.g., with the display enabling unit 1506) the first plurality of representations in color, generating the second plurality of representations having the second visual characteristic comprises generating (e.g., with the display enabling unit 1506) the second plurality of representations in grayscale or black and white, and modifying the respective channel representation to have the first visual characteristic instead of having the second visual characteristic comprises modifying (e.g., with the display enabling unit 1506) the respective channel representation to be displayed in color instead of in grayscale or black and white. In some embodiments, the processing unit 1504 is further configured to: in response to receiving the input, increase (e.g., with the display enabling unit 1506) a size of the respective channel representation. In some embodiments, the processing unit 1504 is further configured to: in response to receiving the input, add (e.g., with the display enabling unit 1506) a shadow to the respective channel representation. In some embodiments, the processing unit 1504 is further configured to: in response to receiving the input, increase (e.g., with the display enabling unit 1506) a brightness of the respective channel representation relative to other channel representations.

In some embodiments, the receiving unit 1502 is further configured to, after modifying the respective channel representation, receive a second input causing a second respective channel representation of the second plurality of representations of second channels to have the current focus. In some embodiments, the processing unit 1504 is further configured to, in response to receiving the second input: reverse (e.g., with the display enabling unit 1506) the modification of the respective channel representation such that the respective channel representation has the second visual characteristic instead of having the first visual characteristic; and modify (e.g., with the display enabling unit 1506) the second respective channel representation to have the first visual characteristic instead of having the second visual characteristic. In some embodiments, the receiving unit 1502 is further configured to, while the respective channel representation has the current focus, receive a second input corresponding to a request to subscribe to the respective channel, and the processing unit 1504 is further configured to, in response to receiving the second input: move (e.g., with the display enabling unit 1506) the respective channel representation from the second region of the user interface to the first region of the user interface while maintaining the respective channel representation as having the first visual characteristic.

In some embodiments, the receiving unit 1502 is further configured to, while displaying the first plurality of representations of the first channels and the second plurality of representations of the second channels in the user interface, receive a second input corresponding to a request for information about a particular channel of the first and second channels. In some embodiments, the processing unit 1504 is further configured to, in response to receiving the second input, generate (e.g., with the display enabling unit 1506), for display on the display device, an updated user interface, which includes: a plurality of representations of content items available on the particular channel; and in accordance with a determination (e.g., with the determining unit 1508) that the particular channel is a channel to which the user is not subscribed, a subscription user interface element selectable to subscribe to the particular channel. In some embodiments, in accordance with a determination (e.g., with the determining unit 1508) that the particular channel is a channel to which the user is subscribed, the plurality of representations of content items are selectable to play the respective content items, and in accordance with a determination (e.g., with the determining unit 1508) that the particular channel is a channel to which the user is not subscribed, the plurality of representations of content items are not selectable to play the respective content items.

In some embodiments, the second region of the user interface further includes a channel package representation of a first package of a first plurality of channels, the receiving unit 1502 is further configured to: receive a second input corresponding to a request to subscribe to the first package of the first plurality of channels, and the processing unit 1504 is further configured to: in response to receiving the second input, subscribe (e.g., with the subscribing unit 1510) to a plurality of channels of the first package of the first plurality of channels. In some embodiments, the second region of the user interface includes a first portion and a second portion, the first portion includes a plurality of representations of channels that belong to one or more packages of channels, including the first package of the first plurality of channels, and the second portion includes a plurality of representations of channels that do not belong to a package of channels. In some embodiments, the processing unit 1504 is further configured to: in response to receiving the second input: move (e.g., with the display enabling unit 1506) the channel package representation of the first package from the second region to the first region in the user interface; and modify (e.g., with the display enabling unit 1506) the channel package representation of the first package to have the first visual characteristic. In some embodiments, the second region of the user interface further includes representations of the first plurality of channels in the first package, and the processing unit 1504 is further configured to, in response to receiving the second input: move (e.g., with the display enabling unit 1506) the representations of the first plurality of channels in the first package from the second region to the first region in the user interface; and modify (e.g., with the display enabling unit 1506) the representations of the first plurality of channels in the first package to have the first visual characteristic. In some embodiments, modifying the respective channel representation to have the first visual characteristic instead of having the second visual characteristic comprises displaying (e.g., with the display enabling unit 1506) an animated transition of the respective channel representation from having the first visual characteristic to having the second visual characteristic.

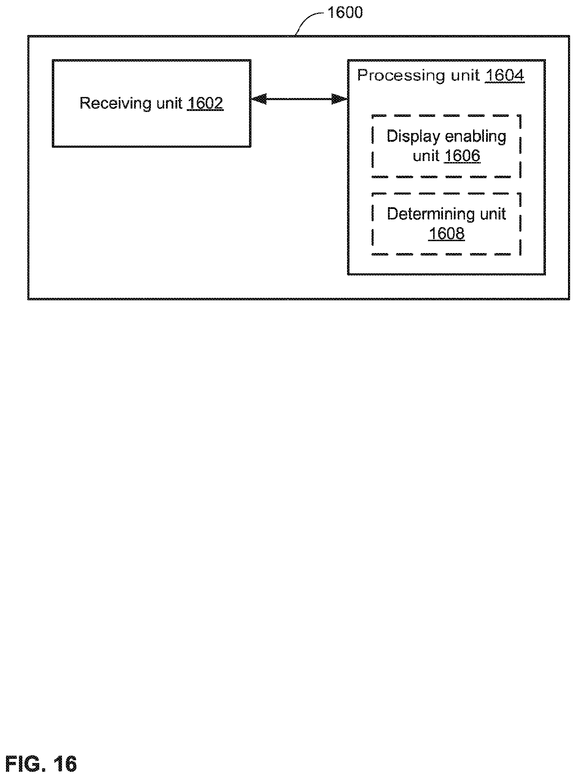

In accordance with some embodiments, Fig. 16 shows a functional block diagram of an electronic device 1600 (e.g., device 100 in Fig. 1A, 300 in Fig. 3 and/or 500 in Fig. 5A) configured in accordance with the principles of the various described embodiments. The functional blocks of the device are, optionally, implemented by hardware, software, or a combination of hardware and software, to carry out the principles of the various described embodiments. It is understood by persons of skill in the art that the functional blocks described in Fig. 1600 are, optionally, combined or separated into sub-blocks to implement the principles of the various described embodiments. Therefore, the description herein optionally supports any possible combination or separation or further definition of the functional blocks described herein.

As shown in Fig. 16, an electronic device 1600 optionally includes a receiving unit 1602 configured to receive inputs, and a processing unit 1604 coupled to the receiving unit 1602. In some embodiments, the processing unit 1604 includes a display enabling unit 1606, and a determining unit 1608.

In some embodiments, the processing unit 1604 is configured to generate (e.g., with the display enabling unit 1606), for display on the display device, a media-navigation user interface, including: a navigation bar including a live section indicator, a watchlist section indicator, and an on-demand section indicator; and a content display area. In some embodiments, the receiving unit 1602 is configured to, while the media-navigation user interface is displayed on the display device with the live section indicator currently-selected and live content displayed in the content display area, detect selection, via the one or more input devices, of the watchlist section indicator. In some embodiments, the processing unit 1604 is further configured to, in response to detecting the selection of the watchlist section indicator, generate (e.g., with the display enabling unit 1606), for display on the display device, an updated user interface that includes maintaining display of the navigation bar and replacing display of the live content in the content display area with watchlist content that includes content selected based on prior user interactions with a collection of media content. In some embodiments, the receiving unit 1602 is further configured to, while the media-navigation user interface is displayed on the display device with the watchlist section indicator currently-selected and the watchlist content displayed in the content display area, detect selection, via the one or more input devices, of the on-demand section indicator. In some embodiments, the processing unit 1604 is further configured to, in response to detecting the selection of the on-demand section indicator, generate (e.g., with the display enabling unit 1606), for display on the display device, an updated user interface that includes maintaining display of the navigation bar and replacing display of the watchlist content in the content display area with on-demand content that includes on-demand content available to the user.

In some embodiments, while the live section indicator is currently-selected, the live content displayed in the content display area corresponds to a currently-selected channel. In some embodiments, the processing unit 1604 is further configured to: while displaying the live content in the content display area, display (e.g., with the display enabling unit 1606) a visual indication in the content display area of the currently-selected channel. In some embodiments, the receiving unit 1602 is further configured to, while the live section indicator is currently-selected, receive an input corresponding to a further selection of the live section indicator, and the processing unit 1604 is further configured to, in response to the input, cease display (e.g., with the display enabling unit 1606) of the visual indication of the currently-selected channel after a predetermined time period. In some embodiments, the receiving unit 1602 is further configured to, while the live section indicator is currently-selected, receive an input corresponding to a further selection of the live section indicator, and the processing unit 1604 is further configured to, in response to the input, generate (e.g., with the display enabling unit 1606), for display on the display device, an updated user interface that includes ceasing display of the navigation bar in the user interface while maintaining display of the live content in the content display area. In some embodiments, the receiving unit 1602 is further configured to, while the live section indicator is currently-selected, receive an input corresponding to a request to display a plurality of representations of channels accessible in the content display area. In some embodiments, the processing unit 1604 is further configured to, in response to receiving the input, generate (e.g., with the display enabling unit 1606), for display on the display device, an updated user interface, which includes the plurality of representations of the channels accessible in the content display area along a first axis in the content display area.

In some embodiments, the watchlist content displayed while the watchlist section indicator is currently-selected includes a first set of representations of watched content items and a second set of representations of unwatched content items. In some embodiments, a first representation of a first watched content item in the first set of representations includes a visual indication of a current play position in the first watched content item. In some embodiments, the watchlist content displayed while the watchlist section indicator is currently-selected includes a first set of representations of live content items and a second set of representations of on-demand content items. In some embodiments, the receiving unit 1602 is further configured to, while the watchlist section indicator is currently-selected and the watchlist content is displayed in the content display area, receive an input corresponding to a request to play a respective content item of the watchlist content. In some embodiments, the processing unit 1604 is further configured to, in response to receiving the input: replace display (e.g., with the display enabling unit 1606) of the watchlist content in the content display area with the respective content item; and cease display (e.g., with the display enabling unit 1606) of the navigation bar in the user interface.

In some embodiments, the on-demand content displayed while the on-demand section indicator is currently-selected includes a first set of representations of paid content items and a second set of representations of unpaid content items. In some embodiments, the receiving unit 1602 is further configured to, while the first set of representations of paid content items and the second set of representations of unpaid content items are displayed in the user interface, receive an input corresponding to a request to play a respective content item of the paid or unpaid content items. In some embodiments, the processing unit 1604 is further configured to, in response to receiving the input: in accordance with a determination (e.g., with the determining unit 1608) that the respective content item is a paid content item, display (e.g., with the display enabling unit 1606) a request for confirmation of payment from the user in the user interface; and in accordance with a determination (e.g., with the determining unit 1608) that the respective content item is an unpaid content item, replace display (e.g., with the display enabling unit 1606) of the on-demand content in the content display area with the respective content item. In some embodiments, the receiving unit 1602 is further configured to, while displaying the request for confirmation of payment from the user, receive a second input, and the processing unit 1604 is further configured to, in response to receiving the second input: in accordance with a determination (e.g., with the determining unit 1608) that the second input corresponds to a confirmation of payment from the user, replace display (e.g., with the display enabling unit 1606) of the on-demand content in the content display area with the respective content item; and in accordance with a determination (e.g., with the determining unit 1608) that the second input does not correspond to a confirmation of payment from the user, forgo replacing (e.g., with the display enabling unit 1606) the on-demand content in the content display area with the respective content item.

In some embodiments, the on-demand content displayed while the on-demand section indicator is currently-selected includes a first set of representations of subscribed content items and a second set of representations of unsubscribed content items. In some embodiments, the receiving unit 1602 is further configured to, while the first set of representations of subscribed content items and the second set of representations of unsubscribed content items are displayed, receive an input corresponding to a request to play a respective content item of the subscribed or unsubscribed content items. In some embodiments, the processing unit 1604 is further configured to, in response to receiving the input: in accordance with a determination (e.g., with the determining unit 1608) that the respective content item is a subscribed content item, replace display (e.g., with the display enabling unit 1606) of the on-demand content in the content display area with the respective content item; and in accordance with a determination (e.g., with the determining unit 1608) that the respective content item is an unsubscribed content item, display (e.g., with the display enabling unit 1606) a query in the user interface asking the user if they would like to subscribe to a channel with which the respective content item is associated.

In some embodiments, the receiving unit 1602 is further configured to, while displaying the query in the user interface asking the user if they would like to subscribe to the channel with which the respective content item is associated, receive a second input. In some embodiments, the processing unit 1604 is further configured to, in response to receiving the second input: in accordance with a determination (e.g., with the determining unit 1608) that the second input corresponds to a request to subscribe to the channel with which the respective content item is associated, replace display (e.g., with the display enabling unit 1606) of the on-demand content in the content display area with the respective content item; and in accordance with a determination (e.g., with the determining unit 1608) that the second input does not correspond to a request to subscribe to the channel with which the respective content is associated, forgo replacing (e.g., with the display enabling unit 1606) the on-demand content in the content display area with the respective content item. In some embodiments, the navigation bar further includes a channels section indicator, the receiving unit 1602 is further configured to, while the media-navigation user interface is displayed on the display device with the on-demand section indicator currently-selected and the on-demand content displayed in the content display area, detect selection of the channels section indicator, and the processing unit 1604 is further configured to, in response to detecting selection of the channels section indicator, generate (e.g., with the display enabling unit 1606), for display on the display device, an updated user interface that includes maintaining display of the navigation bar and replacing display of the on-demand content in the content display area with channel content that includes a plurality of representations of channels available to the user.

In some embodiments, the plurality of representations of the channels includes: a representation of a channel to which the user is subscribed; and a representation of a channel to which the user is not subscribed. In some embodiments, the navigation bar further includes a channels section indicator, the receiving unit 1602 is further configured to, while displaying a representation of a respective content item in the content display area of the user interface, receive selection of the representation of the respective content item, and the processing unit 1604 is further configured to, in response to receiving the selection of the representation of the respective content item: in accordance with a determination (e.g., with the determining unit 1608) that the respective content item was displayed on a non-channel-specific page when the selection of the representation of the respective content item was received, display (e.g., with the display enabling unit 1606), in the content display area, a combined content item page associated with the respective content item and a plurality of channels including the respective channel; and in accordance with a determination (e.g., with the determining unit 1608) that the respective content item was displayed on a channel-specific page when the selection of the representation of the respective content item was received, display (e.g., with the display enabling unit 1606), in the content display area, a content item page associated with the respective content item and the respective channel.

In some embodiments, the navigation bar further includes a search section indicator, the receiving unit 1602 is further configured to, while the media-navigation user interface is displayed on the display device with the on-demand section indicator currently-selected and the on-demand content displayed in the content display area, detect selection of the search section indicator, and the processing unit 1604 is further configured to, in response to detecting selection of the search section indicator, generate (e.g., with the display enabling unit 1606), for display on the display device, an updated user interface that includes maintaining display of the navigation bar and replacing display of the on-demand content in the content display area with: search content that includes a plurality of representations of content items watched by users other than the user; and a text entry field for searching content available to the user. In some embodiments, the plurality of representations of the content items includes representations of popular content items based on the other users' searching or viewing behaviors. In some embodiments, the receiving unit 1602 is further configured to, while displaying the text entry field, receive a search input in the text entry field, and the processing unit 1604 is further configured to, in response to receiving the search input, replace (e.g., with the display enabling unit 1606) the plurality of representations of the content items with a plurality of representations of search-result content items based on the search input.

In some embodiments, the search-result content items include content items associated with subscribed channels and unsubscribed channels. In some embodiments, the search-result content items include paid content items and unpaid content items. In some embodiments, the receiving unit 1602 is further configured to, while displaying the text entry field, receive a first portion of a search input in the text entry field, and the processing unit 1604 is further configured to, in response to receiving the first portion of the search input, display (e.g., with the display enabling unit 1606) a first plurality of representations of search-result content items based on the first portion of the search input. In some embodiments, the receiving unit 1602 is further configured to, while displaying the first plurality of representations of search-result content items, receive a second portion of the search input in the text entry field, and the processing unit 1604 is further configured to, in response to receiving the second portion of the search input, replace (e.g., with the display enabling unit 1606) the first plurality of representations of search-result content items with a second plurality of representations of search-result content items based on the first and second portions of the search input. In some embodiments, the search content includes a first region and a second region, after receiving a first search input in the text entry field for which results of a first type are more relevant than results of a second type, results of the first type are displayed in the first region and results of the second type are displayed in the second region, the receiving unit 1602 is further configured to, while results of the first type are displayed in the first region and results of the second type are displayed in the second region, receive a second search input in the text entry field, and the processing unit 1604 is further configured to, in response to receiving the second search input: in accordance with a determination (e.g., with the determining unit 1608) that, for the second search input, results of the first type are more relevant than results of the second type, maintain display (e.g., with the display enabling unit 1606) of results of the first type in the first region and results of the second type in the second region; and in accordance with a determination (e.g., with the determining unit 1608) that, for the second search input, results of the second type are more relevant than results of the first type, display (e.g., with the display enabling unit 1606) results of the second type in the first region and display results of the first type in the second region.

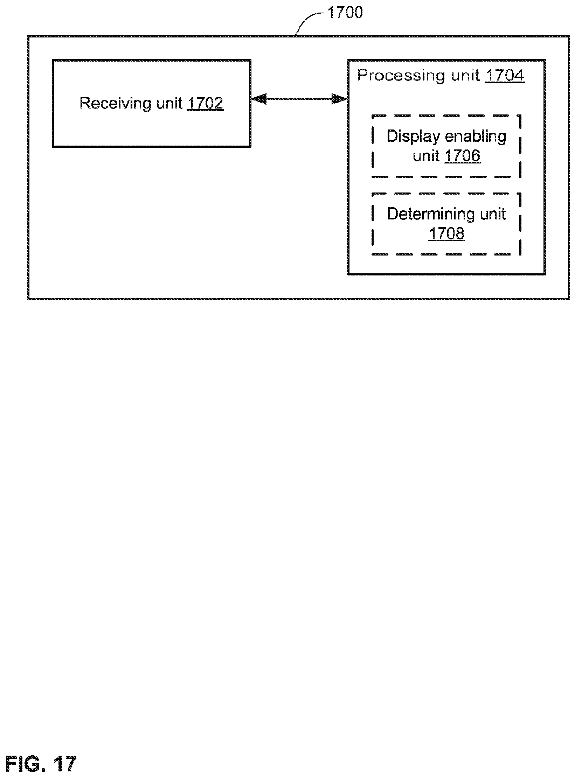

In accordance with some embodiments, Fig. 17 shows a functional block diagram of an electronic device 1700 (e.g., device 100 in Fig. 1A, 300 in Fig. 3 and/or 500 in Fig. 5A) configured in accordance with the principles of the various described embodiments. The functional blocks of the device are, optionally, implemented by hardware, software, or a combination of hardware and software, to carry out the principles of the various described embodiments. It is understood by persons of skill in the art that the functional blocks described in Fig. 1700 are, optionally, combined or separated into sub-blocks to implement the principles of the various described embodiments. Therefore, the description herein optionally supports any possible combination or separation or further definition of the functional blocks described herein.

As shown in Fig. 17, an electronic device 1700 optionally includes a receiving unit 1702 configured to receive inputs, and a processing unit 1704 coupled to the receiving unit 1702. In some embodiments, the processing unit 1704 includes a display enabling unit 1706, and a determining unit 1708.

In some embodiments, the processing unit 1704 is configured to generate (e.g., with the display enabling unit 1706) for display, on the display device, a user interface that includes concurrently displaying playing content for a respective channel and displaying a channel bar including a plurality of representations of a first plurality of channels in a respective order along a first axis in a user interface that correspond to currently-available content on the first plurality of channels. In some embodiments, the receiving unit 1702 is configured to, while the channel bar is displayed on the display device, receive an input, via the one or more input devices, corresponding to a request to display a content guide on the display device. In some embodiments, the processing unit 1704 is further configured to, in response to receiving the input, generate (e.g., with the display enabling unit 1706), for display on the display device, an updated user interface that includes: displaying the content guide in the updated user interface, the content guide including information about content items for a second plurality of channels, including a first channel and a second channel, included in the first plurality of channels, the content items including currently-available content and future content, and the information arranged in adjacent arrays that are organized in the respective order along the first axis, including: a first array, representing the first channel, that extends along a second axis in the updated user interface, the first array including information about content items for the first channel, the information arranged along the second axis in the first array in accordance with times at which the content items for the first channel are available on the first channel; and a second array, representing the second channel, displayed along the second axis in the updated user interface, the second array including information about content items for the second channel, the information arranged along the second axis in the second array in accordance with times at which the content items for the second channel are available on the second channel.

In some embodiments, generating the updated user interface further includes: ceasing displaying (e.g., with the display enabling unit 1706) the playing content for the respective channel in response to receiving the input corresponding to the request to display the content guide on the display device. In some embodiments, the second plurality of channels in the content guide corresponds to the first plurality of channels in the channel bar. In some embodiments, respective positions of the arrays representing the second plurality of channels in the content guide correspond to respective positions of the representations of the first plurality of channels in the channel bar. In some embodiments, the processing unit 1704 is further configured to: while displaying the content guide, display (e.g., with the display enabling unit 1706), in the updated user interface, information about a currently-selected content item in the content guide. In some embodiments, the processing unit 1704 is further configured to: display (e.g., with the display enabling unit 1706) a representation of the currently-selected content item in a respective array of the arrays with a first visual characteristic, and display representations of unselected content items in the arrays with a second visual characteristic, different from the first visual characteristic. In some embodiments, displaying the representation of the currently-selected content item with the first visual characteristic includes displaying (e.g., with the display enabling unit 1706), in the representation of the currently-selected content item, information of a first type about the currently-selected content item. In some embodiments, the representations of the unselected content items do not include respective information of the first type about the respective unselected content items.

In some embodiments, the user interface is associated with a first category of channels and a second category of channels, channels in the first category of channels include content that shares a first common characteristic, channels in the second category of channels include content that shares a second common characteristic, different from the first common characteristic, and the first plurality of channels in the channel bar and the second plurality of channels in the content guide are selected so as to include channels from the first category of channels but not channels from the second category of channels. In some embodiments, the receiving unit 1702 is further configured to, while displaying the content guide, receive an input corresponding to a request to display channels from the second category of channels instead of the first category of channels, and the processing unit 1704 is further configured to, in response receiving the input: cease display (e.g., with the display enabling unit 1706) of the first category of channels in the content guide; and display (e.g., with the display enabling unit 1706) a plurality of channels from the second category of channels in the content guide.

In some embodiments, the input corresponding to the request to display channels from the second category of channels instead of the first category of channels comprises: scrolling past an end of the content guide along the first axis; and after scrolling past the end of the content guide along the first axis, selecting the second category of channels from a list of categories of channels, the list of categories of channels including the first category of channels and the second category of channels. In some embodiments, the input corresponding to the request to display channels from the second category of channels instead of the first category of channels comprises: scrolling, along the first axis, through the first category of channels in the content guide to the second category of channels in the content guide. In some embodiments, receiving the input corresponding to the request to display channels from the second category of channels instead of the first category of channels comprises: receiving (e.g., with the receiving unit 1702) an input corresponding to a request to switch the channel bar from displaying the first category of channels to displaying the second category of channels. In some embodiments, the user interface is associated with a first category of channels and a second category of channels, channels in the first category of channels include content that shares a first common characteristic, channels in the second category of channels include content that shares a second common characteristic, different from the first common characteristic, the first plurality of channels in the channel bar are selected so as to include channels from the first category of channels but not channels from the second category of channels, the receiving unit 1702 is further configured to, before receiving the input corresponding to the request to display the content guide on the display device, receive an input corresponding to a request to switch the channel bar from displaying the first category of channels to displaying the second category of channels, and the processing unit 1704 is further configured to, in response to receiving the input: cease display (e.g., with the display enabling unit 1706) of the first category of channels in the channel bar; and display (e.g., with the display enabling unit 1706) the second category of channels in the channel bar. In some embodiments, the input corresponding to the request to display the content guide on the display device is received while the channel bar is displaying the second category of channels and not the first category of channels, and the second plurality of channels in the content guide includes channels from the second category of channels but not the first category of channels.

In some embodiments, the receiving unit 1702 is further configured to, while displaying the content guide, receive an input corresponding to a selection of a representation of a respective content item in the content guide, and the processing unit 1704 is further configured to, in response to receiving the input: in accordance with a determination (e.g., with the determining unit 1708) that the respective content item is currently-available, play (e.g., with the display enabling unit 1706) the respective content item on the display device; and in accordance with a determination (e.g., with the determining unit 1708) that the respective content item is not currently-available, display (e.g., with the display enabling unit 1706) one or more selectable user interface elements on the display that enable a user to perform operations associated with future playback of the content item. In some embodiments, the selectable user interface elements include: a notification element for providing a notification when the respective content item becomes available; a content item information element for displaying a user interface corresponding to the respective content item; and a channel information element for displaying a user interface corresponding to a respective channel on which the respective content item is available.

In some embodiments, the receiving unit 1702 is further configured to, while displaying the content guide, receive an input associated with a currently-available content item in the content guide, and the processing unit 1704 is further configured to, in response to receiving the input: in accordance with a determination (e.g., with the determining unit 1708) that the input has a duration that is shorter than a threshold time period, play (e.g., with the display enabling unit 1706) the currently-available content item on the display device; and in accordance with a determination (e.g., with the determining unit 1708) that the input has a duration that is longer than the threshold time period, display (e.g., with the display enabling unit 1706) one or more selectable user interface elements on the display that enable a user to perform operations associated with the currently-available content item. In some embodiments, the selectable user interface elements include: a play element for playing the currently-available content item on the display device; a content item information element for displaying a user interface corresponding to the currently-available content item on the display; and a channel information element for displaying a user interface corresponding to a respective channel on which the currently-available content item is available. In some embodiments, the second plurality of channels in the content guide has currently-available content having a first shared characteristic. In some embodiments, the updated user interface is associated with a first category of channels and a second category of channels, channels in the first category of channels include currently-available content having the first shared characteristic, channels in the second category of channels do not have currently-available content having the first shared characteristic, but have future content having the first shared characteristic within a predetermined time threshold of a current time, and the second plurality of channels in the content guide are selected so as to include channels from the first and second categories of channels.

In some embodiments, the channels in the first category of channels and the channels in the second category of channels are displayed in separate regions of the content guide. In some embodiments, the second plurality of channels in the content guide includes content items having the first shared characteristic, and content items not having the first shared characteristic, representations of the content items having the first shared characteristic in the content guide have a first visual characteristic in the content guide, and representations of the content items not having the first shared characteristic have a second visual characteristic, different from the first visual characteristic, in the content guide. In some embodiments, the receiving unit 1702 is further configured to, while displaying the representations of the content items having the first shared characteristic with the first visual characteristic and the representations of the content items not having the first shared characteristic with the second visual characteristic, receive an input corresponding to a request to change a currently-designated characteristic from the first shared characteristic to a second shared characteristic, and the processing unit 1704 is further configured to, in response to receiving the input: modify (e.g., with the display enabling unit 1706) the content guide to include a third plurality of channels that have currently-available content having the second shared characteristic instead of the first shared characteristic, the third plurality of channels including content items having the second shared characteristic, and content items not having the second shared characteristic; display (e.g., with the display enabling unit 1706) representations of the content items having the second shared characteristic with the first visual characteristic; and display (e.g., with the display enabling unit 1706) representations of the content items not having the second shared characteristic with the second visual characteristic.

In some embodiments, the processing unit 1704 is further configured to: while displaying the second plurality of channels having currently-available content having a shared characteristic in the content guide, determine (e.g., with the determining unit 1708) that the first channel no longer has currently-available content having the shared characteristic; and in response to determining that the first channel no longer has currently-available content having the shared characteristic, maintain (e.g., with the display enabling unit 1706) the first channel in the content guide and in the channel bar. In some embodiments, the processing unit 1704 is further configured to: while displaying the second plurality of channels having currently-available content having a shared characteristic in the content guide, determine (e.g., with the determining unit 1708) that the first channel no longer has currently-available content having the shared characteristic; and in response to determining that the first channel no longer has currently-available content having the shared characteristic, remove (e.g., with the display enabling unit 1706) the first channel from the content guide and the channel bar.

In some embodiments, the processing unit 1704 is further configured to: while displaying the second plurality of channels having currently-available content having a shared characteristic in the content guide, determine (e.g., with the determining unit 1708) that the first channel no longer has currently-available content having the shared characteristic; and in response to determining that the first channel no longer has currently-available content having the shared characteristic: in accordance with a determination (e.g., with the determining unit 1708) that a content item on the first channel is currently-selected, maintain (e.g., with the display enabling unit 1706) the first channel in the content guide and in the channel bar; and in accordance with a determination (e.g., with the determining unit 1708) that a content item on the first channel is not currently-selected, remove (e.g., with the display enabling unit 1706) the first channel from the content guide and the channel bar. In some embodiments, the processing unit 1704 is further configured to: while displaying the second plurality of channels having currently-available content having a shared characteristic in the content guide, determine (e.g., with the determining unit 1708) that the first channel no longer has currently-available content having the shared characteristic; in response to determining that the first channel no longer has currently-available content having the shared characteristic, maintain (e.g., with the display enabling unit 1706) the first channel in the content guide and in the channel bar; after maintaining the first channel in the content guide and in the channel bar, cease display (e.g., with the display enabling unit 1706) of the content guide and the channel bar in the user interface; after ceasing display of the content guide and the channel bar in the user interface, redisplay (e.g., with the display enabling unit 1706) the content guide and the channel bar in the user interface, the content guide and the channel bar having the first channel removed therefrom.

In some embodiments, the content guide includes representations of one or more content items that are available on-demand, and the representations of the one or more content items that are available on-demand include a visual indication indicating that the content item is available for on-demand presentation. In some embodiments, the processing unit 1704 is further configured to: in response to receiving the input corresponding to the request to display the content guide on the display device, display (e.g., with the display enabling unit 1706) an animation of the representations of the first plurality of channels in the channel bar moving out of the user interface in a first direction while the arrays of the content guide move into the user interface in the first direction, the arrays of the content guide aligned with and corresponding to the representations of the first plurality of channels in the channel bar. In some embodiments, the input corresponding to the request to display the content guide on the display device comprises: scrolling past an end of the channel bar along the first axis; and after scrolling past the end of the channel bar along the first axis, selecting a content guide user interface element displayed adjacent to the channel bar for displaying the content guide. In some embodiments, receiving the input corresponding to the request to display the content guide on the display device comprises: receiving (e.g., with the receiving unit 1702) a selection input in a first predefined region on a touch-sensitive surface of a second electronic device, wherein the touch-sensitive surface includes a plurality of predefined regions, including the first predefined region, the plurality of predefined regions being associated with different functions.

In some embodiments, the processing unit 1704 is further configured to: while displaying the content guide, display (e.g., with the display enabling unit 1706) a current time indicator in the updated user interface that indicates a current play position in currently-available content on the second plurality of channels in the content guide. In some embodiments, the updated user interface further includes reference time indicators displayed along the second axis, adjacent the arrays in the content guide, wherein representations of content items in the arrays in the content guide are positioned along the second axis with respect to the reference time indicators in a manner corresponding to start and end times of the content items, and as the current time indicator approaches a respective position of a respective reference time indicator in the updated user interface, the respective position of the respective time indicator in the updated user interface is modified so as to move the respective time indicator to not obscure the current time indicator in the updated user interface.

The operations described above with reference to Figs. 7A-7M, 9A-9G, 11A-11K and 13A-13L are, optionally, implemented by components depicted in Figs. 1A-1B, Fig. 14, Fig. 15, Fig. 16 or Fig. 17. For example, generating operations 702, 902, 1102 and 1302, and receiving operations 704, 908 and 1304 are, optionally implemented by event sorter 170, event recognizer 180, and event handler 190. Event monitor 171 in event sorter 170 detects a contact on touch-sensitive surface 451, and event dispatcher module 174 delivers the event information to application 136-1. A respective event recognizer 180 of application 136-1 compares the event information to respective event definitions 186, and determines whether a first contact at a first location on the touch-sensitive surface corresponds to a predefined event or sub-event, such as selection of an object on a user interface. When a respective predefined event or sub-event is detected, event recognizer 180 activates an event handler 190 associated with the detection of the event or sub-event. Event handler 190 optionally utilizes or calls data updater 176 or object updater 177 to update the application internal state 192. In some embodiments, event handler 190 accesses a respective GUI updater 178 to update what is displayed by the application. Similarly, it would be clear to a person having ordinary skill in the art how other processes can be implemented based on the components depicted in Figs. 1A-1B, Fig. 14, Fig. 15, Fig. 16 or Fig. 17.

Exemplary methods, non-transitory computer-readable storage media, systems, and electronic devices are set out in the following items:

**Numbered aspects of the Invention**:
1. A method comprising:
   at an electronic device with a display device and one or more input devices:
   generating for display, on the display device, a plurality of representations of groups of channels along a first axis in a user interface;
   while the plurality of representations is displayed on the display device, receiving an input, via the one or more input devices, corresponding to a selection of a respective representation of the plurality of representations corresponding to a first group of channels; and
   in response to receiving the input, generating, for display on the display device, an updated user interface that includes:
      ceasing display of the plurality of representations of the groups of channels in the user interface; and
      displaying a plurality of representations of channels associated with the first group of channels along the first axis in the updated user interface.
2. The method of 1, further comprising:
   while displaying the plurality of representations of the channels associated with the first group of channels in the updated user interface, receiving a second input comprising a contact and a movement of the contact detected on a touch-sensitive surface of a device; and
   in accordance with a determination that the movement of the contact is in a direction substantially orthogonal to the first axis:
      ceasing display of the plurality of representations of the channels associated with the first group of channels in the updated user interface; and
      displaying a plurality of representations of channels associated with a second group of channels, different from the first group of channels, in the updated user interface.
3. The method of 2, further comprising:
   in accordance with a determination that the movement of the contact is in a direction substantially parallel to the first axis, scrolling through the plurality of representations of the channels associated with the first group of channels in accordance with the movement of the contact.
4. The method of any of 1-3, further comprising:
   while displaying the plurality of representations of the channels associated with the first group of channels in the updated user interface, receiving a second input corresponding to a request to redisplay the plurality of representations of the groups of channels; and
   in response to receiving the second input, generating, for display on the display device, an updated user interface that includes:
      ceasing display of the plurality of representations of the channels associated with the first group of channels in the updated user interface; and
      redisplaying the plurality of representations of the groups of channels in the updated user interface.
5. The method of 4, wherein:
   the second input comprises:
      a first portion detected on a touch-sensitive surface of a device, the first portion comprising a first contact and a first movement of the first contact substantially parallel to the first axis, the first portion corresponding to a request to scroll to an end of the plurality of representations of the channels associated with the first group of channels,
      a second portion detected on the touch-sensitive surface of the device after the first portion, the second portion comprising a second contact and a second movement of the second contact, the second movement of the second contact being in substantially a same direction as the first movement of the first contact, and the second movement of the second contact being greater than a movement threshold, and
   the method further comprises:
      in response to receiving the second portion of the second input:
         scrolling past the end of the plurality of representations of the channels associated with the first group of channels, and
         displaying a selectable user interface element adjacent to the end of the plurality of representations of the channels along the first axis, the selectable user interface element being for displaying the plurality of representations of the groups of channels; and
      receiving selection of the selectable user interface element, wherein ceasing display of the plurality of representations of the channels and redisplaying the plurality of representations of the groups of channels are in response to receiving selection of the selectable user interface element.
6. The method of any of 1-5, wherein ceasing the display of the plurality of representations of the groups of channels in the user interface and displaying the plurality of representations of the channels associated with the first group of channels along the first axis in the updated user interface comprises:
   displaying an animation of the plurality of representations of the channels associated with the first group of channels sliding into the updated user interface along the first axis so as to obscure the plurality of representations of the groups of channels.
7. The method of any of 1-6, further comprising:
   while displaying the plurality of representations of the channels associated with the first group of channels along the first axis in the updated user interface, receiving a second input corresponding to a request to display information related to a first channel of the first group of channels; and
   in response to receiving the second input, displaying the information related to the first channel in the updated user interface.
8. The method of 7, wherein the plurality of representations of the channels associated with the first group of channels is displayed at a first location in the updated user interface, the method further comprising:
   in response to receiving the second input, displaying an animation of the plurality of representations of the channels associated with the first group of channels moving from the first location to a second location in the updated user interface in a direction substantially perpendicular to the first axis, wherein the information related to the first channel is displayed in an area between the first location and the second location in the updated user interface.
9. The method of any of 7-8, wherein the second input comprises:
   selection of the first channel of the first group of channels; and
   after the selection of the first channel, a contact detected in a first predefined region of a touch-sensitive surface of a device, the contact having an intensity greater than an intensity threshold, and the touch-sensitive surface having a plurality of predefined regions including the first predefined region.
10. The method of any of 7-8, wherein the second input comprises:
   selection of the first channel of the first group of channels; and
   after the selection of the first channel, a contact and a movement of the contact detected on a touch-sensitive surface of a device, the movement of the contact being in a direction substantially perpendicular to the first axis.
11. The method of any of 7-8, wherein the second input comprises:
   selection of the first channel of the first group of channels; and
   after the selection of the first channel, a contact detected on a touch-sensitive surface of a device, the contact having an intensity greater than an intensity threshold for longer than a time threshold.
12. The method of any of 7-11, further comprising:
   while displaying the information related to the first channel in the updated user interface, receiving a third input corresponding to a request to select a second channel of the first group of channels; and
   in response to receiving the third input:
      ceasing display of the information related to the first channel in the updated user interface; and
      displaying information related to the second channel in the updated user interface.
13. The method of any of 1-12, wherein a first representation of a first channel of the first group of channels is a currently-selected representation, and the method further comprises:
   displaying the first representation of the first channel with a first visual characteristic; and
   displaying the representations of the channels of the first group of channels other than the first representation with a second visual characteristic, different from the first visual characteristic.
14. The method of 13, further comprising:
   while displaying the first representation of the first channel with the first visual characteristic, receiving a second input corresponding to a request to make a second representation of a second channel of the first group of channels the currently-selected representation; and
   in response to receiving the second input:
      updating the first representation of the first channel to have the second visual characteristic instead of the first visual characteristic; and
      updating the second representation of the second channel to have the first visual characteristic instead of the second visual characteristic.
15. The method of 14, wherein the first representation of the first channel includes a visual indication of a current play position associated with the first channel, and the updated user interface includes content associated with the current play position.
16. The method of any of 1-15, wherein each respective representation of the plurality of representations of the channels associated with the first group of channels comprises an image corresponding to a respective channel of the first group of channels.
17. The method of 16, wherein a first representation of a first channel of the first group of channels has a current focus and comprises a first image, and the method further comprises:
   while displaying the plurality of representations of the channels associated with the first group of channels in the updated user interface, updating the first image over time based on content associated with the first channel.
18. The method of 17, further comprising:
   while updating the first image over time based on content associated with the first channel and displaying the plurality of representations of the channels associated with the first group of channels in the updated user interface, displaying the content associated with the first channel in a content display area of the updated user interface.
19. The method of any of 1-18, wherein two or more of the plurality of representations of the channels associated with the first group of channels comprise visual feeds from their respective channels that are updated over time.
20. The method of any of 1-19, further comprising:
   while displaying the plurality of representations of the channels associated with the first group of channels, receiving selection of a first representation of a first channel of the plurality of representations; and
   in response to the selection, displaying content from the first channel in a content display area of the updated user interface.
21. The method of any of 1-20, wherein:
   the first group of channels corresponds to a content category, and
   displaying the plurality of the representations of channels associated with the first group of channels comprises:
      determining whether currently-available content on a set of channels has a content type corresponding to the content category of the first group of channels; and
      in accordance with a determination that the currently-available content on the set of channels has the content type corresponding to the content category of the first group of channels, including representations of the channels in the set of channels in the plurality of representations of the channels associated with the first group of channels.
22. The method of 21, wherein:
   content on the channels in the set of channels is tagged with content-category tags, and
   determining whether the currently-available content on the set of channels has the content type corresponding to the content category of the first group of channels comprises determining whether the content-category tags of the currently-available content on the set of channels correspond to the content category of the first group of channels.
23. The method of any of 21-22, further comprising:
   while displaying the plurality of representations of the channels associated with the first group of channels, determining that a content type of currently-available content on a first channel of the channels no longer corresponds to the content category of the first group of channels;
   in accordance with a determination that a first representation of the first channel is not a currently-selected representation in the plurality of representations of the channels, removing the first representation of the first channel from the plurality of representations of the channels; and
   in accordance with a determination that the first representation of the first channel is the currently-selected representation in the plurality of representations of the channels, maintaining the first representation of the first channel in the plurality of representations of the channels.
24. An electronic device, comprising:
   one or more processors;
   memory;
   a display device;
   one or more input devices; and
   one or more programs, wherein the one or more programs are stored in the memory and configured to be executed by the one or more processors, the one or more programs including instructions for:
      generating for display, on the display device, a plurality of representations of groups of channels along a first axis in a user interface;
      while the plurality of representations is displayed on the display device, receiving an input, via the one or more input devices, corresponding to a selection of a respective representation of the plurality of representations corresponding to a first group of channels; and
      in response to receiving the input, generating, for display on the display device, an updated user interface that includes:
         ceasing display of the plurality of representations of the groups of channels in the user interface; and
         displaying a plurality of representations of channels associated with the first group of channels along the first axis in the updated user interface.
25. A non-transitory computer readable storage medium storing one or more programs, the one or more programs comprising instructions, which when executed by one or more processors of an electronic device with a display device and one or more input devices, cause the electronic device to:
   generate for display, on the display device, a plurality of representations of groups of channels along a first axis in a user interface;
   while the plurality of representations is displayed on the display device, receive an input, via the one or more input devices, corresponding to a selection of a respective representation of the plurality of representations corresponding to a first group of channels; and
   in response to receiving the input, generate, for display on the display device, an updated user interface that includes:
      ceasing display of the plurality of representations of the groups of channels in the user interface; and
      displaying a plurality of representations of channels associated with the first group of channels along the first axis in the updated user interface.
26. An electronic device, comprising:
   one or more processors;
   memory;
   a display device;
   one or more input devices;
   means for generating for display, on the display device, a plurality of representations of groups of channels along a first axis in a user interface;
   means for, while the plurality of representations is displayed on the display device, receiving an input, via the one or more input devices, corresponding to a selection of a respective representation of the plurality of representations corresponding to a first group of channels; and
   means for, in response to receiving the input, generating, for display on the display device, an updated user interface that includes:
      ceasing display of the plurality of representations of the groups of channels in the user interface; and
      displaying a plurality of representations of channels associated with the first group of channels along the first axis in the updated user interface.
27. An information processing apparatus for use in an electronic device with a display device and one or more input devices, comprising:
   means for generating for display, on the display device, a plurality of representations of groups of channels along a first axis in a user interface;
   means for, while the plurality of representations is displayed on the display device, receiving an input, via the one or more input devices, corresponding to a selection of a respective representation of the plurality of representations corresponding to a first group of channels; and
   means for, in response to receiving the input, generating, for display on the display device, an updated user interface that includes:
      ceasing display of the plurality of representations of the groups of channels in the user interface; and
      displaying a plurality of representations of channels associated with the first group of channels along the first axis in the updated user interface.
28. An electronic device, comprising:
   one or more processors;
   memory;
   a display device;
   one or more input devices; and
   one or more programs, wherein the one or more programs are stored in the memory and configured to be executed by the one or more processors, the one or more programs including instructions for performing any of the methods of 1-23.
29. A non-transitory computer readable storage medium storing one or more programs, the one or more programs comprising instructions, which when executed by one or more processors of an electronic device with a display device and one or more input devices, cause the electronic device to perform any of the methods of 1-23.
30. An electronic device, comprising:
   one or more processors;
   memory;
   a display device;
   one or more input devices; and
   means for performing any of the methods of 1-23.
31. An information processing apparatus for use in an electronic device with a display device and one or more input devices, comprising:
   means for performing any of the methods of 1-23.
32. An electronic device, comprising:
   a receiving unit configured to, while a plurality of representations in a user interface is displayed on a display device, receive an input, via one or more input devices, corresponding to a selection of a respective representation of the plurality of representations corresponding to a first group of channels; and
   a processing unit coupled to the receiving unit and configured to:
      generate for display, on the display device, the plurality of representations of groups of channels along a first axis in the user interface;
      in response to receiving the input, generate, for display on the display device, an updated user interface that includes:
         ceasing display of the plurality of representations of the groups of channels in the user interface; and
         displaying a plurality of representations of channels associated with the first group of channels along the first axis in the updated user interface.
33. The electronic device of 32, wherein:
   the receiving unit is further configured to, while displaying the plurality of representations of the channels associated with the first group of channels in the updated user interface, receive a second input comprising a contact and a movement of the contact detected on a touch-sensitive surface of a device, and
   the processing unit is further configured to:
      in accordance with a determination that the movement of the contact is in a direction substantially orthogonal to the first axis:
      cease display of the plurality of representations of the channels associated with the first group of channels in the updated user interface; and
      display a plurality of representations of channels associated with a second group of channels, different from the first group of channels, in the updated user interface.
34. The electronic device of 33, wherein the processing unit is further configured to:
   in accordance with a determination that the movement of the contact is in a direction substantially parallel to the first axis, scroll through the plurality of representations of the channels associated with the first group of channels in accordance with the movement of the contact.
35. The electronic device of any of 32-34, wherein:
   the receiving unit is further configured to, while displaying the plurality of representations of the channels associated with the first group of channels in the updated user interface, receive a second input corresponding to a request to redisplay the plurality of representations of the groups of channels, and
   the processing unit is further configured to:
      in response to receiving the second input, generate, for display on the display device, an updated user interface that includes:
      ceasing display of the plurality of representations of the channels associated with the first group of channels in the updated user interface; and
      redisplaying the plurality of representations of the groups of channels in the updated user interface.
36. The electronic device of 35, wherein:
   the second input comprises:
      a first portion detected on a touch-sensitive surface of a device, the first portion comprising a first contact and a first movement of the first contact substantially parallel to the first axis, the first portion corresponding to a request to scroll to an end of the plurality of representations of the channels associated with the first group of channels,
      a second portion detected on the touch-sensitive surface of the device after the first portion, the second portion comprising a second contact and a second movement of the second contact, the second movement of the second contact being in substantially a same direction as the first movement of the first contact, and the second movement of the second contact being greater than a movement threshold, and
   the processing unit is further configured to:
      in response to receiving the second portion of the second input:
         scroll past the end of the plurality of representations of the channels associated with the first group of channels, and
         display a selectable user interface element adjacent to the end of the plurality of representations of the channels along the first axis, the selectable user interface element being for displaying the plurality of representations of the groups of channels; and
      receive selection of the selectable user interface element, wherein ceasing display of the plurality of representations of the channels and redisplaying the plurality of representations of the groups of channels are in response to receiving selection of the selectable user interface element.
37. The electronic device of any of 32-36, wherein ceasing the display of the plurality of representations of the groups of channels in the user interface and displaying the plurality of representations of the channels associated with the first group of channels along the first axis in the updated user interface comprises:
   displaying an animation of the plurality of representations of the channels associated with the first group of channels sliding into the updated user interface along the first axis so as to obscure the plurality of representations of the groups of channels.
38. The electronic device of any of 32-37, wherein:
   the receiving unit is further configured to, while displaying the plurality of representations of the channels associated with the first group of channels along the first axis in the updated user interface, receive a second input corresponding to a request to display information related to a first channel of the first group of channels, and
   the processing unit is further configured to, in response to receiving the second input, display the information related to the first channel in the updated user interface.
39. The electronic device of 38, wherein the plurality of representations of the channels associated with the first group of channels is displayed at a first location in the updated user interface, and the processing unit is further configured to:
   in response to receiving the second input, display an animation of the plurality of representations of the channels associated with the first group of channels moving from the first location to a second location in the updated user interface in a direction substantially perpendicular to the first axis, wherein the information related to the first channel is displayed in an area between the first location and the second location in the updated user interface.
40. The electronic device of any of 38-39, wherein the second input comprises:
   selection of the first channel of the first group of channels; and
   after the selection of the first channel, a contact detected in a first predefined region of a touch-sensitive surface of a device, the contact having an intensity greater than an intensity threshold, and the touch-sensitive surface having a plurality of predefined regions including the first predefined region.
41. The electronic device of any of 38-39, wherein the second input comprises:
   selection of the first channel of the first group of channels; and
   after the selection of the first channel, a contact and a movement of the contact detected on a touch-sensitive surface of a device, the movement of the contact being in a direction substantially perpendicular to the first axis.
42. The electronic device of any of 38-39, wherein the second input comprises:
   selection of the first channel of the first group of channels; and
   after the selection of the first channel, a contact detected on a touch-sensitive surface of a device, the contact having an intensity greater than an intensity threshold for longer than a time threshold.
43. The electronic device of any of 38-42, wherein:
   the receiving unit is further configured to, while displaying the information related to the first channel in the updated user interface, receive a third input corresponding to a request to select a second channel of the first group of channels, and
   the processing unit is further configured to, in response to receiving the third input:
      cease display of the information related to the first channel in the updated user interface; and
      display information related to the second channel in the updated user interface.
44. The electronic device of any of 32-43, wherein a first representation of a first channel of the first group of channels is a currently-selected representation, and the processing unit is further configured to:
   display the first representation of the first channel with a first visual characteristic; and
   display the representations of the channels of the first group of channels other than the first representation with a second visual characteristic, different from the first visual characteristic.
45. The electronic device of 44, wherein:
   the receiving unit is further configured to, while displaying the first representation of the first channel with the first visual characteristic, receive a second input corresponding to a request to make a second representation of a second channel of the first group of channels the currently-selected representation, and
   the processing unit is further configured to, in response to receiving the second input:
      update the first representation of the first channel to have the second visual characteristic instead of the first visual characteristic; and
      update the second representation of the second channel to have the first visual characteristic instead of the second visual characteristic.
46. The electronic device of 45, wherein the first representation of the first channel includes a visual indication of a current play position associated with the first channel, and the updated user interface includes content associated with the current play position.
47. The electronic device of any of 32-46, wherein each respective representation of the plurality of representations of the channels associated with the first group of channels comprises an image corresponding to a respective channel of the first group of channels.
48. The electronic device of 47, wherein a first representation of a first channel of the first group of channels has a current focus and comprises a first image, and the processing unit is further configured to:
   while displaying the plurality of representations of the channels associated with the first group of channels in the updated user interface, update the first image over time based on content associated with the first channel.
49. The electronic device of 48, wherein the processing unit is further configured to:
   while updating the first image over time based on content associated with the first channel and displaying the plurality of representations of the channels associated with the first group of channels in the updated user interface, display the content associated with the first channel in a content display area of the updated user interface.
50. The electronic device of any of 32-49, wherein two or more of the plurality of representations of the channels associated with the first group of channels comprise visual feeds from their respective channels that are updated over time.
51. The electronic device of any of 32-50, wherein:
   the receiving unit is further configured to, while displaying the plurality of representations of the channels associated with the first group of channels, receive selection of a first representation of a first channel of the plurality of representations, and
   the processing unit is further configured to, in response to the selection, display content from the first channel in a content display area of the updated user interface.
52. The electronic device of any of 32-51, wherein:
   the first group of channels corresponds to a content category, and
   displaying the plurality of the representations of channels associated with the first group of channels comprises:
      determining whether currently-available content on a set of channels has a content type corresponding to the content category of the first group of channels; and
      in accordance with a determination that the currently-available content on the set of channels has the content type corresponding to the content category of the first group of channels, including representations of the channels in the set of channels in the plurality of representations of the channels associated with the first group of channels.
53. The electronic device of 52, wherein:
   content on the channels in the set of channels is tagged with content-category tags, and
   determining whether the currently-available content on the set of channels has the content type corresponding to the content category of the first group of channels comprises determining whether the content-category tags of the currently-available content on the set of channels correspond to the content category of the first group of channels.
54. The electronic device of any of 52-53, wherein the processing unit is further configured to:
   while displaying the plurality of representations of the channels associated with the first group of channels, determine that a content type of currently-available content on a first channel of the channels no longer corresponds to the content category of the first group of channels;
   in accordance with a determination that a first representation of the first channel is not a currently-selected representation in the plurality of representations of the channels, remove the first representation of the first channel from the plurality of representations of the channels; and
   in accordance with a determination that the first representation of the first channel is the currently-selected representation in the plurality of representations of the channels, maintain the first representation of the first channel in the plurality of representations of the channels.
55. A method comprising:
   at an electronic device with a display device and one or more input devices:
   generating, for display on the display device, in a user interface:
      a first plurality of representations of first channels in a first region of the user interface, the first plurality of representations of the first channels having a first visual characteristic, and the first plurality of representations of the first channels corresponding to channels to which a user is subscribed; and
      a second plurality of representations of second channels in a second region of the user interface, different from the first region, the second plurality of representations of the second channels having a second visual characteristic, different from the first visual characteristic, and the second plurality of representations of the second channels corresponding to channels to which the user is not subscribed;
   while displaying the first plurality of representations of the first channels and the second plurality of representations of the second channels, receiving an input, via the one or more input devices, causing a respective channel representation of the second plurality of representations of the second channels to have a current focus; and
   in response to receiving the input, modifying the respective channel representation to have the first visual characteristic instead of having the second visual characteristic.
56. The method of 55, wherein generating the first plurality of representations having the first visual characteristic comprises generating the first plurality of representations in color, generating the second plurality of representations having the second visual characteristic comprises generating the second plurality of representations in grayscale or black and white, and modifying the respective channel representation to have the first visual characteristic instead of having the second visual characteristic comprises modifying the respective channel representation to be displayed in color instead of in grayscale or black and white.
57. The method of any of 55-56, further comprising:
   in response to receiving the input, increasing a size of the respective channel representation.
58. The method of any of 55-57, further comprising:
   in response to receiving the input, adding a shadow to the respective channel representation.
59. The method of any of 55-58, further comprising:
   in response to receiving the input, increasing a brightness of the respective channel representation relative to other channel representations.
60. The method of any of 55-59, further comprising:
   after modifying the respective channel representation, receiving a second input causing a second respective channel representation of the second plurality of representations of second channels to have the current focus; and
   in response to receiving the second input:
      reversing the modification of the respective channel representation such that the respective channel representation has the second visual characteristic instead of having the first visual characteristic; and
      modifying the second respective channel representation to have the first visual characteristic instead of having the second visual characteristic.
61. The method of any of 55-60, further comprising:
   while the respective channel representation has the current focus, receiving a second input corresponding to a request to subscribe to the respective channel; and
   in response to receiving the second input:
      moving the respective channel representation from the second region of the user interface to the first region of the user interface while maintaining the respective channel representation as having the first visual characteristic.
62. The method of any of 55-61, further comprising:
   while displaying the first plurality of representations of the first channels and the second plurality of representations of the second channels in the user interface, receiving a second input corresponding to a request for information about a particular channel of the first and second channels; and
   in response to receiving the second input, generating, for display on the display device, an updated user interface, which includes:
      a plurality of representations of content items available on the particular channel; and
      in accordance with a determination that the particular channel is a channel to which the user is not subscribed, a subscription user interface element selectable to subscribe to the particular channel.
63. The method of 62, wherein:
   in accordance with a determination that the particular channel is a channel to which the user is subscribed, the plurality of representations of content items are selectable to play the respective content items, and
   in accordance with a determination that the particular channel is a channel to which the user is not subscribed, the plurality of representations of content items are not selectable to play the respective content items.
64. The method of any of 55-63, wherein the second region of the user interface further includes a channel package representation of a first package of a first plurality of channels, and the method further comprises:
   receiving a second input corresponding to a request to subscribe to the first package of the first plurality of channels; and
   in response to receiving the second input, subscribing to a plurality of channels of the first package of the first plurality of channels.
65. The method of 64, wherein:
   the second region of the user interface includes a first portion and a second portion,
   the first portion includes a plurality of representations of channels that belong to one or more packages of channels, including the first package of the first plurality of channels, and
   the second portion includes a plurality of representations of channels that do not belong to a package of channels.
66. The method of any of 64-65, further comprising:
   in response to receiving the second input:
   moving the channel package representation of the first package from the second region to the first region in the user interface; and
   modifying the channel package representation of the first package to have the first visual characteristic.
67. The method of any of 64-66, wherein the second region of the user interface further includes representations of the first plurality of channels in the first package, and the method further comprises:
   in response to receiving the second input:
   moving the representations of the first plurality of channels in the first package from the second region to the first region in the user interface; and
   modifying the representations of the first plurality of channels in the first package to have the first visual characteristic.
68. The method of any of 55-67, wherein modifying the respective channel representation to have the first visual characteristic instead of having the second visual characteristic comprises displaying an animated transition of the respective channel representation from having the first visual characteristic to having the second visual characteristic.
69. An electronic device, comprising:
   one or more processors;
   memory;
   a display device;
   one or more input devices; and
   one or more programs, wherein the one or more programs are stored in the memory and configured to be executed by the one or more processors, the one or more programs including instructions for:
      generating, for display on the display device, in a user interface:
         a first plurality of representations of first channels in a first region of the user interface, the first plurality of representations of the first channels having a first visual characteristic, and the first plurality of representations of the first channels corresponding to channels to which a user is subscribed; and
         a second plurality of representations of second channels in a second region of the user interface, different from the first region, the second plurality of representations of the second channels having a second visual characteristic, different from the first visual characteristic, and the second plurality of representations of the second channels corresponding to channels to which the user is not subscribed;
      while displaying the first plurality of representations of the first channels and the second plurality of representations of the second channels, receiving an input, via the one or more input devices, causing a respective channel representation of the second plurality of representations of the second channels to have a current focus; and
      in response to receiving the input, modifying the respective channel representation to have the first visual characteristic instead of having the second visual characteristic.
70. A non-transitory computer readable storage medium storing one or more programs, the one or more programs comprising instructions, which when executed by one or more processors of an electronic device with a display device and one or more input devices, cause the electronic device to:
   generate, for display on the display device, in a user interface:
      a first plurality of representations of first channels in a first region of the user interface, the first plurality of representations of the first channels having a first visual characteristic, and the first plurality of representations of the first channels corresponding to channels to which a user is subscribed; and
      a second plurality of representations of second channels in a second region of the user interface, different from the first region, the second plurality of representations of the second channels having a second visual characteristic, different from the first visual characteristic, and the second plurality of representations of the second channels corresponding to channels to which the user is not subscribed;
   while displaying the first plurality of representations of the first channels and the second plurality of representations of the second channels, receive an input, via the one or more input devices, causing a respective channel representation of the second plurality of representations of the second channels to have a current focus; and
   in response to receiving the input, modify the respective channel representation to have the first visual characteristic instead of having the second visual characteristic.
71. An electronic device, comprising:
   one or more processors;
   memory;
   a display device;
   one or more input devices;
   means for generating, for display on the display device, in a user interface:
      a first plurality of representations of first channels in a first region of the user interface, the first plurality of representations of the first channels having a first visual characteristic, and the first plurality of representations of the first channels corresponding to channels to which a user is subscribed; and
      a second plurality of representations of second channels in a second region of the user interface, different from the first region, the second plurality of representations of the second channels having a second visual characteristic, different from the first visual characteristic, and the second plurality of representations of the second channels corresponding to channels to which the user is not subscribed;
   means for, while displaying the first plurality of representations of the first channels and the second plurality of representations of the second channels, receiving an input, via the one or more input devices, causing a respective channel representation of the second plurality of representations of the second channels to have a current focus; and
   means for, in response to receiving the input, modifying the respective channel representation to have the first visual characteristic instead of having the second visual characteristic.
72. An information processing apparatus for use in an electronic device with a display device and one or more input devices, comprising:
   means for generating, for display on the display device, in a user interface:
      a first plurality of representations of first channels in a first region of the user interface, the first plurality of representations of the first channels having a first visual characteristic, and the first plurality of representations of the first channels corresponding to channels to which a user is subscribed; and
      a second plurality of representations of second channels in a second region of the user interface, different from the first region, the second plurality of representations of the second channels having a second visual characteristic, different from the first visual characteristic, and the second plurality of representations of the second channels corresponding to channels to which the user is not subscribed;
   means for, while displaying the first plurality of representations of the first channels and the second plurality of representations of the second channels, receiving an input, via the one or more input devices, causing a respective channel representation of the second plurality of representations of the second channels to have a current focus; and
   means for, in response to receiving the input, modifying the respective channel representation to have the first visual characteristic instead of having the second visual characteristic.
73. An electronic device, comprising:
   one or more processors;
   memory;
   a display device;
   one or more input devices; and
   one or more programs, wherein the one or more programs are stored in the memory and configured to be executed by the one or more processors, the one or more programs including instructions for performing any of the methods of 55-68.
74. A non-transitory computer readable storage medium storing one or more programs, the one or more programs comprising instructions, which when executed by one or more processors of an electronic device with a display device and one or more input devices, cause the electronic device to perform any of the methods of 55-68.
75. An electronic device, comprising:
   one or more processors;
   memory;
   a display device;
   one or more input devices; and
   means for performing any of the methods of 55-68.
76. An information processing apparatus for use in an electronic device with a display device and one or more input devices, comprising:
   means for performing any of the methods of 55-68.
77. An electronic device, comprising:
   a receiving unit configured to, while displaying, on a display device, a first plurality of representations of first channels and a second plurality of representations of second channels in a user interface, receive an input, via one or more input devices, causing a respective channel representation of the second plurality of representations of the second channels to have a current focus; and
   a processing unit coupled to the receiving unit and configured to:
      generate, for display on the display device, in the user interface:
         the first plurality of representations of the first channels in a first region of the user interface, the first plurality of representations of the first channels having a first visual characteristic, and the first plurality of representations of the first channels corresponding to channels to which a user is subscribed; and
         the second plurality of representations of the second channels in a second region of the user interface, different from the first region, the second plurality of representations of the second channels having a second visual characteristic, different from the first visual characteristic, and the second plurality of representations of the second channels corresponding to channels to which the user is not subscribed; and
      in response to receiving the input, modifying the respective channel representation to have the first visual characteristic instead of having the second visual characteristic.
78. The electronic device of 77, wherein generating the first plurality of representations having the first visual characteristic comprises generating the first plurality of representations in color, generating the second plurality of representations having the second visual characteristic comprises generating the second plurality of representations in grayscale or black and white, and modifying the respective channel representation to have the first visual characteristic instead of having the second visual characteristic comprises modifying the respective channel representation to be displayed in color instead of in grayscale or black and white.
79. The electronic device of any of 77-78, wherein the processing unit is further configured to:
   in response to receiving the input, increase a size of the respective channel representation.
80. The electronic device of any of 77-79, wherein the processing unit is further configured to:
   in response to receiving the input, add a shadow to the respective channel representation.
81. The electronic device of any of 77-80, wherein the processing unit is further configured to:
   in response to receiving the input, increase a brightness of the respective channel representation relative to other channel representations.
82. The electronic device of any of 77-81, wherein:
   the receiving unit is further configured to, after modifying the respective channel representation, receive a second input causing a second respective channel representation of the second plurality of representations of second channels to have the current focus, and
   the processing unit is further configured to, in response to receiving the second input:
      reverse the modification of the respective channel representation such that the respective channel representation has the second visual characteristic instead of having the first visual characteristic; and
      modify the second respective channel representation to have the first visual characteristic instead of having the second visual characteristic.
83. The electronic device of any of 77-82, wherein:
   the receiving unit is further configured to, while the respective channel representation has the current focus, receive a second input corresponding to a request to subscribe to the respective channel, and
   the processing unit is further configured to, in response to receiving the second input:
      move the respective channel representation from the second region of the user interface to the first region of the user interface while maintaining the respective channel representation as having the first visual characteristic.
84. The electronic device of any of 77-83, wherein:
   the receiving unit is further configured to, while displaying the first plurality of representations of the first channels and the second plurality of representations of the second channels in the user interface, receive a second input corresponding to a request for information about a particular channel of the first and second channels, and
   the processing unit is further configured to, in response to receiving the second input, generate, for display on the display device, an updated user interface, which includes:
      a plurality of representations of content items available on the particular channel; and
      in accordance with a determination that the particular channel is a channel to which the user is not subscribed, a subscription user interface element selectable to subscribe to the particular channel.
85. The electronic device of 84, wherein:
   in accordance with a determination that the particular channel is a channel to which the user is subscribed, the plurality of representations of content items are selectable to play the respective content items, and
   in accordance with a determination that the particular channel is a channel to which the user is not subscribed, the plurality of representations of content items are not selectable to play the respective content items.
86. The electronic device of any of 77-85, wherein:
   the second region of the user interface further includes a channel package representation of a first package of a first plurality of channels,
   the receiving unit is further configured to:
      receive a second input corresponding to a request to subscribe to the first package of the first plurality of channels, and
   the processing unit is further configured to:
      in response to receiving the second input, subscribe to a plurality of channels of the first package of the first plurality of channels.
87. The electronic device of 86, wherein:
   the second region of the user interface includes a first portion and a second portion,
   the first portion includes a plurality of representations of channels that belong to one or more packages of channels, including the first package of the first plurality of channels, and
   the second portion includes a plurality of representations of channels that do not belong to a package of channels.
88. The electronic device of any of 86-87, wherein the processing unit is further configured to:
   in response to receiving the second input:
   move the channel package representation of the first package from the second region to the first region in the user interface; and
   modify the channel package representation of the first package to have the first visual characteristic.
89. The electronic device of any of 86-88, wherein:
   the second region of the user interface further includes representations of the first plurality of channels in the first package, and
   the processing unit is further configured to, in response to receiving the second input:
      move the representations of the first plurality of channels in the first package from the second region to the first region in the user interface; and
      modify the representations of the first plurality of channels in the first package to have the first visual characteristic.
90. The electronic device of any of 77-89, wherein modifying the respective channel representation to have the first visual characteristic instead of having the second visual characteristic comprises displaying an animated transition of the respective channel representation from having the first visual characteristic to having the second visual characteristic.
91. A method comprising:
   at an electronic device with a display device and one or more input devices:
   generating, for display on the display device, a media-navigation user interface, including:
      a navigation bar including a live section indicator, a watchlist section indicator, and an on-demand section indicator; and
      a content display area;
   while the media-navigation user interface is displayed on the display device with the live section indicator currently-selected and live content displayed in the content display area, detecting selection, via the one or more input devices, of the watchlist section indicator;
   in response to detecting the selection of the watchlist section indicator, generating, for display on the display device, an updated user interface that includes maintaining display of the navigation bar and replacing display of the live content in the content display area with watchlist content that includes content selected based on prior user interactions with a collection of media content;
   while the media-navigation user interface is displayed on the display device with the watchlist section indicator currently-selected and the watchlist content displayed in the content display area, detecting selection, via the one or more input devices, of the on-demand section indicator; and
   in response to detecting the selection of the on-demand section indicator, generating, for display on the display device, an updated user interface that includes maintaining display of the navigation bar and replacing display of the watchlist content in the content display area with on-demand content that includes on-demand content available to the user.
92. The method of 91, wherein while the live section indicator is currently-selected, the live content displayed in the content display area corresponds to a currently-selected channel.
93. The method of 92, further comprising:
   while displaying the live content in the content display area, displaying a visual indication in the content display area of the currently-selected channel.
94. The method of 93, further comprising:
   while the live section indicator is currently-selected, receiving an input corresponding to a further selection of the live section indicator; and
   in response to the input, ceasing display of the visual indication of the currently-selected channel after a predetermined time period.
95. The method of any of 91-94, further comprising:
   while the live section indicator is currently-selected, receiving an input corresponding to a further selection of the live section indicator; and
   in response to the input, generating, for display on the display device, an updated user interface that includes ceasing display of the navigation bar in the user interface while maintaining display of the live content in the content display area.
96. The method of any of 91-95, further comprising:
   while the live section indicator is currently-selected, receiving an input corresponding to a request to display a plurality of representations of channels accessible in the content display area; and
   in response to receiving the input, generating, for display on the display device, an updated user interface, which includes the plurality of representations of the channels accessible in the content display area along a first axis in the content display area.
97. The method of any of 91-96, wherein the watchlist content displayed while the watchlist section indicator is currently-selected includes a first set of representations of watched content items and a second set of representations of unwatched content items.
98. The method of 97, wherein a first representation of a first watched content item in the first set of representations includes a visual indication of a current play position in the first watched content item.
99. The method of any of 91-98, wherein the watchlist content displayed while the watchlist section indicator is currently-selected includes a first set of representations of live content items and a second set of representations of on-demand content items.
100. The method of any of 91-99, further comprising:
   while the watchlist section indicator is currently-selected and the watchlist content is displayed in the content display area, receiving an input corresponding to a request to play a respective content item of the watchlist content; and
   in response to receiving the input:
      replacing display of the watchlist content in the content display area with the respective content item; and
      ceasing display of the navigation bar in the user interface.
101. The method of any of 91-100, wherein the on-demand content displayed while the on-demand section indicator is currently-selected includes a first set of representations of paid content items and a second set of representations of unpaid content items.
102. The method of 101, further comprising:
   while the first set of representations of paid content items and the second set of representations of unpaid content items are displayed in the user interface, receiving an input corresponding to a request to play a respective content item of the paid or unpaid content items; and
   in response to receiving the input:
      in accordance with a determination that the respective content item is a paid content item, displaying a request for confirmation of payment from the user in the user interface; and
      in accordance with a determination that the respective content item is an unpaid content item, replacing display of the on-demand content in the content display area with the respective content item.
103. The method of 102, further comprising:
   while displaying the request for confirmation of payment from the user, receiving a second input; and
   in response to receiving the second input:
      in accordance with a determination that the second input corresponds to a confirmation of payment from the user, replacing display of the on-demand content in the content display area with the respective content item; and
      in accordance with a determination that the second input does not correspond to a confirmation of payment from the user, forgoing replacing the on-demand content in the content display area with the respective content item.
104. The method of any of 91-103, wherein the on-demand content displayed while the on-demand section indicator is currently-selected includes a first set of representations of subscribed content items and a second set of representations of unsubscribed content items.
105. The method of 104, further comprising:
   while the first set of representations of subscribed content items and the second set of representations of unsubscribed content items are displayed, receiving an input corresponding to a request to play a respective content item of the subscribed or unsubscribed content items; and
   in response to receiving the input:
      in accordance with a determination that the respective content item is a subscribed content item, replacing display of the on-demand content in the content display area with the respective content item; and
      in accordance with a determination that the respective content item is an unsubscribed content item, displaying a query in the user interface asking the user if they would like to subscribe to a channel with which the respective content item is associated.
106. The method of 105, further comprising:
   while displaying the query in the user interface asking the user if they would like to subscribe to the channel with which the respective content item is associated, receiving a second input; and
   in response to receiving the second input:
      in accordance with a determination that the second input corresponds to a request to subscribe to the channel with which the respective content item is associated, replacing display of the on-demand content in the content display area with the respective content item; and
      in accordance with a determination that the second input does not correspond to a request to subscribe to the channel with which the respective content is associated, forgoing replacing the on-demand content in the content display area with the respective content item.
107. The method of any of 91-106, wherein the navigation bar further includes a channels section indicator, the method further comprising:
   while the media-navigation user interface is displayed on the display device with the on-demand section indicator currently-selected and the on-demand content displayed in the content display area, detecting selection of the channels section indicator; and
   in response to detecting selection of the channels section indicator, generating, for display on the display device, an updated user interface that includes maintaining display of the navigation bar and replacing display of the on-demand content in the content display area with channel content that includes a plurality of representations of channels available to the user.
108. The method of 107, wherein the plurality of representations of the channels includes:
   a representation of a channel to which the user is subscribed; and
   a representation of a channel to which the user is not subscribed.
109. The method of any of 91-108, wherein the navigation bar further includes a channels section indicator, the method further comprising:
   while displaying a representation of a respective content item in the content display area of the user interface, receiving selection of the representation of the respective content item; and
   in response to receiving the selection of the representation of the respective content item:
      in accordance with a determination that the respective content item was displayed on a non-channel-specific page when the selection of the representation of the respective content item was received, displaying, in the content display area, a combined content item page associated with the respective content item and a plurality of channels including the respective channel; and
      in accordance with a determination that the respective content item was displayed on a channel-specific page when the selection of the representation of the respective content item was received, displaying, in the content display area, a content item page associated with the respective content item and the respective channel.
110. The method of any of 91-109, wherein the navigation bar further includes a search section indicator, the method further comprising:
   while the media-navigation user interface is displayed on the display device with the on-demand section indicator currently-selected and the on-demand content displayed in the content display area, detecting selection of the search section indicator; and
   in response to detecting selection of the search section indicator, generating, for display on the display device, an updated user interface that includes maintaining display of the navigation bar and replacing display of the on-demand content in the content display area with:
      search content that includes a plurality of representations of content items watched by users other than the user; and
      a text entry field for searching content available to the user.
111. The method of 110, wherein the plurality of representations of the content items includes representations of popular content items based on the other users' searching or viewing behaviors.
112. The method of any of 110-111, further comprising:
   while displaying the text entry field, receiving a search input in the text entry field; and
   in response to receiving the search input, replacing the plurality of representations of the content items with a plurality of representations of search-result content items based on the search input.
113. The method of any of 110-112, wherein the search-result content items include content items associated with subscribed channels and unsubscribed channels.
114. The method of any of 110-113, wherein the search-result content items include paid content items and unpaid content items.
115. The method of any of 110-114, further comprising:
   while displaying the text entry field, receiving a first portion of a search input in the text entry field; and
   in response to receiving the first portion of the search input, displaying a first plurality of representations of search-result content items based on the first portion of the search input.
116. The method of 115, further comprising:
   while displaying the first plurality of representations of search-result content items, receiving a second portion of the search input in the text entry field; and
   in response to receiving the second portion of the search input, replacing the first plurality of representations of search-result content items with a second plurality of representations of search-result content items based on the first and second portions of the search input.
117. The method of any of 110-116, wherein:
   the search content includes a first region and a second region,
   after receiving a first search input in the text entry field for which results of a first type are more relevant than results of a second type, results of the first type are displayed in the first region and results of the second type are displayed in the second region, and
   the method further comprises:
      while results of the first type are displayed in the first region and results of the second type are displayed in the second region, receiving a second search input in the text entry field; and
      in response to receiving the second search input:
         in accordance with a determination that, for the second search input, results of the first type are more relevant than results of the second type, maintaining display of results of the first type in the first region and results of the second type in the second region; and
         in accordance with a determination that, for the second search input, results of the second type are more relevant than results of the first type, displaying results of the second type in the first region and displaying results of the first type in the second region.
118. An electronic device, comprising:
   one or more processors;
   memory;
   a display device;
   one or more input devices; and
   one or more programs, wherein the one or more programs are stored in the memory and configured to be executed by the one or more processors, the one or more programs including instructions for:
      generating, for display on the display device, a media-navigation user interface, including:
         a navigation bar including a live section indicator, a watchlist section indicator, and an on-demand section indicator; and
         a content display area;
      while the media-navigation user interface is displayed on the display device with the live section indicator currently-selected and live content displayed in the content display area, detecting selection, via the one or more input devices, of the watchlist section indicator;
      in response to detecting the selection of the watchlist section indicator, generating, for display on the display device, an updated user interface that includes maintaining display of the navigation bar and replacing display of the live content in the content display area with watchlist content that includes content selected based on prior user interactions with a collection of media content;
      while the media-navigation user interface is displayed on the display device with the watchlist section indicator currently-selected and the watchlist content displayed in the content display area, detecting selection, via the one or more input devices, of the on-demand section indicator; and
      in response to detecting the selection of the on-demand section indicator, generating, for display on the display device, an updated user interface that includes maintaining display of the navigation bar and replacing display of the watchlist content in the content display area with on-demand content that includes on-demand content available to the user.
119. A non-transitory computer readable storage medium storing one or more programs, the one or more programs comprising instructions, which when executed by one or more processors of an electronic device with a display device and one or more input devices, cause the electronic device to:
   generate, for display on the display device, a media-navigation user interface, including:
      a navigation bar including a live section indicator, a watchlist section indicator, and an on-demand section indicator; and
      a content display area;
   while the media-navigation user interface is displayed on the display device with the live section indicator currently-selected and live content displayed in the content display area, detect selection, via the one or more input devices, of the watchlist section indicator;
   in response to detecting the selection of the watchlist section indicator, generate, for display on the display device, an updated user interface that includes maintaining display of the navigation bar and replacing display of the live content in the content display area with watchlist content that includes content selected based on prior user interactions with a collection of media content;
   while the media-navigation user interface is displayed on the display device with the watchlist section indicator currently-selected and the watchlist content displayed in the content display area, detect selection, via the one or more input devices, of the on-demand section indicator; and
   in response to detecting the selection of the on-demand section indicator, generate, for display on the display device, an updated user interface that includes maintaining display of the navigation bar and replacing display of the watchlist content in the content display area with on-demand content that includes on-demand content available to the user.
120. An electronic device, comprising:
   one or more processors;
   memory;
   a display device;
   one or more input devices;
   means for generating, for display on the display device, a media-navigation user interface, including:
      a navigation bar including a live section indicator, a watchlist section indicator, and an on-demand section indicator; and
      a content display area;
   means for, while the media-navigation user interface is displayed on the display device with the live section indicator currently-selected and live content displayed in the content display area, detecting selection, via the one or more input devices, of the watchlist section indicator;
   means for, in response to detecting the selection of the watchlist section indicator, generating, for display on the display device, an updated user interface that includes maintaining display of the navigation bar and replacing display of the live content in the content display area with watchlist content that includes content selected based on prior user interactions with a collection of media content;
   means for, while the media-navigation user interface is displayed on the display device with the watchlist section indicator currently-selected and the watchlist content displayed in the content display area, detecting selection, via the one or more input devices, of the on-demand section indicator; and
   means for, in response to detecting the selection of the on-demand section indicator, generating, for display on the display device, an updated user interface that includes maintaining display of the navigation bar and replacing display of the watchlist content in the content display area with on-demand content that includes on-demand content available to the user.
121. An information processing apparatus for use in an electronic device with a display device and one or more input devices, comprising:
   means for generating, for display on the display device, a media-navigation user interface, including:
      a navigation bar including a live section indicator, a watchlist section indicator, and an on-demand section indicator; and
      a content display area;
   means for, while the media-navigation user interface is displayed on the display device with the live section indicator currently-selected and live content displayed in the content display area, detecting selection, via the one or more input devices, of the watchlist section indicator;
   means for, in response to detecting the selection of the watchlist section indicator, generating, for display on the display device, an updated user interface that includes maintaining display of the navigation bar and replacing display of the live content in the content display area with watchlist content that includes content selected based on prior user interactions with a collection of media content;
   means for, while the media-navigation user interface is displayed on the display device with the watchlist section indicator currently-selected and the watchlist content displayed in the content display area, detecting selection, via the one or more input devices, of the on-demand section indicator; and
   means for, in response to detecting the selection of the on-demand section indicator, generating, for display on the display device, an updated user interface that includes maintaining display of the navigation bar and replacing display of the watchlist content in the content display area with on-demand content that includes on-demand content available to the user.
122. An electronic device, comprising:
   one or more processors;
   memory;
   a display device;
   one or more input devices; and
   one or more programs, wherein the one or more programs are stored in the memory and configured to be executed by the one or more processors, the one or more programs including instructions for performing any of the methods of 91-117.
123. A non-transitory computer readable storage medium storing one or more programs, the one or more programs comprising instructions, which when executed by one or more processors of an electronic device with a display device and one or more input devices, cause the electronic device to perform any of the methods of 91-117.
124. An electronic device, comprising:
   one or more processors;
   memory;
   a display device;
   one or more input devices; and
   means for performing any of the methods of 91-117.
125. An information processing apparatus for use in an electronic device with a display device and one or more input devices, comprising:
   means for performing any of the methods of 91-117.
126. An electronic device, comprising:
   a processing unit configured to generate, for display on the display device, a media-navigation user interface, including:
      a navigation bar including a live section indicator, a watchlist section indicator, and an on-demand section indicator; and
      a content display area; and
   a receiving unit coupled to the processing unit and configured to, while the media-navigation user interface is displayed on the display device with the live section indicator currently-selected and live content displayed in the content display area, detect selection, via the one or more input devices, of the watchlist section indicator,
   wherein:
      the processing unit is further configured to, in response to detecting the selection of the watchlist section indicator, generate, for display on the display device, an updated user interface that includes maintaining display of the navigation bar and replacing display of the live content in the content display area with watchlist content that includes content selected based on prior user interactions with a collection of media content,
      the receiving unit is further configured to, while the media-navigation user interface is displayed on the display device with the watchlist section indicator currently-selected and the watchlist content displayed in the content display area, detect selection, via the one or more input devices, of the on-demand section indicator, and
      the processing unit is further configured to, in response to detecting the selection of the on-demand section indicator, generate, for display on the display device, an updated user interface that includes maintaining display of the navigation bar and replacing display of the watchlist content in the content display area with on-demand content that includes on-demand content available to the user.
127. The electronic device of 126, wherein while the live section indicator is currently-selected, the live content displayed in the content display area corresponds to a currently-selected channel.
128. The electronic device of 127, wherein the processing unit is further configured to:
   while displaying the live content in the content display area, display a visual indication in the content display area of the currently-selected channel.
129. The electronic device of 128, wherein:
   the receiving unit is further configured to, while the live section indicator is currently-selected, receive an input corresponding to a further selection of the live section indicator, and
   the processing unit is further configured to, in response to the input, cease display of the visual indication of the currently-selected channel after a predetermined time period.
130. The electronic device of any of 126-129, wherein:
   the receiving unit is further configured to, while the live section indicator is currently-selected, receive an input corresponding to a further selection of the live section indicator, and
   the processing unit is further configured to, in response to the input, generate, for display on the display device, an updated user interface that includes ceasing display of the navigation bar in the user interface while maintaining display of the live content in the content display area.
131. The electronic device of any of 126-130, wherein:
   the receiving unit is further configured to, while the live section indicator is currently-selected, receive an input corresponding to a request to display a plurality of representations of channels accessible in the content display area, and
   the processing unit is further configured to, in response to receiving the input, generate, for display on the display device, an updated user interface, which includes the plurality of representations of the channels accessible in the content display area along a first axis in the content display area.
132. The electronic device of any of 126-131, wherein the watchlist content displayed while the watchlist section indicator is currently-selected includes a first set of representations of watched content items and a second set of representations of unwatched content items.
133. The electronic device of 132, wherein a first representation of a first watched content item in the first set of representations includes a visual indication of a current play position in the first watched content item.
134. The electronic device of any of 126-133, wherein the watchlist content displayed while the watchlist section indicator is currently-selected includes a first set of representations of live content items and a second set of representations of on-demand content items.
135. The electronic device of any of 126-134, wherein:
   the receiving unit is further configured to, while the watchlist section indicator is currently-selected and the watchlist content is displayed in the content display area, receive an input corresponding to a request to play a respective content item of the watchlist content, and
   the processing unit is further configured to, in response to receiving the input:
      replace display of the watchlist content in the content display area with the respective content item; and
      cease display of the navigation bar in the user interface.
136. The electronic device of any ol 126-135, wherein the on-demand content displayed while the on-demand section indicator is currently-selected includes a first set of representations of paid content items and a second set of representations of unpaid content items.
137. The electronic device of 136, wherein:
   the receiving unit is further configured to, while the first set of representations of paid content items and the second set of representations of unpaid content items are displayed in the user interface, receive an input corresponding to a request to play a respective content item of the paid or unpaid content items, and
   the processing unit is further configured to, in response to receiving the input:
      in accordance with a determination that the respective content item is a paid content item, display a request for confirmation of payment from the user in the user interface; and
      in accordance with a determination that the respective content item is an unpaid content item, replace display of the on-demand content in the content display area with the respective content item.
138. The electronic device of 137, wherein:
   the receiving unit is further configured to, while displaying the request for confirmation of payment from the user, receive a second input, and
   the processing unit is further configured to, in response to receiving the second input:
      in accordance with a determination that the second input corresponds to a confirmation of payment from the user, replace display of the on-demand content in the content display area with the respective content item; and
      in accordance with a determination that the second input does not correspond to a confirmation of payment from the user, forgo replacing the on-demand content in the content display area with the respective content item.
139. The electronic device of any of 126-138, wherein the on-demand content displayed while the on-demand section indicator is currently-selected includes a first set of representations of subscribed content items and a second set of representations of unsubscribed content items.
140. The electronic device of 139, wherein:
   the receiving unit is further configured to, while the first set of representations of subscribed content items and the second set of representations of unsubscribed content items are displayed, receive an input corresponding to a request to play a respective content item of the subscribed or unsubscribed content items, and
   the processing unit is further configured to, in response to receiving the input:
      in accordance with a determination that the respective content item is a subscribed content item, replace display of the on-demand content in the content display area with the respective content item; and
      in accordance with a determination that the respective content item is an unsubscribed content item, display a query in the user interface asking the user if they would like to subscribe to a channel with which the respective content item is associated.
141. The electronic device of 140, wherein:
   the receiving unit is further configured to, while displaying the query in the user interface asking the user if they would like to subscribe to the channel with which the respective content item is associated, receive a second input, and
   the processing unit is further configured to, in response to receiving the second input:
      in accordance with a determination that the second input corresponds to a request to subscribe to the channel with which the respective content item is associated, replace display of the on-demand content in the content display area with the respective content item; and
      in accordance with a determination that the second input does not correspond to a request to subscribe to the channel with which the respective content is associated, forgo replacing the on-demand content in the content display area with the respective content item.
142. The electronic device of any of 126-141, wherein:
   the navigation bar further includes a channels section indicator,
   the receiving unit is further configured to, while the media-navigation user interface is displayed on the display device with the on-demand section indicator currently-selected and the on-demand content displayed in the content display area, detect selection of the channels section indicator, and
   the processing unit is further configured to, in response to detecting selection of the channels section indicator, generate, for display on the display device, an updated user interface that includes maintaining display of the navigation bar and replacing display of the on-demand content in the content display area with channel content that includes a plurality of representations of channels available to the user.
143. The electronic device of 142, wherein the plurality of representations of the channels includes:
   a representation of a channel to which the user is subscribed; and
   a representation of a channel to which the user is not subscribed.
144. The electronic device of any of 126-143, wherein:
   the navigation bar further includes a channels section indicator,
   the receiving unit is further configured to, while displaying a representation of a respective content item in the content display area of the user interface, receive selection of the representation of the respective content item, and
   the processing unit is further configured to, in response to receiving the selection of the representation of the respective content item:
      in accordance with a determination that the respective content item was displayed on a non-channel-specific page when the selection of the representation of the respective content item was received, display, in the content display area, a combined content item page associated with the respective content item and a plurality of channels including the respective channel; and
      in accordance with a determination that the respective content item was displayed on a channel-specific page when the selection of the representation of the respective content item was received, display, in the content display area, a content item page associated with the respective content item and the respective channel.
145. The electronic device of any of 126-144, wherein:
   the navigation bar further includes a search section indicator,
   the receiving unit is further configured to, while the media-navigation user interface is displayed on the display device with the on-demand section indicator currently-selected and the on-demand content displayed in the content display area, detect selection of the search section indicator, and
   the processing unit is further configured to, in response to detecting selection of the search section indicator, generate, for display on the display device, an updated user interface that includes maintaining display of the navigation bar and replacing display of the on-demand content in the content display area with:
      search content that includes a plurality of representations of content items watched by users other than the user; and
      a text entry field for searching content available to the user.
146. The electronic device of 145, wherein the plurality of representations of the content items includes representations of popular content items based on the other users' searching or viewing behaviors.
147. The electronic device of any of 145-146, wherein:
   the receiving unit is further configured to, while displaying the text entry field, receive a search input in the text entry field, and
   the processing unit is further configured to, in response to receiving the search input, replace the plurality of representations of the content items with a plurality of representations of search-result content items based on the search input.
148. The electronic device of any of 145-147, wherein the search-result content items include content items associated with subscribed channels and unsubscribed channels.
149. The electronic device of any of 145-148, wherein the search-result content items include paid content items and unpaid content items.
150. The electronic device of any of 145-149, wherein:
   the receiving unit is further configured to, while displaying the text entry field, receive a first portion of a search input in the text entry field, and
   the processing unit is further configured to, in response to receiving the first portion of the search input, display a first plurality of representations of search-result content items based on the first portion of the search input.
151. The electronic device of 150, wherein:
   the receiving unit is further configured to, while displaying the first plurality of representations of search-result content items, receive a second portion of the search input in the text entry field, and
   the processing unit is further configured to, in response to receiving the second portion of the search input, replace the first plurality of representations of search-result content items with a second plurality of representations of search-result content items based on the first and second portions of the search input.
152. The electronic device of any of 145-151, wherein:
   the search content includes a first region and a second region,
   after receiving a first search input in the text entry field for which results of a first type are more relevant than results of a second type, results of the first type are displayed in the first region and results of the second type are displayed in the second region,
   the receiving unit is further configured to, while results of the first type are displayed in the first region and results of the second type are displayed in the second region, receive a second search input in the text entry field, and
   the processing unit is further configured to, in response to receiving the second search input:
      in accordance with a determination that, for the second search input, results of the first type are more relevant than results of the second type, maintain display of results of the first type in the first region and results of the second type in the second region; and
      in accordance with a determination that, for the second search input, results of the second type are more relevant than results of the first type, display results of the second type in the first region and display results of the first type in the second region.
153. A method comprising:
   at an electronic device with a display device and one or more input devices:
   generating for display, on the display device, a user interface that includes concurrently displaying playing content for a respective channel and displaying a channel bar including a plurality of representations of a first plurality of channels in a respective order along a first axis in a user interface that correspond to currently-available content on the first plurality of channels;
   while the channel bar is displayed on the display device, receiving an input, via the one or more input devices, corresponding to a request to display a content guide on the display device; and
   in response to receiving the input, generating, for display on the display device, an updated user interface that includes:
      displaying the content guide in the updated user interface, the content guide including information about content items for a second plurality of channels, including a first channel and a second channel, included in the first plurality of channels, the content items including currently-available content and future content, and the information arranged in adjacent arrays that are organized in the respective order along the first axis, including:
      a first array, representing the first channel, that extends along a second axis in the updated user interface, the first array including information about content items for the first channel, the information arranged along the second axis in the first array in accordance with times at which the content items for the first channel are available on the first channel; and
      a second array, representing the second channel, displayed along the second axis in the updated user interface, the second array including information about content items for the second channel, the information arranged along the second axis in the second array in accordance with times at which the content items for the second channel are available on the second channel.
154. The method of 153, wherein generating the updated user interface further includes:
   ceasing displaying the playing content for the respective channel in response to receiving the input corresponding to the request to display the content guide on the display device.
155. The method of any of 153-154, wherein the second plurality of channels in the content guide correspond to the first plurality of channels in the channel bar.
156. The method of 155, wherein respective positions of the arrays representing the second plurality of channels in the content guide correspond to respective positions of the representations of the first plurality of channels in the channel bar.
157. The method of any of 153-156, further comprising:
   while displaying the content guide, displaying, in the updated user interface, information about a currently-selected content item in the content guide.
158. The method of 157, further comprising:
   displaying a representation of the currently-selected content item in a respective array of the arrays with a first visual characteristic, and displaying representations of unselected content items in the arrays with a second visual characteristic, different from the first visual characteristic.
159. The method of 158, wherein displaying the representation of the currently-selected content item with the first visual characteristic includes displaying, in the representation of the currently-selected content item, information of a first type about the currently-selected content item.
160. The method of 159, wherein the representations of the unselected content items do not include respective information of the first type about the respective unselected content items.
161. The method of any of 153-160, wherein:
   the user interface is associated with a first category of channels and a second category of channels,
   channels in the first category of channels include content that shares a first common characteristic,
   channels in the second category of channels include content that shares a second common characteristic, different from the first common characteristic, and
   the first plurality of channels in the channel bar and the second plurality of channels in the content guide are selected so as to include channels from the first category of channels but not channels from the second category of channels.
162. The method of 161, further comprising:
   while displaying the content guide, receiving an input corresponding to a request to display channels from the second category of channels instead of the first category of channels;
   in response receiving the input:
      ceasing display of the first category of channels in the content guide; and
      displaying a plurality of channels from the second category of channels in the content guide.
163. The method of 162, wherein the input corresponding to the request to display channels from the second category of channels instead of the first category of channels comprises:
   scrolling past an end of the content guide along the first axis; and
   after scrolling past the end of the content guide along the first axis, selecting the second category of channels from a list of categories of channels, the list of categories of channels including the first category of channels and the second category of channels.
164. The method of 162, wherein the input corresponding to the request to display channels from the second category of channels instead of the first category of channels comprises:
   scrolling, along the first axis, through the first category of channels in the content guide to the second category of channels in the content guide.
165. The method of 162, wherein receiving the input corresponding to the request to display channels from the second category of channels instead of the first category of channels comprises:
   receiving an input corresponding to a request to switch the channel bar from displaying the first category of channels to displaying the second category of channels.
166. The method of any of 153-165, wherein:
   the user interface is associated with a first category of channels and a second category of channels,
   channels in the first category of channels include content that shares a first common characteristic,
   channels in the second category of channels include content that shares a second common characteristic, different from the first common characteristic,
   the first plurality of channels in the channel bar are selected so as to include channels from the first category of channels but not channels from the second category of channels, and
   the method further comprises:
      before receiving the input corresponding to the request to display the content guide on the display device, receiving an input corresponding to a request to switch the channel bar from displaying the first category of channels to displaying the second category of channels; and
      in response to receiving the input:
         ceasing display of the first category of channels in the channel bar; and
         displaying the second category of channels in the channel bar,
      wherein:
         the input corresponding to the request to display the content guide on the display device is received while the channel bar is displaying the second category of channels and not the first category of channels, and
         the second plurality of channels in the content guide includes channels from the second category of channels but not the first category of channels.
167. The method of any of 153-166, further comprising:
   while displaying the content guide, receiving an input corresponding to a selection of a representation of a respective content item in the content guide; and
   in response to receiving the input:
      in accordance with a determination that the respective content item is currently-available, playing the respective content item on the display device; and
      in accordance with a determination that the respective content item is not currently-available, displaying one or more selectable user interface elements on the display that enable a user to perform operations associated with future playback of the content item.
168. The method of 167, wherein the selectable user interface elements include:
   a notification element for providing a notification when the respective content item becomes available;
   a content item information element for displaying a user interface corresponding to the respective content item; and
   a channel information element for displaying a user interface corresponding to a respective channel on which the respective content item is available.
169. The method of any of 153-168, further comprising:
   while displaying the content guide, receiving an input associated with a currently-available content item in the content guide; and
   in response to receiving the input:
      in accordance with a determination that the input has a duration that is shorter than a threshold time period, playing the currently-available content item on the display device; and
      in accordance with a determination that the input has a duration that is longer than the threshold time period, displaying one or more selectable user interface elements on the display that enable a user to perform operations associated with the currently-available content item.
170. The method of 169, wherein the selectable user interface elements include:
   a play element for playing the currently-available content item on the display device;
   a content item information element for displaying a user interface corresponding to the currently-available content item on the display; and
   a channel information element for displaying a user interface corresponding to a respective channel on which the currently-available content item is available.
171. The method of any of 153-170, wherein:
   the second plurality of channels in the content guide have currently-available content having a first shared characteristic.
172. The method of 171, wherein:
   the updated user interface is associated with a first category of channels and a second category of channels,
   channels in the first category of channels include currently-available content having the first shared characteristic,
   channels in the second category of channels do not have currently-available content having the first shared characteristic, but have future content having the first shared characteristic within a predetermined time threshold of a current time, and
   the second plurality of channels in the content guide are selected so as to include channels from the first and second categories of channels.
173. The method of 172, wherein the channels in the first category of channels and the channels in the second category of channels are displayed in separate regions of the content guide.
174. The method of any of 171-173, wherein:
   the second plurality of channels in the content guide includes content items having the first shared characteristic, and content items not having the first shared characteristic,
   representations of the content items having the first shared characteristic in the content guide have a first visual characteristic in the content guide, and
   representations of the content items not having the first shared characteristic have a second visual characteristic, different from the first visual characteristic, in the content guide.
175. The method of 174, further comprising:
   while displaying the representations of the content items having the first shared characteristic with the first visual characteristic and the representations of the content items not having the first shared characteristic with the second visual characteristic, receiving an input corresponding to a request to change a currently-designated characteristic from the first shared characteristic to a second shared characteristic; and
   in response to receiving the input:
      modifying the content guide to include a third plurality of channels that have currently-available content having the second shared characteristic instead of the first shared characteristic, the third plurality of channels including content items having the second shared characteristic, and content items not having the second shared characteristic;
      displaying representations of the content items having the second shared characteristic with the first visual characteristic; and
      displaying representations of the content items not having the second shared characteristic with the second visual characteristic.
176. The method of any of 153-175, further comprising:
   while displaying the second plurality of channels having currently-available content having a shared characteristic in the content guide, determining that the first channel no longer has currently-available content having the shared characteristic; and
   in response to determining that the first channel no longer has currently-available content having the shared characteristic, maintaining the first channel in the content guide and in the channel bar.
177. The method of any of 153-176, further comprising:
   while displaying the second plurality of channels having currently-available content having a shared characteristic in the content guide, determining that the first channel no longer has currently-available content having the shared characteristic; and
   in response to determining that the first channel no longer has currently-available content having the shared characteristic, removing the first channel from the content guide and the channel bar.
178. The method of any of 153-177, further comprising:
   while displaying the second plurality of channels having currently-available content having a shared characteristic in the content guide, determining that the first channel no longer has currently-available content having the shared characteristic; and
   in response to determining that the first channel no longer has currently-available content having the shared characteristic:
      in accordance with a determination that a content item on the first channel is currently-selected, maintaining the first channel in the content guide and in the channel bar; and
      in accordance with a determination that a content item on the first channel is not currently-selected, removing the first channel from the content guide and the channel bar.
179. The method of any of 153-178, further comprising:
   while displaying the second plurality of channels having currently-available content having a shared characteristic in the content guide, determining that the first channel no longer has currently-available content having the shared characteristic;
   in response to determining that the first channel no longer has currently-available content having the shared characteristic, maintaining the first channel in the content guide and in the channel bar;
   after maintaining the first channel in the content guide and in the channel bar, ceasing display of the content guide and the channel bar in the user interface;
   after ceasing display of the content guide and the channel bar in the user interface, redisplaying the content guide and the channel bar in the user interface, the content guide and the channel bar having the first channel removed therefrom.
180. The method of any of 153-179, wherein the content guide includes representations of one or more content items that are available on-demand, and the representations of the one or more content items that are available on-demand include a visual indication indicating that the content item is available for on-demand presentation.
181. The method of any of 153-180, further comprising:
   in response to receiving the input corresponding to the request to display the content guide on the display device, displaying an animation of the representations of the first plurality of channels in the channel bar moving out of the user interface in a first direction while the arrays of the content guide move into the user interface in the first direction, the arrays of the content guide aligned with and corresponding to the representations of the first plurality of channels in the channel bar.
182. The method of any of 153-181, wherein the input corresponding to the request to display the content guide on the display device comprises:
   scrolling past an end of the channel bar along the first axis; and
   after scrolling past the end of the channel bar along the first axis, selecting a content guide user interface element displayed adjacent to the channel bar for displaying the content guide.
183. The method of any of 153-181, wherein receiving the input corresponding to the request to display the content guide on the display device comprises:
   receiving a selection input in a first predefined region on a touch-sensitive surface of a second electronic device, wherein the touch-sensitive surface includes a plurality of predefined regions, including the first predefined region, the plurality of predefined regions being associated with different functions.
184. The method of any of 153-183, further comprising:
   while displaying the content guide, displaying a current time indicator in the updated user interface that indicates a current play position in currently-available content on the second plurality of channels in the content guide.
185. The method of 184, wherein:
   the updated user interface further includes reference time indicators displayed along the second axis, adjacent the arrays in the content guide, wherein representations of content items in the arrays in the content guide are positioned along the second axis with respect to the reference time indicators in a manner corresponding to start and end times of the content items, and
   as the current time indicator approaches a respective position of a respective reference time indicator in the updated user interface, the respective position of the respective time indicator in the updated user interface is modified so as to move the respective time indicator to not obscure the current time indicator in the updated user interface.
186. An electronic device, comprising:
   one or more processors;
   memory;
   a display device;
   one or more input devices; and
   one or more programs, wherein the one or more programs are stored in the memory and configured to be executed by the one or more processors, the one or more programs including instructions for:
      generating for display, on the display device, a user interface that includes concurrently displaying playing content for a respective channel and displaying a channel bar including a plurality of representations of a first plurality of channels in a respective order along a first axis in a user interface that correspond to currently-available content on the first plurality of channels;
      while the channel bar is displayed on the display device, receiving an input, via the one or more input devices, corresponding to a request to display a content guide on the display device; and
      in response to receiving the input, generating, for display on the display device, an updated user interface that includes:
         displaying the content guide in the updated user interface, the content guide including information about content items for a second plurality of channels, including a first channel and a second channel, included in the first plurality of channels, the content items including currently-available content and future content, and the information arranged in adjacent arrays that are organized in the respective order along the first axis, including:
         a first array, representing the first channel, that extends along a second axis in the updated user interface, the first array including information about content items for the first channel, the information arranged along the second axis in the first array in accordance with times at which the content items for the first channel are available on the first channel; and
         a second array, representing the second channel, displayed along the second axis in the updated user interface, the second array including information about content items for the second channel, the information arranged along the second axis in the second array in accordance with times at which the content items for the second channel are available on the second channel.
187. A non-transitory computer readable storage medium storing one or more programs, the one or more programs comprising instructions, which when executed by one or more processors of an electronic device with a display device and one or more input devices, cause the electronic device to:
   generate for display, on the display device, a user interface that includes concurrently displaying playing content for a respective channel and displaying a channel bar including a plurality of representations of a first plurality of channels in a respective order along a first axis in a user interface that correspond to currently-available content on the first plurality of channels;
   while the channel bar is displayed on the display device, receive an input, via the one or more input devices, corresponding to a request to display a content guide on the display device; and
   in response to receiving the input, generate, for display on the display device, an updated user interface that includes:
      displaying the content guide in the updated user interface, the content guide including information about content items for a second plurality of channels, including a first channel and a second channel, included in the first plurality of channels, the content items including currently-available content and future content, and the information arranged in adjacent arrays that are organized in the respective order along the first axis, including:
      a first array, representing the first channel, that extends along a second axis in the updated user interface, the first array including information about content items for the first channel, the information arranged along the second axis in the first array in accordance with times at which the content items for the first channel are available on the first channel; and
      a second array, representing the second channel, displayed along the second axis in the updated user interface, the second array including information about content items for the second channel, the information arranged along the second axis in the second array in accordance with times at which the content items for the second channel are available on the second channel.
188. An electronic device, comprising:
   one or more processors;
   memory;
   a display device;
   one or more input devices;
   means for generating for display, on the display device, a user interface that includes concurrently displaying playing content for a respective channel and displaying a channel bar including a plurality of representations of a first plurality of channels in a respective order along a first axis in a user interface that correspond to currently-available content on the first plurality of channels;
   means for, while the channel bar is displayed on the display device, receiving an input, via the one or more input devices, corresponding to a request to display a content guide on the display device; and
   means for, in response to receiving the input, generating, for display on the display device, an updated user interface that includes:
      displaying the content guide in the updated user interface, the content guide including information about content items for a second plurality of channels, including a first channel and a second channel, included in the first plurality of channels, the content items including currently-available content and future content, and the information arranged in adjacent arrays that are organized in the respective order along the first axis, including:
      a first array, representing the first channel, that extends along a second axis in the updated user interface, the first array including information about content items for the first channel, the information arranged along the second axis in the first array in accordance with times at which the content items for the first channel are available on the first channel; and
      a second array, representing the second channel, displayed along the second axis in the updated user interface, the second array including information about content items for the second channel, the information arranged along the second axis in the second array in accordance with times at which the content items for the second channel are available on the second channel.
189. An information processing apparatus for use in an electronic device with a display device and one or more input devices, comprising:
   means for generating for display, on the display device, a user interface that includes concurrently displaying playing content for a respective channel and displaying a channel bar including a plurality of representations of a first plurality of channels in a respective order along a first axis in a user interface that correspond to currently-available content on the first plurality of channels;
   means for, while the channel bar is displayed on the display device, receiving an input, via the one or more input devices, corresponding to a request to display a content guide on the display device; and
   means for, in response to receiving the input, generating, for display on the display device, an updated user interface that includes:
      displaying the content guide in the updated user interface, the content guide including information about content items for a second plurality of channels, including a first channel and a second channel, included in the first plurality of channels, the content items including currently-available content and future content, and the information arranged in adjacent arrays that are organized in the respective order along the first axis, including:
      a first array, representing the first channel, that extends along a second axis in the updated user interface, the first array including information about content items for the first channel, the information arranged along the second axis in the first array in accordance with times at which the content items for the first channel are available on the first channel; and
      a second array, representing the second channel, displayed along the second axis in the updated user interface, the second array including information about content items for the second channel, the information arranged along the second axis in the second array in accordance with times at which the content items for the second channel are available on the second channel.
190. An electronic device, comprising:
   one or more processors;
   memory;
   a display device;
   one or more input devices; and
   one or more programs, wherein the one or more programs are stored in the memory and configured to be executed by the one or more processors, the one or more programs including instructions for performing any of the methods of 153-185.
191. A non-transitory computer readable storage medium storing one or more programs, the one or more programs comprising instructions, which when executed by one or more processors of an electronic device with a display device and one or more input devices, cause the electronic device to perform any of the methods of 153-185.
192. An electronic device, comprising:
   one or more processors;
   memory;
   a display device;
   one or more input devices; and
   means for performing any of the methods of 153-185.
193. An information processing apparatus for use in an electronic device with a display device and one or more input devices, comprising:
   means for performing any of the methods of 153-185.
194. An electronic device, comprising:
   a processing unit configured to generate for display, on the display device, a user interface that includes concurrently displaying playing content for a respective channel and displaying a channel bar including a plurality of representations of a first plurality of channels in a respective order along a first axis in a user interface that correspond to currently-available content on the first plurality of channels; and
   a receiving unit coupled to the processing unit and configured to, while the channel bar is displayed on the display device, receive an input, via the one or more input devices, corresponding to a request to display a content guide on the display device,
   wherein the processing unit is further configured to, in response to receiving the input, generate, for display on the display device, an updated user interface that includes:
      displaying the content guide in the updated user interface, the content guide including information about content items for a second plurality of channels, including a first channel and a second channel, included in the first plurality of channels, the content items including currently-available content and future content, and the information arranged in adjacent arrays that are organized in the respective order along the first axis, including:
      a first array, representing the first channel, that extends along a second axis in the updated user interface, the first array including information about content items for the first channel, the information arranged along the second axis in the first array in accordance with times at which the content items for the first channel are available on the first channel; and
      a second array, representing the second channel, displayed along the second axis in the updated user interface, the second array including information about content items for the second channel, the information arranged along the second axis in the second array in accordance with times at which the content items for the second channel are available on the second channel.
195. The electronic device of 194, wherein generating the updated user interface further includes:
   ceasing displaying the playing content for the respective channel in response to receiving the input corresponding to the request to display the content guide on the display device.
196. The electronic device of any of 194-195, wherein the second plurality of channels in the content guide correspond to the first plurality of channels in the channel bar.
197. The electronic device of 196, wherein respective positions of the arrays representing the second plurality of channels in the content guide correspond to respective positions of the representations of the first plurality of channels in the channel bar.
198. The electronic device of any of 194-197, wherein the processing unit is further configured to:
   while displaying the content guide, display, in the updated user interface, information about a currently-selected content item in the content guide.
199. The electronic device of 198, wherein the processing unit is further configured to:
   display a representation of the currently-selected content item in a respective array of the arrays with a first visual characteristic, and display representations of unselected content items in the arrays with a second visual characteristic, different from the first visual characteristic.
200. The electronic device of 199, wherein displaying the representation of the currently-selected content item with the first visual characteristic includes displaying, in the representation of the currently-selected content item, information of a first type about the currently-selected content item.
201. The electronic device of 200, wherein the representations of the unselected content items do not include respective information of the first type about the respective unselected content items.
202. The electronic device of any of 194-201, wherein:
   the user interface is associated with a first category of channels and a second category of channels,
   channels in the first category of channels include content that shares a first common characteristic,
   channels in the second category of channels include content that shares a second common characteristic, different from the first common characteristic, and
   the first plurality of channels in the channel bar and the second plurality of channels in the content guide are selected so as to include channels from the first category of channels but not channels from the second category of channels.
203. The electronic device of 202, wherein:
   the receiving unit is further configured to, while displaying the content guide, receive an input corresponding to a request to display channels from the second category of channels instead of the first category of channels, and
   the processing unit is further configured to, in response receiving the input:
      cease display of the first category of channels in the content guide; and
      display a plurality of channels from the second category of channels in the content guide.
204. The electronic device of 203, wherein the input corresponding to the request to display channels from the second category of channels instead of the first category of channels comprises:
   scrolling past an end of the content guide along the first axis; and
   after scrolling past the end of the content guide along the first axis, selecting the second category of channels from a list of categories of channels, the list of categories of channels including the first category of channels and the second category of channels.
205. The electronic device of 203, wherein the input corresponding to the request to display channels from the second category of channels instead of the first category of channels comprises:
   scrolling, along the first axis, through the first category of channels in the content guide to the second category of channels in the content guide.
206. The electronic device of 203, wherein receiving the input corresponding to the request to display channels from the second category of channels instead of the first category of channels comprises:
   receiving an input corresponding to a request to switch the channel bar from displaying the first category of channels to displaying the second category of channels.
207. The electronic device of any of 194-206, wherein:
   the user interface is associated with a first category of channels and a second category of channels,
   channels in the first category of channels include content that shares a first common characteristic,
   channels in the second category of channels include content that shares a second common characteristic, different from the first common characteristic,
   the first plurality of channels in the channel bar are selected so as to include channels from the first category of channels but not channels from the second category of channels,
   the receiving unit is further configured to, before receiving the input corresponding to the request to display the content guide on the display device, receive an input corresponding to a request to switch the channel bar from displaying the first category of channels to displaying the second category of channels, and
   the processing unit is further configured to, in response to receiving the input:
      cease display of the first category of channels in the channel bar; and
      display the second category of channels in the channel bar,
   wherein:
      the input corresponding to the request to display the content guide on the display device is received while the channel bar is displaying the second category of channels and not the first category of channels, and
      the second plurality of channels in the content guide includes channels from the second category of channels but not the first category of channels.
208. The electronic device of any of 194-207, wherein:
   the receiving unit is further configured to, while displaying the content guide, receive an input corresponding to a selection of a representation of a respective content item in the content guide, and
   the processing unit is further configured to, in response to receiving the input:
      in accordance with a determination that the respective content item is currently-available, play the respective content item on the display device; and
      in accordance with a determination that the respective content item is not currently-available, display one or more selectable user interface elements on the display that enable a user to perform operations associated with future playback of the content item.
209. The electronic device of 208, wherein the selectable user interface elements include:
   a notification element for providing a notification when the respective content item becomes available;
   a content item information element for displaying a user interface corresponding to the respective content item; and
   a channel information element for displaying a user interface corresponding to a respective channel on which the respective content item is available.
210. The electronic device of any of 194-209, wherein:
   the receiving unit is further configured to, while displaying the content guide, receive an input associated with a currently-available content item in the content guide, and
   the processing unit is further configured to, in response to receiving the input:
      in accordance with a determination that the input has a duration that is shorter than a threshold time period, play the currently-available content item on the display device; and
      in accordance with a determination that the input has a duration that is longer than the threshold time period, display one or more selectable user interface elements on the display that enable a user to perform operations associated with the currently-available content item.
211. The electronic device of 210, wherein the selectable user interface elements include:
   a play element for playing the currently-available content item on the display device;
   a content item information element for displaying a user interface corresponding to the currently-available content item on the display; and
   a channel information element for displaying a user interface corresponding to a respective channel on which the currently-available content item is available.
212. The electronic device of any of 194-211, wherein:
   the second plurality of channels in the content guide have currently-available content having a first shared characteristic.
213. The electronic device of 212, wherein:
   the updated user interface is associated with a first category of channels and a second category of channels,
   channels in the first category of channels include currently-available content having the first shared characteristic,
   channels in the second category of channels do not have currently-available content having the first shared characteristic, but have future content having the first shared characteristic within a predetermined time threshold of a current time, and
   the second plurality of channels in the content guide are selected so as to include channels from the first and second categories of channels.
214. The electronic device of 213, wherein the channels in the first category of channels and the channels in the second category of channels are displayed in separate regions of the content guide.
215. The electronic device of any of 212-214, wherein:
   the second plurality of channels in the content guide includes content items having the first shared characteristic, and content items not having the first shared characteristic,
   representations of the content items having the first shared characteristic in the content guide have a first visual characteristic in the content guide, and
   representations of the content items not having the first shared characteristic have a second visual characteristic, different from the first visual characteristic, in the content guide.
216. The electronic device of 215, wherein:
   the receiving unit is further configured to, while displaying the representations of the content items having the first shared characteristic with the first visual characteristic and the representations of the content items not having the first shared characteristic with the second visual characteristic, receive an input corresponding to a request to change a currently-designated characteristic from the first shared characteristic to a second shared characteristic, and
   the processing unit is further configured to, in response to receiving the input:
      modify the content guide to include a third plurality of channels that have currently-available content having the second shared characteristic instead of the first shared characteristic, the third plurality of channels including content items having the second shared characteristic, and content items not having the second shared characteristic;
      display representations of the content items having the second shared characteristic with the first visual characteristic; and
      display representations of the content items not having the second shared characteristic with the second visual characteristic.
217. The electronic device of any of 194-216, wherein the processing unit is further configured to:
   while displaying the second plurality of channels having currently-available content having a shared characteristic in the content guide, determine that the first channel no longer has currently-available content having the shared characteristic; and
   in response to determining that the first channel no longer has currently-available content having the shared characteristic, maintain the first channel in the content guide and in the channel bar.
218. The electronic device of any of 194-217, wherein the processing unit is further configured to:
   while displaying the second plurality of channels having currently-available content having a shared characteristic in the content guide, determine that the first channel no longer has currently-available content having the shared characteristic; and
   in response to determining that the first channel no longer has currently-available content having the shared characteristic, remove the first channel from the content guide and the channel bar.
219. The electronic device of any of 194-218, wherein the processing unit is further configured to:
   while displaying the second plurality of channels having currently-available content having a shared characteristic in the content guide, determine that the first channel no longer has currently-available content having the shared characteristic; and
   in response to determining that the first channel no longer has currently-available content having the shared characteristic:
      in accordance with a determination that a content item on the first channel is currently-selected, maintain the first channel in the content guide and in the channel bar; and
      in accordance with a determination that a content item on the first channel is not currently-selected, remove the first channel from the content guide and the channel bar.
220. The electronic device of any of 194-219, wherein the processing unit is further configured to:
   while displaying the second plurality of channels having currently-available content having a shared characteristic in the content guide, determine that the first channel no longer has currently-available content having the shared characteristic;
   in response to determining that the first channel no longer has currently-available content having the shared characteristic, maintain the first channel in the content guide and in the channel bar;
   after maintaining the first channel in the content guide and in the channel bar, cease display of the content guide and the channel bar in the user interface;
   after ceasing display of the content guide and the channel bar in the user interface, redisplay the content guide and the channel bar in the user interface, the content guide and the channel bar having the first channel removed therefrom.
221. The electronic device of any of 194-220, wherein the content guide includes representations of one or more content items that are available on-demand, and the representations of the one or more content items that are available on-demand include a visual indication indicating that the content item is available for on-demand presentation.
222. The electronic device of any of 194-221, wherein the processing unit is further configured to:
   in response to receiving the input corresponding to the request to display the content guide on the display device, display an animation of the representations of the first plurality of channels in the channel bar moving out of the user interface in a first direction while the arrays of the content guide move into the user interface in the first direction, the arrays of the content guide aligned with and corresponding to the representations of the first plurality of channels in the channel bar.
223. The electronic device of any of 194-222, wherein the input corresponding to the request to display the content guide on the display device comprises:
   scrolling past an end of the channel bar along the first axis; and
   after scrolling past the end of the channel bar along the first axis, selecting a content guide user interface element displayed adjacent to the channel bar for displaying the content guide.
224. The electronic device of any of 194-223, wherein receiving the input corresponding to the request to display the content guide on the display device comprises:
   receiving a selection input in a first predefined region on a touch-sensitive surface of a second electronic device, wherein the touch-sensitive surface includes a plurality of predefined regions, including the first predefined region, the plurality of predefined regions being associated with different functions.
225. The electronic device of any of 194-224, wherein the processing unit is further configured to:
   while displaying the content guide, display a current time indicator in the updated user interface that indicates a current play position in currently-available content on the second plurality of channels in the content guide.
226. The electronic device of 225, wherein:
   the updated user interface further includes reference time indicators displayed along the second axis, adjacent the arrays in the content guide, wherein representations of content items in the arrays in the content guide are positioned along the second axis with respect to the reference time indicators in a manner corresponding to start and end times of the content items, and
   as the current time indicator approaches a respective position of a respective reference time indicator in the updated user interface, the respective position of the respective time indicator in the updated user interface is modified so as to move the respective time indicator to not obscure the current time indicator in the updated user interface.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best use the invention and various described embodiments with various modifications as are suited to the particular use contemplated.

Further Numbered aspects
1. A method comprising:
   at an electronic device with a display device and one or more input devices:
   generating for display, on the display device, a plurality of representations of groups of channels along a first axis in a user interface;
   while the plurality of representations is displayed on the display device, receiving an input, via the one or more input devices, corresponding to a selection of a respective representation of the plurality of representations corresponding to a first group of channels; and
   in response to receiving the input, generating, for display on the display device, an updated user interface that includes:
      ceasing display of the plurality of representations of the groups of channels in the user interface; and
      displaying a plurality of representations of channels associated with the first group of channels along the first axis in the updated user interface.
2. The method of 1, further comprising:
   while displaying the plurality of representations of the channels associated with the first group of channels in the updated user interface, receiving a second input comprising a contact and a movement of the contact detected on a touch-sensitive surface of a device; and
   in accordance with a determination that the movement of the contact is in a direction substantially orthogonal to the first axis:
      ceasing display of the plurality of representations of the channels associated with the first group of channels in the updated user interface; and
      displaying a plurality of representations of channels associated with a second group of channels, different from the first group of channels, in the updated user interface.
3. The method of 2, further comprising:
   in accordance with a determination that the movement of the contact is in a direction substantially parallel to the first axis, scrolling through the plurality of representations of the channels associated with the first group of channels in accordance with the movement of the contact.
4. The method of 1, further comprising:
   while displaying the plurality of representations of the channels associated with the first group of channels in the updated user interface, receiving a second input corresponding to a request to redisplay the plurality of representations of the groups of channels; and
   in response to receiving the second input, generating, for display on the display device, an updated user interface that includes:
      ceasing display of the plurality of representations of the channels associated with the first group of channels in the updated user interface; and
      redisplaying the plurality of representations of the groups of channels in the updated user interface.
5. The method of 4, wherein:
   the second input comprises:
      a first portion detected on a touch-sensitive surface of a device, the first portion comprising a first contact and a first movement of the first contact substantially parallel to the first axis, the first portion corresponding to a request to scroll to an end of the plurality of representations of the channels associated with the first group of channels,
      a second portion detected on the touch-sensitive surface of the device after the first portion, the second portion comprising a second contact and a second movement of the second contact, the second movement of the second contact being in substantially a same direction as the first movement of the first contact, and the second movement of the second contact being greater than a movement threshold, and
   the method further comprises:
      in response to receiving the second portion of the second input:
         scrolling past the end of the plurality of representations of the channels associated with the first group of channels, and
         displaying a selectable user interface element adjacent to the end of the plurality of representations of the channels along the first axis, the selectable user interface element being for displaying the plurality of representations of the groups of channels; and
      receiving selection of the selectable user interface element, wherein ceasing display of the plurality of representations of the channels and redisplaying the plurality of representations of the groups of channels are in response to receiving selection of the selectable user interface element.
6. The method of 1, wherein ceasing the display of the plurality of representations of the groups of channels in the user interface and displaying the plurality of representations of the channels associated with the first group of channels along the first axis in the updated user interface comprises:
   displaying an animation of the plurality of representations of the channels associated with the first group of channels sliding into the updated user interface along the first axis so as to obscure the plurality of representations of the groups of channels.
7. The method of 1, further comprising:
   while displaying the plurality of representations of the channels associated with the first group of channels along the first axis in the updated user interface, receiving a second input corresponding to a request to display information related to a first channel of the first group of channels; and
   in response to receiving the second input, displaying the information related to the first channel in the updated user interface.
8. The method of 7, wherein the plurality of representations of the channels associated with the first group of channels is displayed at a first location in the updated user interface, the method further comprising:
   in response to receiving the second input, displaying an animation of the plurality of representations of the channels associated with the first group of channels moving from the first location to a second location in the updated user interface in a direction substantially perpendicular to the first axis, wherein the information related to the first channel is displayed in an area between the first location and the second location in the updated user interface.
9. The method of 7, wherein the second input comprises:
   selection of the first channel of the first group of channels; and
   after the selection of the first channel, a contact detected in a first predefined region of a touch-sensitive surface of a device, the contact having an intensity greater than an intensity threshold, and the touch-sensitive surface having a plurality of predefined regions including the first predefined region.
10. The method of 7, wherein the second input comprises:
   selection of the first channel of the first group of channels; and
   after the selection of the first channel, a contact and a movement of the contact detected on a touch-sensitive surface of a device, the movement of the contact being in a direction substantially perpendicular to the first axis.
11. The method of 7, wherein the second input comprises:
   selection of the first channel of the first group of channels; and
   after the selection of the first channel, a contact detected on a touch-sensitive surface of a device, the contact having an intensity greater than an intensity threshold for longer than a time threshold.
12. The method of 7, further comprising:
   while displaying the information related to the first channel in the updated user interface, receiving a third input corresponding to a request to select a second channel of the first group of channels; and
   in response to receiving the third input:
      ceasing display of the information related to the first channel in the updated user interface; and
      displaying information related to the second channel in the updated user interface.
13. The method of 1, wherein a first representation of a first channel of the first group of channels is a currently-selected representation, and the method further comprises:
   displaying the first representation of the first channel with a first visual characteristic; and
   displaying the representations of the channels of the first group of channels other than the first representation with a second visual characteristic, different from the first visual characteristic.
14. The method of 13, further comprising:
   while displaying the first representation of the first channel with the first visual characteristic, receiving a second input corresponding to a request to make a second representation of a second channel of the first group of channels the currently-selected representation; and
   in response to receiving the second input:
      updating the first representation of the first channel to have the second visual characteristic instead of the first visual characteristic; and
      updating the second representation of the second channel to have the first visual characteristic instead of the second visual characteristic.
15. The method of 14, wherein the first representation of the first channel includes a visual indication of a current play position associated with the first channel, and the updated user interface includes content associated with the current play position.
16. The method of 1, wherein each respective representation of the plurality of representations of the channels associated with the first group of channels comprises an image corresponding to a respective channel of the first group of channels.
17. The method of 16, wherein a first representation of a first channel of the first group of channels has a current focus and comprises a first image, and the method further comprises:
   while displaying the plurality of representations of the channels associated with the first group of channels in the updated user interface, updating the first image over time based on content associated with the first channel.
18. The method of 17, further comprising:
   while updating the first image over time based on content associated with the first channel and displaying the plurality of representations of the channels associated with the first group of channels in the updated user interface, displaying the content associated with the first channel in a content display area of the updated user interface.
19. The method of 1, wherein two or more of the plurality of representations of the channels associated with the first group of channels comprise visual feeds from their respective channels that are updated over time.
20. The method of 1, further comprising:
   while displaying the plurality of representations of the channels associated with the first group of channels, receiving selection of a first representation of a first channel of the plurality of representations; and
   in response to the selection, displaying content from the first channel in a content display area of the updated user interface.
21. The method of 1, wherein:
   the first group of channels corresponds to a content category, and
   displaying the plurality of the representations of channels associated with the first group of channels comprises:
      determining whether currently-available content on a set of channels has a content type corresponding to the content category of the first group of channels; and
      in accordance with a determination that the currently-available content on the set of channels has the content type corresponding to the content category of the first group of channels, including representations of the channels in the set of channels in the plurality of representations of the channels associated with the first group of channels.
22. The method of 21, wherein:
   content on the channels in the set of channels is tagged with content-category tags, and
   determining whether the currently-available content on the set of channels has the content type corresponding to the content category of the first group of channels comprises determining whether the content-category tags of the currently-available content on the set of channels correspond to the content category of the first group of channels.
23. The method of 21, further comprising:
   while displaying the plurality of representations of the channels associated with the first group of channels, determining that a content type of currently-available content on a first channel of the channels no longer corresponds to the content category of the first group of channels;
   in accordance with a determination that a first representation of the first channel is not a currently-selected representation in the plurality of representations of the channels, removing the first representation of the first channel from the plurality of representations of the channels; and
   in accordance with a determination that the first representation of the first channel is the currently-selected representation in the plurality of representations of the channels, maintaining the first representation of the first channel in the plurality of representations of the channels.
24. An electronic device, comprising:
   one or more processors;
   memory;
   a display device;
   one or more input devices; and
   one or more programs, wherein the one or more programs are stored in the memory and configured to be executed by the one or more processors, the one or more programs including instructions for:
      generating for display, on the display device, a plurality of representations of groups of channels along a first axis in a user interface;
      while the plurality of representations is displayed on the display device, receiving an input, via the one or more input devices, corresponding to a selection of a respective representation of the plurality of representations corresponding to a first group of channels; and
      in response to receiving the input, generating, for display on the display device, an updated user interface that includes:
         ceasing display of the plurality of representations of the groups of channels in the user interface; and
         displaying a plurality of representations of channels associated with the first group of channels along the first axis in the updated user interface.
25. A non-transitory computer readable storage medium storing one or more programs, the one or more programs comprising instructions, which when executed by one or more processors of an electronic device with a display device and one or more input devices, cause the electronic device to:
   generate for display, on the display device, a plurality of representations of groups of channels along a first axis in a user interface;
   while the plurality of representations is displayed on the display device, receive an input, via the one or more input devices, corresponding to a selection of a respective representation of the plurality of representations corresponding to a first group of channels; and
   in response to receiving the input, generate, for display on the display device, an updated user interface that includes:
      ceasing display of the plurality of representations of the groups of channels in the user interface; and
      displaying a plurality of representations of channels associated with the first group of channels along the first axis in the updated user interface.
26. An electronic device, comprising:
   one or more processors;
   memory;
   a display device;
   one or more input devices;
   means for generating for display, on the display device, a plurality of representations of groups of channels along a first axis in a user interface;
   means for, while the plurality of representations is displayed on the display device, receiving an input, via the one or more input devices, corresponding to a selection of a respective representation of the plurality of representations corresponding to a first group of channels; and
   means for, in response to receiving the input, generating, for display on the display device, an updated user interface that includes:
      ceasing display of the plurality of representations of the groups of channels in the user interface; and
      displaying a plurality of representations of channels associated with the first group of channels along the first axis in the updated user interface.
27. An information processing apparatus for use in an electronic device with a display device and one or more input devices, comprising:
   means for generating for display, on the display device, a plurality of representations of groups of channels along a first axis in a user interface;
   means for, while the plurality of representations is displayed on the display device, receiving an input, via the one or more input devices, corresponding to a selection of a respective representation of the plurality of representations corresponding to a first group of channels; and
   means for, in response to receiving the input, generating, for display on the display device, an updated user interface that includes:
      ceasing display of the plurality of representations of the groups of channels in the user interface; and
      displaying a plurality of representations of channels associated with the first group of channels along the first axis in the updated user interface.
28. An electronic device, comprising:
   one or more processors;
   memory;
   a display device;
   one or more input devices; and
   one or more programs, wherein the one or more programs are stored in the memory and configured to be executed by the one or more processors, the one or more programs including instructions for performing any of the methods of 1-23.
29. A non-transitory computer readable storage medium storing one or more programs, the one or more programs comprising instructions, which when executed by one or more processors of an electronic device with a display device and one or more input devices, cause the electronic device to perform any of the methods of 1-23.
30. An electronic device, comprising:
   one or more processors;
   memory;
   a display device;
   one or more input devices; and
   means for performing any of the methods of 1-23.
31. An information processing apparatus for use in an electronic device with a display device and one or more input devices, comprising:
   means for performing any of the methods of 1-23.
32. An electronic device, comprising:
   a receiving unit configured to, while a plurality of representations in a user interface is displayed on a display device, receive an input, via one or more input devices, corresponding to a selection of a respective representation of the plurality of representations corresponding to a first group of channels; and
   a processing unit coupled to the receiving unit and configured to:
      generate for display, on the display device, the plurality of representations of groups of channels along a first axis in the user interface;
      in response to receiving the input, generate, for display on the display device, an updated user interface that includes:
         ceasing display of the plurality of representations of the groups of channels in the user interface; and
         displaying a plurality of representations of channels associated with the first group of channels along the first axis in the updated user interface.
33. The electronic device of 32, wherein:
   the receiving unit is further configured to, while displaying the plurality of representations of the channels associated with the first group of channels in the updated user interface, receive a second input comprising a contact and a movement of the contact detected on a touch-sensitive surface of a device, and
   the processing unit is further configured to:
      in accordance with a determination that the movement of the contact is in a direction substantially orthogonal to the first axis:
      cease display of the plurality of representations of the channels associated with the first group of channels in the updated user interface; and
      display a plurality of representations of channels associated with a second group of channels, different from the first group of channels, in the updated user interface.
34. The electronic device of 33, wherein the processing unit is further configured to:
   in accordance with a determination that the movement of the contact is in a direction substantially parallel to the first axis, scroll through the plurality of representations of the channels associated with the first group of channels in accordance with the movement of the contact.
35. The electronic device of 32, wherein:
   the receiving unit is further configured to, while displaying the plurality of representations of the channels associated with the first group of channels in the updated user interface, receive a second input corresponding to a request to redisplay the plurality of representations of the groups of channels, and
   the processing unit is further configured to:
      in response to receiving the second input, generate, for display on the display device, an updated user interface that includes:
      ceasing display of the plurality of representations of the channels associated with the first group of channels in the updated user interface; and
      redisplaying the plurality of representations of the groups of channels in the updated user interface.
36. The electronic device of 35, wherein:
   the second input comprises:
      a first portion detected on a touch-sensitive surface of a device, the first portion comprising a first contact and a first movement of the first contact substantially parallel to the first axis, the first portion corresponding to a request to scroll to an end of the plurality of representations of the channels associated with the first group of channels,
      a second portion detected on the touch-sensitive surface of the device after the first portion, the second portion comprising a second contact and a second movement of the second contact, the second movement of the second contact being in substantially a same direction as the first movement of the first contact, and the second movement of the second contact being greater than a movement threshold, and
   the processing unit is further configured to:
      in response to receiving the second portion of the second input:
         scroll past the end of the plurality of representations of the channels associated with the first group of channels, and
         display a selectable user interface element adjacent to the end of the plurality of representations of the channels along the first axis, the selectable user interface element being for displaying the plurality of representations of the groups of channels; and
      receive selection of the selectable user interface element, wherein ceasing display of the plurality of representations of the channels and redisplaying the plurality of representations of the groups of channels are in response to receiving selection of the selectable user interface element.
37. The electronic device of 32, wherein ceasing the display of the plurality of representations of the groups of channels in the user interface and displaying the plurality of representations of the channels associated with the first group of channels along the first axis in the updated user interface comprises:
   displaying an animation of the plurality of representations of the channels associated with the first group of channels sliding into the updated user interface along the first axis so as to obscure the plurality of representations of the groups of channels.
38. The electronic device of 32, wherein:
   the receiving unit is further configured to, while displaying the plurality of representations of the channels associated with the first group of channels along the first axis in the updated user interface, receive a second input corresponding to a request to display information related to a first channel of the first group of channels, and
   the processing unit is further configured to, in response to receiving the second input, display the information related to the first channel in the updated user interface.
39. The electronic device of 38, wherein the plurality of representations of the channels associated with the first group of channels is displayed at a first location in the updated user interface, and the processing unit is further configured to:
   in response to receiving the second input, display an animation of the plurality of representations of the channels associated with the first group of channels moving from the first location to a second location in the updated user interface in a direction substantially perpendicular to the first axis, wherein the information related to the first channel is displayed in an area between the first location and the second location in the updated user interface.
40. The electronic device of 38, wherein the second input comprises:
   selection of the first channel of the first group of channels; and
   after the selection of the first channel, a contact detected in a first predefined region of a touch-sensitive surface of a device, the contact having an intensity greater than an intensity threshold, and the touch-sensitive surface having a plurality of predefined regions including the first predefined region.
41. The electronic device of 38, wherein the second input comprises:
   selection of the first channel of the first group of channels; and
   after the selection of the first channel, a contact and a movement of the contact detected on a touch-sensitive surface of a device, the movement of the contact being in a direction substantially perpendicular to the first axis.
42. The electronic device of 38, wherein the second input comprises:
   selection of the first channel of the first group of channels; and
   after the selection of the first channel, a contact detected on a touch-sensitive surface of a device, the contact having an intensity greater than an intensity threshold for longer than a time threshold.
43. The electronic device of 38, wherein:
   the receiving unit is further configured to, while displaying the information related to the first channel in the updated user interface, receive a third input corresponding to a request to select a second channel of the first group of channels, and
   the processing unit is further configured to, in response to receiving the third input:
      cease display of the information related to the first channel in the updated user interface; and
      display information related to the second channel in the updated user interface.
44. The electronic device of 32, wherein a first representation of a first channel of the first group of channels is a currently-selected representation, and the processing unit is further configured to:
   display the first representation of the first channel with a first visual characteristic; and
   display the representations of the channels of the first group of channels other than the first representation with a second visual characteristic, different from the first visual characteristic.
45. The electronic device of 44, wherein:
   the receiving unit is further configured to, while displaying the first representation of the first channel with the first visual characteristic, receive a second input corresponding to a request to make a second representation of a second channel of the first group of channels the currently-selected representation, and
   the processing unit is further configured to, in response to receiving the second input:
      update the first representation of the first channel to have the second visual characteristic instead of the first visual characteristic; and
      update the second representation of the second channel to have the first visual characteristic instead of the second visual characteristic.
46. The electronic device of 45, wherein the first representation of the first channel includes a visual indication of a current play position associated with the first channel, and the updated user interface includes content associated with the current play position.
47. The electronic device of 32, wherein each respective representation of the plurality of representations of the channels associated with the first group of channels comprises an image corresponding to a respective channel of the first group of channels.
48. The electronic device of 47, wherein a first representation of a first channel of the first group of channels has a current focus and comprises a first image, and the processing unit is further configured to:
   while displaying the plurality of representations of the channels associated with the first group of channels in the updated user interface, update the first image over time based on content associated with the first channel.
49. The electronic device of 48, wherein the processing unit is further configured to:
   while updating the first image over time based on content associated with the first channel and displaying the plurality of representations of the channels associated with the first group of channels in the updated user interface, display the content associated with the first channel in a content display area of the updated user interface.
50. The electronic device of 32, wherein two or more of the plurality of representations of the channels associated with the first group of channels comprise visual feeds from their respective channels that are updated over time.
51. The electronic device of 32, wherein:
   the receiving unit is further configured to, while displaying the plurality of representations of the channels associated with the first group of channels, receive selection of a first representation of a first channel of the plurality of representations, and
   the processing unit is further configured to, in response to the selection, display content from the first channel in a content display area of the updated user interface.
52. The electronic device of 32, wherein:
   the first group of channels corresponds to a content category, and
   displaying the plurality of the representations of channels associated with the first group of channels comprises:
      determining whether currently-available content on a set of channels has a content type corresponding to the content category of the first group of channels; and
      in accordance with a determination that the currently-available content on the set of channels has the content type corresponding to the content category of the first group of channels, including representations of the channels in the set of channels in the plurality of representations of the channels associated with the first group of channels.
53. The electronic device of 52, wherein:
   content on the channels in the set of channels is tagged with content-category tags, and
   determining whether the currently-available content on the set of channels has the content type corresponding to the content category of the first group of channels comprises determining whether the content-category tags of the currently-available content on the set of channels correspond to the content category of the first group of channels.
54. The electronic device of 52, wherein the processing unit is further configured to:
   while displaying the plurality of representations of the channels associated with the first group of channels, determine that a content type of currently-available content on a first channel of the channels no longer corresponds to the content category of the first group of channels;
   in accordance with a determination that a first representation of the first channel is not a currently-selected representation in the plurality of representations of the channels, remove the first representation of the first channel from the plurality of representations of the channels; and
   in accordance with a determination that the first representation of the first channel is the currently-selected representation in the plurality of representations of the channels, maintain the first representation of the first channel in the plurality of representations of the channels.
55. A method comprising:
   at an electronic device with a display device and one or more input devices:
   generating, for display on the display device, in a user interface:
      a first plurality of representations of first channels in a first region of the user interface, the first plurality of representations of the first channels having a first visual characteristic, and the first plurality of representations of the first channels corresponding to channels to which a user is subscribed; and
      a second plurality of representations of second channels in a second region of the user interface, different from the first region, the second plurality of representations of the second channels having a second visual characteristic, different from the first visual characteristic, and the second plurality of representations of the second channels corresponding to channels to which the user is not subscribed;
   while displaying the first plurality of representations of the first channels and the second plurality of representations of the second channels, receiving an input, via the one or more input devices, causing a respective channel representation of the second plurality of representations of the second channels to have a current focus; and
   in response to receiving the input, modifying the respective channel representation to have the first visual characteristic instead of having the second visual characteristic.
56. The method of 55, wherein generating the first plurality of representations having the first visual characteristic comprises generating the first plurality of representations in color, generating the second plurality of representations having the second visual characteristic comprises generating the second plurality of representations in grayscale or black and white, and modifying the respective channel representation to have the first visual characteristic instead of having the second visual characteristic comprises modifying the respective channel representation to be displayed in color instead of in grayscale or black and white.
57. The method of 55, further comprising:
   in response to receiving the input, increasing a size of the respective channel representation.
58. The method of 55, further comprising:
   in response to receiving the input, adding a shadow to the respective channel representation.
59. The method of 55, further comprising:
   in response to receiving the input, increasing a brightness of the respective channel representation relative to other channel representations.
60. The method of 55, further comprising:
   after modifying the respective channel representation, receiving a second input causing a second respective channel representation of the second plurality of representations of second channels to have the current focus; and
   in response to receiving the second input:
      reversing the modification of the respective channel representation such that the respective channel representation has the second visual characteristic instead of having the first visual characteristic; and
      modifying the second respective channel representation to have the first visual characteristic instead of having the second visual characteristic.
61. The method of 55, further comprising:
   while the respective channel representation has the current focus, receiving a second input corresponding to a request to subscribe to the respective channel; and
   in response to receiving the second input:
      moving the respective channel representation from the second region of the user interface to the first region of the user interface while maintaining the respective channel representation as having the first visual characteristic.
62. The method of 55, further comprising:
   while displaying the first plurality of representations of the first channels and the second plurality of representations of the second channels in the user interface, receiving a second input corresponding to a request for information about a particular channel of the first and second channels; and
   in response to receiving the second input, generating, for display on the display device, an updated user interface, which includes:
      a plurality of representations of content items available on the particular channel; and
      in accordance with a determination that the particular channel is a channel to which the user is not subscribed, a subscription user interface element selectable to subscribe to the particular channel.
63. The method of 62, wherein:
   in accordance with a determination that the particular channel is a channel to which the user is subscribed, the plurality of representations of content items are selectable to play the respective content items, and
   in accordance with a determination that the particular channel is a channel to which the user is not subscribed, the plurality of representations of content items are not selectable to play the respective content items.
64. The method of 55, wherein the second region of the user interface further includes a channel package representation of a first package of a first plurality of channels, and the method further comprises:
   receiving a second input corresponding to a request to subscribe to the first package of the first plurality of channels; and
   in response to receiving the second input, subscribing to a plurality of channels of the first package of the first plurality of channels.
65. The method of 64, wherein:
   the second region of the user interface includes a first portion and a second portion,
   the first portion includes a plurality of representations of channels that belong to one or more packages of channels, including the first package of the first plurality of channels, and
   the second portion includes a plurality of representations of channels that do not belong to a package of channels.
66. The method of 64, further comprising:
   in response to receiving the second input:
   moving the channel package representation of the first package from the second region to the first region in the user interface; and
   modifying the channel package representation of the first package to have the first visual characteristic.
67. The method of 64, wherein the second region of the user interface further includes representations of the first plurality of channels in the first package, and the method further comprises:
   in response to receiving the second input:
   moving the representations of the first plurality of channels in the first package from the second region to the first region in the user interface; and
   modifying the representations of the first plurality of channels in the first package to have the first visual characteristic.
68. The method of 55, wherein modifying the respective channel representation to have the first visual characteristic instead of having the second visual characteristic comprises displaying an animated transition of the respective channel representation from having the first visual characteristic to having the second visual characteristic.
69. An electronic device, comprising:
   one or more processors;
   memory;
   a display device;
   one or more input devices; and
   one or more programs, wherein the one or more programs are stored in the memory and configured to be executed by the one or more processors, the one or more programs including instructions for:
      generating, for display on the display device, in a user interface:
         a first plurality of representations of first channels in a first region of the user interface, the first plurality of representations of the first channels having a first visual characteristic, and the first plurality of representations of the first channels corresponding to channels to which a user is subscribed; and
         a second plurality of representations of second channels in a second region of the user interface, different from the first region, the second plurality of representations of the second channels having a second visual characteristic, different from the first visual characteristic, and the second plurality of representations of the second channels corresponding to channels to which the user is not subscribed;
      while displaying the first plurality of representations of the first channels and the second plurality of representations of the second channels, receiving an input, via the one or more input devices, causing a respective channel representation of the second plurality of representations of the second channels to have a current focus; and
      in response to receiving the input, modifying the respective channel representation to have the first visual characteristic instead of having the second visual characteristic.
70. A non-transitory computer readable storage medium storing one or more programs, the one or more programs comprising instructions, which when executed by one or more processors of an electronic device with a display device and one or more input devices, cause the electronic device to:
   generate, for display on the display device, in a user interface:
      a first plurality of representations of first channels in a first region of the user interface, the first plurality of representations of the first channels having a first visual characteristic, and the first plurality of representations of the first channels corresponding to channels to which a user is subscribed; and
      a second plurality of representations of second channels in a second region of the user interface, different from the first region, the second plurality of representations of the second channels having a second visual characteristic, different from the first visual characteristic, and the second plurality of representations of the second channels corresponding to channels to which the user is not subscribed;
   while displaying the first plurality of representations of the first channels and the second plurality of representations of the second channels, receive an input, via the one or more input devices, causing a respective channel representation of the second plurality of representations of the second channels to have a current focus; and
   in response to receiving the input, modify the respective channel representation to have the first visual characteristic instead of having the second visual characteristic.
71. An electronic device, comprising:
   one or more processors;
   memory;
   a display device;
   one or more input devices;
   means for generating, for display on the display device, in a user interface:
      a first plurality of representations of first channels in a first region of the user interface, the first plurality of representations of the first channels having a first visual characteristic, and the first plurality of representations of the first channels corresponding to channels to which a user is subscribed; and
      a second plurality of representations of second channels in a second region of the user interface, different from the first region, the second plurality of representations of the second channels having a second visual characteristic, different from the first visual characteristic, and the second plurality of representations of the second channels corresponding to channels to which the user is not subscribed;
   means for, while displaying the first plurality of representations of the first channels and the second plurality of representations of the second channels, receiving an input, via the one or more input devices, causing a respective channel representation of the second plurality of representations of the second channels to have a current focus; and
   means for, in response to receiving the input, modifying the respective channel representation to have the first visual characteristic instead of having the second visual characteristic.
72. An information processing apparatus for use in an electronic device with a display device and one or more input devices, comprising:
   means for generating, for display on the display device, in a user interface:
      a first plurality of representations of first channels in a first region of the user interface, the first plurality of representations of the first channels having a first visual characteristic, and the first plurality of representations of the first channels corresponding to channels to which a user is subscribed; and
      a second plurality of representations of second channels in a second region of the user interface, different from the first region, the second plurality of representations of the second channels having a second visual characteristic, different from the first visual characteristic, and the second plurality of representations of the second channels corresponding to channels to which the user is not subscribed;
   means for, while displaying the first plurality of representations of the first channels and the second plurality of representations of the second channels, receiving an input, via the one or more input devices, causing a respective channel representation of the second plurality of representations of the second channels to have a current focus; and
   means for, in response to receiving the input, modifying the respective channel representation to have the first visual characteristic instead of having the second visual characteristic.
73. An electronic device, comprising:
   one or more processors;
   memory;
   a display device;
   one or more input devices; and
   one or more programs, wherein the one or more programs are stored in the memory and configured to be executed by the one or more processors, the one or more programs including instructions for performing any of the methods of 55-68.
74. A non-transitory computer readable storage medium storing one or more programs, the one or more programs comprising instructions, which when executed by one or more processors of an electronic device with a display device and one or more input devices, cause the electronic device to perform any of the methods of 55-68.
75. An electronic device, comprising:
   one or more processors;
   memory;
   a display device;
   one or more input devices; and
   means for performing any of the methods of J5-68.
76. An information processing apparatus for use in an electronic device with a display device and one or more input devices, comprising:
   means for performing any of the methods of 55-68.
77. An electronic device, comprising:
   a receiving unit configured to, while displaying, on a display device, a first plurality of representations of first channels and a second plurality of representations of second channels in a user interface, receive an input, via one or more input devices, causing a respective channel representation of the second plurality of representations of the second channels to have a current focus; and
   a processing unit coupled to the receiving unit and configured to:
      generate, for display on the display device, in the user interface:
         the first plurality of representations of the first channels in a first region of the user interface, the first plurality of representations of the first channels having a first visual characteristic, and the first plurality of representations of the first channels corresponding to channels to which a user is subscribed; and
         the second plurality of representations of the second channels in a second region of the user interface, different from the first region, the second plurality of representations of the second channels having a second visual characteristic, different from the first visual characteristic, and the second plurality of representations of the second channels corresponding to channels to which the user is not subscribed; and
      in response to receiving the input, modifying the respective channel representation to have the first visual characteristic instead of having the second visual characteristic.
78. The electronic device of 77, wherein generating the first plurality of representations having the first visual characteristic comprises generating the first plurality of representations in color, generating the second plurality of representations having the second visual characteristic comprises generating the second plurality of representations in grayscale or black and white, and modifying the respective channel representation to have the first visual characteristic instead of having the second visual characteristic comprises modifying the respective channel representation to be displayed in color instead of in grayscale or black and white.
79. The electronic device of 77, wherein the processing unit is further configured to:
   in response to receiving the input, increase a size of the respective channel representation.
80. The electronic device of 77, wherein the processing unit is further configured to:
   in response to receiving the input, add a shadow to the respective channel representation.
81. The electronic device of 77, wherein the processing unit is further configured to:
   in response to receiving the input, increase a brightness of the respective channel representation relative to other channel representations.
82. The electronic device of 77, wherein:
   the receiving unit is further configured to, after modifying the respective channel representation, receive a second input causing a second respective channel representation of the second plurality of representations of second channels to have the current focus, and
   the processing unit is further configured to, in response to receiving the second input:
      reverse the modification of the respective channel representation such that the respective channel representation has the second visual characteristic instead of having the first visual characteristic; and
      modify the second respective channel representation to have the first visual characteristic instead of having the second visual characteristic.
83. The electronic device of 77, wherein:
   the receiving unit is further configured to, while the respective channel representation has the current focus, receive a second input corresponding to a request to subscribe to the respective channel, and
   the processing unit is further configured to, in response to receiving the second input:
      move the respective channel representation from the second region of the user interface to the first region of the user interface while maintaining the respective channel representation as having the first visual characteristic.
84. The electronic device of 77, wherein:
   the receiving unit is further configured to, while displaying the first plurality of representations of the first channels and the second plurality of representations of the second channels in the user interface, receive a second input corresponding to a request for information about a particular channel of the first and second channels, and
   the processing unit is further configured to, in response to receiving the second input, generate, for display on the display device, an updated user interface, which includes:
      a plurality of representations of content items available on the particular channel; and
      in accordance with a determination that the particular channel is a channel to which the user is not subscribed, a subscription user interface element selectable to subscribe to the particular channel.
85. The electronic device of 84, wherein:
   in accordance with a determination that the particular channel is a channel to which the user is subscribed, the plurality of representations of content items are selectable to play the respective content items, and
   in accordance with a determination that the particular channel is a channel to which the user is not subscribed, the plurality of representations of content items are not selectable to play the respective content items.
86. The electronic device of 77, wherein:
   the second region of the user interface further includes a channel package representation of a first package of a first plurality of channels,
   the receiving unit is further configured to:
      receive a second input corresponding to a request to subscribe to the first package of the first plurality of channels, and
   the processing unit is further configured to:
      in response to receiving the second input, subscribe to a plurality of channels of the first package of the first plurality of channels.
87. The electronic device of 86, wherein:
   the second region of the user interface includes a first portion and a second portion,
   the first portion includes a plurality of representations of channels that belong to one or more packages of channels, including the first package of the first plurality of channels, and
   the second portion includes a plurality of representations of channels that do not belong to a package of channels.
88. The electronic device of 86, wherein the processing unit is further configured to:
   in response to receiving the second input:
   move the channel package representation of the first package from the second region to the first region in the user interface; and
   modify the channel package representation of the first package to have the first visual characteristic.
89. The electronic device of 86, wherein:
   the second region of the user interface further includes representations of the first plurality of channels in the first package, and
   the processing unit is further configured to, in response to receiving the second input:
      move the representations of the first plurality of channels in the first package from the second region to the first region in the user interface; and
      modify the representations of the first plurality of channels in the first package to have the first visual characteristic.
90. The electronic device of 77, wherein modifying the respective channel representation to have the first visual characteristic instead of having the second visual characteristic comprises displaying an animated transition of the respective channel representation from having the first visual characteristic to having the second visual characteristic.
91. A method comprising:
   at an electronic device with a display device and one or more input devices:
   generating, for display on the display device, a media-navigation user interface, including:
      a navigation bar including a live section indicator, a watchlist section indicator, and an on-demand section indicator; and
      a content display area;
   while the media-navigation user interface is displayed on the display device with the live section indicator currently-selected and live content displayed in the content display area, detecting selection, via the one or more input devices, of the watchlist section indicator;
   in response to detecting the selection of the watchlist section indicator, generating, for display on the display device, an updated user interface that includes maintaining display of the navigation bar and replacing display of the live content in the content display area with watchlist content that includes content selected based on prior user interactions with a collection of media content;
   while the media-navigation user interface is displayed on the display device with the watchlist section indicator currently-selected and the watchlist content displayed in the content display area, detecting selection, via the one or more input devices, of the on-demand section indicator; and
   in response to detecting the selection of the on-demand section indicator, generating, for display on the display device, an updated user interface that includes maintaining display of the navigation bar and replacing display of the watchlist content in the content display area with on-demand content that includes on-demand content available to the user.
92. The method of 91, wherein while the live section indicator is currently-selected, the live content displayed in the content display area corresponds to a currently-selected channel.
93. The method of 92, further comprising:
   while displaying the live content in the content display area, displaying a visual indication in the content display area of the currently-selected channel.
94. The method of 93, further comprising:
   while the live section indicator is currently-selected, receiving an input corresponding to a further selection of the live section indicator; and
   in response to the input, ceasing display of the visual indication of the currently-selected channel after a predetermined time period.
95. The method of 91, further comprising:
   while the live section indicator is currently-selected, receiving an input corresponding to a further selection of the live section indicator; and
   in response to the input, generating, for display on the display device, an updated user interface that includes ceasing display of the navigation bar in the user interface while maintaining display of the live content in the content display area.
96. The method of 91, further comprising:
   while the live section indicator is currently-selected, receiving an input corresponding to a request to display a plurality of representations of channels accessible in the content display area; and
   in response to receiving the input, generating, for display on the display device, an updated user interface, which includes the plurality of representations of the channels accessible in the content display area along a first axis in the content display area.
97. The method of 91, wherein the watchlist content displayed while the watchlist section indicator is currently-selected includes a first set of representations of watched content items and a second set of representations of unwatched content items.
98. The method of 97, wherein a first representation of a first watched content item in the first set of representations includes a visual indication of a current play position in the first watched content item.
99. The method of 91, wherein the watchlist content displayed while the watchlist section indicator is currently-selected includes a first set of representations of live content items and a second set of representations of on-demand content items.
100. The method of 91, further comprising:
   while the watchlist section indicator is currently-selected and the watchlist content is displayed in the content display area, receiving an input corresponding to a request to play a respective content item of the watchlist content; and
   in response to receiving the input:
      replacing display of the watchlist content in the content display area with the respective content item; and
      ceasing display of the navigation bar in the user interface.
101. The method of 91, wherein the on-demand content displayed while the on-demand section indicator is currently-selected includes a first set of representations of paid content items and a second set of representations of unpaid content items.
102. The method of 101, further comprising:
   while the first set of representations of paid content items and the second set of representations of unpaid content items are displayed in the user interface, receiving an input corresponding to a request to play a respective content item of the paid or unpaid content items; and
   in response to receiving the input:
      in accordance with a determination that the respective content item is a paid content item, displaying a request for confirmation of payment from the user in the user interface; and
      in accordance with a determination that the respective content item is an unpaid content item, replacing display of the on-demand content in the content display area with the respective content item.
103. The method of 102, further comprising:
   while displaying the request for confirmation of payment from the user, receiving a second input; and
   in response to receiving the second input:
      in accordance with a determination that the second input corresponds to a confirmation of payment from the user, replacing display of the on-demand content in the content display area with the respective content item; and
      in accordance with a determination that the second input does not correspond to a confirmation of payment from the user, forgoing replacing the on-demand content in the content display area with the respective content item.
104. The method of 91, wherein the on-demand content displayed while the on-demand section indicator is currently-selected includes a first set of representations of subscribed content items and a second set of representations of unsubscribed content items.
105. The method of 104, further comprising:
   while the first set of representations of subscribed content items and the second set of representations of unsubscribed content items are displayed, receiving an input corresponding to a request to play a respective content item of the subscribed or unsubscribed content items; and
   in response to receiving the input:
      in accordance with a determination that the respective content item is a subscribed content item, replacing display of the on-demand content in the content display area with the respective content item; and
      in accordance with a determination that the respective content item is an unsubscribed content item, displaying a query in the user interface asking the user if they would like to subscribe to a channel with which the respective content item is associated.
106. The method of 105, further comprising:
   while displaying tne query in the user interface asking the user if they would like to subscribe to the channel with which the respective content item is associated, receiving a second input; and
   in response to receiving the second input:
      in accordance with a determination that the second input corresponds to a request to subscribe to the channel with which the respective content item is associated, replacing display of the on-demand content in the content display area with the respective content item; and
      in accordance with a determination that the second input does not correspond to a request to subscribe to the channel with which the respective content is associated, forgoing replacing the on-demand content in the content display area with the respective content item.
107. The method of 91, wherein the navigation bar further includes a channels section indicator, the method further comprising:
   while the media-navigation user interface is displayed on the display device with the on-demand section indicator currently-selected and the on-demand content displayed in the content display area, detecting selection of the channels section indicator; and
   in response to detecting selection of the channels section indicator, generating, for display on the display device, an updated user interface that includes maintaining display of the navigation bar and replacing display of the on-demand content in the content display area with channel content that includes a plurality of representations of channels available to the user.
108. The method of 107, wherein the plurality of representations of the channels includes:
   a representation of a channel to which the user is subscribed; and
   a representation of a channel to which the user is not subscribed.
109. The method of 91, wherein the navigation bar further includes a channels section indicator, the method further comprising:
   while displaying a representation of a respective content item in the content display area of the user interface, receiving selection of the representation of the respective content item; and
   in response to receiving the selection of the representation of the respective content item:
      in accordance with a determination that the respective content item was displayed on a non-channel-specific page when the selection of the representation of the respective content item was received, displaying, in the content display area, a combined content item page associated with the respective content item and a plurality of channels including the respective channel; and
      in accordance with a determination that the respective content item was displayed on a channel-specific page when the selection of the representation of the respective content item was received, displaying, in the content display area, a content item page associated with the respective content item and the respective channel.
110. The method of 91, wherein the navigation bar further includes a search section indicator, the method further comprising:
   while the media-navigation user interface is displayed on the display device with the on-demand section indicator currently-selected and the on-demand content displayed in the content display area, detecting selection of the search section indicator; and
   in response to detecting selection of the search section indicator, generating, for display on the display device, an updated user interface that includes maintaining display of the navigation bar and replacing display of the on-demand content in the content display area with:
      search content that includes a plurality of representations of content items watched by users other than the user; and
      a text entry field for searching content available to the user.
111. The method of 110, wherein the plurality of representations of the content items includes representations of popular content items based on the other users' searching or viewing behaviors.
112. The method of 110, further comprising:
   while displaying the text entry field, receiving a search input in the text entry field; and
   in response to receiving the search input, replacing the plurality of representations of the content items with a plurality of representations of search-result content items based on the search input.
113. The method of 110, wherein the search-result content items include content items associated with subscribed channels and unsubscribed channels.
114. The method of 110, wherein the search-result content items include paid content items and unpaid content items.
115. The method of 110, further comprising:
   while displaying the text entry field, receiving a first portion of a search input in the text entry field; and
   in response to receiving the first portion of the search input, displaying a first plurality of representations of search-result content items based on the first portion of the search input.
116. The method of 115, further comprising:
   while displaying the first plurality of representations of search-result content items, receiving a second portion of the search input in the text entry field; and
   in response to receiving the second portion of the search input, replacing the first plurality of representations of search-result content items with a second plurality of representations of search-result content items based on the first and second portions of the search input.
117. The method of 110, wherein:
   the search content includes a first region and a second region,
   after receiving a first search input in the text entry field for which results of a first type are more relevant than results of a second type, results of the first type are displayed in the first region and results of the second type are displayed in the second region, and
   the method further comprises:
      while results of the first type are displayed in the first region and results of the second type are displayed in the second region, receiving a second search input in the text entry field; and
      in response to receiving the second search input:
         in accordance with a determination that, for the second search input, results of the first type are more relevant than results of the second type, maintaining display of results of the first type in the first region and results of the second type in the second region; and
         in accordance with a determination that, for the second search input, results of the second type are more relevant than results of the first type, displaying results of the second type in the first region and displaying results of the first type in the second region.
118. An electronic device, comprising:
   one or more processors;
   memory;
   a display device;
   one or more input devices; and
   one or more programs, wherein the one or more programs are stored in the memory and configured to be executed by the one or more processors, the one or more programs including instructions for:
      generating, for display on the display device, a media-navigation user interface, including:
         a navigation bar including a live section indicator, a watchlist section indicator, and an on-demand section indicator; and
         a content display area;
      while the media-navigation user interface is displayed on the display device with the live section indicator currently-selected and live content displayed in the content display area, detecting selection, via the one or more input devices, of the watchlist section indicator;
      in response to detecting the selection of the watchlist section indicator, generating, for display on the display device, an updated user interface that includes maintaining display of the navigation bar and replacing display of the live content in the content display area with watchlist content that includes content selected based on prior user interactions with a collection of media content;
      while the media-navigation user interface is displayed on the display device with the watchlist section indicator currently-selected and the watchlist content displayed in the content display area, detecting selection, via the one or more input devices, of the on-demand section indicator; and
      in response to detecting the selection of the on-demand section indicator, generating, for display on the display device, an updated user interface that includes maintaining display of the navigation bar and replacing display of the watchlist content in the content display area with on-demand content that includes on-demand content available to the user.
119. A non-transitory computer readable storage medium storing one or more programs, the one or more programs comprising instructions, which when executed by one or more processors of an electronic device with a display device and one or more input devices, cause the electronic device to:
   generate, for display on the display device, a media-navigation user interface, including:
      a navigation bar including a live section indicator, a watchlist section indicator, and an on-demand section indicator; and
      a content display area;
   while the media-navigation user interface is displayed on the display device with the live section indicator currently-selected and live content displayed in the content display area, detect selection, via the one or more input devices, of the watchlist section indicator;
   in response to detecting the selection of the watchlist section indicator, generate, for display on the display device, an updated user interface that includes maintaining display of the navigation bar and replacing display of the live content in the content display area with watchlist content that includes content selected based on prior user interactions with a collection of media content;
   while the media-navigation user interface is displayed on the display device with the watchlist section indicator currently-selected and the watchlist content displayed in the content display area, detect selection, via the one or more input devices, of the on-demand section indicator; and
   in response to detecting the selection of the on-demand section indicator, generate, for display on the display device, an updated user interface that includes maintaining display of the navigation bar and replacing display of the watchlist content in the content display area with on-demand content that includes on-demand content available to the user.
120. An electronic device, comprising:
   one or more processors;
   memory;
   a display device;
   one or more input devices;
   means for generating, for display on the display device, a media-navigation user interface, including:
      a navigation bar including a live section indicator, a watchlist section indicator, and an on-demand section indicator; and
      a content display area;
   means for, while the media-navigation user interface is displayed on the display device with the live section indicator currently-selected and live content displayed in the content display area, detecting selection, via the one or more input devices, of the watchlist section indicator;
   means for, in response to detecting the selection of the watchlist section indicator, generating, for display on the display device, an updated user interface that includes maintaining display of the navigation bar and replacing display of the live content in the content display area with watchlist content that includes content selected based on prior user interactions with a collection of media content;
   means for, while the media-navigation user interface is displayed on the display device with the watchlist section indicator currently-selected and the watchlist content displayed in the content display area, detecting selection, via the one or more input devices, of the on-demand section indicator; and
   means for, in response to detecting the selection of the on-demand section indicator, generating, for display on the display device, an updated user interface that includes maintaining display of the navigation bar and replacing display of the watchlist content in the content display area with on-demand content that includes on-demand content available to the user.
121. An information processing apparatus for use in an electronic device with a display device and one or more input devices, comprising:
   means for generating, for display on the display device, a media-navigation user interface, including:
      a navigation bar including a live section indicator, a watchlist section indicator, and an on-demand section indicator; and
      a content display area;
   means for, while the media-navigation user interface is displayed on the display device with the live section indicator currently-selected and live content displayed in the content display area, detecting selection, via the one or more input devices, of the watchlist section indicator;
   means for, in response to detecting the selection of the watchlist section indicator, generating, for display on the display device, an updated user interface that includes maintaining display of the navigation bar and replacing display of the live content in the content display area with watchlist content that includes content selected based on prior user interactions with a collection of media content;
   means for, while the media-navigation user interface is displayed on the display device with the watchlist section indicator currently-selected and the watchlist content displayed in the content display area, detecting selection, via the one or more input devices, of the on-demand section indicator; and
   means for, in response to detecting the selection of the on-demand section indicator, generating, for display on the display device, an updated user interface that includes maintaining display of the navigation bar and replacing display of the watchlist content in the content display area with on-demand content that includes on-demand content available to the user.
122. An electronic device, comprising:
   one or more processors;
   memory;
   a display device;
   one or more input devices; and
   one or more programs, wherein the one or more programs are stored in the memory and configured to be executed by the one or more processors, the one or more programs including instructions for performing any of the methods of 91-117.
123. A non-transitory computer readable storage medium storing one or more programs, the one or more programs comprising instructions, which when executed by one or more processors of an electronic device with a display device and one or more input devices, cause the electronic device to perform any of the methods of 91-117.
124. An electronic device, comprising:
   one or more processors;
   memory;
   a display device;
   one or more input devices; and
   means for performing any of the methods of 91-117.
125. An information processing apparatus for use in an electronic device with a display device and one or more input devices, comprising:
   means for performing any of the methods of 91-117.
126. An electronic device, comprising:
   a processing unit configured to generate, for display on the display device, a media-navigation user interface, including:
      a navigation bar including a live section indicator, a watchlist section indicator, and an on-demand section indicator; and
      a content display area; and
   a receiving unit coupled to the processing unit and configured to, while the media-navigation user interface is displayed on the display device with the live section indicator currently-selected and live content displayed in the content display area, detect selection, via the one or more input devices, of the watchlist section indicator,
   wherein:
      the processing unit is further configured to, in response to detecting the selection of the watchlist section indicator, generate, for display on the display device, an updated user interface that includes maintaining display of the navigation bar and replacing display of the live content in the content display area with watchlist content that includes content selected based on prior user interactions with a collection of media content,
      the receiving unit is further configured to, while the media-navigation user interface is displayed on the display device with the watchlist section indicator currently-selected and the watchlist content displayed in the content display area, detect selection, via the one or more input devices, of the on-demand section indicator, and
      the processing unit is further configured to, in response to detecting the selection of the on-demand section indicator, generate, for display on the display device, an updated user interface that includes maintaining display of the navigation bar and replacing display of the watchlist content in the content display area with on-demand content that includes on-demand content available to the user.
127. The electronic device of 126, wherein while the live section indicator is currently-selected, the live content displayed in the content display area corresponds to a currently-selected channel.
128. The electronic device of 127, wherein the processing unit is further configured to:
   while displaying the live content in the content display area, display a visual indication in the content display area of the currently-selected channel.
129. The electronic device of 128, wherein:
   the receiving unit is further configured to, while the live section indicator is currently-selected, receive an input corresponding to a further selection of the live section indicator, and
   the processing unit is further configured to, in response to the input, cease display of the visual indication of the currently-selected channel after a predetermined time period.
130. The electronic device of 126, wherein:
   the receiving unit is further configured to, while the live section indicator is currently-selected, receive an input corresponding to a further selection of the live section indicator, and
   the processing unit is further configured to, in response to the input, generate, for display on the display device, an updated user interface that includes ceasing display of the navigation bar in the user interface while maintaining display of the live content in the content display area.
131. The electronic device of 126, wherein:
   the receiving unit is further configured to, while the live section indicator is currently-selected, receive an input corresponding to a request to display a plurality of representations of channels accessible in the content display area, and
   the processing unit is further configured to, in response to receiving the input, generate, for display on the display device, an updated user interface, which includes the plurality of representations of the channels accessible in the content display area along a first axis in the content display area.
132. The electronic device of 126, wherein the watchlist content displayed while the watchlist section indicator is currently-selected includes a first set of representations of watched content items and a second set of representations of unwatched content items.
133. The electronic device of 132, wherein a first representation of a first watched content item in the first set of representations includes a visual indication of a current play position in the first watched content item.
134. The electronic device of 126, wherein the watchlist content displayed while the watchlist section indicator is currently-selected includes a first set of representations of live content items and a second set of representations of on-demand content items.
135. The electronic device of 126, wherein:
   the receiving unit is further configured to, while the watchlist section indicator is currently-selected and the watchlist content is displayed in the content display area, receive an input corresponding to a request to play a respective content item of the watchlist content, and
   the processing unit is further configured to, in response to receiving the input:
      replace display of the watchlist content in the content display area with the respective content item; and
      cease display of the navigation bar in the user interface.
136. The electronic device of 126, wherein the on-demand content displayed while the on-demand section indicator is currently-selected includes a first set of representations of paid content items and a second set of representations of unpaid content items.
137. The electronic device of 136, wherein:
   the receiving unit is further configured to, while the first set of representations of paid content items and the second set of representations of unpaid content items are displayed in the user interface, receive an input corresponding to a request to play a respective content item of the paid or unpaid content items, and
   the processing unit is further configured to, in response to receiving the input:
      in accordance with a determination that the respective content item is a paid content item, display a request for confirmation of payment from the user in the user interface; and
      in accordance with a determination that the respective content item is an unpaid content item, replace display of the on-demand content in the content display area with the respective content item.
138. The electronic device of 137, wherein:
   the receiving unit is further configured to, while displaying the request for confirmation of payment from the user, receive a second input, and
   the processing unit is further configured to, in response to receiving the second input:
      in accordance with a determination that the second input corresponds to a confirmation of payment from the user, replace display of the on-demand content in the content display area with the respective content item; and
      in accordance with a determination that the second input does not correspond to a confirmation of payment from the user, forgo replacing the on-demand content in the content display area with the respective content item.
139. The electronic device of 126, wherein the on-demand content displayed while the on-demand section indicator is currently-selected includes a first set of representations of subscribed content items and a second set of representations of unsubscribed content items.
140. The electronic device of 139, wherein:
   the receiving unit is further configured to, while the first set of representations of subscribed content items and the second set of representations of unsubscribed content items are displayed, receive an input corresponding to a request to play a respective content item of the subscribed or unsubscribed content items, and
   the processing unit is further configured to, in response to receiving the input:
      in accordance with a determination that the respective content item is a subscribed content item, replace display of the on-demand content in the content display area with the respective content item; and
      in accordance with a determination that the respective content item is an unsubscribed content item, display a query in the user interface asking the user if they would like to subscribe to a channel with which the respective content item is associated.
141. The electronic device of 140, wherein:
   the receiving unit is further configured to, while displaying the query in the user interface asking the user if they would like to subscribe to the channel with which the respective content item is associated, receive a second input, and
   the processing unit is further configured to, in response to receiving the second input:
      in accordance with a determination that the second input corresponds to a request to subscribe to the channel with which the respective content item is associated, replace display of the on-demand content in the content display area with the respective content item; and
      in accordance with a determination that the second input does not correspond to a request to subscribe to the channel with which the respective content is associated, forgo replacing the on-demand content in the content display area with the respective content item.
142. The electronic device of 126, wherein:
   the navigation bar further includes a channels section indicator,
   the receiving unit is further configured to, while the media-navigation user interface is displayed on the display device with the on-demand section indicator currently-selected and the on-demand content displayed in the content display area, detect selection of the channels section indicator, and
   the processing unit is further configured to, in response to detecting selection of the channels section indicator, generate, for display on the display device, an updated user interface that includes maintaining display of the navigation bar and replacing display of the on-demand content in the content display area with channel content that includes a plurality of representations of channels available to the user.
143. The electronic device of 142, wherein the plurality of representations of the channels includes:
   a representation of a channel to which the user is subscribed; and
   a representation of a channel to which the user is not subscribed.
144. The electronic device of 126, wherein:
   the navigation bar further includes a channels section indicator,
   the receiving unit is further configured to, while displaying a representation of a respective content item in the content display area of the user interface, receive selection of the representation of the respective content item, and
   the processing unit is further configured to, in response to receiving the selection of the representation of the respective content item:
      in accordance with a determination that the respective content item was displayed on a non-channel-specific page when the selection of the representation of the respective content item was received, display, in the content display area, a combined content item page associated with the respective content item and a plurality of channels including the respective channel; and
      in accordance with a determination that the respective content item was displayed on a channel-specific page when the selection of the representation of the respective content item was received, display, in the content display area, a content item page associated with the respective content item and the respective channel.
145. The electronic device of 126, wherein:
   the navigation bar further includes a search section indicator,
   the receiving unit is further configured to, while the media-navigation user interface is displayed on the display device with the on-demand section indicator currently-selected and the on-demand content displayed in the content display area, detect selection of the search section indicator, and
   the processing unit is further configured to, in response to detecting selection of the search section indicator, generate, for display on the display device, an updated user interface that includes maintaining display of the navigation bar and replacing display of the on-demand content in the content display area with:
      search content that includes a plurality of representations of content items watched by users other than the user; and
      a text entry field for searching content available to the user.
146. The electronic device of 145, wherein the plurality of representations of the content items includes representations of popular content items based on the other users' searching or viewing behaviors.
147. The electronic device of 145, wherein:
   the receiving unit is further configured to, while displaying the text entry field, receive a search input in the text entry field, and
   the processing unit is further configured to, in response to receiving the search input, replace the plurality of representations of the content items with a plurality of representations of search-result content items based on the search input.
148. The electronic device of 145, wherein the search-result content items include content items associated with subscribed channels and unsubscribed channels.
149. The electronic device of 145, wherein the search-result content items include paid content items and unpaid content items.
150. The electronic device of 145, wherein:
   the receiving unit is further configured to, while displaying the text entry field, receive a first portion of a search input in the text entry field, and
   the processing unit is further configured to, in response to receiving the first portion of the search input, display a first plurality of representations of search-result content items based on the first portion of the search input.
151. The electronic device of 150, wherein:
   the receiving unit is further configured to, while displaying the first plurality of representations of search-result content items, receive a second portion of the search input in the text entry field, and
   the processing unit is further configured to, in response to receiving the second portion of the search input, replace the first plurality of representations of search-result content items with a second plurality of representations of search-result content items based on the first and second portions of the search input.
152. The electronic device of 145, wherein:
   the search content includes a first region and a second region,
   after receiving a first search input in the text entry field for which results of a first type are more relevant than results of a second type, results of the first type are displayed in the first region and results of the second type are displayed in the second region,
   the receiving unit is further configured to, while results of the first type are displayed in the first region and results of the second type are displayed in the second region, receive a second search input in the text entry field, and
   the processing unit is further configured to, in response to receiving the second search input:
      in accordance with a determination that, for the second search input, results of the first type are more relevant than results of the second type, maintain display of results of the first type in the first region and results of the second type in the second region; and
      in accordance with a determination that, for the second search input, results of the second type are more relevant than results of the first type, display results of the second type in the first region and display results of the first type in the second region.
153. A method comprising:
   at an electronic device with a display device and one or more input devices:
   generating for display, on the display device, a user interface that includes concurrently displaying playing content for a respective channel and displaying a channel bar including a plurality of representations of a first plurality of channels in a respective order along a first axis in a user interface that correspond to currently-available content on the first plurality of channels;
   while the channel bar is displayed on the display device, receiving an input, via the one or more input devices, corresponding to a request to display a content guide on the display device; and
   in response to receiving the input, generating, for display on the display device, an updated user interface that includes:
      displaying the content guide in the updated user interface, the content guide including information about content items for a second plurality of channels, including a first channel and a second channel, included in the first plurality of channels, the content items including currently-available content and future content, and the information arranged in adjacent arrays that are organized in the respective order along the first axis, including:
      a first array, representing the first channel, that extends along a second axis in the updated user interface, the first array including information about content items for the first channel, the information arranged along the second axis in the first array in accordance with times at which the content items for the first channel are available on the first channel; and
      a second array, representing the second channel, displayed along the second axis in the updated user interface, the second array including information about content items for the second channel, the information arranged along the second axis in the second array in accordance with times at which the content items for the second channel are available on the second channel.
154. The method of 153, wherein generating the updated user interface further includes:
   ceasing displaying the playing content for the respective channel in response to receiving the input corresponding to the request to display the content guide on the display device.
155. The method of 153, wherein the second plurality of channels in the content guide correspond to the first plurality of channels in the channel bar.
156. The method of 155, wherein respective positions of the arrays representing the second plurality of channels in the content guide correspond to respective positions of the representations of the first plurality of channels in the channel bar.
157. The method of 153, further comprising:
   while displaying the content guide, displaying, in the updated user interface, information about a currently-selected content item in the content guide.
158. The method of 157, further comprising:
   displaying a representation of the currently-selected content item in a respective array of the arrays with a first visual characteristic, and displaying representations of unselected content items in the arrays with a second visual characteristic, different from the first visual characteristic.
159. The method of 158, wherein displaying the representation of the currently-selected content item with the first visual characteristic includes displaying, in the representation of the currently-selected content item, information of a first type about the currently-selected content item.
160. The method of 159, wherein the representations of the unselected content items do not include respective information of the first type about the respective unselected content items.
161. The method of 153, wherein:
   the user interface is associated with a first category of channels and a second category of channels,
   channels in the first category of channels include content that shares a first common characteristic,
   channels in the second category of channels include content that shares a second common characteristic, different from the first common characteristic, and
   the first plurality of channels in the channel bar and the second plurality of channels in the content guide are selected so as to include channels from the first category of channels but not channels from the second category of channels.
162. The method of 161, further comprising:
   while displaying the content guide, receiving an input corresponding to a request to display channels from the second category of channels instead of the first category of channels;
   in response receiving the input:
      ceasing display of the first category of channels in the content guide; and
      displaying a plurality of channels from the second category of channels in the content guide.
163. The method of 162, wherein the input corresponding to the request to display channels from the second category of channels instead of the first category of channels comprises:
   scrolling past an end of the content guide along the first axis; and
   after scrolling past the end of the content guide along the first axis, selecting the second category of channels from a list of categories of channels, the list of categories of channels including the first category of channels and the second category of channels.
164. The method of . 162, wherein the input corresponding to the request to display channels from the second category of channels instead of the first category of channels comprises:
   scrolling, along the first axis, through the first category of channels in the content guide to the second category of channels in the content guide.
165. The method of 162, wherein receiving the input corresponding to the request to display channels from the second category of channels instead of the first category of channels comprises:
   receiving an input corresponding to a request to switch the channel bar from displaying the first category of channels to displaying the second category of channels.
166. The method of 153, wherein:
   the user interface is associated with a first category of channels and a second category of channels,
   channels in the first category of channels include content that shares a first common characteristic,
   channels in the second category of channels include content that shares a second common characteristic, different from the first common characteristic,
   the first plurality of channels in the channel bar are selected so as to include channels from the first category of channels but not channels from the second category of channels, and
   the method further comprises:
      before receiving the input corresponding to the request to display the content guide on the display device, receiving an input corresponding to a request to switch the channel bar from displaying the first category of channels to displaying the second category of channels; and
      in response to receiving the input:
         ceasing display of the first category of channels in the channel bar; and
         displaying the second category of channels in the channel bar,
      wherein:
         the input corresponding to the request to display the content guide on the display device is received while the channel bar is displaying the second category of channels and not the first category of channels, and
         the second plurality of channels in the content guide includes channels from the second category of channels but not the first category of channels.
167. The method of 153, further comprising:
   while displaying the content guide, receiving an input corresponding to a selection of a representation of a respective content item in the content guide; and
   in response to receiving the input:
      in accordance with a determination that the respective content item is currently-available, playing the respective content item on the display device; and
      in accordance with a determination that the respective content item is not currently-available, displaying one or more selectable user interface elements on the display that enable a user to perform operations associated with future playback of the content item.
168. The method of 167, wherein the selectable user interface elements include:
   a notification element for providing a notification when the respective content item becomes available;
   a content item information element for displaying a user interface corresponding to the respective content item; and
   a channel information element for displaying a user interface corresponding to a respective channel on which the respective content item is available.
169. The method of 153, further comprising:
   while displaying the content guide, receiving an input associated with a currently-available content item in the content guide; and
   in response to receiving the input:
      in accordance with a determination that the input has a duration that is shorter than a threshold time period, playing the currently-available content item on the display device; and
      in accordance with a determination that the input has a duration that is longer than the threshold time period, displaying one or more selectable user interface elements on the display that enable a user to perform operations associated with the currently-available content item.
170. The method of 169, wherein the selectable user interface elements include:
   a play element for playing the currently-available content item on the display device;
   a content item information element for displaying a user interface corresponding to the currently-available content item on the display; and
   a channel information element for displaying a user interface corresponding to a respective channel on which the currently-available content item is available.
171. The method of 153, wherein:
   the second plurality of channels in the content guide have currently-available content having a first shared characteristic.
172. The method of 171, wherein:
   the updated user interface is associated with a first category of channels and a second category of channels,
   channels in the first category of channels include currently-available content having the first shared characteristic,
   channels in the second category of channels do not have currently-available content having the first shared characteristic, but have future content having the first shared characteristic within a predetermined time threshold of a current time, and
   the second plurality of channels in the content guide are selected so as to include channels from the first and second categories of channels.
173. The method of 172, wherein the channels in the first category of channels and the channels in the second category of channels are displayed in separate regions of the content guide.
174. The method of 171, wherein:
   the second plurality of channels in the content guide includes content items having the first shared characteristic, and content items not having the first shared characteristic,
   representations of the content items having the first shared characteristic in the content guide have a first visual characteristic in the content guide, and
   representations of the content items not having the first shared characteristic have a second visual characteristic, different from the first visual characteristic, in the content guide.
175. The method of 174, further comprising:
   while displaying the representations of the content items having the first shared characteristic with the first visual characteristic and the representations of the content items not having the first shared characteristic with the second visual characteristic, receiving an input corresponding to a request to change a currently-designated characteristic from the first shared characteristic to a second shared characteristic; and
   in response to receiving the input:
      modifying the content guide to include a third plurality of channels that have currently-available content having the second shared characteristic instead of the first shared characteristic, the third plurality of channels including content items having the second shared characteristic, and content items not having the second shared characteristic;
      displaying representations of the content items having the second shared characteristic with the first visual characteristic; and
      displaying representations of the content items not having the second shared characteristic with the second visual characteristic.
176. The method of 153, further comprising:
   while displaying the second plurality of channels having currently-available content having a shared characteristic in the content guide, determining that the first channel no longer has currently-available content having the shared characteristic; and
   in response to determining that the first channel no longer has currently-available content having the shared characteristic, maintaining the first channel in the content guide and in the channel bar.
177. The method of 153, further comprising:
   while displaying the second plurality of channels having currently-available content having a shared characteristic in the content guide, determining that the first channel no longer has currently-available content having the shared characteristic; and
   in response to determining that the first channel no longer has currently-available content having the shared characteristic, removing the first channel from the content guide and the channel bar.
178. The method of 153, further comprising:
   while displaying the second plurality of channels having currently-available content having a shared characteristic in the content guide, determining that the first channel no longer has currently-available content having the shared characteristic; and
   in response to determining that the first channel no longer has currently-available content having the shared characteristic:
      in accordance with a determination that a content item on the first channel is currently-selected, maintaining the first channel in the content guide and in the channel bar; and
      in accordance with a determination that a content item on the first channel is not currently-selected, removing the first channel from the content guide and the channel bar.
179. The method of 153, further comprising:
   while displaying the second plurality of channels having currently-available content having a shared characteristic in the content guide, determining that the first channel no longer has currently-available content having the shared characteristic;
   in response to determining that the first channel no longer has currently-available content having the shared characteristic, maintaining the first channel in the content guide and in the channel bar;
   after maintaining the first channel in the content guide and in the channel bar, ceasing display of the content guide and the channel bar in the user interface;
   after ceasing display of the content guide and the channel bar in the user interface, redisplaying the content guide and the channel bar in the user interface, the content guide and the channel bar having the first channel removed therefrom.
180. The method of 153, wherein the content guide includes representations of one or more content items that are available on-demand, and the representations of the one or more content items that are available on-demand include a visual indication indicating that the content item is available for on-demand presentation.
181. The method of 153, further comprising:
   in response to receiving the input corresponding to the request to display the content guide on the display device, displaying an animation of the representations of the first plurality of channels in the channel bar moving out of the user interface in a first direction while the arrays of the content guide move into the user interface in the first direction, the arrays of the content guide aligned with and corresponding to the representations of the first plurality of channels in the channel bar.
182. The method of 153, wherein the input corresponding to the request to display the content guide on the display device comprises:
   scrolling past an end of the channel bar along the first axis; and
   after scrolling past the end of the channel bar along the first axis, selecting a content guide user interface element displayed adjacent to the channel bar for displaying the content guide.
183. The method of 153, wherein receiving the input corresponding to the request to display the content guide on the display device comprises:
   receiving a selection input in a first predefined region on a touch-sensitive surface of a second electronic device, wherein the touch-sensitive surface includes a plurality of predefined regions, including the first predefined region, the plurality of predefined regions being associated with different functions.
184. The method of 153, further comprising:
   while displaying the content guide, displaying a current time indicator in the updated user interface that indicates a current play position in currently-available content on the second plurality of channels in the content guide.
185. The method of 184, wherein:
   the updated user interface further includes reference time indicators displayed along the second axis, adjacent the arrays in the content guide, wherein representations of content items in the arrays in the content guide are positioned along the second axis with respect to the reference time indicators in a manner corresponding to start and end times of the content items, and
   as the current time indicator approaches a respective position of a respective reference time indicator in the updated user interface, the respective position of the respective time indicator in the updated user interface is modified so as to move the respective time indicator to not obscure the current time indicator in the updated user interface.
186. An electronic device, comprising:
   one or more processors;
   memory;
   a display device;
   one or more input devices; and
   one or more programs, wherein the one or more programs are stored in the memory and configured to be executed by the one or more processors, the one or more programs including instructions for:
      generating for display, on the display device, a user interface that includes concurrently displaying playing content for a respective channel and displaying a channel bar including a plurality of representations of a first plurality of channels in a respective order along a first axis in a user interface that correspond to currently-available content on the first plurality of channels;
      while the channel bar is displayed on the display device, receiving an input, via the one or more input devices, corresponding to a request to display a content guide on the display device; and
      in response to receiving the input, generating, for display on the display device, an updated user interface that includes:
         displaying the content guide in the updated user interface, the content guide including information about content items for a second plurality of channels, including a first channel and a second channel, included in the first plurality of channels, the content items including currently-available content and future content, and the information arranged in adjacent arrays that are organized in the respective order along the first axis, including:
         a first array, representing the first channel, that extends along a second axis in the updated user interface, the first array including information about content items for the first channel, the information arranged along the second axis in the first array in accordance with times at which the content items for the first channel are available on the first channel; and
         a second array, representing the second channel, displayed along the second axis in the updated user interface, the second array including information about content items for the second channel, the information arranged along the second axis in the second array in accordance with times at which the content items for the second channel are available on the second channel.
187. A non-transitory computer readable storage medium storing one or more programs, the one or more programs comprising instructions, which when executed by one or more processors of an electronic device with a display device and one or more input devices, cause the electronic device to:
   generate for display, on the display device, a user interface that includes concurrently displaying playing content for a respective channel and displaying a channel bar including a plurality of representations of a first plurality of channels in a respective order along a first axis in a user interface that correspond to currently-available content on the first plurality of channels;
   while the channel bar is displayed on the display device, receive an input, via the one or more input devices, corresponding to a request to display a content guide on the display device; and
   in response to receiving the input, generate, for display on the display device, an updated user interface that includes:
      displaying the content guide in the updated user interface, the content guide including information about content items for a second plurality of channels, including a first channel and a second channel, included in the first plurality of channels, the content items including currently-available content and future content, and the information arranged in adjacent arrays that are organized in the respective order along the first axis, including:
      a first array, representing the first channel, that extends along a second axis in the updated user interface, the first array including information about content items for the first channel, the information arranged along the second axis in the first array in accordance with times at which the content items for the first channel are available on the first channel; and
      a second array, representing the second channel, displayed along the second axis in the updated user interface, the second array including information about content items for the second channel, the information arranged along the second axis in the second array in accordance with times at which the content items for the second channel are available on the second channel.
188. An electronic device, comprising:
   one or more processors;
   memory;
   a display device;
   one or more input devices;
   means for generating for display, on the display device, a user interface that includes concurrently displaying playing content for a respective channel and displaying a channel bar including a plurality of representations of a first plurality of channels in a respective order along a first axis in a user interface that correspond to currently-available content on the first plurality of channels;
   means for, while the channel bar is displayed on the display device, receiving an input, via the one or more input devices, corresponding to a request to display a content guide on the display device; and
   means for, in response to receiving the input, generating, for display on the display device, an updated user interface that includes:
      displaying the content guide in the updated user interface, the content guide including information about content items for a second plurality of channels, including a first channel and a second channel, included in the first plurality of channels, the content items including currently-available content and future content, and the information arranged in adjacent arrays that are organized in the respective order along the first axis, including:
      a first array, representing the first channel, that extends along a second axis in the updated user interface, the first array including information about content items for the first channel, the information arranged along the second axis in the first array in accordance with times at which the content items for the first channel are available on the first channel; and
      a second array, representing the second channel, displayed along the second axis in the updated user interface, the second array including information about content items for the second channel, the information arranged along the second axis in the second array in accordance with times at which the content items for the second channel are available on the second channel.
189. An information processing apparatus for use in an electronic device with a display device and one or more input devices, comprising:
   means for generating for display, on the display device, a user interface that includes concurrently displaying playing content for a respective channel and displaying a channel bar including a plurality of representations of a first plurality of channels in a respective order along a first axis in a user interface that correspond to currently-available content on the first plurality of channels;
   means for, while the channel bar is displayed on the display device, receiving an input, via the one or more input devices, corresponding to a request to display a content guide on the display device; and
   means for, in response to receiving the input, generating, for display on the display device, an updated user interface that includes:
      displaying the content guide in the updated user interface, the content guide including information about content items for a second plurality of channels, including a first channel and a second channel, included in the first plurality of channels, the content items including currently-available content and future content, and the information arranged in adjacent arrays that are organized in the respective order along the first axis, including:
      a first array, representing the first channel, that extends along a second axis in the updated user interface, the first array including information about content items for the first channel, the information arranged along the second axis in the first array in accordance with times at which the content items for the first channel are available on the first channel; and
      a second array, representing the second channel, displayed along the second axis in the updated user interface, the second array including information about content items for the second channel, the information arranged along the second axis in the second array in accordance with times at which the content items for the second channel are available on the second channel.
190. An electronic device, comprising:
   one or more processors;
   memory;
   a display device;
   one or more input devices; and
   one or more programs, wherein the one or more programs are stored in the memory and configured to be executed by the one or more processors, the one or more programs including instructions for performing any of the methods of 153-185.
191. A non-transitory computer readable storage medium storing one or more programs, the one or more programs comprising instructions, which when executed by one or more processors of an electronic device with a display device and one or more input devices, cause the electronic device to perform any of the methods of 153-185.
192. An electronic device, comprising:
   one or more processors;
   memory;
   a display device;
   one or more input devices; and
   means for performing any of the methods of 153-185.
193. An information processing apparatus for use in an electronic device with a display device and one or more input devices, comprising:
   means for performing any of the methods of 153-185.
194. An electronic device, comprising:
   a processing unit configured to generate for display, on the display device, a user interface that includes concurrently displaying playing content for a respective channel and displaying a channel bar including a plurality of representations of a first plurality of channels in a respective order along a first axis in a user interface that correspond to currently-available content on the first plurality of channels; and
   a receiving unit coupled to the processing unit and configured to, while the channel bar is displayed on the display device, receive an input, via the one or more input devices, corresponding to a request to display a content guide on the display device,
   wherein the processing unit is further configured to, in response to receiving the input, generate, for display on the display device, an updated user interface that includes:
      displaying the content guide in the updated user interface, the content guide including information about content items for a second plurality of channels, including a first channel and a second channel, included in the first plurality of channels, the content items including currently-available content and future content, and the information arranged in adjacent arrays that are organized in the respective order along the first axis, including:
      a first array, representing the first channel, that extends along a second axis in the updated user interface, the first array including information about content items for the first channel, the information arranged along the second axis in the first array in accordance with times at which the content items for the first channel are available on the first channel; and
      a second array, representing the second channel, displayed along the second axis in the updated user interface, the second array including information about content items for the second channel, the information arranged along the second axis in the second array in accordance with times at which the content items for the second channel are available on the second channel.
195. The electronic device of 194, wherein generating the updated user interface further includes:
   ceasing displaying the playing content for the respective channel in response to receiving the input corresponding to the request to display the content guide on the display device.
196. The electronic device of 194, wherein the second plurality of channels in the content guide correspond to the first plurality of channels in the channel bar.
197. The electronic device of 196, wherein respective positions of the arrays representing the second plurality of channels in the content guide correspond to respective positions of the representations of the first plurality of channels in the channel bar.
198. The electronic device of 194, wherein the processing unit is further configured to:
   while displaying the content guide, display, in the updated user interface, information about a currently-selected content item in the content guide.
199. The electronic device of 198, wherein the processing unit is further configured to:
   display a representation of the currently-selected content item in a respective array of the arrays with a first visual characteristic, and display representations of unselected content items in the arrays with a second visual characteristic, different from the first visual characteristic.
200. The electronic device of 199, wherein displaying the representation of the currently-selected content item with the first visual characteristic includes displaying, in the representation of the currently-selected content item, information of a first type about the currently-selected content item.
201. The electronic device of 200, wherein the representations of the unselected content items do not include respective information of the first type about the respective unselected content items.
202. The electronic device of 194, wherein:
   the user interface is associated with a first category of channels and a second category of channels,
   channels in the first category of channels include content that shares a first common characteristic,
   channels in the second category of channels include content that shares a second common characteristic, different from the first common characteristic, and
   the first plurality of channels in the channel bar and the second plurality of channels in the content guide are selected so as to include channels from the first category of channels but not channels from the second category of channels.
203. The electronic device of claim 202, wherein:
   the receiving unit is further configured to, while displaying the content guide, receive an input corresponding to a request to display channels from the second category of channels instead of the first category of channels, and
   the processing unit is further configured to, in response receiving the input:
      cease display of the first category of channels in the content guide; and
      display a plurality of channels from the second category of channels in the content guide.
204. The electronic device of 203, wherein the input corresponding to the request to display channels from the second category of channels instead of the first category of channels comprises:
   scrolling past an end of the content guide along the first axis; and
   after scrolling past the end of the content guide along the first axis, selecting the second category of channels from a list of categories of channels, the list of categories of channels including the first category of channels and the second category of channels.
205. The electronic device of 203, wherein the input corresponding to the request to display channels from the second category of channels instead of the first category of channels comprises:
   scrolling, along the first axis, through the first category of channels in the content guide to the second category of channels in the content guide.
206. The electronic device of 203, wherein receiving the input corresponding to the request to display channels from the second category of channels instead of the first category of channels comprises:
   receiving an input corresponding to a request to switch the channel bar from displaying the first category of channels to displaying the second category of channels.
207. The electronic device of 194, wherein:
   the user interface is associated with a first category of channels and a second category of channels,
   channels in the first category of channels include content that shares a first common characteristic,
   channels in the second category of channels include content that shares a second common characteristic, different from the first common characteristic,
   the first plurality of channels in the channel bar are selected so as to include channels from the first category of channels but not channels from the second category of channels,
   the receiving unit is further configured to, before receiving the input corresponding to the request to display the content guide on the display device, receive an input corresponding to a request to switch the channel bar from displaying the first category of channels to displaying the second category of channels, and
   the processing unit is further configured to, in response to receiving the input:
      cease display of the first category of channels in the channel bar; and
      display the second category of channels in the channel bar,
   wherein:
      the input corresponding to the request to display the content guide on the display device is received while the channel bar is displaying the second category of channels and not the first category of channels, and
      the second plurality of channels in the content guide includes channels from the second category of channels but not the first category of channels.
208. The electronic device of 194, wherein:
   the receiving unit is further configured to, while displaying the content guide, receive an input corresponding to a selection of a representation of a respective content item in the content guide, and
   the processing unit is further configured to, in response to receiving the input:
      in accordance with a determination that the respective content item is currently-available, play the respective content item on the display device; and
      in accordance with a determination that the respective content item is not currently-available, display one or more selectable user interface elements on the display that enable a user to perform operations associated with future playback of the content item.
209. The electronic device of 208, wherein the selectable user interface elements include:
   a notification element for providing a notification when the respective content item becomes available;
   a content item information element for displaying a user interface corresponding to the respective content item; and
   a channel information element for displaying a user interface corresponding to a respective channel on which the respective content item is available.
210. The electronic device of 194, wherein:
   the receiving unit is further configured to, while displaying the content guide, receive an input associated with a currently-available content item in the content guide, and
   the processing unit is further configured to, in response to receiving the input:
      in accordance with a determination that the input has a duration that is shorter than a threshold time period, play the currently-available content item on the display device; and
      in accordance with a determination that the input has a duration that is longer than the threshold time period, display one or more selectable user interface elements on the display that enable a user to perform operations associated with the currently-available content item.
211. The electronic device of 210, wherein the selectable user interface elements include:
   a play element for playing the currently-available content item on the display device;
   a content item information element for displaying a user interface corresponding to the currently-available content item on the display; and
   a channel information element for displaying a user interface corresponding to a respective channel on which the currently-available content item is available.
212. The electronic device of 194, wherein:
   the second plurality of channels in the content guide have currently-available content having a first shared characteristic.
213. The electronic device of 212, wherein:
   the updated user interface is associated with a first category of channels and a second category of channels,
   channels in the first category of channels include currently-available content having the first shared characteristic,
   channels in the second category of channels do not have currently-available content having the first shared characteristic, but have future content having the first shared characteristic within a predetermined time threshold of a current time, and
   the second plurality of channels in the content guide are selected so as to include channels from the first and second categories of channels.
214. The electronic device of 213, wherein the channels in the first category of channels and the channels in the second category of channels are displayed in separate regions of the content guide.
215. The electronic device of 212, wherein:
   the second plurality of channels in the content guide includes content items having the first shared characteristic, and content items not having the first shared characteristic,
   representations of the content items having the first shared characteristic in the content guide have a first visual characteristic in the content guide, and
   representations of the content items not having the first shared characteristic have a second visual characteristic, different from the first visual characteristic, in the content guide.
216. The electronic device of 215, wherein:
   the receiving unit is further configured to, while displaying the representations of the content items having the first shared characteristic with the first visual characteristic and the representations of the content items not having the first shared characteristic with the second visual characteristic, receive an input corresponding to a request to change a currently-designated characteristic from the first shared characteristic to a second shared characteristic, and
   the processing unit is further configured to, in response to receiving the input:
      modify the content guide to include a third plurality of channels that have currently-available content having the second shared characteristic instead of the first shared characteristic, the third plurality of channels including content items having the second shared characteristic, and content items not having the second shared characteristic;
      display representations of the content items having the second shared characteristic with the first visual characteristic; and
      display representations of the content items not having the second shared characteristic with the second visual characteristic.
217. The electronic device of 194, wherein the processing unit is further configured to:
   while displaying the second plurality of channels having currently-available content having a shared characteristic in the content guide, determine that the first channel no longer has currently-available content having the shared characteristic; and
   in response to determining that the first channel no longer has currently-available content having the shared characteristic, maintain the first channel in the content guide and in the channel bar.
218. The electronic device of 194, wherein the processing unit is further configured to:
   while displaying the second plurality of channels having currently-available content having a shared characteristic in the content guide, determine that the first channel no longer has currently-available content having the shared characteristic; and
   in response to determining that the first channel no longer has currently-available content having the shared characteristic, remove the first channel from the content guide and the channel bar.
219. The electronic device of 194, wherein the processing unit is further configured to:
   while displaying the second plurality of channels having currently-available content having a shared characteristic in the content guide, determine that the first channel no longer has currently-available content having the shared characteristic; and
   in response to determining that the first channel no longer has currently-available content having the shared characteristic:
      in accordance with a determination that a content item on the first channel is currently-selected, maintain the first channel in the content guide and in the channel bar; and
      in accordance with a determination that a content item on the first channel is not currently-selected, remove the first channel from the content guide and the channel bar.
220. The electronic device of 194, wherein the processing unit is further configured to:
   while displaying the second plurality of channels having currently-available content having a shared characteristic in the content guide, determine that the first channel no longer has currently-available content having the shared characteristic;
   in response to determining that the first channel no longer has currently-available content having the shared characteristic, maintain the first channel in the content guide and in the channel bar;
   after maintaining the first channel in the content guide and in the channel bar, cease display of the content guide and the channel bar in the user interface;
   after ceasing display of the content guide and the channel bar in the user interface, redisplay the content guide and the channel bar in the user interface, the content guide and the channel bar having the first channel removed therefrom.
221. The electronic device of 194, wherein the content guide includes representations of one or more content items that are available on-demand, and the representations of the one or more content items that are available on-demand include a visual indication indicating that the content item is available for on-demand presentation.
222. The electronic device of 194, wherein the processing unit is further configured to:
   in response to receiving the input corresponding to the request to display the content guide on the display device, display an animation of the representations of the first plurality of channels in the channel bar moving out of the user interface in a first direction while the arrays of the content guide move into the user interface in the first direction, the arrays of the content guide aligned with and corresponding to the representations of the first plurality of channels in the channel bar.
223. The electronic device of 194, wherein the input corresponding to the request to display the content guide on the display device comprises:
   scrolling past an end of the channel bar along the first axis; and
   after scrolling past the end of the channel bar along the first axis, selecting a content guide user interface element displayed adjacent to the channel bar for displaying the content guide.
224. The electronic device of 194, wherein receiving the input corresponding to the request to display the content guide on the display device comprises:
   receiving a selection input in a first predefined region on a touch-sensitive surface of a second electronic device, wherein the touch-sensitive surface includes a plurality of predefined regions, including the first predefined region, the plurality of predefined regions being associated with different functions.
225. The electronic device of 194, wherein the processing unit is further configured to:
   while displaying the content guide, display a current time indicator in the updated user interface that indicates a current play position in currently-available content on the second plurality of channels in the content guide.
226. The electronic device of 225, wherein:
   the updated user interface further includes reference time indicators displayed along the second axis, adjacent the arrays in the content guide, wherein representations of content items in the arrays in the content guide are positioned along the second axis with respect to the reference time indicators in a manner corresponding to start and end times of the content items, and
   as the current time indicator approaches a respective position of a respective reference time indicator in the updated user interface, the respective position of the respective time indicator in the updated user interface is modified so as to move the respective time indicator to not obscure the current time indicator in the updated user interface.

## Claims

1. A method comprising:
at an electronic device in communication with a display device and one or more input devices:
displaying, via the display device, a user interface, wherein the user interface includes:
one or more representations of one or more subscribed channels arranged in a first section, wherein content items from the one or more subscribed channels are currently accessible on the electronic device; and
one or more representations of one or more unsubscribed channels arranged in a second section, visually distinguished from the first section, wherein content items from the one or more unsubscribed channels are not currently accessible on the electronic device;
while displaying the user interface, receiving, via the one or more input devices, a user input; and
in response to receiving the user input:
in accordance with a determination that the user input corresponds to a selection of a respective representation of a respective subscribed channel of the one or more subscribed channels, displaying, via the display device, a user interface associated with the respective subscribed channel; and
in accordance with a determination that the user input corresponds to a selection of a respective representation of a respective unsubscribed channel of the one or more unsubscribed channels, initiating a process for subscribing to the respective unsubscribed channel, wherein the process for subscribing to the respective unsubscribed channel provides the electronic device with access to content items from the respective unsubscribed channel.

2. The method of claim 1, wherein the user interface associated with the respective subscribed channel includes a plurality of representations of a plurality of content items available from the respective subscribed channel.

3. The method of claim 2, further comprising:
while displaying the user interface associated with the respective subscribed channel, receiving a second user input selecting a respective representation of a respective content item of the plurality of content items; and
in response to receiving the second user input, displaying, via the display device, a user interface associated with the respective content item.

4. The method of claim 3, wherein the user interface associated with the respective content item includes information about a plurality of methods for accessing the respective content item.

5. The method of claim 2, further comprising:
while displaying the user interface associated with the respective subscribed channel, receiving a second user input selecting a respective representation of a respective content item of the plurality of content items; and
in response to receiving the second user input, playing, via the display device, the respective content item.

6. The method of claim 5, wherein:
the user interface is an interface of a content navigation application, wherein the content navigation application is an application for accessing content from a plurality of content sources; and
playing the respective content item includes playing the respective content item in a given user interface of the content navigation application.

7. The method of claim 1, wherein the process for subscribing to the respective unsubscribed channel includes:
displaying, via the display device, a user interface associated with the respective unsubscribed channel, including a selectable option for subscribing to the respective unsubscribed channel;
receiving, via the one or more input devices, a user input selecting the selectable option; and
providing the electronic device with access to content items from the respective unsubscribed channel.

8. The method of claim 1, wherein the one or more representations of the one or more subscribed channels include images corresponding to the one or more subscribed channels, and the one or more representations of the one or more unsubscribed channels include images corresponding to the one or more unsubscribed channels.

9. The method of claim 1, wherein:
the one or more representations of the one or more subscribed channels are arranged in a row in the user interface; and
the one or more representations of the one or more unsubscribed channels are arranged in a row in the user interface.

10. The method of claim 1, wherein the one or more subscribed channels and the one of more unsubscribed channels do not belong to a content package, wherein the content package includes a plurality of channels, a subscription to which provides access to content items from the plurality of channels.

11. The method of claim 1, further comprising:
in response to receiving the user input:
in accordance with a determination that the user input corresponds to a request to display available content at the electronic device, displaying, via the display device, a second user interface, different from the user interface, wherein the second user interface includes representations of the content items from the one or more subscribed channels.

12. The method of claim 1, wherein:
the one or more representations of one or more subscribed channels include a plurality of representations of a plurality of subscribed channels; and
the one or more representations of one or more unsubscribed channels include a plurality of representations of a plurality of unsubscribed channels.

13. An electronic device, comprising:
one or more processors;
memory; and
one or more programs, wherein the one or more programs are stored in the memory and configured to be executed by the one or more processors, the one or more programs including instructions for:
displaying, via a display device, a user interface, wherein the user interface includes:
one or more representations of one or more subscribed channels arranged in a first section, wherein content items from the one or more subscribed channels are currently accessible on the electronic device; and
one or more representations of one or more unsubscribed channels arranged in a second section, visually distinguished from the first section, wherein content items from the one or more unsubscribed channels are not currently accessible on the electronic device;
while displaying the user interface, receiving, via one or more input devices, a user input; and
in response to receiving the user input:
in accordance with a determination that the user input corresponds to a selection of a respective representation of a respective subscribed channel of the one or more subscribed channels, displaying, via the display device, a user interface associated with the respective subscribed channel; and
in accordance with a determination that the user input corresponds to a selection of a respective representation of a respective unsubscribed channel of the one or more unsubscribed channels, initiating a process for subscribing to the respective unsubscribed channel, wherein the process for subscribing to the respective unsubscribed channel provides the electronic device with access to content items from the respective unsubscribed channel.

14. A non-transitory computer readable storage medium storing one or more programs, the one or more programs comprising instructions, which when executed by one or more processors of an electronic device in communication with a display device and one or more input devices, cause the electronic device to:
display, via the display device, a user interface, wherein the user interface includes:
one or more representations of one or more subscribed channels arranged in a first section, wherein content items from the one or more subscribed channels are currently accessible on the electronic device; and
one or more representations of one or more unsubscribed channels arranged in a second section, visually distinguished from the first section, wherein content items from the one or more unsubscribed channels are not currently accessible on the electronic device;
while displaying the user interface, receive, via the one or more input devices, a user input; and
in response to receiving the user input:
in accordance with a determination that the user input corresponds to a selection of a respective representation of a respective subscribed channel of the one or more subscribed channels, display, via the display device, a user interface associated with the respective subscribed channel; and
in accordance with a determination that the user input corresponds to a selection of a respective representation of a respective unsubscribed channel of the one or more unsubscribed channels, initiate a process for subscribing to the respective unsubscribed channel, wherein the process for subscribing to the respective unsubscribed channel provides the electronic device with access to content items from the respective unsubscribed channel.
